# EUROPEAN PATENT APPLICATION

(11) **EP 4 586 599 A1**
(43) Date of publication of application: **16.07.2025**
(21) Application number: 23893592.8
(22) Date of filing: 31.10.2023
(51) Int. Cl.: H04M 1/72454

(54) **CALL CONTROL METHOD, RELATED APPARATUS, AND COMMUNICATION SYSTEM**

(30) Priority: 25.11.2022 CN 202211491695; 02.12.2022 CN 202211539135
(71) Applicant: Huawei Technologies Co., Ltd., Shenzhen, Guangdong 518129 (CN)
(72) Inventor: LIAO, Yousheng, Shenzhen, Guangdong 518129 (CN); LIN, Jianxin, Shenzhen, Guangdong 518129 (CN); WANG, Shufeng, Shenzhen, Guangdong 518129 (CN); ZHANG, Xianchun, Shenzhen, Guangdong 518129 (CN); HU, Yan, Shenzhen, Guangdong 518129 (CN)
(74) Representative: Epping - Hermann - Fischer
(86) International application number: PCT/CN2023/128871
(87) International publication number: WO 2024/109501

(57) **Abstract**

A call control method, a related apparatus, and a communication system are provided. The method may be applied to a wearable device that integrates a smartwatch and earphones. The smartwatch may be used as a control and management device of the earphones to control the earphones to play call audio on different electronic devices with a sound. A user may control, through the wearable device, a plurality of electronic devices to make or answer calls, and may listen to call audio of each electronic device through the earphones. According to the foregoing method, the user can conveniently control the plurality of electronic devices to make/answer calls, to improve call experience of the user.

## Description

This application claims priorities to Chinese Patent Application No. 202211491695.9, filed with the China National Intellectual Property Administration on November 25, 2022 and entitled "CALL CONTROL METHOD, RELATED APPARATUS, AND COMMUNICATION SYSTEM", and to Chinese Patent Application No. 202211539135.6, filed with the China National Intellectual Property Administration on December 2, 2022 and entitled "CALL CONTROL METHOD, RELATED APPARATUS, AND COMMUNICATION SYSTEM", both of which are incorporated herein by reference in their entireties.

### TECHNICAL FIELD

This application relates to the field of terminal technologies, and in particular, to a call control method, a related apparatus, and a communication system.

### BACKGROUND

With development of electronic devices, a user may have a plurality of electronic devices (for example, a mobile phone, a smartwatch, a tablet computer, and a notebook computer). The user may use the plurality of electronic devices to make calls or answer calls on the plurality of electronic devices. How to control a call service on an electronic device, to facilitate the user to make/answer a call on the electronic device and improve call experience of the user is a problem to be urgently resolved currently.

### SUMMARY

This application provides a call control method, a related apparatus, and a communication system. The method may be applied to a wearable device that integrates a smartwatch and earphones. The smartwatch may be used as a control and management device of the earphones to control the earphones to play call audio on different electronic devices with a sound. A user may control, through the wearable device, a plurality of electronic devices to make or answer calls, and may listen to call audio of each electronic device through the earphones. According to the foregoing method, the user can conveniently control the plurality of electronic devices to make/answer calls, to improve call experience of the user.

According to a first aspect, this application provides a call control method. The method may be applied to a communication system. The communication system includes a wearable device and an audio apparatus. An audio apparatus slot accommodating the audio apparatus is disposed in the wearable device. A communication connection is established between the wearable device and the audio apparatus, and a communication connection is established between the wearable device and a first device. The wearable device may receive first incoming call information from the first device, and display a first incoming call notification screen. The wearable device detects a first operation, where the first operation is used to answer a first incoming call corresponding to the first incoming call information. The wearable device sends a first instruction to the first device in response to the first operation, where the first instruction is used to trigger the first device to answer the first incoming call. The audio apparatus receives and plays first call audio of the first incoming call from the first device when the audio apparatus is connected to the first device.

It can be learned from the foregoing method that a new product form that integrates the wearable device and the audio apparatus provided in this application may control another device to answer a call. For example, the wearable device may control the first device to answer the call, and play the call audio through the audio apparatus. According to the foregoing method, a user can conveniently control a device to answer a call, to improve call experience of the user.

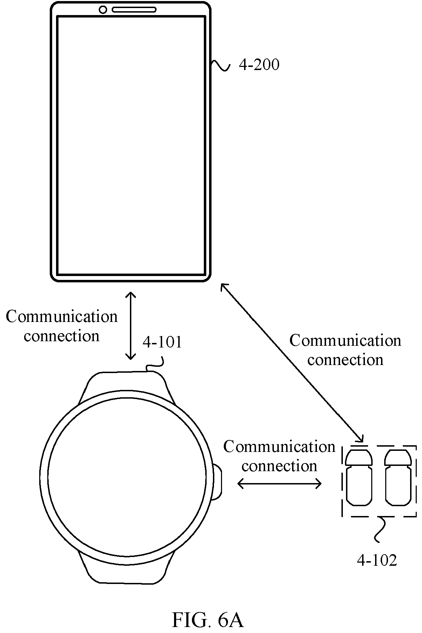

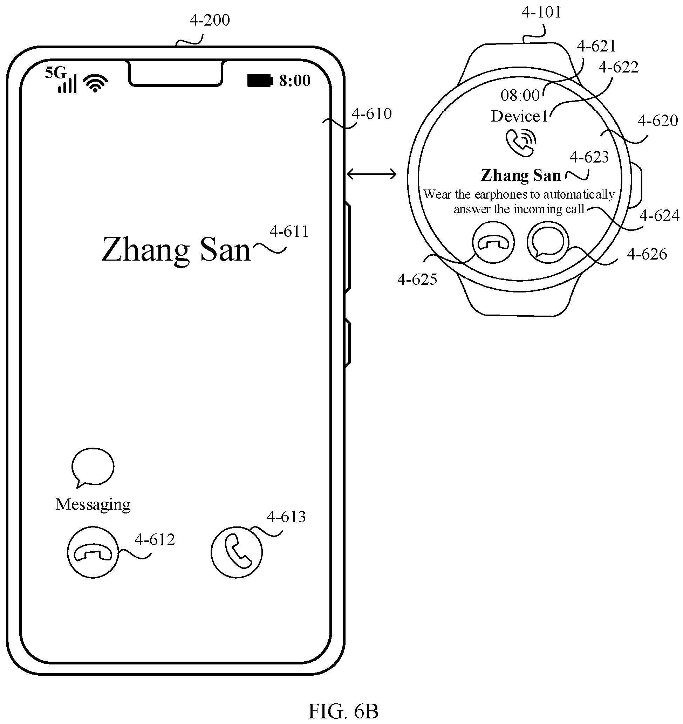

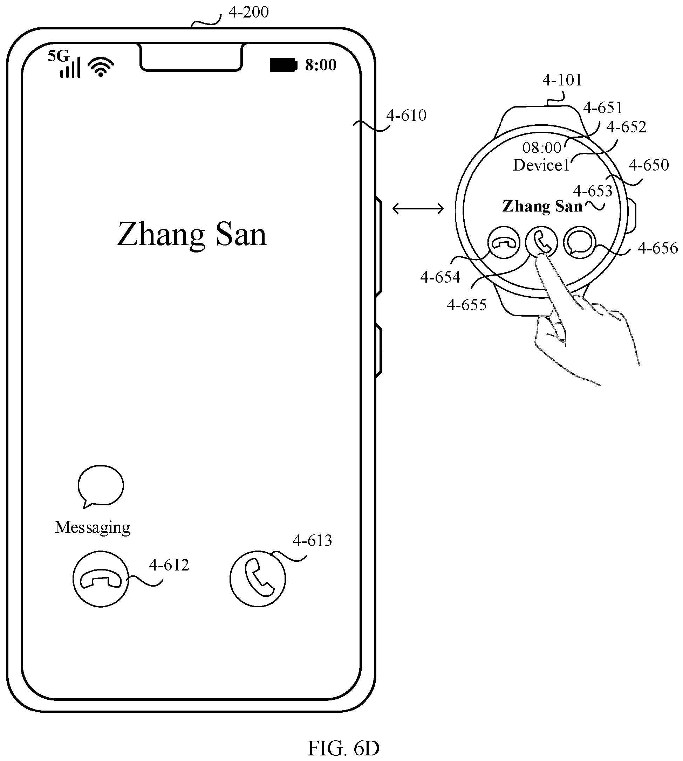

For the first incoming call notification screen, refer to a user interface 4-620 shown in FIG. 6B and a user interface 4-650 shown in FIG. 6D in subsequent embodiments.

With reference to the first aspect, in some embodiments, after the wearable device receives the first incoming call information from the first device, the wearable device may obtain a wearing status of the audio apparatus. In a case in which the audio apparatus is in a not-worn state, a first answer prompt is included on the first incoming call notification screen, the first answer prompt is used to prompt the user to wear the audio apparatus to answer a call, and the first operation includes an operation of wearing the audio apparatus. In a case in which the audio apparatus is in a worn state, a first answer control is included on the first incoming call notification screen, and the first operation includes an operation on the first answer control.

It can be learned from the foregoing embodiments that when the user does not wear the audio apparatus, the first device receives the first incoming call, and the user may wear the audio apparatus to trigger the first device to answer the first incoming call. In this way, the user does not need to perform an additional operation of answering the call. According to the foregoing embodiments, an operation of answering the call by the user can be simplified.

With reference to the first aspect, in some embodiments, the case in which the audio apparatus is in the not-worn state includes: The audio apparatus is accommodated in the audio apparatus slot, or the audio apparatus is not accommodated in the audio apparatus slot but is not worn.

It can be learned from the foregoing embodiments that, when the audio apparatus is accommodated in the audio apparatus slot, the user may trigger, through performing an operation of taking the audio apparatus out of the audio apparatus slot and wearing the audio apparatus, the first device to answer the first incoming call. When the audio apparatus is disposed outside the wearable device, the user may trigger, through an operation of wearing the audio apparatus, the first device to answer the first incoming call.

With reference to the first aspect, in some embodiments, after the wearable device receives the first incoming call information from the first device, the wearable device may obtain a status of a connection between the audio apparatus and the first device. When no communication connection is established between the audio apparatus and the first device, the wearable device indicates the audio apparatus to establish a communication connection to the first device.

It can be learned from the foregoing embodiments that, after sensing that the first device receives the first incoming call, the wearable device may indicate the audio apparatus to establish the communication connection to the first device. In this way, the user can quickly answer the first incoming call on the first device through the audio apparatus without performing another manual operation to connect the audio apparatus to the first device. According to the foregoing embodiments, user experience of answering an incoming call on a device can be improved.

With reference to the first aspect, in some embodiments, the first instruction is further used to trigger the first device to establish a communication connection to the audio apparatus.

Specifically, after detecting the operation of answering the first incoming call, the wearable device may send the first instruction to the first device. In response to the first instruction, the first device may obtain a status of a connection between the first device and the audio apparatus. When the first device is not connected to the audio apparatus, the first device may establish the communication connection to the audio apparatus, to answer the first incoming call through the audio apparatus.

With reference to the first aspect, in some embodiments, after receiving the first incoming call, the first device may obtain a status of a connection between the first device and the audio apparatus. When the first device is not connected to the audio apparatus, the first device may establish a communication connection to the audio apparatus. After receiving the first incoming call, the first device may further send the first incoming call information to the wearable device. When receiving the first instruction sent by the wearable device, the first device may answer the first incoming call through the audio apparatus when the first device is connected to the audio apparatus. When the first device is not connected to the audio apparatus, the first device may play the first call audio of the first incoming call through an audio playing apparatus on the first device.

With reference to the first aspect, in some embodiments, when the audio apparatus receives and plays the first call audio of the first incoming call from the first device, the wearable device receives second incoming call information from the first device, and displays a second incoming call notification screen, where the second incoming call notification screen indicates that the first device receives a second incoming call corresponding to the second incoming call information.

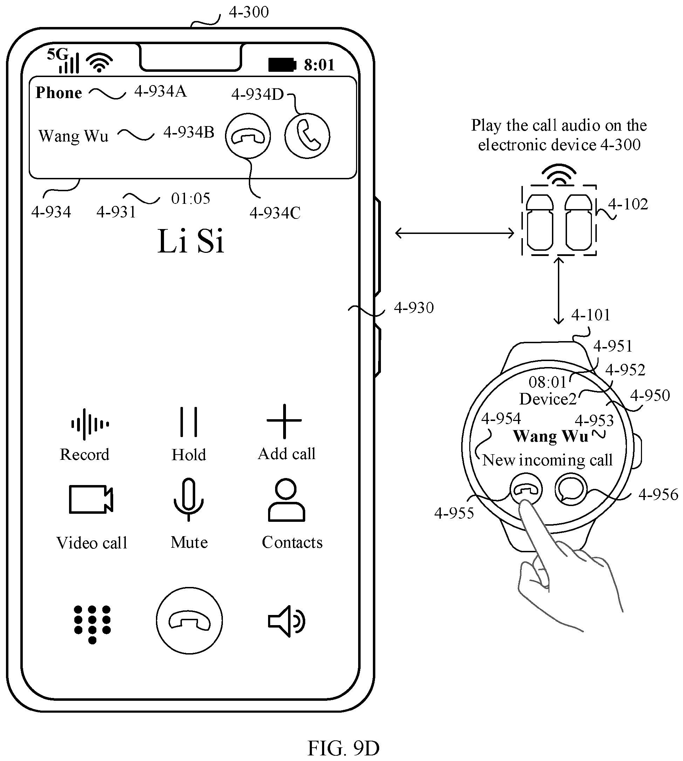

For the second incoming call notification screen, refer to a user interface 4-950 shown in FIG. 9D.

It can be learned from the foregoing embodiments that, in the process in which the first device answers the first incoming call, if the first device receives a new incoming call, for example, the second incoming call, the wearable device may give the user a prompt that the first device receives the new incoming call. In this way, when answering the first incoming call, the user may learn, through a smartwatch, that the first device receives the new incoming call, to determine whether to answer the new incoming call.

With reference to the first aspect, in some embodiments, when the first device receives the new incoming call, the wearable device detects a second operation, where the second operation is used to decline the second incoming call. The wearable device sends a second instruction to the first device in response to the second operation, where the second instruction is used to trigger the first device to decline the second incoming call. The audio apparatus continues playing the first call audio.

It can be learned from the foregoing embodiments that the user can quickly control, through the wearable device, the first device to decline a new incoming call. In this way, even if the first device is far away from the user, or in a scenario in which the user is inconvenient to operate the first device, the user can conveniently control a call on the first device.

With reference to the first aspect, in some embodiments, when the first device receives the new incoming call, the wearable device detects a third operation, where the third operation is used to answer the second incoming call. The wearable device sends a third instruction to the first device in response to the third operation, where the third instruction is used to trigger the first device to hang up the first incoming call and answer the second incoming call. The audio apparatus receives and plays second call audio of the second incoming call from the first device.

It can be learned from the foregoing embodiments that the user can quickly control, through the wearable device, the first device to answer a new incoming call. When answering the new incoming call, the first device may hang up an incoming call (for example, the first incoming call) that is before the new incoming call. In addition, the user can answer the new incoming call on the first device through the audio apparatus. In this way, even if the first device is far away from the user, or in a scenario in which the user is inconvenient to operate the first device, the user can conveniently control a call on the first device.

With reference to the first aspect, in some embodiments, when the audio apparatus receives and plays the first call audio of the first incoming call from the first device, after the audio apparatus is placed in the audio apparatus slot, the wearable device or the audio apparatus sends a fourth instruction to the first device, where the fourth instruction is used to trigger the first device to hang up the first incoming call.

It can be learned from the foregoing embodiments that the user may trigger, by performing an operation of placing the audio apparatus in the audio apparatus slot, the first device to hang up a call. In this way, the user does not need to perform another operation of hanging up the call. According to the foregoing embodiments, an operation of hanging up a call by the user can be simplified, and call control experience of the user can be improved.

With reference to the first aspect, in some embodiments, when the audio apparatus is accommodated in the audio apparatus slot, the communication connection between the audio apparatus and the first device is disconnected. After the audio apparatus is taken out of the audio apparatus slot, the audio apparatus establishes a communication connection to the first device.

It can be learned from the foregoing embodiments that, after the audio apparatus is taken out of the audio apparatus slot, the audio apparatus may be reconnected to a device to which the audio apparatus is last connected before the audio apparatus is placed in the audio apparatus slot.

With reference to the first aspect, in some embodiments, when a communication connection is established between the audio apparatus and a second device, the wearable device receives third incoming call information from the second device through the audio apparatus, and displays a third incoming call notification screen. The wearable device detects a fourth operation, where the fourth operation is used to answer a third incoming call corresponding to the third incoming call information. The wearable device sends a fifth instruction to the second device through the audio apparatus in response to the fourth operation, where the fifth instruction is used to trigger the second device to answer the third incoming call. The audio apparatus receives and plays third call audio of the third incoming call from the second device.

It can be learned from the foregoing embodiments that, although the second device is not connected to the wearable device, the wearable device may still control a call on the second device through the audio apparatus. The user may view, on the wearable device, incoming call notifications of a plurality of electronic devices, and conveniently control, through the wearable device, the plurality of electronic devices to answer or decline calls. When the user controls, through the wearable device, an electronic device to answer a call, the user may listen to call audio on the electronic device through the audio apparatus.

With reference to the first aspect, in some embodiments, when the audio apparatus receives and plays the third call audio of the third incoming call from the second device, after the second device detects an operation of hanging up the third incoming call, the audio apparatus receives information from the second device indicating that the third incoming call is hung up, and sends the information indicating that the third incoming call is hung up to the wearable device. The wearable device displays a first call end screen, where the first call end screen indicates that the third incoming call of the second device ends.

It can be learned from the foregoing embodiments that, after the user performs a call hang-up operation on a third electronic device, the wearable device may sense that a call of the third electronic device ends, to display a call end screen, and give the user a prompt that the call ends.

With reference to the first aspect, in some embodiments, when the audio apparatus receives and plays the third call audio of the third incoming call from the second device, after detecting an operation of hanging up the third incoming call, the wearable device may send, to the second device through the audio apparatus, an instruction for hanging up the third incoming call. Then, the second device hangs up the third incoming call accordingly.

With reference to the first aspect, in some embodiments, after the audio apparatus is placed in the audio apparatus slot, the communication connection between the audio apparatus and the second device is disconnected.

In the process in which the second device answers the third incoming call, the operation of placing the audio apparatus in the audio apparatus slot may be used to trigger the second device to hang up the call. When the audio apparatus is placed in the audio apparatus slot, the audio apparatus may send a call hang-up instruction to the second device, or the wearable device may send a call hang-up instruction to the second device through the audio apparatus.

With reference to the first aspect, in some embodiments, after the audio apparatus is taken out of the audio apparatus slot, the audio apparatus establishes a communication connection to the second device.

With reference to the first aspect, in some embodiments, in the process in which the audio apparatus plays the third call audio of the third incoming call on the second device, the first device receives an incoming call and sends incoming call information to the wearable device. The wearable device may display an incoming call notification screen to give the user a prompt that the first device receives the incoming call. When the wearable device detects an operation of answering the incoming call on the first device, the wearable device may send, to the first device, an instruction for answering the incoming call through the audio apparatus. The audio apparatus may establish the communication connection to the first device, play call audio of the incoming call on the first device, and stop playing the third call audio of the third incoming call on the second device. If the third incoming call on the second device is not hung up, the second device may play the third call audio through an audio playing apparatus on the second device.

The wearable device may first indicate the audio apparatus to establish the communication connection to the first device, and indicate the first device to answer the incoming call. After being connected to the first device, the audio apparatus may play the call audio of the incoming call on the first device. Alternatively, the wearable device may send an incoming call answering instruction to the first device. Then, the first device may be connected to the audio apparatus according to the incoming call answering instruction, and after the connection succeeds, play the call audio of the incoming call on the first device through the audio apparatus.

Optionally, when the audio apparatus is connected to the second device, the first device may be directly connected to the audio apparatus after receiving the incoming call.

When the first device is successfully connected to the audio apparatus, the connection between the audio apparatus and the second device may be disconnected.

It can be learned from the foregoing embodiments that, when the audio apparatus is connected to the second device, the first device may preempt to be connected to the audio apparatus through the wearable device, so that the audio apparatus plays audio on the first device. In other words, the user may manage, through the wearable device, a device connected to the audio apparatus, so that the audio apparatus plays call audio on a specified device.

In some embodiments, when the audio apparatus is connected to the second device, the first device may preempt to be connected to the audio apparatus after receiving the incoming call. After the incoming call of the first device ends, the audio apparatus may maintain the connection to the first device, or the audio apparatus may be reconnected to a device connected before the connection is preempted (that is, the audio apparatus may be reconnected to the second device).

With reference to the first aspect, in some embodiments, when the communication connection is established between the audio apparatus and the second device, after the audio apparatus is placed in the audio apparatus slot, the communication connection between the audio apparatus and the second device may be disconnected. When the audio apparatus is accommodated in the audio apparatus slot, the wearable device receives the incoming call information of the first device, and may display the incoming call notification screen, to give the user a prompt that the first device receives the incoming call. After learning that the audio apparatus is taken out of the audio apparatus slot, the wearable device may indicate the first device to answer the incoming call through the audio apparatus. In other words, the user may trigger the first device to answer the incoming call through an operation of taking the audio apparatus out of the audio apparatus slot (or an operation of taking the audio apparatus out of the audio apparatus slot and wearing the audio apparatus), and may listen to the call audio of the incoming call on the first device through the audio apparatus.

When learning that the audio apparatus is taken out of the audio apparatus slot, the wearable device may indicate the audio apparatus to establish the communication connection to the first device, and after the audio apparatus is successfully connected to the first device, indicate the first device to answer the incoming call. Alternatively, when learning that the audio apparatus is taken out of the audio apparatus slot, the wearable device may send the incoming call answering instruction to the first device. The first device may be connected to the audio apparatus according to the incoming call answering instruction, and play the call audio through the audio apparatus after the connection succeeds.

It can be learned from the foregoing embodiments that, when the audio apparatus is accommodated in the audio apparatus slot, and the wearable device senses that a device receives an incoming call, after the audio apparatus is taken out of the audio apparatus slot, the audio apparatus may be connected to the device that receives the incoming call without being reconnected to a device to which the audio apparatus is last connected before the audio apparatus is accommodated in the audio apparatus slot. In this way, the user may control, through the wearable device, the call on the device that receives the incoming call, and listen to call audio on the device through the audio apparatus.

With reference to the first aspect, in some embodiments, the audio apparatus may include a first audio apparatus and a second audio apparatus. Both the first audio apparatus and the second audio apparatus receive first audio data from the second device, and play first audio based on the first audio data. The wearable device receives fourth incoming call information from the first device, and displays a fourth incoming call notification screen. The wearable device detects a fifth operation, where the fifth operation is used to answer a fourth incoming call corresponding to the fourth incoming call information. The wearable device sends a sixth instruction to the first device in response to the fifth operation, where the sixth instruction is used to trigger the first device to answer the fourth incoming call. When the first audio apparatus and the second audio apparatus are worn by different users, and the first audio apparatus is closer to the wearable device than the second audio apparatus, the first audio apparatus establishes a communication connection to the first device. The first audio apparatus receives and plays fourth call audio of the fourth incoming call from the first device. The second audio apparatus continues playing the first audio.

In a possible implementation, in response to the fifth operation, the wearable device may indicate the first audio apparatus to establish the communication connection to the first device, and send the sixth instruction to the first device. When the first audio apparatus is successfully connected to the first device, the first device may play the fourth call audio through the first audio apparatus. When the first audio apparatus fails to be connected to the first device, the first device may play the fourth call audio through the audio playing apparatus on the first device.

In another possible implementation, in response to the fifth operation, the wearable device may send the sixth instruction to the first device. In addition to triggering the first device to answer the fourth incoming call, the sixth instruction may be further used to trigger the first device to establish the communication connection to the first audio apparatus. According to the sixth instruction, the first device may establish the communication connection to the first audio apparatus, and play the fourth call audio through the first audio apparatus after the connection succeeds.

It can be learned from the foregoing embodiments that, according to the foregoing embodiments, the user can share the audio apparatus with another user to listen to audio together without affecting answering of a call by the user through the audio apparatus, and privacy of the user during answering of the call can be protected. The another user who accepts audio sharing may continue listening to audio music but cannot hear call content of the user.

With reference to the first aspect, in some embodiments, the wearable device stores a first call record, and the first call record is a call record of the first device. The wearable device detects a sixth operation on the first call record, where the sixth operation is used to make an outgoing call to a first number corresponding to the first call record. The wearable device sends a seventh instruction to the first device in response to the sixth operation, where the seventh instruction is used to trigger the first device to make the outgoing call to the first number. The audio apparatus may receive and play first outgoing call audio of the outgoing call to the first number from the first device.

With reference to the first aspect, in some embodiments, the wearable device stores a second call record, and the second call record is a call record of the second device. The wearable device detects a seventh operation on the second call record, where the seventh operation is used to make an outgoing call to a second number corresponding to the second call record. The wearable device sends an eighth instruction to the second device through the audio apparatus in response to the seventh operation, where the eighth instruction is used to trigger the second device to make the outgoing call to the second number. The audio apparatus receives and plays second outgoing call audio of the outgoing call to the second number from the second device.

It can be learned from the foregoing embodiments that the user may control, through the wearable device, a device to make a call. The wearable device may control, based on attribute information of a phone number, a corresponding device to make a call. For example, when the phone number is the number corresponding to the call record on the first device, the wearable device may control the first device to make the call. When the phone number is the number corresponding to the call record on the second device, the wearable device may control, through the audio apparatus, the second device to make the call.

With reference to the first aspect, in some embodiments, the wearable device detects an eighth operation, where the eighth operation is used to make an outgoing call to a third number. The wearable device finds the first device and the second device in response to the eighth operation, where the first device is closer to the wearable device than the second device. The wearable device sends a ninth instruction to the first device, where the ninth instruction is used to trigger the first device to make the outgoing call to the third number.

It can be learned from the foregoing embodiments that the user may control, through the wearable device, a device to make a call. The wearable device may select, based on distances between devices and the wearable device, a device that is closer to the wearable device to make the call.

With reference to the first aspect, in some embodiments, a device account logged in to a third device is the same as a device account logged in to the first device. The wearable device and/or the audio apparatus obtain/obtains device information of the third device through the first device, where the device information of the third device is used to establish a communication connection to the third device.

With reference to the first aspect, in some embodiments, the wearable device detects a ninth operation, where the ninth operation is used to select the third device to make an outgoing call to a fourth number. The wearable device sends a tenth instruction to the third device through the audio apparatus in response to the ninth operation, where the tenth instruction is used to trigger the third device to make the outgoing call to the fourth number. The audio apparatus receives and plays third outgoing call audio of the outgoing call to the fourth number from the third device.

In a possible implementation, in response to the ninth operation, the wearable device may first indicate the audio apparatus to establish a communication connection to the third device. After the audio apparatus establishes the communication connection to the third device, the wearable device may send the tenth instruction to the third device through the audio apparatus. The third device may make the outgoing call to the fourth number according to the fourth instruction, and play, through the audio apparatus, the third outgoing call audio of the outgoing call to the fourth number.

In another possible implementation, in response to the ninth operation, the wearable device may send the tenth instruction to the audio apparatus. According to the tenth instruction, the audio apparatus may establish the communication connection to the third device, and send the tenth instruction to the third device. The third device may make the outgoing call to the fourth number according to the fourth instruction, and play, through the audio apparatus, the third outgoing call audio of the outgoing call to the fourth number.

It can be learned from the foregoing embodiments that, in addition to the first device connected to the wearable device and the second device connected to the audio apparatus, the wearable device and the audio apparatus may further control another device (for example, the third device) whose device account is the same as that of the first device and/or that of the second device to make an outgoing call. In other words, the wearable device and the audio apparatus may control calls on a plurality of devices. This can help the user conveniently control calls on different devices, thereby improving call experience of the user.

With reference to the first aspect, in some embodiments, the wearable device is any one of the following devices: a smartwatch, a smart band, smart glasses, a smart helmet, smart clothing, and a smart backpack; and the audio apparatus is any one of the following devices: earphones, a mini sound box, and a portable music player.

According to a second aspect, this application provides a call control method. The method may be applied to a wearable device. An audio apparatus slot accommodating an audio apparatus may be disposed in the wearable device, a communication connection is established between the wearable device and the audio apparatus, and a communication connection is established between the wearable device and a first device. The wearable device may receive first incoming call information from the first device, and display a first incoming call notification screen. The wearable device detects a first operation, where the first operation is used to answer a first incoming call corresponding to the first incoming call information. The wearable device sends a first instruction to the first device in response to the first operation, where the first instruction is used to trigger the first device to answer the first incoming call. The audio apparatus receives and plays first call audio of the first incoming call from the first device when the audio apparatus is connected to the first device.

It can be learned from the foregoing method that a new product form that integrates the wearable device and the audio apparatus provided in this application may control another device to answer a call. For example, the wearable device may control the first device to answer the call, and play the call audio through the audio apparatus. According to the foregoing method, a user can conveniently control a device to answer a call, to improve call experience of the user.

With reference to the second aspect, in some embodiments, after the wearable device receives the first incoming call information from the first device, the wearable device may obtain a wearing status of the audio apparatus. In a case in which the audio apparatus is in a not-worn state, a first answer prompt is included on the first incoming call notification screen, the first answer prompt is used to prompt the user to wear the audio apparatus to answer a call, and the first operation includes an operation of wearing the audio apparatus. In a case in which the audio apparatus is in a worn state, a first answer control is included on the first incoming call notification screen, and the first operation includes an operation on the first answer control.

It can be learned from the foregoing embodiments that when the user does not wear the audio apparatus, the first device receives the first incoming call, and the user may wear the audio apparatus to trigger the first device to answer the first incoming call. In this way, the user does not need to perform an additional operation of answering the call. According to the foregoing embodiments, an operation of answering the call by the user can be simplified.

With reference to the second aspect, in some embodiments, the case in which the audio apparatus is in the not-worn state includes: the audio apparatus is accommodated in the audio apparatus slot, or the audio apparatus is not accommodated in the audio apparatus slot but is not worn.

It can be learned from the foregoing embodiments that, when the audio apparatus is accommodated in the audio apparatus slot, the user may trigger, by performing an operation of taking the audio apparatus out of the audio apparatus slot and wearing the audio apparatus, the first device to answer the first incoming call. When the audio apparatus is disposed outside the wearable device, the user may trigger, through an operation of wearing the audio apparatus, the first device to answer the first incoming call.

With reference to the second aspect, in some embodiments, after the wearable device receives the first incoming call information from the first device, the wearable device may obtain a status of a connection between the audio apparatus and the first device. When no communication connection is established between the audio apparatus and the first device, the wearable device indicates the audio apparatus to establish a communication connection to the first device.

It can be learned from the foregoing embodiments that, after sensing that the first device receives the first incoming call, the wearable device may indicate the audio apparatus to establish the communication connection to the first device. In this way, the user can quickly answer the first incoming call on the first device through the audio apparatus without performing another manual operation to connect the audio apparatus to the first device. According to the foregoing embodiments, user experience of answering an incoming call on a device can be improved.

With reference to the second aspect, in some embodiments, the first instruction is further used to trigger the first device to establish a communication connection to the audio apparatus.

Specifically, after detecting the operation of answering the first incoming call, the wearable device may send the first instruction to the first device. In response to the first instruction, the first device may obtain a status of a connection between the first device and the audio apparatus. When the first device is not connected to the audio apparatus, the first device may establish the communication connection to the audio apparatus, to answer the first incoming call through the audio apparatus.

With reference to the second aspect, in some embodiments, after receiving the first incoming call, the first device may obtain a status of a connection between the first device and the audio apparatus. When the first device is not connected to the audio apparatus, the first device may establish a communication connection to the audio apparatus. After receiving the first incoming call, the first device may further send the first incoming call information to the wearable device. When receiving the first instruction sent by the wearable device, the first device may answer the first incoming call through the audio apparatus when the first device is connected to the audio apparatus. When the first device is not connected to the audio apparatus, the first device may play the first call audio of the first incoming call through an audio playing apparatus on the first device.

With reference to the second aspect, in some embodiments, when the audio apparatus receives and plays the first call audio of the first incoming call from the first device, the wearable device receives second incoming call information from the first device, and displays a second incoming call notification screen, where the second incoming call notification screen indicates that the first device receives a second incoming call corresponding to the second incoming call information.

It can be learned from the foregoing embodiments that, in the process in which the first device answers the first incoming call, if the first device receives a new incoming call, for example, the second incoming call, the wearable device may give the user a prompt that the first device receives the new incoming call. In this way, when answering the first incoming call, the user may learn, through a smartwatch, that the first device receives the new incoming call, to determine whether to answer the new incoming call.

With reference to the second aspect, in some embodiments, when the first device receives the new incoming call, the wearable device detects a second operation, where the second operation is used to decline the second incoming call. The wearable device sends a second instruction to the first device in response to the second operation, where the second instruction is used to trigger the first device to decline the second incoming call. The audio apparatus continues playing the first call audio.

It can be learned from the foregoing embodiments that the user can quickly control, through the wearable device, the first device to decline a new incoming call. In this way, even if the first device is far away from the user, or in a scenario in which the user is inconvenient to operate the first device, the user can conveniently control a call on the first device.

With reference to the second aspect, in some embodiments, when the first device receives the new incoming call, the wearable device detects a third operation, where the third operation is used to answer the second incoming call. The wearable device sends a third instruction to the first device in response to the third operation, where the third instruction is used to trigger the first device to hang up the first incoming call and answer the second incoming call. The audio apparatus receives and plays second call audio of the second incoming call from the first device.

With reference to the second aspect, in some embodiments, when the audio apparatus receives and plays the first call audio of the first incoming call from the first device, after the audio apparatus is placed in the audio apparatus slot, the wearable device or the audio apparatus sends a fourth instruction to the first device, where the fourth instruction is used to trigger the first device to hang up the first incoming call.

It can be learned from the foregoing embodiments that the user may trigger, by performing an operation of placing the audio apparatus in the audio apparatus slot, the first device to hang up a call. In this way, the user does not need to perform another operation of hanging up the call. According to the foregoing embodiments, an operation of hanging up a call by the user can be simplified, and call control experience of the user can be improved.

With reference to the second aspect, in some embodiments, when the audio apparatus establishes a communication connection to a second device, the wearable device receives third incoming call information from the second device through the audio apparatus, and displays a third incoming call notification screen. The wearable device detects a fourth operation, where the fourth operation is used to answer a third incoming call corresponding to the third incoming call information. The wearable device sends a fifth instruction to the second device through the audio apparatus in response to the fourth operation, where the fifth instruction is used to trigger the second device to answer the third incoming call. The audio apparatus receives and plays third call audio of the third incoming call from the second device.

It can be learned from the foregoing embodiments that, although the second device is not connected to the wearable device, the wearable device may still control a call on the second device through the audio apparatus. The user may view, on the wearable device, incoming call notifications of a plurality of electronic devices, and conveniently control, through the wearable device, the plurality of electronic devices to answer or decline calls. When the user controls, through the wearable device, an electronic device to answer a call, the user may listen to call audio on the electronic device through the audio apparatus.

With reference to the second aspect, in some embodiments, when the audio apparatus receives and plays the third call audio of the third incoming call from the second device, after the second device detects an operation of hanging up the third incoming call, the audio apparatus receives information from the second device indicating that the third incoming call is hung up, and sends the information indicating that the third incoming call is hung up to the wearable device. The wearable device displays a first call end screen, where the first call end screen indicates that the third incoming call of the second device ends.

With reference to the second aspect, in some embodiments, the audio apparatus may include a first audio apparatus and a second audio apparatus. Both the first audio apparatus and the second audio apparatus receive first audio data from the second device, and play first audio based on the first audio data. The wearable device receives fourth incoming call information from the first device, and displays a fourth incoming call notification screen. The wearable device detects a fifth operation, where the fifth operation is used to answer a fourth incoming call corresponding to the fourth incoming call information. The wearable device sends a sixth instruction to the first device in response to the fifth operation, where the sixth instruction is used to trigger the first device to answer the fourth incoming call. When the first audio apparatus and the second audio apparatus are worn by different users, and the first audio apparatus is closer to the wearable device than the second audio apparatus, the first audio apparatus establishes a communication connection to the first device. The first audio apparatus receives and plays fourth call audio of the fourth incoming call from the first device. The second audio apparatus continues playing the first audio.

In a possible implementation, in response to the fifth operation, the wearable device may indicate the first audio apparatus to establish the communication connection to the first device, and send the sixth instruction to the first device. When the first audio apparatus is successfully connected to the first device, the first device may play the fourth call audio through the first audio apparatus. When the first audio apparatus fails to be connected to the first device, the first device may play the fourth call audio through the audio playing apparatus on the first device.

In another possible implementation, in response to the fifth operation, the wearable device may send the sixth instruction to the first device. In addition to triggering the first device to answer the fourth incoming call, the sixth instruction may be further used to trigger the first device to establish the communication connection to the first audio apparatus. According to the sixth instruction, the first device may establish the communication connection to the first audio apparatus, and play the fourth call audio through the first audio apparatus after the connection succeeds.

It can be learned from the foregoing embodiments that, according to the foregoing embodiments, the user can share the audio apparatus with another user to listen to audio together without affecting answering of a call by the user through the audio apparatus, and privacy of the user during answering of the call can be protected. The another user who accepts audio sharing may continue listening to audio music but cannot hear call content of the user.

With reference to the second aspect, in some embodiments, with reference to the first aspect, in some embodiments, the wearable device stores a first call record, and the first call record is a call record of the first device. The wearable device detects a sixth operation on the first call record, where the sixth operation is used to make an outgoing call to a first number corresponding to the first call record. The wearable device sends a seventh instruction to the first device in response to the sixth operation, where the seventh instruction is used to trigger the first device to make the outgoing call to the first number. The audio apparatus may receive and play first outgoing call audio of the outgoing call to the first number from the first device.

With reference to the second aspect, in some embodiments, the wearable device stores a second call record, and the second call record is a call record of the second device. The wearable device detects a seventh operation on the second call record, where the seventh operation is used to make an outgoing call to a second number corresponding to the second call record. The wearable device sends an eighth instruction to the second device through the audio apparatus in response to the seventh operation, where the eighth instruction is used to trigger the second device to make the outgoing call to the second number. The audio apparatus receives and plays second outgoing call audio of the outgoing call to the second number from the second device.

It can be learned from the foregoing embodiments that the user may control, through the wearable device, a device to make a call. The wearable device may control, based on attribute information of a phone number, a corresponding device to make a call. For example, when the phone number is the number corresponding to the call record on the first device, the wearable device may control the first device to make the call. When the phone number is the number corresponding to the call record on the second device, the wearable device may control, through the audio apparatus, the second device to make the call.

With reference to the second aspect, in some embodiments, the wearable device detects an eighth operation, where the eighth operation is used to make an outgoing call to a third number. The wearable device finds the first device and the second device in response to the eighth operation, where the first device is closer to the wearable device than the second device. The wearable device sends a ninth instruction to the first device, where the ninth instruction is used to trigger the first device to make the outgoing call to the third number.

It can be learned from the foregoing embodiments that the user may control, through the wearable device, a device to make a call. The wearable device may select, based on distances between devices and the wearable device, a device that is closer to the wearable device to make the call.

With reference to the second aspect, in some embodiments, a device account logged in to a third device is the same as a device account logged in to the first device. The wearable device and/or the audio apparatus obtain/obtains device information of the third device through the first device, where the device information of the third device is used to establish a communication connection to the third device.

With reference to the second aspect, in some embodiments, the wearable device detects a ninth operation, where the ninth operation is used to select the third device to make an outgoing call to a fourth number. The wearable device sends a tenth instruction to the third device through the audio apparatus in response to the ninth operation, where the tenth instruction is used to trigger the third device to make the outgoing call to the fourth number. The audio apparatus receives and plays third outgoing call audio of the outgoing call to the fourth number from the third device.

It can be learned from the foregoing embodiments that, in addition to the first device connected to the wearable device and the second device connected to the audio apparatus, the wearable device and the audio apparatus may further control another device (for example, the third device) whose device account is the same as that of the first device and/or that of the second device to make an outgoing call. In other words, the wearable device and the audio apparatus may control calls on a plurality of devices. This can help the user conveniently control calls on different devices, thereby improving call experience of the user.

With reference to the second aspect, in some embodiments, the wearable device is any one of the following devices: a smartwatch, a smart band, smart glasses, a smart helmet, smart clothing, and a smart backpack.

According to a third aspect, this application provides a call control method. The method may be applied to an audio apparatus, the audio apparatus is capable of being placed in an audio apparatus slot of a wearable device, and a communication connection is established between the audio apparatus and the wearable device. The audio apparatus receives and plays first call audio of a first incoming call from a first device when the audio apparatus is connected to the first device. The first call audio may be sent by the first device after the first device receives an incoming call answering instruction from the wearable device. The wearable device may detect an operation of answering the first incoming call, and send the incoming call answering instruction to the first device based on the operation.

It can be learned from the foregoing method that a new product form that integrates the wearable device and the audio apparatus provided in this application may control another device to answer a call. For example, the wearable device may control the first device to answer the call, and play the call audio through the audio apparatus. According to the foregoing method, a user can conveniently control a device to answer a call, to improve call experience of the user.

With reference to the third aspect, in some embodiments, the audio apparatus receives a connection instruction from the wearable device. The audio apparatus establishes a communication connection to the first device according to the connection instruction.

It can be learned from the foregoing embodiments that, after sensing that the first device receives the incoming call, the wearable device may indicate the audio apparatus to establish the communication connection to the first device, to play the call audio of the incoming call on the first device. In this way, the user can quickly answer the first incoming call on the first device through the audio apparatus without performing another manual operation to connect the audio apparatus to the first device. According to the foregoing embodiments, user experience of answering an incoming call on a device can be improved.

With reference to the third aspect, in some embodiments, a status of the audio apparatus changes, where the status changes from a not-worn state to a worn state, and the status change is used to trigger the first device to answer the first incoming call.

It can be learned from the foregoing embodiments that, when the audio apparatus is accommodated in the audio apparatus slot, the user may trigger, by performing an operation of taking the audio apparatus out of the audio apparatus slot and wearing the audio apparatus, the first device to answer the first incoming call. When the audio apparatus is disposed outside the wearable device, the user may trigger, through an operation of wearing the audio apparatus, the first device to answer the first incoming call. According to the foregoing embodiments, a call answering operation of the user can be simplified, and call experience of the user can be improved.

With reference to the third aspect, in some embodiments, the not-worn state includes: the audio apparatus is accommodated in the audio apparatus slot, or the audio apparatus is not accommodated in the audio apparatus slot but is not worn.

With reference to the third aspect, in some embodiments, the audio apparatus sends a fourth instruction to the first device after the audio apparatus is placed in the audio apparatus slot, where the fourth instruction is used to trigger the first device to hang up the first incoming call.

It can be learned from the foregoing embodiments that the user may trigger, by performing an operation of placing the audio apparatus in the audio apparatus slot, the first device to hang up a call. In this way, the user does not need to perform another operation of hanging up the call. According to the foregoing embodiments, an operation of hanging up a call by the user can be simplified, and call control experience of the user can be improved.

With reference to the third aspect, in some embodiments, when the audio apparatus is accommodated in the audio apparatus slot, the communication connection between the audio apparatus and the first device is disconnected. After the audio apparatus is taken out of the audio apparatus slot, the audio apparatus establishes a communication connection to the first device.

With reference to the third aspect, in some embodiments, when a communication connection is established between the audio apparatus and a second device, the audio apparatus receives third incoming call information from the second device, and sends the third incoming call information to the wearable device. The audio apparatus receives and plays third call audio of a third incoming call from the second device, where the third incoming call is an incoming call corresponding to the third incoming call information.

It can be learned from the foregoing embodiments that, although the second device is not connected to the wearable device, the wearable device may still control a call on the second device through the audio apparatus. The user may view, on the wearable device, incoming call notifications of a plurality of electronic devices, and conveniently control, through the wearable device, the plurality of electronic devices to answer or decline calls. When the user controls, through the wearable device, an electronic device to answer a call, the user may listen to call audio on the electronic device through the audio apparatus.

With reference to the third aspect, in some embodiments, after the second device detects an operation of hanging up the third incoming call, the audio apparatus receives information from the second device indicating that the third incoming call is hung up, and sends the information indicating that the third incoming call is hung up to the wearable device; or after the wearable device detects an operation of hanging up the third incoming call, the audio apparatus receives an instruction from the wearable device for hanging up the third incoming call, and sends the instruction for hanging up the third incoming call to the second device.

With reference to the third aspect, in some embodiments, after the audio apparatus is placed in the audio apparatus slot, the communication connection between the audio apparatus and the second device is disconnected.

With reference to the third aspect, in some embodiments, after the audio apparatus is taken out of the audio apparatus slot, the audio apparatus establishes a communication connection to the second device.

With reference to the third aspect, in some embodiments, the audio apparatus includes a first audio apparatus and a second audio apparatus. Both the first audio apparatus and the second audio apparatus receive first audio data from the second device, and play first audio based on the first audio data. When the first audio apparatus and the second audio apparatus are worn by different users, and the first audio apparatus is closer to the wearable device than the second audio apparatus, the first audio apparatus establishes a communication connection to the first device. The first audio apparatus receives and plays fourth call audio of a fourth incoming call from the first device. The second audio apparatus continues playing the first audio.

It can be learned from the foregoing embodiments that, according to the foregoing embodiments, the user can share the audio apparatus with another user to listen to audio together without affecting answering of a call by the user through the audio apparatus, and privacy of the user during answering of the call can be protected. The another user who accepts audio sharing may continue listening to audio music but cannot hear call content of the user.

With reference to the third aspect, in some embodiments, the audio apparatus is any one of the following devices: earphones, a mini sound box, and a portable music player.

According to a fourth aspect, this application provides a wearable device. An audio apparatus slot accommodating an audio apparatus is disposed in the wearable device. The wearable device includes a communication apparatus, a memory, and a processor. The communication apparatus may be configured to establish a communication connection between the wearable device and the audio apparatus. The memory may be configured to store a computer program. The processor may be configured to invoke the computer program, for the wearable device to perform the method according to any possible implementation of the second aspect.

According to a fifth aspect, this application provides an audio apparatus. The audio apparatus can be accommodated in an audio apparatus slot of a wearable device. The audio apparatus includes a communication apparatus, a memory, and a processor. The communication apparatus may be configured to establish a communication connection between the audio apparatus and the wearable device. The memory may be configured to store a computer program. The processor may be configured to invoke the computer program, for the audio apparatus to perform the method according to any possible implementation of the third aspect.

According to a sixth aspect, this application provides a computer-readable storage medium, including instructions. When the instructions are run on an electronic device, the electronic device is enabled to perform the method according to any possible implementation of the second aspect or the third aspect.

According to a seventh aspect, this application provides a computer program product. The computer program product may include computer instructions. When the computer instructions are run on an electronic device, the electronic device is enabled to perform the method according to any possible implementation of the second aspect or the third aspect.

According to an eighth aspect, this application provides a chip. The chip is used in an electronic device, the chip includes one or more processors, and the processor is configured to invoke computer instructions to enable the electronic device to perform the method according to any possible implementation of the second aspect or the third aspect.

It may be understood that the wearable device provided in the fourth aspect, the audio apparatus provided in the fifth aspect, the computer-readable storage medium provided in the sixth aspect, the computer program product provided in the seventh aspect, and the chip provided in the eighth aspect are all configured to perform the method provided in embodiments of this application. Therefore, for beneficial effects that can be achieved, refer to beneficial effects in the corresponding method. Details are not described herein again.

### BRIEF DESCRIPTION OF DRAWINGS

FIG. 1 to FIG. 4 show examples of a wearable device including a wireless audio apparatus,
FIG. 5A to FIG. 5D are diagrams of some device connection manners according to an embodiment of this application;
FIG. 6A to FIG. 6E are some diagrams of a call control scenario according to an embodiment of this application;
FIG. 7A to FIG. 7C are some other diagrams of a call control scenario according to an embodiment of this application;
FIG. 8A to FIG. 8E are some other diagrams of a call control scenario according to an embodiment of this application;
FIG. 9A to FIG. 9F are some other diagrams of a call control scenario according to an embodiment of this application;
FIG. 10A to FIG. 10E are some other diagrams of a call control scenario according to an embodiment of this application;
FIG. 11A to FIG. 11C are some other diagrams of a call control scenario according to an embodiment of this application;
FIG. 12A to FIG. 12K are some other diagrams of a call control scenario according to an embodiment of this application;
FIG. 13A to FIG. 13J are some other diagrams of a call control scenario according to an embodiment of this application;
FIG. 14A to FIG. 14E are some diagrams of a scenario in which an electronic device is controlled to make an outgoing call through a smartwatch 4-101 according to an embodiment of this application;
FIG. 15A to FIG. 15F are some diagrams of a scenario in which an electronic device makes an outgoing call according to an embodiment of this application;
FIG. 16A to FIG. 16F are some other diagrams of a scenario in which an electronic device is controlled to make an outgoing call through a smartwatch 4-101 according to an embodiment of this application;
FIG. 17A to FIG. 17F are some other diagrams of a call control scenario according to an embodiment of this application;
FIG. 18A and FIG. 18B are a flowchart of a call control method according to an embodiment of this application;
FIG. 19 is a flowchart of a call control method according to an embodiment of this application;
FIG. 20A to FIG. 20F are some other diagrams of a call control scenario according to an embodiment of this application;
FIG. 21 is a flowchart of a call control method according to an embodiment of this application;
FIG. 22 is a flowchart of a call control method according to an embodiment of this application;
FIG. 23A to FIG. 23F are some other diagrams of a call control scenario according to an embodiment of this application;
FIG. 24 is a software architecture of a watch and earphones according to an embodiment of this application;
FIG. 25 is a diagram of a structure of an electronic device 4-200 according to an embodiment of this application;
FIG. 26 is a diagram of a structure of a wearable device accommodating an audio apparatus according to an embodiment of this application; and
FIG. 27 is a diagram of a structure of an audio apparatus according to an embodiment of this application.

### DESCRIPTION OF EMBODIMENTS

The following describes the technical solutions in embodiments of this application with reference to the accompanying drawings in embodiments of this application. In the descriptions of embodiments of this application, terms used in the following embodiments are merely intended to describe purposes of specific embodiments, but are not intended to limit this application. The terms "one", "the", "the foregoing", "this", and "the one" of singular forms used in this specification and the appended claims of this application are also intended to include expressions such as "one or more", unless otherwise specified in the context clearly. It should be further understood that in the following embodiments of this application, "at least one" and "one or more" mean one, two, or more. The term "and/or" is used to describe an association relationship between associated objects and represents that three relationships may exist. For example, A and/or B may represent the following cases: Only A exists, both A and B exist, and only B exists, where A and B each may be singular or plural. The character "/" generally indicates an "or" relationship between associated objects.

Reference to "an embodiment", "some embodiments", or the like described in this specification indicates that one or more embodiments of this application include a specific feature, structure, or characteristic described with reference to embodiments. Therefore, statements such as "in an embodiment", "in some embodiments", "in some other embodiments", and "in other embodiments" that appear at different places in this specification do not necessarily mean referring to a same embodiment. Instead, the statements mean "one or more but not all of embodiments", unless otherwise specifically emphasized in another manner. Terms "include", "contain", "have", and variants of the terms all mean "include but are not limited to", unless otherwise specifically emphasized in another manner. The term "connection" includes a direct connection and an indirect connection, unless otherwise indicated. "First" and "second" are merely intended for a purpose of description, and shall not be understood as an indication or implication of relative importance or implicit indication of a quantity of indicated technical features.

In embodiments of this application, the word "example", "for example", or the like is used to represent giving an example, an illustration, or a description. Any embodiment or design scheme described as "example" or "for example" in embodiments of this application should not be explained as being more preferred or having more advantages than another embodiment or design scheme. Exactly, use of the word "example", "for example", or the like is intended to present a relative concept in a specific manner.

A term "user interface (user interface, UI)" in the following embodiments of this application is a medium interface for interaction and information exchange between an application (application, APP) or an operating system (operating system, OS) and a user, and implements conversion between an internal form of information and a form that can be accepted by the user. The user interface is source code written in a specific computer language like Java or an extensible markup language (extensible markup language, XML). Interface source code is parsed and rendered on an electronic device, and is finally presented as content that can be identified by the user. A frequently-used representation form of the user interface is a graphical user interface (graphical user interface, GUI), and is a user interface that is displayed in a graphical manner and that is related to a computer operation. The user interface may be a visual interface element like a text, an icon, a button, a menu, a tab, a text box, a dialog box, a status bar, a navigation bar, or a widget that is displayed on a display of the electronic device.

Embodiments of this application provide a wearable device including a wireless audio apparatus, to form a new product form in which the wearable device and the audio apparatus are integrated, so that a user can easily obtain both the wearable device and the audio apparatus. Based on the new product form, an embodiment of this application provides a call control method. In addition to providing new user experience, this application implements simple and efficient human-machine interaction. The wearable device and the audio apparatus may be treated as one device. The audio apparatus may be considered as a microphone and speaker of the wearable device, and the wearable device may alternatively serve as a display device and micro control center of the audio apparatus. In this way, the user can perform visual control such as volume adjustment, incoming call answering, and music playing on audio playing. The wearable device may be further used as a charger of the audio apparatus, and the like.

The following first describes the new product form and typical product features and functions, and then describes a call control method provided in embodiments of this application based on the new product form one by one.

### New product form

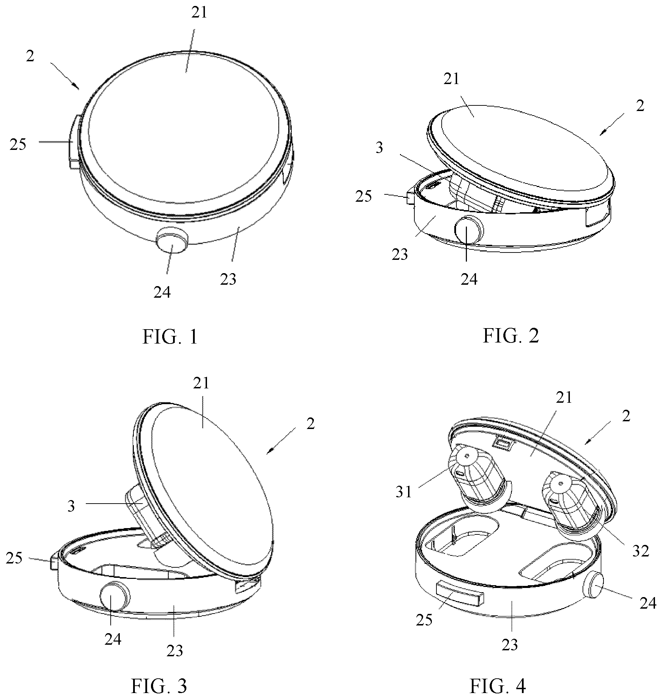

FIG. 1 to FIG. 4 show examples of a wearable device including a wireless audio apparatus, and provide a new product form in which the wearable device and the audio apparatus are integrated. The audio apparatus may be earphones, including but not limited to Bluetooth earphones (for example, true wireless stereo (true wireless stereo, TWS) earphones). Certainly, the audio apparatus may alternatively be another audio apparatus, for example, a mini sound box or a portable music player. The wearable device may be an electronic device like a smartwatch, an electronic sphygmomanometer, a smart band, a smart helmet, smart clothing, smart glasses, a mobile wireless fidelity (wireless-fidelity, Wi-Fi) device, or a smart backpack. The following uses an example in which the wearable device is a smartwatch and the audio apparatus is earphones for description.

As shown in FIG. 1 to FIG. 4, the wearable device 1 may include a host 2 and earphones 3. Here, "include" means that the earphones 3 may be accommodated in the host 2.

The host 2 may include a first part 21 and a second part 23. The first part 21 may be referred to as a cover body, and the second part 23 may be referred to as a main body. The host 2 may further include a wrist strap, and the wrist strap may be connected to two opposite sides of the second part 23. The earphones 3 may include a first earphone 31 and a second earphone 32. Structures of the first earphone 31 and the second earphone 32 may be completely consistent.

FIG. 1 shows that the host 2 is in a closed state. In this case, the first part 21 and the second part 23 are closed. When the host 2 is closed, the first part 21 and the second part 23 may enclose accommodation space, and the earphones 3 are accommodated in the accommodation space. A groove part that is of the second part 23 and that participates in forming the accommodation space may be referred to as an earphone compartment, and may specifically include a left-ear earphone compartment and a right-ear earphone compartment. The earphone compartment may also be referred to as an earphone slot.

FIG. 2 to FIG. 4 show that the host 2 is in an open state. In this case, the first part 21 may be opened at a specific angle relative to the second part 23. For example, an opening angle a of the first part 21 in FIG. 2 may be approximately 15 degrees. An opening angle b of the first part 21 in FIG. 3 may be approximately 75 degrees. It may be understood that a specific value of an opening angle obtained when the first part 21 is at an extreme location may be designed based on a product requirement, for example, may be greater than or equal to 90 degrees. This is not limited to the foregoing description. As shown in FIG. 2 to FIG. 4, when the host 2 is in the open state, the earphones 3 may be detached from the second part 23 and attached to the first part 21. This design facilitates a user to take out and place the earphones 3. The attachment may be implemented by magnetically attracting an earphone magnet by an attracting magnet mounted on the first part 21. Certainly, when the host 2 is in the open state, the earphones 3 may alternatively not be detached from the second part 23, but are accommodated in the earphone compartment of the second part 23.

Not limited to the open state shown in FIG. 2 to FIG. 4, that the host 2 is in the open state may alternatively mean another state. For example, the first part 21 translates relative to the second part 23 until projections of the first part 21 and the second part 23 on a same plane do not overlap or slightly overlap. In this way, the earphones located in the earphone compartment of the second part 23 are fully exposed to the outside and available to the user.

As shown in FIG. 1 to FIG. 3, the host 2 may further include a function button 24 and an open button 25. The function button 24 is configured to be pressed and/or rotated by the user, so that the host 2 implements a corresponding function, for example, selection, confirmation, or image display switching. The function button 24 may be, for example, a power-on/off button. The open button 25 may be mounted on the second part 23. The open button 25 may have a lock structure, so that the open button 25 can cooperate with a lock structure in the first part 21 to implement unlocking and locking of the host 2. Alternatively, the open button 25 may be mounted on the first part. In this case, the second part also has a lock structure. The opening button cooperates with the lock structure in the second part, to implement unlocking and locking of the host.

It may be understood that the wearable device may have an audio apparatus slot. The audio apparatus slot may be configured to accommodate the audio apparatus. The audio apparatus may include a first audio apparatus and a second audio apparatus. When the audio apparatus is an earphone, the first audio apparatus may be the first earphone 31, and the second audio apparatus may be the second earphone 32. The audio apparatus slot may also include a first audio apparatus slot and a second audio apparatus slot. The first audio apparatus slot and the second audio apparatus slot may be configured to accommodate the first audio apparatus and the second audio apparatus. When the audio apparatus is an earphone, the audio apparatus slot may be the earphone compartment (or the earphone slot). The first audio apparatus slot may be the left-ear earphone compartment. The second audio apparatus slot may be the right-ear earphone compartment.

The foregoing section briefly describes composition of the wearable device including the wireless audio apparatus. A person skilled in the related art can further understand typical product features and functions of the wearable device from the following content.

### Typical product features and functions

1. When the host 2 is opened, the earphones 3 are attracted to the first part 21 of the host 2.

Refer to FIG. 1 and FIG. 4. When the host 2 is in the closed state, the earphones 3 are accommodated in the space enclosed by the first part 21 and the second part 23. The first part 21 may have a first host attracting magnet, and a magnet (also referred to as an earphone magnet) may also be correspondingly configured in the earphones 3. Refer to FIG. 1 to FIG. 4. When the host 2 is gradually opened from the closed state, because there is a magnetic attraction force between the earphone magnet and the first host attracting magnet, the earphones 3 are attracted to the first part 21.

The second part 23 may have a second host attracting magnet, and the second host attracting magnet may also be magnetically attracted to the earphone magnet. Comparatively, a magnetic field of the first host attracting magnet is stronger, and the magnetic attraction force between the first host attracting magnet and the earphone magnet is larger; and a magnetic field of the second host attracting magnet is weaker, and a magnetic attraction force between the second host attracting magnet and the earphone magnet is smaller. When the host 2 is gradually opened from the closed state, because the magnetic attraction force of the first host attracting magnet is greater than the magnetic attraction force of the second host attracting magnet, the earphones 3 are attracted to the first part 21, and rotate relative to the second part 23 with the first part 21.

### 2. Detection of the open/closed state of the host 2

A status detection magnet may be mounted in the second part 23 of the host 2.

The first part 21 of the host 2 may have a magnetic field sensor. The magnetic field sensor may be referred to as a first magnetic field sensor, and is configured to detect a magnetic flux of the status detection magnet in the second part 23 of the host 2. The magnetic flux that is of the status detection magnet and that is detected by the first magnetic field sensor may be directly proportional to a spacing between the first magnetic field sensor and the status detection magnet. When the host 2 is in the closed state, the first magnetic field sensor detects a maximum magnetic flux. After the host 2 is completely opened, the first magnetic field sensor detects a minimum magnetic flux.

When the host 2 is gradually opened from the closed state, the spacing between the first magnetic field sensor and the status detection magnet gradually increases, and the magnetic flux that is of the status detection magnet and that is detected by the first magnetic field sensor tends to decrease. When the magnetic flux detected by the first magnetic field sensor is less than a first threshold, it may be considered that the host 2 is in the open state.

On the contrary, when the host 2 is gradually closed from the open state, the spacing between the first magnetic field sensor and the status detection magnet gradually decreases, and the magnetic flux that is of the status detection magnet and that is detected by the first magnetic field sensor tends to increase. When the magnetic flux detected by the first magnetic field sensor is greater than a second threshold, it may be considered that the host 2 is in the closed state.

When it is determined that the host 2 is in the open state, a display on the host 2 may perform corresponding interface display.

When it is determined that the host 2 is in the open state and the earphones 3 are in the host 2 (how to detect whether the earphones 3 are located in the host 2 is described below), a communication electrode of the host 2 may send a signal to a communication electrode of the earphones 3, to wake up the earphones 3. When it is determined that the host 2 is in the closed state and the earphones 3 are located in the host 2, the host 2 may start foreign object detection, and start charging of the earphones 3 after determining that no foreign object enters the host 2.

Locations of the first magnetic field sensor and the status detection magnet may be interchanged. To be specific, the first magnetic field sensor may be in the second part 23, and the status detection magnet may be in the first part 21.

Not limited to the status detection magnet and the magnetic field sensor, the open/closed state of the host 2 may be further detected in another detection manner. For example, a pair of contact detection spring plates may be respectively configured on the first part 21 and the second part 23, and whether the host 2 is in the closed state or the open state may be determined based on a detected contact state. For another example, a pair of an infrared transmitter and an infrared receiver may be respectively configured on the first part 21 and the second part 23, and whether the host 2 is in the closed state or the open state may be determined based on received signal strength.

When it is detected that the host 2 is in the open state, the host 2 may perform corresponding interface display on the display 211. The interface display is described in detail in the following embodiments. Details are not described here.

### 3. In-position detection of the earphones 3

An in-position status of the earphones 3 may include: Two earphones are in compartments, a single earphone is in a compartment, and the two earphones are not in the compartments (including a case in which the two earphones are attracted to the first part 21). Here, a "compartment" is an earphone compartment that is in the second part 23 and that is configured to accommodate an earphone. There may be two earphone compartments, and the first earphone 31 and the second earphone 32 may be respectively accommodated in different earphone compartments.

The in-position detection of the earphones may be performed by the host 2. The second part 23 of the host 2 may have a magnetic field sensor. The magnetic field sensor may be referred to as a second magnetic field sensor, and is configured to detect a change of a magnetic flux of the earphone magnet in the earphones. The two earphone compartments in the second part 23 may be respectively provided with magnetic field sensors, and are respectively configured to detect in-position statuses of the first earphone 31 and the second earphone 32. The magnetic flux that is of the earphone magnet and that is detected by the second magnetic field sensor may be directly proportional to a spacing between the second magnetic field sensor and the earphone magnet. When the magnetic flux detected by the second magnetic field sensor is large, for example, greater than a specific threshold, it may be considered that the earphones are in the compartment. When the magnetic flux detected by the second magnetic field sensor is small, for example, less than the specific threshold, it may be considered that the earphones are not in the compartment.

The in-position detection of the earphones may alternatively be performed by the earphones. The earphones may also have a magnetic field sensor. The magnetic field sensor may be referred to as a third magnetic field sensor, and may be configured to detect a change in the magnetic flux of the status detection magnet in the second part 23 of the host 2. The magnetic flux that is of the status detection magnet and that is detected by the third magnetic field sensor may be directly proportional to a spacing between the third magnetic field sensor and the status detection magnet. When the earphones are in the compartment, the magnetic flux detected by the third magnetic field sensor is large, for example, greater than a specific threshold. When the earphones are not in the compartment, the magnetic flux detected by the third magnetic field sensor is small, for example, less than the specific threshold.

The host 2 may display the in-position status of the earphones 3 on the display 211. For example, when the user presses the function button 24 to light up the display 211, an in-position earphone is displayed on the display 211, and an out-of-position earphone is displayed to be in a "vacant" state. The in-position status of the earphones 3 may also be displayed on an electronic device like a mobile phone that is paired with and connected to the wearable device. Display of the in-position status of the earphones is described in detail in subsequent embodiments. Details are not described here.

### 4. Charging

The earphones may have a charging electrode. After the earphones are placed in the earphone compartment, the charging electrode can be in contact with a charging electrode in the earphone compartment, to obtain power supply.

When the host 2 is not coupled to an external power supply, the host 2 supplies power to the earphones. When the host 2 is coupled to the external power supply, the host 2 and the earphones may be charged together. The earphones may be in contact with the charging electrode in the earphone compartment through the charging electrode of the earphones, to obtain power supply from the external power supply. A manner of charging through the external power supply may be wired charging or wireless charging. To implement wireless charging, the host 2 (for example, the bottom of the second part 23 of the host 2) needs to be provided with a wireless charging coil.

Here, coupling the external power supply may mean that the external power supply is directly connected in a wired manner or is in an effective contact range that is required by wireless charging and that is from the external power supply through the wireless charging coil.

Charging of the host 2 and the earphones may be further optimized based on a specific scenario. A charging method is described in the following embodiments. Details are not described here.

Not limited to the typical features and functions described in the foregoing 1 to 4, the wearable device including the wireless audio apparatus may further have other features or functions, for example, a foreign object detection function and charging overheat protection.

The following describes, by using an example in which the wearable device is a smartwatch and the wireless audio apparatus is a Bluetooth earphone, a call control method provided in embodiments of this application based on the wearable device including the wireless audio apparatus.

### Before the call control method is described, several device connection manners are first described. A wireless communication connection in a device connection manner may be a Bluetooth connection, a Wi-Fi connection, or the like, or a combination of a plurality of wireless communication connections.

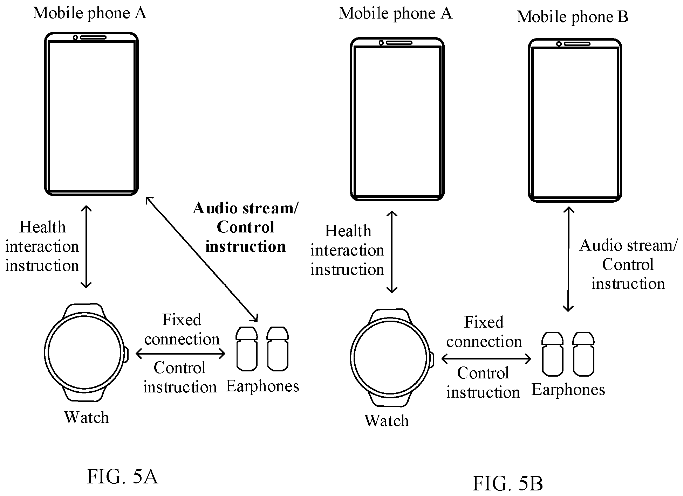

**FIG. 5A** **shows a first connection manner, which may be vividly referred to as a "triangular connection".** The "triangular connection" may be established based on a method of "one-time pairing of an entire device", or may be converted from a "U-shaped connection". This will be described in the following content. Details are not described here.

In the "triangular connection", wireless communication connections are established between a watch and earphones, between the watch and a mobile phone A, and between the mobile phone A and the earphones. Certainly, the mobile phone may be replaced with another electronic device, for example, a tablet computer, a notebook computer, a smart television, or a large-screen device.

A connection between the watch and the earphones may be referred to as a "fixed connection", and establishment of the connection may be automatically performed by a device, and does not need to be triggered by a user, thereby reducing use complexity. For example, when the watch is powered on for the first time and the earphones are in position, the connection may be automatically established. For the user, the connection seems to "exist naturally", and therefore is referred to as a "fixed connection (or an inherent connection)".

The "fixed connection" may be used for data transmission between the watch and the earphones. In a direction from the watch to the earphones, transmitted data may include a noise cancellation instruction and a volume control instruction. The control instruction may be generated when the user performs a control operation on the watch or the mobile phone A by using a series of graphical user interfaces. In the direction from the watch to the earphones, the transmitted data may further include an audio stream, to trigger the earphones to play audio on the watch. In a direction from the earphones to the watch, transmitted data may include earphone status information like power of the earphones, wearing detection data, and the like. The wearing detection data may include detection data about whether the earphones are worn, and include detection data such as a wearing direction and displacement in a wearing process that are obtained through a motion sensor like a gyroscope. The latter detection data may be used to recognize left and right earphones. The "fixed connection" may be further used by the earphones to forward data between the mobile phone A and the watch, for example, health interaction data.

A connection between the watch and the mobile phone A may be used for data transmission between the watch and the mobile phone A. In a direction from the mobile phone A to the watch, transmitted data may include an exercise report, a reminder, and the like in health interaction data. In a direction from the watch to the mobile phone A, transmitted data may include device information (for example, MAC addresses and device names) of the watch and the earphones, statuses of the watch and the earphones (for example, power and an earphone in-position status), exercise data and physiological data such as blood oxygen and a heart rate in the health interaction data, and the like. In the direction from the watch to the mobile phone A, a connection between the watch and the mobile phone A may be further used to transmit an audio control instruction from the watch, for example, a music play instruction like a previous/next track instruction, and a call control instruction like an answering/declining instruction, to trigger the mobile phone A to switch music, answer/decline an incoming call, and the like, and finally affect sound rendered by the earphones. In other words, for audio of the mobile phone A, the user may perform a control operation on the watch.

A connection between the mobile phone A and the earphones may be used for data transmission between the mobile phone A and the earphones. In a direction from the mobile phone A to the earphones, transmitted data may include an audio stream, for example, a streaming audio stream generated during music playing, and a voice audio stream generated during a call. This is not limited thereto. The connection may also be used by the mobile phone A to directly transmit a noise cancellation instruction or a volume decrease/increase instruction to the earphones. In a direction from the earphones to the mobile phone A, transmitted data may include audio collected by a microphone of the earphones, for example, voice audio collected by the microphone of the earphones in a call scenario, or a voice instruction like a "previous/next track" instruction in a music playing scenario. The connection may also be used by the earphones to directly transmit earphone status information such as the power of the earphones, the wearing detection data, and the like to the mobile phone A.

In the "triangle connection", after receiving the data from the earphone, the watch may correspondingly display the data on a watch screen, so that the user can learn about an earphone status like the power of the earphone and a wearing status of the earphone. After receiving the data from the watch, the mobile phone A may correspondingly display the data on a screen of the mobile phone A, so that the user learns of statuses of the watch and the earphone (for example, power and whether the earphone is in position), an exercise status (for example, a running speed) of the user, a physiological status (for example, the blood oxygen and the heart rate) of the user, and the like.

It can be learned that in the "triangle connection", the earphones may play audio from the watch or the mobile phone A. The "triangle connection" allows the user to control, on the watch, audio playing on the mobile phone A and answer/decline an incoming call of the mobile phone A, and the user does not need to find the mobile phone A (which may be placed in a bag) to perform these control operations.

**FIG. 5B** **shows a second connection manner, which may be vividly referred to as a "U-shaped connection".** The "U-shaped connection" may be generated because earphones independently perform pairing with a mobile phone or an entire device of a watch and the earphones changes a mobile phone. This will be described in the following content. Details are not described here.

In the "U-shaped connection", wireless communication connections are established between the watch and the earphones, between the watch and a mobile phone A, and between the earphones and a mobile phone B.

A "fixed connection" between the watch and the earphones may be used for data transmission between the watch and the earphones. In a direction from the watch to the earphones, transmitted data may include an audio control instruction like a noise cancellation instruction and a volume decrease/increase instruction, and an audio stream sent by the watch to the earphones. In a direction from the earphones to the watch, transmitted data may include power of the earphones, wearing detection data, and the like. In addition, in the direction from the earphones to the watch, the transmitted data may further include device information of the mobile phone B connected to the earphones, for example, a device name and a device model. In other words, even if the watch is not connected to the mobile phone B in the "U-shaped connection", the watch can still learn of information about the mobile phone connected to the earphones.

A connection between the watch and the mobile phone A may be used for data transmission between the watch and the mobile phone A. In a direction from the mobile phone A to the watch, transmitted data may include an exercise report, a reminder, and the like in health interaction data. In a direction from the watch to the mobile phone A, transmitted data may include device information (for example, MAC addresses and device names) of the watch and the earphones, statuses of the watch and the earphones (for example, power and an earphone in-position status), exercise data and physiological data such as blood oxygen and a heart rate in the health interaction data, and the like.

A connection between the mobile phone B and the earphones may be used by the mobile phone B to transmit, to the earphones, an audio stream, for example, a streaming audio stream generated during music playing or a voice audio stream generated during a call. This is not limited thereto. The connection may also be used by the mobile phone B to directly transmit a control instruction like a noise cancellation instruction or a volume decrease/increase instruction to the earphones. The connection between the mobile phone B and the earphones may be used by the earphones to transmit device information (for example, a device name) of the earphones, a status (for example, the power) of the earphones, the wearing detection data, and the like to the mobile phone B. The connection may be further used by the earphones to transmit, to the mobile phone B, audio collected by a microphone of the earphones, for example, voice audio collected by the microphone of the earphones in a call scenario, or a voice instruction like a "previous/next track" instruction in a music playing scenario.

In the "U-shaped connection", after receiving the data from the earphones, the watch may correspondingly display the data, so that the user can learn about an earphone status like the power of the earphones and a wearing status of the earphones. After receiving the data from the watch, the mobile phone A may correspondingly display the data on a screen of the mobile phone A, so that the user learns of statuses of the watch and the earphones (for example, power and whether the earphones are in position), an exercise status (for example, a running speed) of the user, a physiological status (for example, the blood oxygen and the heart rate) of the user, and the like. After receiving the data from the earphones, the mobile phone B may correspondingly display the data on a screen of the mobile phone B, so that the user learns of the earphone status (for example, the power). A related user interface will be described in detail in the subsequent implementations. Details are not described here.

It can be learned that, different from the "triangular connection", in the "U-shaped connection", the earphones and the watch are no longer connected to a same mobile phone, but are respectively connected to different mobile phones. The "U-shaped connection" allows the user to use the earphones to play audio of the mobile phone B, and use the watch to exchange health data with the mobile phone A. In other words, the watch and the earphones may serve different devices.

Further, the "U-shaped connection" can further provide richer user experience.
1. The user may also control, on the watch, the earphones to play audio on the mobile phone B, for example, control, on the watch, the earphones to play a next track of music on the mobile phone B, answer an incoming call of the mobile phone B, and the like. In other words, the "fixed connection" between the watch and the earphones may further serve music playing and incoming call answering/declining of the mobile phone B.

Details are described below.

In the direction from the earphones to the watch, the "fixed connection" may be used to transmit interface description information of a music playing interface and an incoming call screen from the mobile phone B, for example, a music name and a play control name, for example, a name, an incoming call number, and a home location of a calling party. Correspondingly, the watch may display a music playing interface and an incoming call screen on the watch based on the interface description information, so that the user can control, on the watch, audio playing of the mobile phone B. However, because a screen of the watch and the screen of the mobile phone B are usually different in size, shape, and the like, the music playing interface/incoming call screen displayed on the watch is naturally different from the music playing interface/incoming call screen displayed on the mobile phone B, even if both the watch and the mobile phone B provide a user interface for same audio.

In addition, in the direction from the watch to the earphones, the "fixed connection" may be used to transmit an audio control instruction from the watch, for example, a music play instruction like a previous/next track instruction, and a call control instruction like an answering/declining instruction. These control instructions are generated when the user performs a control operation on the watch by using the music playing interface and the incoming call screen. Then, these instructions are forwarded to the mobile phone B through the earphones, to trigger the mobile phone B to switch music, answer/decline an incoming call, and the like, and finally affect sound rendered by the earphones. In other words, for audio of the mobile phone B, the mobile phone B needs to be notified of the control operation performed by the user on the watch B through the earphones, so that the mobile phone B can learn of a control requirement of the user, and perform corresponding music playing control and call control.

To avoid a conflict that occurs when both the mobile phone A and the mobile phone B need to use the watch to display an interface, the watch may preferentially display an interface for the mobile phone A, or may display an interface for the mobile phone B in a manner such as a small window or a floating window while displaying an interface for the mobile phone A in full screen. An interface to be displayed may be further determined based on a function selected by the user on the watch. For example, if the user selects "Health", health interaction data between the watch and the mobile phone A is displayed. If the user selects "Current music", audio of the mobile phone B currently played by the earphones is displayed. In actual application, the conflict may alternatively be resolved according to another policy. This is not limited herein.
2. The user may also use the earphones to play audio of the mobile phone A, and control, on the watch, the earphones to play the audio on the mobile phone A.

Details are described below.

The communication connection between the watch and the mobile phone A and the "fixed connection" between the watch and the earphones may be further used to transmit the audio stream of the mobile phone A. In other words, the audio stream of the mobile phone A may be forwarded to the earphones through the watch, to implement rendering and playing.

In addition, in the direction from the mobile phone A to the watch, the communication connection between the watch and the mobile phone A may be further used to transmit interface description information of a music playing interface and an incoming call screen of the mobile phone A to the watch. Correspondingly, the watch may display a music playing interface and an incoming call screen on the watch based on the interface description information, so that the user controls, on the watch, audio playing of the mobile phone A. In the direction from the watch to the mobile phone A, the communication connection between the watch and the mobile phone A may be further used to transmit an audio control instruction generated by the user on the watch, for example, a music play instruction like a previous/next track instruction, and a call control instruction like an answering/declining instruction, to trigger the mobile phone A to switch music, answer/decline an incoming call, and the like, and finally affect sound rendered by the earphones. The "fixed connection" may be further used to transmit a volume control instruction, a noise cancellation instruction, and the like from the mobile phone A, to control the earphones to adjust volume, perform noise cancellation, and the like.

To avoid a conflict that occurs when both the mobile phone A and the mobile phone B need to use the earphones to play audio, the watch may receive, only when the mobile phone B does not use the earphones to play audio, an audio stream from the mobile phone A and forward the audio stream to the earphones. In other words, the earphones may preferentially play the audio of the mobile phone B. The watch may determine, based on an audio service priority, which audio is to be preferentially played. For example, a priority of a phone call is higher than a priority of music, and the watch and the mobile phone agree on this priority policy. For example, if the mobile phone A receives an incoming call when the mobile phone B plays music, the watch may send a pause instruction to the mobile phone B through the earphones, and forward an audio stream of the mobile phone A to the earphones. In actual application, the conflict may alternatively be resolved according to another policy. This is not limited herein.

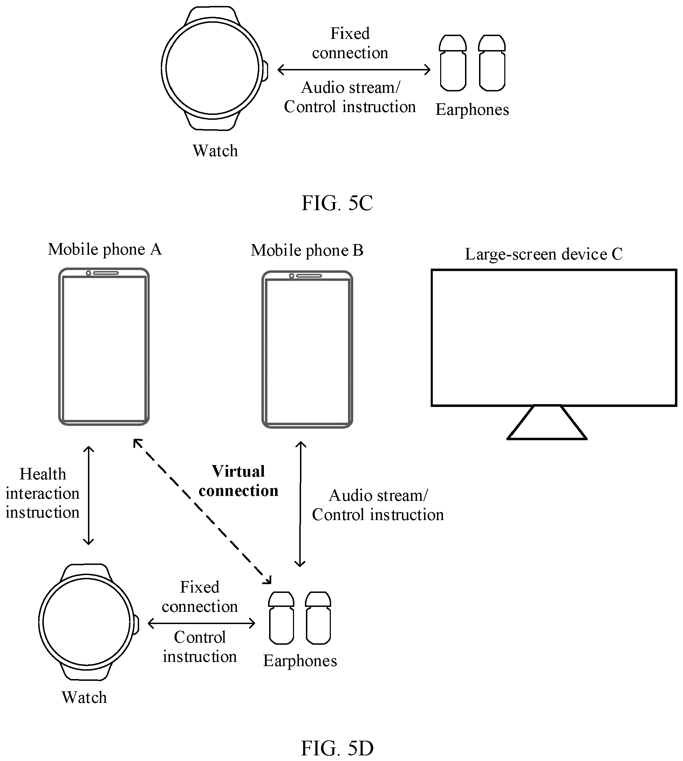

**FIG. 5C** **shows a third connection manner, namely, the "fixed connection" mentioned above.** The "fixed connection" may be generated due to automatic pairing of a watch and earphones. This will be described in the following content. Details are not described here.

A scenario to which the "fixed connection" is applicable may be an exercise scenario. In the exercise scenario, the earphones may play audio from the watch. The "fixed connection" may be mainly used to transmit an audio stream that is sent by the watch to the earphones and a control instruction like a noise cancellation instruction or a volume decrease/increase instruction. Certainly, the "fixed connection" may further be used to transmit power of the earphones and wearing detection data that are sent by the earphones to the watch, a voice instruction collected by a microphone of the earphones, for example, a voice instruction like a "previous/next track" instruction in a music playing scenario, and the like.

**FIG. 5D** **shows a fourth connection manner, which may be vividly referred to as "2+1 connection".** "2+1" in the "2+1 connection" is described from a perspective of earphones, where "2" indicates two physical connections respectively established between the earphones and a watch and between the earphones and a mobile phone, and "1" indicates a virtual connection established between the earphones and another device (for example, a large-screen device).

If the watch and earphones are connected to a same mobile phone, for example, a mobile phone A, the "2+1 connection" is a "triangle connection" plus a virtual connection. If the watch and the earphones are respectively connected to different mobile phones, for example, mobile phones A and B, the "2+1 connection" is a "U-shaped connection" plus a virtual connection.

The "2+1 connection" may be generated because the earphones are paired with and connected to a new mobile phone, and keep a virtual connection with an old mobile phone. This will be mentioned in the following content. Details are not described here.

Not limited to one virtual connection, the earphones can further establish more virtual connections with more devices, to form a "2+2 connection", a "2+3 connection", or even a more complex communication architecture. In this way, the Bluetooth earphone can automatically switch, through the virtual connection, to process audio services of a plurality of electronic devices. Technologies of the "2+1 connection", the "2+2 connection", and even the "2+3 connection" are not limited in this application. For example, Bluetooth dual-connection and Bluetooth multi-connection technologies recorded in the following two patent documents may be used: Chinese Patent Application No. 201910314715.7, entitled "BLUETOOTH CONNECTION METHOD, DEVICE, AND SYSTEM", and Chinese Patent Application No. 202011292453.8, entitled "AUDIO CONTROL SYSTEM". The entire content of the two patent documents is hereby incorporated herein by reference.

This application provides a call control method. A smartwatch 4-101 may communicate with a plurality of electronic devices. The smartwatch 4-101 may establish a communication connection to an electronic device, and directly communicate with the electronic device to which the communication connection is established. The smartwatch 4-101 may further communicate with one or more electronic devices through earphones 4-102. When the plurality of electronic devices receive incoming calls, the smartwatch 4-101 may provide an incoming call notification and an operation control for answering or declining a call. This helps a user quickly view incoming call information and answer or decline the call. The user may control, through the smartwatch 4-101, a plurality of electronic devices to make or answer calls, and may listen to call audio of each electronic device through the earphones 4-102. According to the call control method provided in this application, the user can conveniently control a plurality of electronic devices to make/answer calls, thereby improving call experience of the user.

It should be noted that the smartwatch 4-101 may be the wearable device 1 shown in FIG. 1 to FIG. 4. The earphones 4-102 may be an audio apparatus that can be accommodated in the wearable device 1, for example, the earphone 3 shown in FIG. 1 to FIG. 4. The earphones 4-102 may include the first earphone 31 and the second earphone 32 shown in FIG. 4.

Here, an example in which the wearable device is the smartwatch 4-101 and the audio apparatus is the earphones 4-102 is used, and some call control scenarios provided in embodiments of this application are described in the foregoing device connection manner.

### FIG. 6A to FIG. 6E show an example of a call control scenario.

As shown in FIG. 6A, the smartwatch 4-101 is paired with an electronic device 4-200, and a communication connection is established between the smartwatch 4-101 and the electronic device 4-200. A communication connection is established between the smartwatch 4-101 and the earphones 4-102. A communication connection is also established between the electronic device 4-200 and the earphones 4-102. The communication connections between the smartwatch 4-101, the earphones 4-102, and the electronic device 4-200 may be, for example, Bluetooth communication connections. A manner of implementing the communication connections between the smartwatch 4-101, the earphones 4-102, and the electronic device 4-200 is not limited in embodiments of this application. For a manner of establishing a communication connection between every two of the smartwatch 4-101, the earphones 4-102, and the electronic device 4-200, refer to the descriptions in the foregoing embodiments. Details are not described herein again.

As shown in FIG. 6B, the electronic device 4-200 receives an incoming call. The electronic device 4-200 may display a user interface 4-610. The user interface 4-610 may be an incoming call notification screen of a Phone application in the electronic device 4-200. The user interface 4-610 may include caller information 4-611, a decline control 4-612, and an answer control 4-613.

The caller information 4-611 may indicate a caller who makes a call to the electronic device 4-200. The caller information 4-611 may include information such as a name of the caller, a phone number of the caller, and the like. Content included in the caller information 4-611 is not limited in embodiments of this application. For example, the caller name included in the caller information 4-611 is "Zhang San". This may indicate that the electronic device 4-200 receives an incoming call from a user named "Zhang San".

The decline control 4-612 may be used to decline a call, for example, decline the incoming call from Zhang San.

The answer control 4-613 may be used to answer a call, for example, answer the incoming call from Zhang San.

Because there is a communication connection established between the electronic device 4-200 and the smartwatch 4-101, the electronic device 4-200 may send incoming call information to the smartwatch 4-101 after receiving the incoming call from Zhang San. When receiving the incoming call information sent by the electronic device 4-200, the smartwatch 4-101 may detect whether the earphones 4-102 are in a worn state. In a possible implementation, the earphones 4-102 may perform wearing detection periodically or aperiodically. The smartwatch 4-101 may receive a wearing detection result sent by the earphones 4-102, to determine whether the earphones 4-102 are in the worn state. Optionally, the smartwatch 4-101 may send a wearing detection instruction to the earphones 4-102, to indicate the earphones 4-102 to perform wearing detection. According to the wearing detection instruction, the earphones 4-102 may perform wearing detection, and send a wearing detection result to the smartwatch 4-101. An implementation method in which the earphones 4-102 perform wearing detection is not limited in embodiments of this application.
1. When the electronic device 4-200 receives the incoming call, the user does not wear the earphones 4-102.

When it is detected that the earphones 4-102 are not in the worn state, the smartwatch 4-101 may display, based on the received incoming call information, a user interface 4-620 shown in FIG. 6B.

As shown in FIG. 6B, the user interface 4-620 may include time information 4-621, a device name 4-622, caller information 4-623, an answer prompt 4-624, a decline control 4-625, and a decline by message control 4-626.

The time information 4-621 may indicate current time. For example, the time information 4-621 is 8:00, indicating that the current time is 8:00.

The device name 4-622 may indicate a name of a device that receives the incoming call. For example, when the device name 4-622 is "Device 1", it may indicate that the incoming call is received by a device (namely, the electronic device 4-200) whose name is "Device1" In embodiments of this application, an example in which the electronic device 4-200 is a mobile phone named "Device1" is used for description. The name and a device type of the electronic device 4-200 are not limited in embodiments of this application. The user may know a device that receives the incoming call based on the device name 4-622.

For the caller information 4-623, refer to the caller information 4-611 displayed by the electronic device 4-200 on the user interface 4-610. The user may know who makes the call based on the caller information 4-623.

The answer prompt 4-624 may be used to prompt the user with an operation manner of answering, through the earphones 4-102, the incoming call received by the electronic device 4-200. For example, because the earphones 4-102 are currently in the not-worn state, content of the answer prompt 4-624 may include "Wear the earphones to automatically answer the incoming call". That is, after wearing the earphones 4-102, the user may answer the incoming call received by the electronic device 4-200.

The decline control 4-625 may be used to trigger the smartwatch 4-101 to decline the incoming call received by the electronic device 4-200. In response to an operation performed on the decline control 4-625, the smartwatch 4-101 may send a call declining instruction to the electronic device 4-200. The electronic device 4-200 may decline the call according to the call declining instruction.

The decline by message control 4-626 may be used to decline a call with a message. The declining a call with a message may be declining the call and replying with preset SMS message content.

The user may answer the incoming call on the electronic device 4-200 based on the answer prompt 4-624 by wearing the earphones 4-102.

When it is detected that the user wears the earphones 4-102 (that is, the earphones 4-102 change from the not-worn state to the worn state), the smartwatch 4-101 may send a call answering instruction to the electronic device 4-200.

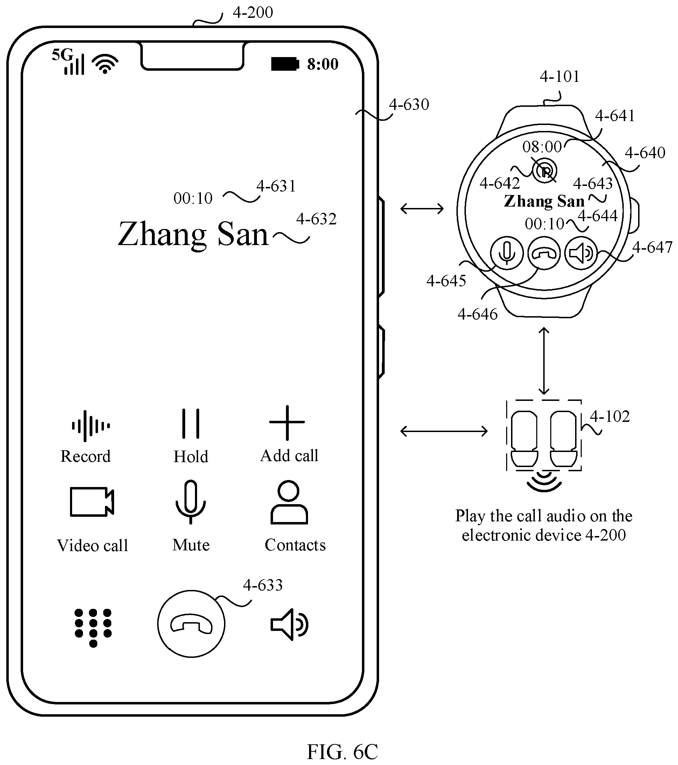

As shown in FIG. 6C, when receiving the call answering instruction of the smartwatch 4-101, the electronic device 4-200 may display a user interface 4-630. The user interface 4-630 may be a call screen of the Phone application in the electronic device 4-200.

The user interface 4-630 may include call duration 4-631, caller information 4-632, and a hang-up control 4-633. The call duration 4-631 may indicate duration of an ongoing call. The caller information 4-632 may indicate information about an object that is in a call with the electronic device 4-200. For example, the caller information 4-632 includes text information "Zhang San", indicating that the object being in the call with the electronic device 4-200 is a user whose name is "Zhang San". The hang-up control 4-632 may be used to hang up the call corresponding to the user interface 4-630. The user interface 4-630 may further include more or fewer controls. This is not limited in embodiments of this application.

After the electronic device 4-200 answers the call, audio data of the call may be transmitted between the electronic device 4-200 and the earphones 4-102. The electronic device 4-200 may send audio data (for example, voice data of the user "Zhang San") from a call peer end to the earphones 4-102. The earphones 4-102 may play call audio on the electronic device 4-200 with a sound, namely, the audio data that is of the call peer end and that is in the electronic device 4-200. The earphones 4-102 may collect audio of the user on the electronic device 4-200 side through an audio collection apparatus (for example, a microphone), and send the audio to the electronic device 4-200. Then, the electronic device 4-200 may send the audio data of the user on the electronic device 4-200 side to the call peer end. It can be learned that the user may answer the call on the electronic device 4-200 through the earphones 4-102.

After the electronic device 4-200 answers the call, call control information (for example, control information for hanging up the call) may be transmitted between the electronic device 4-200 and the smartwatch 4-101. The call control information may also be transmitted between the smartwatch 4-101 and the earphones 4-102. The smartwatch 4-101 may display the user interface 4-640 shown in FIG. 6C.

As shown in FIG. 6C, the user interface 4-640 may include time information 4-641, a noise cancellation switching control 4-642, caller information 4-643, call duration 4-644, a mute control 4-645, a hang-up control 4-646, and a volume control 4-647.

The time information 4-641 may indicate current time.

The noise cancellation switching control 4-642 may be used to switch a noise control mode. In response to an operation performed on the noise cancellation switching control 4-642, the smartwatch 4-101 may control the earphones 4-102 to switch among a noise cancellation mode, an awareness mode, and a noise cancellation and awareness disabled mode. The noise cancellation mode may reduce interference caused by an external ambient sound to audio listening performed by the user through the earphones 4-102. When being in the noise cancellation mode, the earphones 4-102 may filter out the external ambient sound to cancel noise. An implementation method in which the earphones 4-102 filters out the external ambient sound in the noise cancellation mode and cancels the noise is not limited in embodiments of this application. The foregoing awareness mode may help the user talk with another person when wearing the earphones. In the awareness mode, the earphones 4-102 may filter out a background sound from the external ambient sound, but retain a human voice. An implementation method in which the earphones 4-102 filters out the background sound in the external ambient sound in the awareness mode but retains the human voice is not limited in embodiments of this application. That the earphones 4-102 are in the noise cancellation and awareness disabled mode may indicate that the earphones 4-102 disable the noise cancellation mode and the awareness mode.

The smartwatch 4-101 may determine, based on whether the earphones 4-102 are in the noise cancellation mode, the awareness mode, or the noise cancellation and awareness disabled mode, display content included in the noise cancellation switching control 4-642. This can help the user determine a current state of the earphones 4-102 based on the noise cancellation switching control 4-642.

For example, when the earphones 4-102 are in the noise cancellation mode, the noise cancellation switching control 4-102 may include an icon corresponding to the noise cancellation mode shown in FIG. 6C. When the noise cancellation switching control 4-642 may include the icon corresponding to the noise cancellation mode shown in FIG. 6C, in response to an operation, for example, a tap operation, performed on the noise cancellation switching control 4-642, the smartwatch 4-101 may send, to the earphones 4-102, an instruction for switching to the awareness mode, and change the display content of the noise cancellation switching control 4-642 to an icon corresponding to the awareness mode. The earphones 4-102 may switch to the awareness mode in response to the instruction for switching to the awareness mode.

Further, when the noise cancellation switching control 4-642 includes the icon corresponding to the awareness mode, in response to an operation, for example, a tap operation, performed on the noise cancellation switching control 4-642, the smartwatch 4-101 may send, to the earphones 4-102, an instruction for switching to the noise cancellation and awareness disabled mode, and change the display content of the noise cancellation switching control 4-642 to an icon corresponding to the noise cancellation and awareness disabled mode. The earphones 4-102 may switch to the noise cancellation and awareness disabled mode in response to the instruction for switching to the noise cancellation and awareness disabled mode.

Further, when the noise cancellation switching control 4-642 includes the icon corresponding to the noise cancellation and awareness disabled mode, in response to an operation, for example, a tap operation, performed on the noise cancellation switching control 4-642, the smartwatch 4-101 may send, to the earphones, an instruction for switching to the noise cancellation mode, and change the display content of the noise cancellation switching control 4-641 to the icon corresponding to the noise cancellation mode shown in FIG. 6C. The earphones 4-102 may switch to the noise cancellation mode in response to the instruction for switching to the noise cancellation mode.

For the caller information 4-643 and the call duration 4-644, refer to the foregoing descriptions of the caller information 4-632 and the call duration 4-631 on the user interface 4-630, respectively.

The mute control 4-645 may be used to mute a call. In response to an operation, for example, a tap operation, performed on the mute control 4-645, the smartwatch 4-101 may send a mute instruction to the earphones 4-102. When receiving the mute instruction, the earphones 4-102 may stop collecting audio.

The hang-up control 4-646 may be used to hang up a call. In response to an operation performed on the hang-up control 4-646, the smartwatch 4-101 may send a call hang-up instruction to the electronic device 4-200. When receiving the call hang-up instruction, the electronic device 4-200 may hang up the call.

The volume control 4-647 may be used to adjust call volume. In response to an operation of increasing (or decreasing) the call volume through the volume control 4-647, the smartwatch 4-101 may send a volume increase (or decrease) instruction to the earphones 4-102. The earphones 4-102 may increase volume of playing the call audio (or decrease volume of playing the call audio) based on the volume increase (or decrease) instruction.

In some embodiments, when it is detected that one earphone (for example, the left earphone or the right earphone) in the earphones 4-102 changes from the not-worn state to the worn state, and the other earphone (for example, the right earphone or the left earphone) in the earphones 4-102 is still in the not-worn state, the smartwatch 4-101 may also send a call answering instruction to the electronic device 4-200. The electronic device 4-200 may transmit the audio data of the call with the one earphone in the worn state in the earphones 4-102. In a process in which the one earphone in the earphones 4-102 plays the call audio on the electronic device 4-200 with a sound, if the other earphone in the earphones 4-102 changes from the not-worn state to the worn state, the electronic device 4-200 may also transmit the audio data of the call with the other earphone. In other words, after the electronic device 4-200 receives an incoming call, the user may answer the incoming call on the electronic device 4-200 when wearing only one earphone in the earphones 4-102. In a process in which the user answers the call through the one earphone in the earphones 4-102, if the user wears the other earphone in the earphones 4-102, the user may answer the incoming call on the electronic device 4-200 through the two earphones (namely, the left earphone and the right earphone) in the earphones 4-102.

In some embodiments, when receiving an incoming call, the electronic device 4-200 may detect, in response to an operation performed on the answer control 4-613 shown in FIG. 6B, whether the earphones 4-102 are in the worn state.

When it is detected that the earphones 4-102 are in the worn state, the electronic device 4-200 may play the call audio through the earphones 4-102 according to the embodiment shown in FIG. 6C.

When it is detected that the earphones 4-102 are in the not-worn state, the electronic device 4-200 plays audio of the call peer end through an audio playing apparatus (for example, a speaker or an earpiece) of the electronic device 4-200. In addition, the electronic device 4-200 may collect the audio of the user on the electronic device 4-200 side through an audio collection apparatus (for example, a microphone) of the electronic device 4-200. In other words, even if there is a communication connection established between the electronic device 4-200 and the earphones 4-102, the user may directly answer the call through the electronic device 4-200 without wearing the earphones 4-102.

Optionally, after the electronic device 4-200 answers the call in response to the operation performed on the answer control 4-613 shown in FIG. 6B, the electronic device 4-200 may transmit the call control information with the smartwatch 4-101 according to embodiments shown in FIG. 6C. The smartwatch 4-101 may display the user interface 4-640 shown in FIG. 6C. In other words, even if the electronic device 4-200 independently plays the call audio with a sound after answering the call, the smartwatch 4-101 may also display a user interface for controlling a call service on the electronic device 4-200. In this way, the user may control the call service, for example, hanging up a call or adjusting call volume, on the electronic device 4-200 through the smartwatch 4-101.

2. When the electronic device 4-200 receives the incoming call, the user wears the earphones 4-102.

When it is detected that the earphones 4-102 are in the worn state, the smartwatch 4-101 may display, based on the received incoming call information, a user interface 4-650 shown in FIG. 6D.

As shown in FIG. 6D, the electronic device 4-200 may display a user interface 4-610. For the user interface 4-610, refer to the user interface 4-610 shown in FIG. 6B. Details are not described herein again.

The user interface 4-650 displayed by the smartwatch 4-101 may include time information 4-651, a device name 4-622, caller information 4-653, a decline control 4-654, an answer control 4-655, and a decline by message control 4-656.

For the time information 4-651, the device name 4-622, the caller information 4-653, the decline control 4-654, and the decline by message control 4-656, refer to the descriptions of the time information 4-621, the device name 4-622, the caller information 4-623, the decline control 4-625, and the decline by message control 4-626 that are shown in FIG. 6B, respectively. Details are not described herein again.

The answer control 4-655 may be used to answer the incoming call on the electronic device 4-200. In response to an operation, for example, a tap operation, performed on the answer control 4-655, the smartwatch 4-101 may send a call answering instruction to the electronic device 4-200.

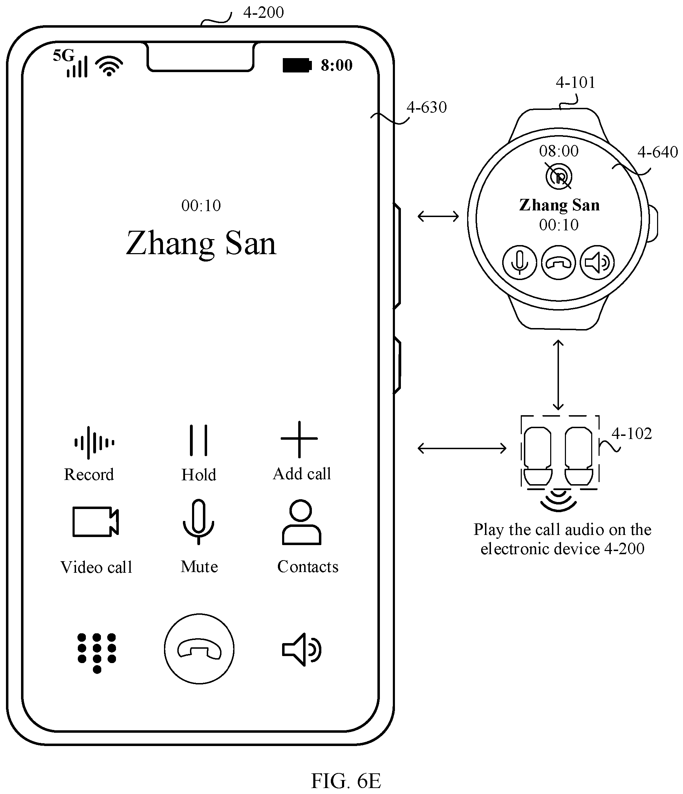

As shown in FIG. 6E, when receiving the call answering instruction of the smartwatch 4-101, the electronic device 4-200 may display a user interface 4-630. For the user interface 4-630, refer to the descriptions in the foregoing embodiments. After the electronic device 4-200 answers the call, the audio data of the call may be transmitted between the electronic device 4-200 and the earphones 4-102. The earphones 4-102 may play call audio on the electronic device 4-200. The call control information (for example, the control information for hanging up the call) may be transmitted between the electronic device 4-200 and the smartwatch 4-101. The smartwatch 4-101 may display the user interface 4-640 shown in FIG. 6E. For the user interface 4-640, refer to the descriptions in the foregoing embodiments.

In some embodiments, when the incoming call is received, and the earphones 4-102 are in the worn state (one earphone or two earphones in the earphones 4-102 are in the worn state), in response to an operation that is performed on the answer control 4-613 and that is shown in FIG. 6D, the electronic device 4-200 may play the audio of the call peer end through the earphones 4-102. In other words, when there is a communication connection established between the electronic device 4-200 and the earphones 4-102, and the user wears the earphones 4-102, the user may perform a call answer operation on the electronic device 4-200, and answer the call through the earphones 4-102.

In some embodiments, when the earphones 4-102 are already in the worn state when the electronic device 4-200 receives the incoming call, the user may further perform an operation on the earphones 4-102 to answer the incoming call on the electronic device 4-200. For example, in response to a double-tap operation performed on the earphones 4-102, the earphones 4-102 may send a call answering instruction to the electronic device 4-200. The electronic device 4-200 may display the user interface 4-630 shown in FIG. 6E according to the call answering instruction from the earphones 4-102. In addition, the electronic device 4-200 may further send, to the smartwatch 4-101, information indicating that the call is being answered. The smartwatch 4-101 may display, based on the information indicating that the call is being answered, the user interface 4-640 shown in FIG. 6E. Optionally, in response to the double-tap operation performed on the earphones 4-102, the earphones 4-102 may send the call answering instruction to the electronic device 4-200 through the smartwatch 4-101. In other words, in the scenario shown in FIG. 6D, in addition to answering the call through the answer control 4-613 on the electronic device 4-200 and the answer control 4-655 on the smartwatch 4-101, the user may answer the incoming call on the electronic device 4-200 by double-tapping a preset area of the earphones 4-102. An operation manner of answering the call on the earphones 4-102 is not limited in embodiments of this application.

In some embodiments, when the earphones 4-102 are already in the worn state when the electronic device 4-200 receives the incoming call or plays the call audio through the earphones 4-102, the user may further perform an operation on the earphones 4-102 to decline/hang up the incoming call on the electronic device 4-200. For example, in response to a triple-tap operation performed on the earphones 4-102, the earphones 4-102 may send a call declining/hang-up instruction to the electronic device 4-200. The electronic device 4-200 may decline/hang up the call according to the call declining/hang-up instruction from the earphones 4-102. Optionally, in response to the triple-tap operation performed on the earphones 4-102, the earphones 4-102 may send the call declining/hang-up instruction to the electronic device 4-200 through the smartwatch 4-101. In other words, in the scenario shown in FIG. 6D of receiving the incoming call and the scenario shown in FIG. 6E of answering the call through the earphones 4-102, the user may perform a call declining/hang-up operation on the electronic device 4-200 and the smartwatch 4-101, the incoming call on the electronic device 4-200 may be declined/hung up by triple-tapping a preset area of the earphones 4-102. An operation manner of declining/hanging up the call on the earphones 4-102 is not limited in embodiments of this application.

In some embodiments, after the electronic device 4-200 answers the call, the smartwatch 4-101 may still detect, in real time, whether at least one earphone in the earphones 4-102 is in the worn state. When detecting that the at least one earphone in the earphones 4-102 remains in the worn state, the smartwatch 4-101 may continuously display the user interface 4-640 shown in FIG. 6C. When detecting that the two earphones in the earphones 4-102 are both in the not-worn state, the smartwatch 4-101 may close the user interface 4-640 shown in FIG. 6C. Further, when detecting that the at least one earphone in the earphones 4-102 changes to the worn state, the smartwatch 4-101 may display the user interface 4-640 shown in FIG. 6C again. In other words, in a process in which the user answers the call through the earphones 4-102, if the user takes off the two earphones in the earphones 4-102, the smartwatch 4-101 may close a user interface (for example, the user interface 4-640) for controlling the electronic device 4-200 to answer the call. In this case, the user cannot control the call service on the electronic device 4-200 through the smartwatch 4-101. When the user wears at least one earphone in the earphones 4-102 again, the smartwatch 4-101 may display a user interface (for example, the user interface 4-640) for control the electronic device 4-200 to answer a call. In this case, the user may control the call service on the electronic device 4-200 through the smartwatch 4-101.

Optionally, in some other embodiments, when the electronic device 4-200 answers the call, and there is a communication connection established between the electronic device 4-200 and the earphones 4-102, the smartwatch 4-101 may continuously display the user interface shown in FIG. 6C in a call process. In other words, when the electronic device 4-200 is connected to the earphones 4-102, regardless of whether the user wears the earphones 4-102, the user may control the call service on the electronic device 4-200 through the smartwatch 4-101.

It can be learned from the scenario shown in FIG. 6A to FIG. 6E that, when the electronic device 4-200 is connected to both the smartwatch 4-101 and the earphones 4-102, the user may control the call on the electronic device 4-200 through the smartwatch 4-101 and the earphones 4-102. The user may answer or decline/hang up the call on the electronic device 4-200 through the smartwatch 4-101. In addition, the smartwatch 4-101 may provide a corresponding operation manner of answering or declining/hanging up the call for the user based on whether the earphones 4-102 are in the worn state. If the user wears the earphones 4-102, the user may further answer or decline/hang up the call on the electronic device 4-200 through the earphones 4-102. According to the foregoing embodiments, the user can more conveniently control the call on the electronic device 4-200, thereby improving call experience of the user.

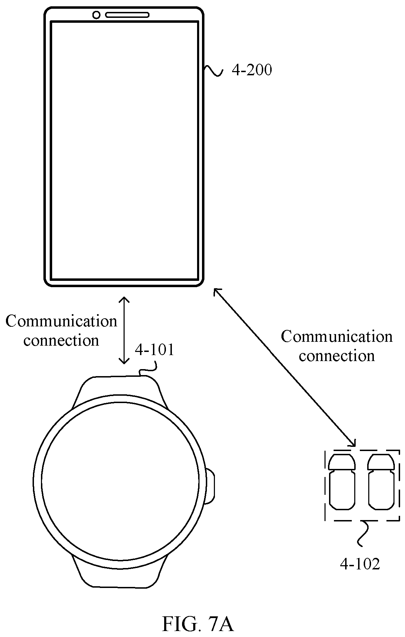

**FIG. 7A to FIG. 7C** **show an example of another call control scenario.**

As shown in FIG. 7A, the smartwatch 4-101 is paired with an electronic device 4-200, and a communication connection is established between the smartwatch 4-101 and the electronic device 4-200. A communication connection is established between the electronic device 4-200 and earphones 4-102. A communication connection between the smartwatch 4-101 and the earphones 4-102 is disconnected. The communication connection between the smartwatch 4-101 and the electronic device 4-200 and the communication connection between the electronic device 4-200 and the earphones 4-102 may be, for example, Bluetooth communication connections. A communication connection manner is not limited in embodiments of this application. For a manner in which the smartwatch 4-101 establishes the communication connection to the electronic device 4-200 and a manner in which the electronic device 4-200 establishes the communication connection to the earphones 4-102, refer to the descriptions in the foregoing embodiments. Details are not described herein again.

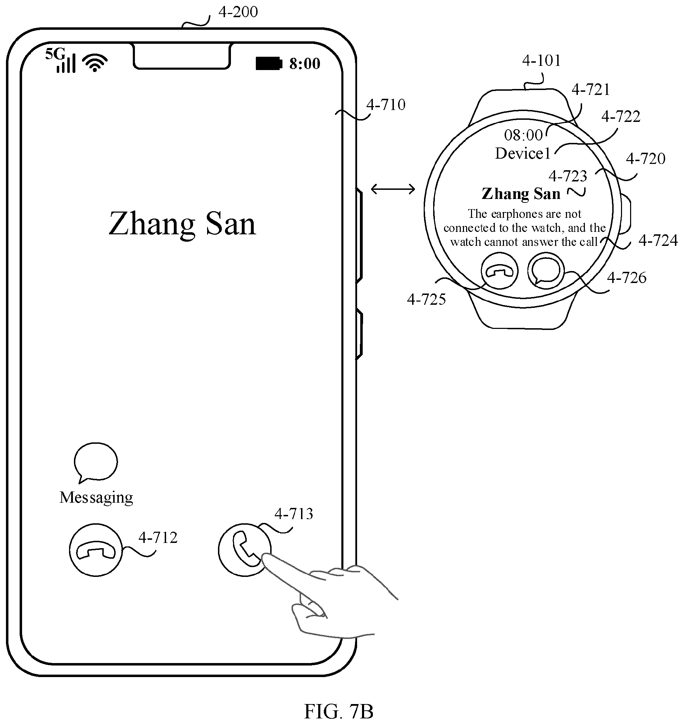

As shown in FIG. 7B, the electronic device 4-200 receives an incoming call. The electronic device 4-200 may display a user interface 4-710. For the user interface 4-710, refer to the user interface 4-610 shown in FIG. 6B. The user interface 4-710 may include a decline control 4-712 and an answer control 4-713. The decline control 4-712 may be used to decline a call. The answer control 4-713 may be used to answer a call.

After receiving the incoming call, the electronic device 4-200 may send incoming call information to the smartwatch 4-101. Because the smartwatch 4-101 is not currently connected to the earphones 4-102, the smartwatch 4-101 may display, based on the received incoming call information, a user interface 4-720 shown in FIG. 7B.

As shown in FIG. 7B, the user interface 4-720 may include time information 4-721, a device name 4-722, caller information 4-723, an earphone disconnection prompt 4-724, a decline control 4-625, and a decline by message control 4-726.

For the time information 4-721, the device name 4-722, the caller information 4-723, the decline control 4-625, and the decline by message control 4-726, refer to the descriptions of the time information 4-621, the device name 4-622, the caller information 4-623, the decline control 4-625, and the decline by message control 4-626 that are on the user interface 4-620 shown in FIG. 6B, respectively. Details are not described herein again.

The earphone disconnection prompt 4-724 may be used to give the user a prompt that the earphones 4-102 are currently not connected to the smartwatch 4-101, and the smartwatch 4-101 cannot control the electronic device 4-200 to answer the call. Content of the earphone disconnection prompt 4-724 may include "The earphone is not connected to the watch, and the watch cannot answer the call". The content of the earphone disconnection prompt 4-724 is not limited in embodiments of this application.

It can be learned from FIG. 7B that, when the smartwatch 4-101 is not connected to the earphones 4-102, the user may learn, through the smartwatch 4-101, that the electronic device 4-200 receives the incoming call, and may decline the call on the electronic device 4-200 through the smartwatch 4-101, but cannot answer the call on the electronic device 4-200 through the smartwatch 4-101. This can avoid a case in which the call is delayed because the user cannot pick up the electronic device 4-200 in a timely manner after the user does not wear the earphones 4-102 and performs a call answer operation on the smartwatch 4-101 to trigger the electronic device 4-200 to answer the call, thereby improving call experience of the user.

In some embodiments, the user interface 4-720 shown in FIG. 7B may also include an answer control. That is, when the smartwatch 4-101 is not connected to the earphones 4-102, the user may also control, through the smartwatch 4-101, the electronic device 4-200 to answer the call.

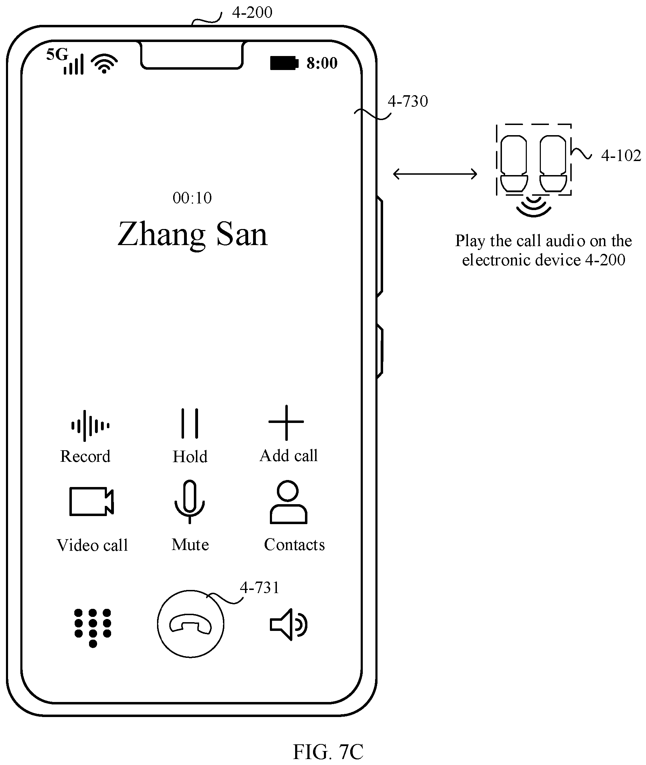

As shown in FIG. 7B, in response to an operation performed on the answer control 4-713 on the electronic device 4-200, the electronic device 4-200 may answer the call, and display a user interface 4-730 shown in FIG. 7C. For the user interface 4-730, refer to the user interface 4-630 shown in FIG. 6C.

As shown in FIG. 7C, in some embodiments, because there is a communication connection established between the electronic device 4-200 and the earphones 4-102, the electronic device 4-200 may transmit audio data of the call with the earphones 4-102 after answering the call. The earphones 4-102 may play call audio on the electronic device 4-200 with a sound, namely, the audio data that is of the call peer end and that is in the electronic device 4-200. The earphones 4-102 may further collect audio of the user on the electronic device 4-200 side and send the audio to the electronic device 4-200, so that the electronic device 4-200 may send audio data of the user on the electronic device 4-200 side to the call peer end.

In some embodiments, because there is a communication connection established between the electronic device 4-200 and the earphones 4-102, the electronic device 4-200 may detect, after detecting the operation that is performed on the answer control 4-713 and that is shown in FIG. 7B, whether the earphones 4-102 are in a worn state. When detecting that one earphone or two earphones in the earphones 4-102 are in the worn state, the electronic device 4-200 may transmit the audio data of the call with the earphones 4-102 after answering the call. When detecting that the two earphones in the earphones 4-102 are both in a not-worn state, the electronic device 4-200 plays the audio of the call peer end through an audio playing apparatus (for example, a speaker or an earpiece) of the electronic device 4-200. In addition, the electronic device 4-200 may collect the audio of the user on the electronic device 4-200 side through an audio collection apparatus (for example, a microphone) of the electronic device 4-200. This can avoid a case in which the user cannot hear the call audio on the electronic device 4-200 because the earphones 4-102 play the call audio on the electronic device 4-200 with a sound when the electronic device 4-200 is connected to the earphones 4-102 but the user does not wear the earphones and wants to answer the call through the electronic device 4-200, thereby improving user experience.

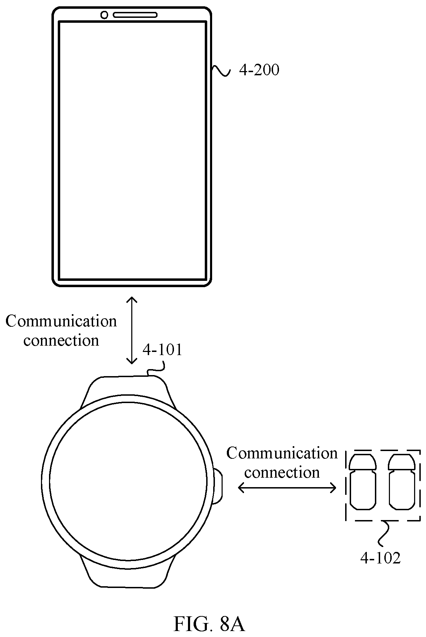

**FIG. 8A to FIG. 8E** **show an example of another call control scenario.**

As shown in FIG. 8A, the smartwatch 4-101 is paired with the electronic device 4-200, and a communication connection is established between the smartwatch 4-101 and the electronic device 4-200. A communication connection is established between the smartwatch 4-101 and the earphones 4-102. The electronic device 4-200 and the earphones 4-102 are not currently connected. The communication connection between the smartwatch 4-101 and the electronic device 4-200 and the communication connection between the smartwatch 4-101 and the earphones 4-102 may be, for example, Bluetooth communication connections. A communication connection manner is not limited in embodiments of this application. For a manner in which the smartwatch 4-101 establishes the communication connection to the electronic device 4-200 and a manner in which the smartwatch 4-101 establishes the communication connection to the earphones 4-102, refer to the descriptions in the foregoing embodiments. Details are not described herein again.

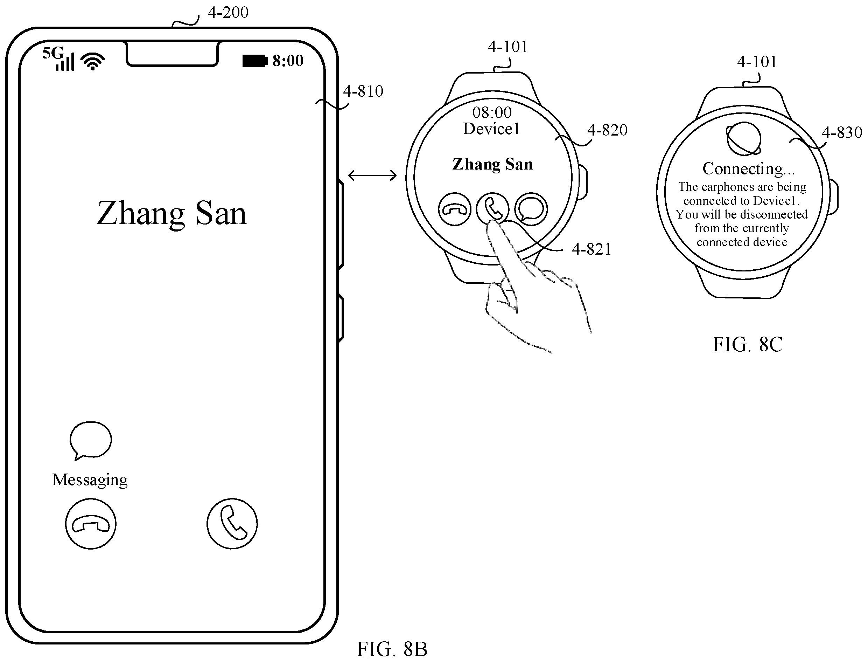

As shown in FIG. 8B, the electronic device 4-200 receives an incoming call. The electronic device 4-200 may display a user interface 4-810. For the user interface 4-810, refer to the user interface 4-610 shown in FIG. 6B. Details are not described herein again.

After receiving the incoming call, the electronic device 4-200 may send incoming call information to the smartwatch 4-101. The smartwatch 4-101 may detect whether the earphones 4-102 are connected to the electronic device 4-200. If it is detected that the earphones 4-102 are connected to the electronic device 4-200, the smartwatch 4-101 may control, based on the scenario shown in FIG. 6B to FIG. 6E, the electronic device 4-200 to answer or decline/hang up the call.

If it is detected that the earphones 4-102 are not connected to the electronic device 4-200, the smartwatch 4-101 may display, based on the received incoming call information, a user interface 4-820 shown in FIG. 8B. For the user interface 4-820, refer to the user interface 4-650 shown in FIG. 6D. The user interface 4-650 may include an answer control 4-821. In response to an operation performed on the answer control 4-821, the smartwatch may display a user interface 4-830 shown in FIG. 8C, and indicate the electronic device 4-200 and the earphones 4-102 to establish a communication connection.

As shown in FIG. 8C, the user interface 4-830 may include a connection prompt. The connection prompt may be used to give the user a prompt that the earphones 4-102 are being connected to the electronic device 4-200, and if there is a communication connection established between the earphones 4-102 and another electronic device than the smartwatch 4-101, the connection between the earphones 4-102 and the electronic device 4-200 causes the communication connection between the earphones 4-102 and the another electronic device to be disconnected. Content of the connection prompt may include "Connecting... The earphones are being connected to Device1. This operation will disconnect the currently connected device". The content of the connection prompt on the user interface 4-830 is not limited in embodiments of this application.

In a possible implementation, because there is a communication connection established between the smartwatch 4-101 and the electronic device 4-200, and there is a communication connection established between the smartwatch 4-101 and the earphones 4-102, the smartwatch 4-101 may send, to the electronic device 4-200, an instruction for establishing a communication connection to the earphones 4-102, and send, to the earphones 4-102, an instruction for establishing a communication connection to the electronic device 4-200. The earphones 4-102 and the electronic device 4-200 may establish the communication connection to each other based on the communication connection establishment instruction. A manner in which the smartwatch 4-101 indicates the electronic device 4-200 and the earphones 4-102 to establish the communication connection is not limited in embodiments of this application.

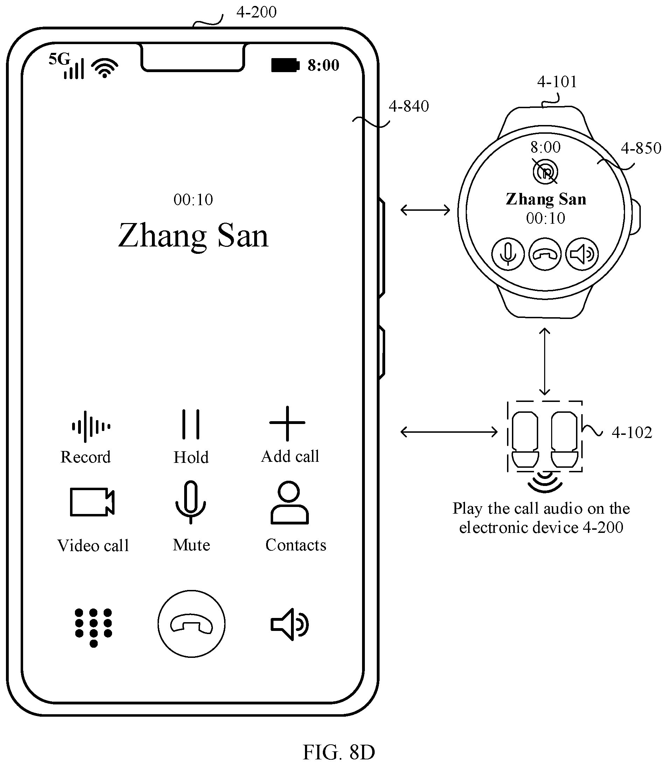

When the electronic device 4-200 successfully establishes the communication connection to the earphones 4-102, the smartwatch 4-101 may control, based on the scenario shown in FIG. 6C, the electronic device 4-200 to answer the call. The smartwatch 4-101 may send a call answering instruction to the electronic device 4-200. When receiving the call answering instruction, the electronic device 4-200 may answer the call, and display a user interface 4-840 shown in FIG. 8D. For the user interface 4-840, refer to the user interface 4-630 shown in FIG. 6C. After the electronic device 4-200 answers the call, the smartwatch 4-101 may display a user interface 4-850 shown in FIG. 8D. For the user interface 4-850, refer to the user interface 4-640 shown in FIG. 6C. The earphones 4-102 may play call audio on the electronic device 4-200.

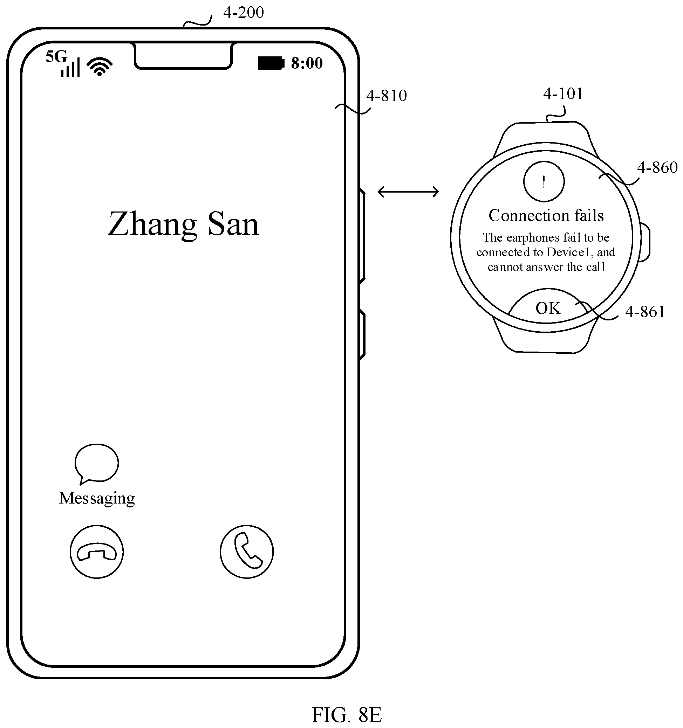

When the electronic device 4-200 fails to establish the communication connection to the earphones 4-102, the smartwatch 4-101 may display a user interface 4-860 shown in FIG. 8E. The user interface 4-860 may include a connection failure prompt. The connection failure prompt may be used to give the user a prompt that the earphones 4-102 fail to be connected to the electronic device 4-200, and the electronic device 4-200 cannot be controlled, through the smartwatch 4-101, to answer the call. Content of the connection failure prompt may include "Connection fails. The earphones fail to be connected to Device1, and cannot answer the call". The user interface 4-860 may further include a confirm control 4-861. In response to an operation performed on the confirm control 4-861, the smartwatch 4-101 may display the user interface 4-820 shown in FIG. 8B again.

As shown in FIG. 8E, when the electronic device 4-200 fails to establish the communication connection to the earphones 4-102, the electronic device 4-200 may continue to maintain a state in which the incoming call waits to be answered, and display the user interface 4-810. The user may perform an operation on the answer control on the user interface 4-810, to answer the call through the electronic device 4-200.

It can be learned from the scenario shown in FIG. 8A to FIG. 8E that, when no communication connection is established between the earphones 4-102 and the electronic device 4-200, the smartwatch 4-101 may give the user a prompt that the electronic device 4-200 receives the incoming call and provides an operation control for answering or declining the call on the electronic device 4-200. When the user controls, through the smartwatch 4-101, the electronic device 4-200 to answer the call, the smartwatch 4-101 may indicate the earphones 4-102 to be connected to the electronic device 4-200, so that the user can answer the call on the electronic device 4-200 through the earphones 4-102, and listen to the call audio. According to the foregoing embodiments, the user does not need to separately perform an operation of connecting the earphones 4-102 to the electronic device 4-200, and the user can conveniently answer the call through the earphones 4-102. This can improve call experience of the user.

In some embodiments, an audio playing apparatus (for example, an earpiece or a speaker) is configured in the smartwatch 4-101. The smartwatch 4-101 may play call audio on a device like the electronic device 4-200.

For example, the electronic device 4-200 receives the incoming call, and may send the incoming call information to the smartwatch 4-101. The smartwatch 4-101 may display an incoming call notification screen (refer to the user interface 4-620 shown in FIG. 6B and the user interface 4-650 shown in FIG. 6D). When detecting an operation of answering the incoming call, the smartwatch 4-101 may detect whether the earphones 4-102 are connected to the electronic device 4-200.

If the earphones 4-102 are connected to the electronic device 4-200, the smartwatch 4-101 may indicate the electronic device 4-200 to answer the incoming call through the earphones 4-102. When the electronic device 4-200 answers the incoming call through the earphones 4-102, the earphones 4-102 may receive and play the call audio of the incoming call on the electronic device 4-200. The earphones 4-102 may further collect the audio and send the audio to the electronic device 4-200, so that the electronic device 4-200 sends the audio collected by the earphones 4-102 to the call peer end.

If the earphones 4-102 are not connected to the electronic device 4-200, the smartwatch 4-101 may indicate the earphones 4-102 to be connected to the electronic device 4-200. After the earphones 4-102 are successfully connected to the electronic device 4-200, the electronic device 4-200 may answer the call through the earphones 4-102. After the earphones 4-102 fail to be connected to the electronic device 4-200, the electronic device 4-200 may play the call audio through an audio playing apparatus on the electronic device 4-200. Alternatively, after the earphones 4-102 fail to be connected to the electronic device 4-200, the smartwatch 4-101 may indicate the electronic device 4-200 to answer the incoming call through the smartwatch 4-101.

Optionally, if the earphones 4-102 are not connected to the electronic device 4-200, after the smartwatch 4-101 indicates the electronic device 4-200 to answer the incoming call, the electronic device 4-200 may play the call audio through the audio playing apparatus on the electronic device 4-200. Alternatively, the smartwatch 4-101 may indicate the electronic device 4-200 to answer the incoming call through the smartwatch 4-101. When the electronic device 4-200 answers the incoming call through the smartwatch 4-101, the smartwatch 4-101 may receive and play the call audio of the incoming call on the electronic device 4-200. The smartwatch 4-101 may further collect the audio and send the audio to the electronic device 4-200, so that the electronic device 4-200 sends the audio collected by the earphones 4-102 to the call peer end.

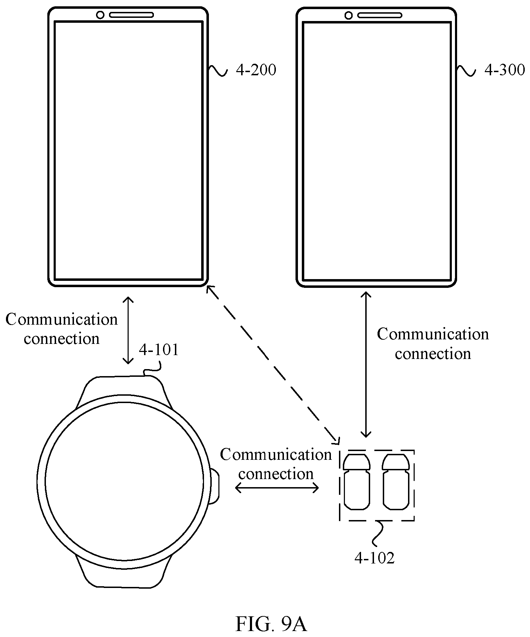

**FIG. 9A to FIG. 9F** **show an example of another call control scenario.**

As shown in FIG. 9A, the smartwatch 4-101 is paired with the electronic device 4-200, and a communication connection is established between the smartwatch 4-101 and the electronic device 4-200. A communication connection is established between the earphones 4-102 and the smartwatch 4-101. A communication connection is established between the earphones 4-102 and the electronic device 4-300. A communication connection has been established between the earphones 4-102 and the electronic device 4-200, but the earphones 4-102 and the electronic device 4-200 are not currently connected. The communication connection between the electronic device 4-200 and the smartwatch 4-101, the communication connection between the smartwatch 4-101 and the earphones 4-102, and the communication connection between the earphones 4-102 and the electronic device 4-300 may be, for example, Bluetooth communication connections. A communication connection manner is not limited in embodiments of this application. For a manner in which the smartwatch 4-101 establishes communication connections to the electronic device 4-200 and the earphones 4-102, and a manner in which the earphones 4-102 establish the communication connection to the electronic device 4-300, refer to the descriptions in the foregoing embodiments. Details are not described herein again.
1. The smartwatch 4-101 may control a call on the electronic device 4-300 that is not connected to the smartwatch 4-101.

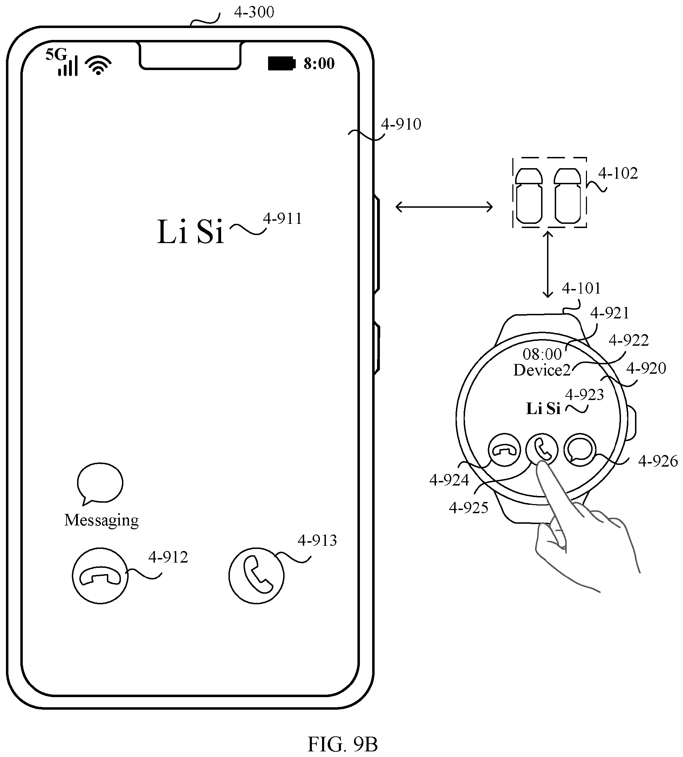

As shown in FIG. 9B, the electronic device 4-300 receives an incoming call. The electronic device 4-300 may display a user interface 4-910. The user interface 4-910 may be an incoming call notification screen of a Phone application in the electronic device 4-300. The user interface 4-910 may include caller information 4-911, a decline control 4-912, and an answer control 4-913.

The caller information 4-911 may indicate a caller who makes a call to the electronic device 4-300. The caller information 4-911 may include information such as a name of the caller, a phone number of the caller, and the like. Content included in the caller information 4-911 is not limited in embodiments of this application. For example, the name of the caller included in the caller information 4-911 is "Li Si". This may indicate that the electronic device 4-300 receives an incoming call from a user named "Li Si".

The decline control 4-912 may be used to decline a call, for example, decline the incoming call from Li Si.

The answer control 4-913 may be used to answer a call, for example, answer the incoming call from Li Si.

After receiving the incoming call from Li Si, the electronic device 4-200 may send incoming call information to the smartwatch 4-101 through the earphones 4-102. When receiving the incoming call information sent by the electronic device 4-200, the smartwatch 4-101 may detect whether the earphones 4-102 are in a worn state. If the earphones 4-102 are in a not-worn state, the smartwatch 4-101 may prompt, based on the scenario shown in FIG. 6B and FIG. 6C, the user to control the incoming call on the electronic device 4-300. If the earphones 4-102 are in the worn state, the smartwatch 4-101 may prompt, based on the scenario shown in FIG. 6D and FIG. 6E, the user to control the incoming call on the electronic device 4-300.

Here, an example in which the smartwatch 4-101 detects that the earphones 4-102 are in the worn state is specifically used for description. When the earphones 4-102 are in the not-worn state, for a method in which the smartwatch 4-101 prompts the user to control the incoming call on the electronic device 4-300, refer to the foregoing descriptions in FIG. 6B and FIG. 6C. Details are not described herein again.

When it is detected that the earphones 4-102 are in the worn state, the smartwatch 4-101 may display, based on the received incoming call information, a user interface 4-920 shown in FIG. 9B.

As shown in FIG. 9B, the user interface 4-920 may include time information 4-921, a device name 4-922, caller information 4-923, a decline control 4-924, an answer control 4-925, and a decline by message control 4-926.

The time information 4-921 may indicate current time.

The device name 4-922 may indicate a name of a device that receives the incoming call. For example, when the device name 4-922 is "Device2", it may indicate that the incoming call is received by a device (namely, the electronic device 4-300) whose name is "Device2". In embodiments of this application, an example in which the electronic device 4-300 is a mobile phone named "Device2" is used for description. The name and a type of the electronic device 4-300 are not limited in embodiments of this application. The user may know a device that receives the incoming call based on the device name 4-922.

For the caller information 4-923, refer to the caller information 4-911 displayed by the electronic device 4-300 on the user interface 4-910.

The decline control 4-924 may be used to trigger the smartwatch 4-101 to control the electronic device 4-300 to decline the call. In response to an operation performed on the decline control 4-924, the smartwatch 4-101 may send a call declining instruction to the electronic device 4-300 through the earphones 4-102. The electronic device 4-300 may decline the received incoming call according to the call declining instruction.

The decline by message control 4-926 may be used to decline a call with a message.

The answer control 4-925 may be used to trigger the smartwatch 4-101 to control the electronic device 4-300 to answer the call. In response to an operation performed on the answer control 4-925, the smartwatch 4-101 may send a call answering instruction to the electronic device 4-300 through the earphones 4-102.

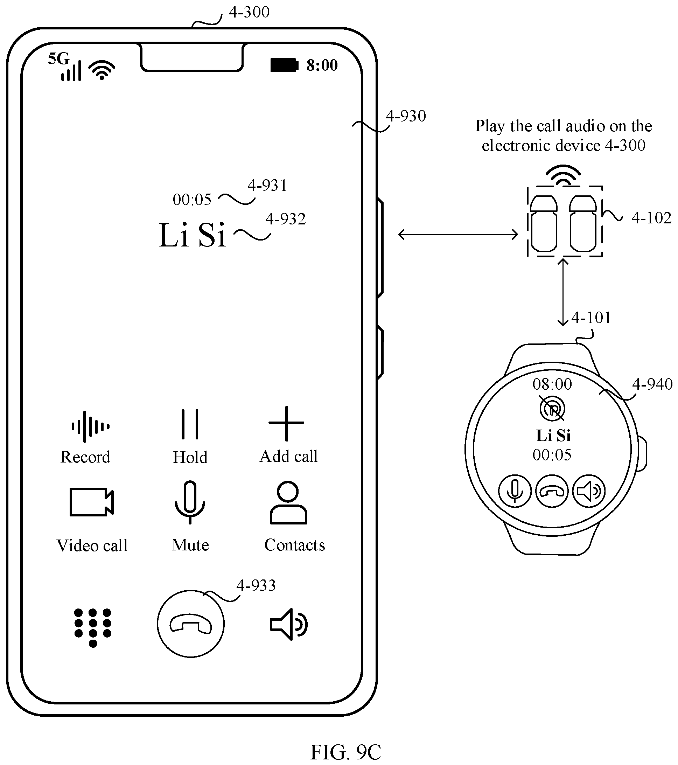

As shown in FIG. 9C, when receiving the call answering instruction of the smartwatch 4-101, the electronic device 4-300 may answer the call, and display a user interface 4-930. The user interface 4-930 may be a call screen of the Phone application in the electronic device 4-300.

The user interface 4-930 may include call duration 4-931, caller information 4-932, and a hang-up control 4-933. The call duration 4-931 may indicate duration of an ongoing call. The caller information 4-932 may indicate information about an object that is in a call with the electronic device 4-300. For example, the caller information 4-932 includes text information "Li Si", indicating that the object being in the call with the electronic device 4-400 is a user whose name is "Li Si". The hang-up control 4-932 may be used to hang up the call corresponding to the user interface 4-930. The user interface 4-930 may further include more or fewer controls. This is not limited in embodiments of this application.

After the electronic device 4-300 answers the call, audio data of the call may be transmitted between the electronic device 4-300 and the earphones 4-102. The electronic device 4-300 may send audio data (for example, voice data of the user "Li Si") from a call peer end to the earphones 4-102. The earphones 4-102 may play call audio on the electronic device 4-300 with a sound, namely, the audio data that is of the call peer end and that is in the electronic device 4-300. The earphones 4-102 may collect audio of the user on the electronic device 4-300 side through an audio collection apparatus (for example, a microphone), and send the audio to the electronic device 4-300. Then, the electronic device 4-300 may send the audio data of the user on the electronic device 4-300 side to the call peer end. It can be learned that the user may answer the call on the electronic device 4-300 through the earphones 4-102.

After the electronic device 4-300 answers the call, call control information may be transmitted between the electronic device 4-300 and the smartwatch 4-101 through the earphones 4-102. The call control information may also be transmitted between the smartwatch 4-101 and the earphones 4-102. The smartwatch 4-101 may display a user interface 4-940 shown in FIG. 9C. For the user interface 4-940, refer to the user interface 4-640 shown in FIG. 6C. Details are not described herein again.

For example, in response to an operation performed on the hang-up control on the user interface 4-940, the smartwatch 4-101 may send a call hang-up instruction to the electronic device 4-300 through the earphones 4-102. When receiving the call hang-up instruction, the electronic device 4-300 may hang up the call.

For another example, in response to an operation that is of increasing volume and that is performed on a volume control on the user interface 4-940, the smartwatch 4-101 may send a volume increase instruction to the earphones 4-102. When receiving the volume increase instruction, the earphones 4-102 may increase volume of playing the call audio.

In some embodiments, in a scenario shown in FIG. 9B in which the electronic device 4-300 receives the incoming call, the earphones 4-102 may send a call answering instruction to the electronic device 4-300 based on a received operation of answering the call (for example, a double-tap operation). In this way, the electronic device 4-300 may answer the call according to the call answering instruction.

In some embodiments, in a scenario shown in FIG. 9C in which the electronic device 4-300 plays the call audio through the earphones 4-102, the earphones 4-102 may further send a call hang-up instruction to the electronic device 4-300 based on a received operation of hanging up the call (for example, a triple-tap operation). In this way, the electronic device 4-300 may hang up the call based on the call hang-up instruction.

It can be learned from the scenario shown in FIG. 9B and FIG. 9C that, in addition to controlling a call on an electronic device (for example, the electronic device 4-200) that directly establishes a communication connection to the smartwatch, the smartwatch 4-101 may control, through the earphones 4-102, a call on an electronic device (for example, the electronic device 4-300) that does not establish a communication connection to the smartwatch. To be specific, the user may view incoming call notifications of a plurality of electronic devices on the smartwatch 4-101, and conveniently control, through the smartwatch 4-101, the plurality of electronic devices to answer or decline/hang up calls. When the user controls, through the smartwatch 4-101, an electronic device to answer a call, the user may listen to call audio on the electronic device through the earphones 4-102.

2. When an incoming call is received in a call answering process, the smartwatch 4-101 may provide a new incoming call notification.

Here, an example in which the electronic device 4-300 receives an incoming call in a call answering process is used for description.

As shown in FIG. 9D, the electronic device 4-300 may display a user interface 4-930. It can be learned from FIG. 9C that the user interface 4-930 may be a call screen in which the electronic device 4-300 answers the call from Li Si. In the process in which the electronic device 4-300 answers the call from Li Si, the electronic device 4-300 receives an incoming call from another user (for example, a user named "Wang Wu"). The electronic device 4-300 may display an incoming call prompt box 4-934 on the user interface 4-930 shown in FIG. 9D. The incoming call prompt box 4-934 may be used to give the user a prompt that the electronic device 4-300 receives a new incoming call.

The incoming call prompt box 4-934 may include an application name 4-934A, caller information 4-934B, a decline control 4-934C, and an answer control 4-934D.

The application name 4-934A may indicate a name of an application that displays the incoming call prompt box 4-934. For example, the application name 4-934A is "Phone". This may indicate that the prompt box 4-934 may be displayed by the Phone application.

The caller information 4-934B may indicate a caller who calls the electronic device 4-300 for the incoming call indicated by the incoming call prompt box 4-934. The caller information 4-934B may include information such as a name of the caller, a phone number of the caller, and the like. Content included in the caller information 4-934B is not limited in embodiments of this application. For example, the caller name included in the caller information 4-934B is "Wang Wu". This may indicate that the electronic device 4-300 receives an incoming call from a user named "Wang Wu".

The decline control 4-934C may be used to decline a call, for example, decline the incoming call from Wang Wu.

The answer control 4-934D may be used to answer a call, for example, answer the incoming call from Wang Wu. In some embodiments, because the electronic device 4-300 is answering the call from Li Si, in response to an operation performed on the answer control 4-934D, the electronic device 4-300 may hang up the call from Li Si, and answer the call from Wang Wu. In some other embodiments, because the electronic device 4-300 is answering the call from Li Si, in response to an operation performed on the answer control 4-934D, the electronic device 4-300 may retain the call from Li Si, answer the call from Wang Wu, and provide a call switching control. The call switching control may help the user switch between the call from Li Si and the call from Wang Wu. An implementation of in which the electronic device 4-300 answers the new incoming call in the call answering process is not limited in embodiments of this application.

When receiving the new incoming call, the electronic device 4-300 may send new incoming call information to the smartwatch 4-101 through the earphones 4-102. When receiving the new incoming call information, the smartwatch 4-101 may display a user interface 4-950 shown in FIG. 9D.

As shown in FIG. 9D, the user interface 4-950 may include time information 4-951, a device name 4-952, caller information 4-953, an incoming call type 4-954, a decline control 4-955, and a decline by message control 4-956.

For the time information 4-951, the device name 4-952, the caller information 4-953, the decline control 4-955, and the decline by message control 4-956, refer to the time information 4-921, the device name 4-922, the caller information 4-923, the decline control 4-924, and the decline by message control 4-926 that are on the user interface 4-920 shown in FIG. 9B.

The incoming call type 4-954 may indicate a type of an incoming call. For example, that the incoming call type 4-954 is a "new incoming call" may mean that the type of the incoming call received by the electronic device 4-300 is a new incoming call. The new incoming call may be an incoming call received by the electronic device 4-300 in a call answering process.

In response to an operation performed on the decline control 4-955, the smartwatch 4-101 may send a new incoming call declining instruction to the electronic device 4-300 through the earphones 4-102. When receiving the new incoming call declining instruction, the electronic device 4-300 may decline the new incoming call (namely, the incoming call from Wang Wu).

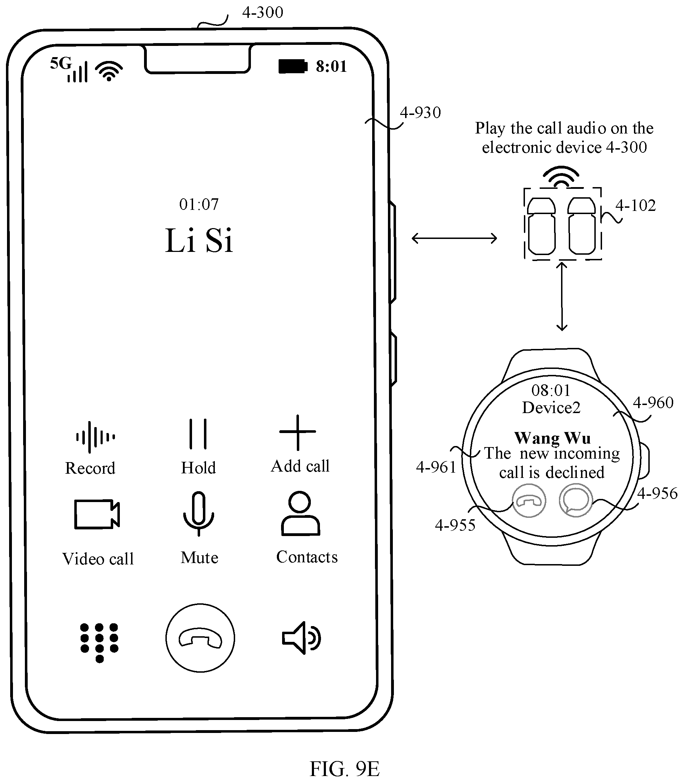

As shown in FIG. 9E, after the new incoming call is declined, the electronic device 4-300 may continue to display the user interface 4-930. In addition, the electronic device 4-300 may send, to the smartwatch 4-101 through the earphones 4-102, a message indicating that the new incoming call is declined. Based on the message indicating that the new incoming call is declined, the smartwatch 4-101 may display a user interface 4-960 shown in FIG. 9E. The user interface 4-960 may include a decline prompt 4-961, a decline control 4-955, and a decline by message control 4-956.

The decline prompt 4-961 may be used to give the user a prompt that the new incoming call is declined. For example, the decline prompt 4-961 may include text information "The new incoming call is declined".

Because the new incoming call in the electronic device 4-300 is declined, the decline control 4-955 and the decline by message control 4-956 on the user interface 4-960 shown in FIG. 9E may be displayed in a display style of unavailable. When the new incoming call in the electronic device 4-300 is not declined, the decline control 4-955 and the decline by message control 4-956 on the user interface 4-950 shown in FIG. 9D may be displayed in a display style of available. For example, the display style of unavailable may be a light-color display style. The display style of available may be a dark display style. Display styles of the decline control 4-955 and the decline by message control 4-956 are not limited in embodiments of this application.

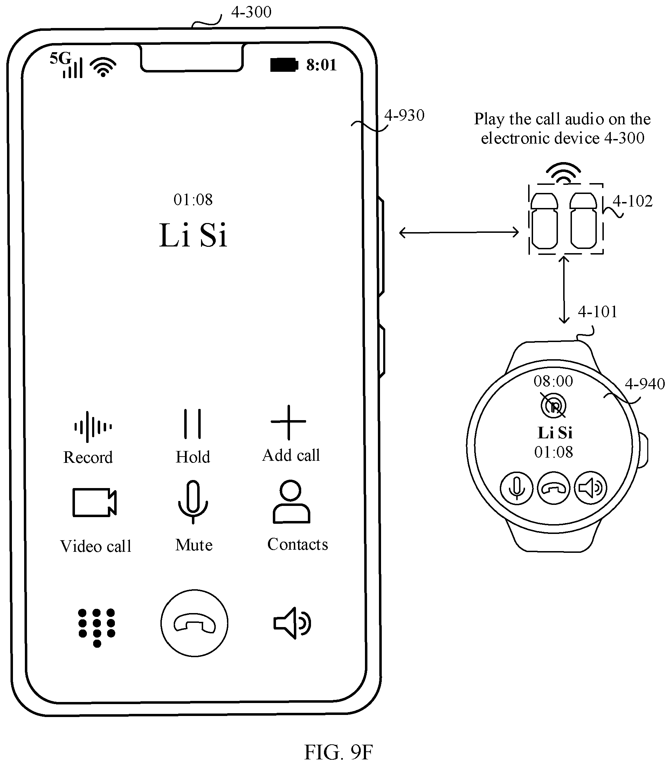

As shown in FIG. 9F, after displaying the user interface 4-960 shown in FIG. 9E for preset duration, the smartwatch 4-101 may display the user interface 4-940 again. For the user interface 4-940, refer to the descriptions in the foregoing embodiments.

It can be learned from the scenario shown in FIG. 9D to FIG. 9F that the smartwatch 4-101 may determine, through the earphones 4-102, that the electronic device 4-300 receives the new incoming call in the call answering process, and give the user a prompt that the electronic device 4-300 receives the new incoming call. In this way, the user may answer or decline, through the smartwatch 4-101, the new incoming call received by the electronic device 4-300. In addition, the user may listen to call audio on the electronic device 4-300 through the earphones 4-102. The call audio may include call audio of any call on the electronic device 4-300 (for example, call audio of the new incoming call and call audio of a call before the new incoming call).

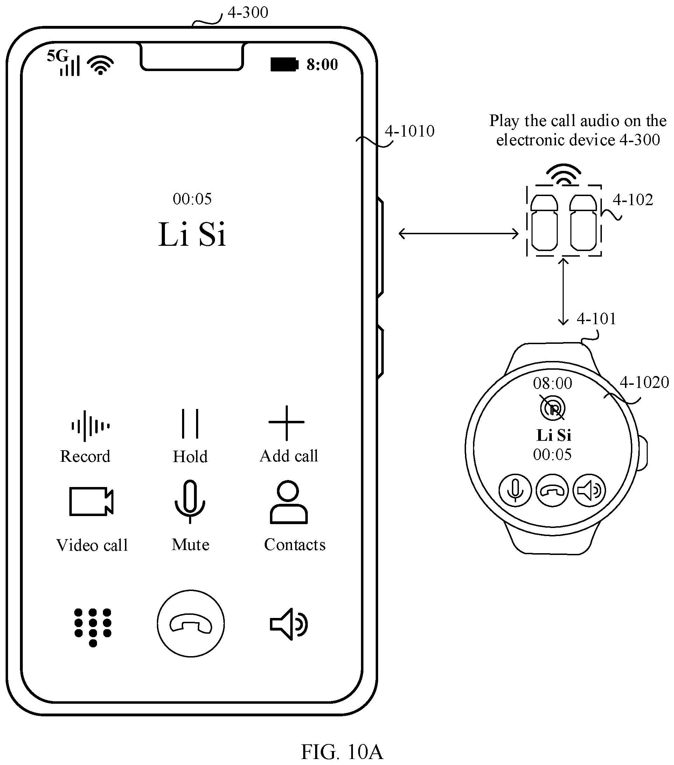

**FIG. 10A to FIG. 10E** **show an example of another call control scenario.**

As shown in FIG. 10A, the electronic device 4-300 is answering a call through the earphones 4-102. The earphones 4-102 may play call audio on the electronic device 4-300 with a sound. The electronic device 4-300 may display a user interface 4-1010. For the user interface 4-1010, refer to the user interface 4-930 shown in FIG. 9C. The electronic device 4-300 and the smartwatch 4-101 may transmit call control information through the earphones 4-102. The smartwatch 4-101 may display a user interface 4-1020. For the user interface 4-1020, refer to the user interface 4-940 shown in FIG. 9C. For a scenario shown in FIG. 10A in which the electronic device 4-300 answers the call, refer to the descriptions of the scenario shown in FIG. 9C. Details are not described herein again.

In addition to establishing a communication connection to the earphones 4-102, the smartwatch 4-101 further establishes a communication connection to the electronic device 4-200. In a process in which the electronic device 4-300 answers the call shown in FIG. 10A, the electronic device 4-200 receives an incoming call.

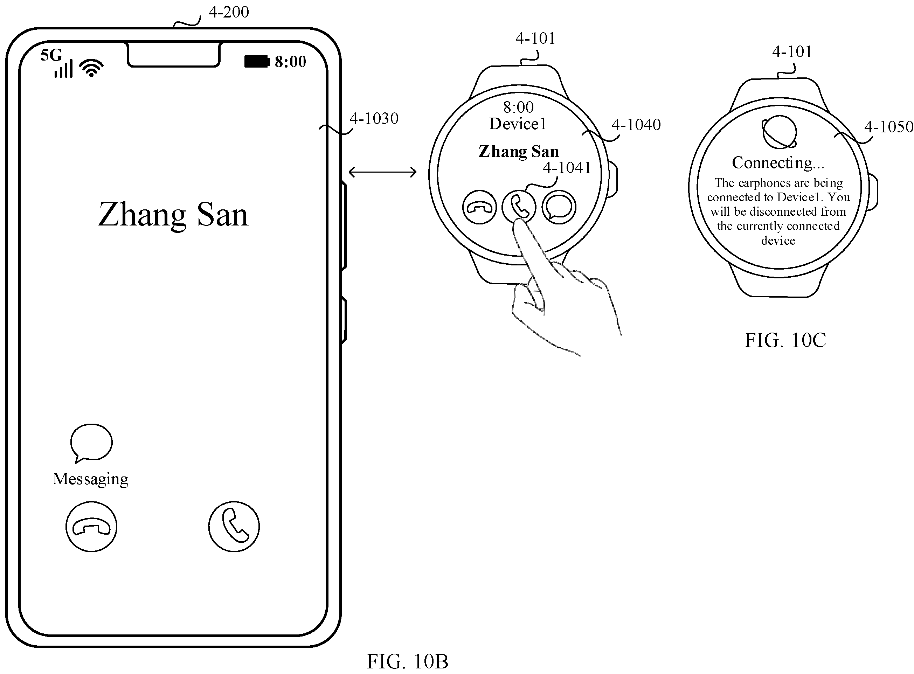

As shown in FIG. 10B, the electronic device 4-200 may display a user interface 4-1030. For the user interface 4-1030, refer to the user interface 4-610 shown in FIG. 6B. When receiving the incoming call, the electronic device 4-200 may send incoming call information to the smartwatch 4-101. The smartwatch 4-101 may display, based on the incoming call information of the electronic device 4-200, a user interface 4-1040 shown in FIG. 6B. For the user interface 4-1040, refer to the user interface 4-650 shown in FIG. 6D.

As shown in FIG. 10B, in response to an operation performed on an answer control 4-1041 on the user interface 4-1040, the smartwatch 4-101 may detect whether the earphones 4-102 are connected to the electronic device 4-200. Because the earphones 4-102 are currently connected to the electronic device 4-300, and are playing the call audio on the electronic device 4-300 with a sound, the smartwatch 4-101 may detect that the earphones 4-102 are not connected to the electronic device 4-200. Further, the smartwatch 4-101 may indicate the earphones 4-102 to establish a communication connection to the electronic device 4-200, and display a user interface 4-1050 shown in FIG. 10C.

The smartwatch 4-101 may send, to the earphones 4-102, an instruction for establishing a communication connection to the electronic device 4-200, and send, to the electronic device 4-200, an instruction for establishing a communication connection to the earphones 4-102. The earphones 4-102 and the electronic device 4-200 may establish the communication connection to each other based on the communication connection establishment instruction.

As shown in FIG. 10C, in a process in which the smartwatch 4-101 indicates the earphones 4-102 to establish the communication connection to the electronic device 4-200, the smartwatch 4-101 may display the user interface 4-1050. The user interface 4-1050 may include a connection prompt. The connection prompt may be used to give the user a prompt that the earphones 4-102 are establishing the communication connection to the electronic device 4-200, and the communication connection between the earphones 4-102 and the electronic device 4-300 is to be disconnected. Content of the connection prompt may include "Connecting... The earphones are being connected to Device1. This operation will disconnect the currently connected device". The content of the connection prompt included on the user interface 4-1050 is not limited in embodiments of this application.

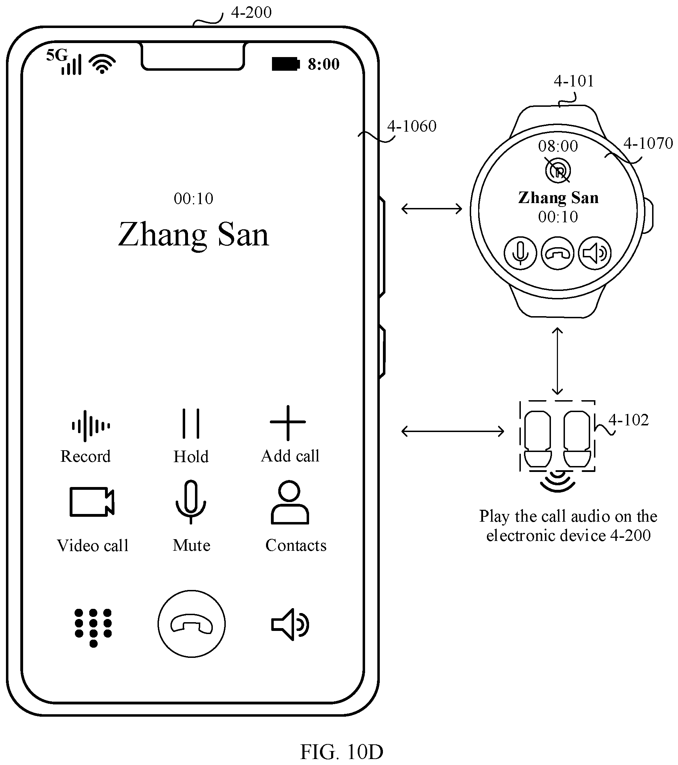

As shown in FIG. 10D, if the earphones 4-102 are successfully connected to the electronic device 4-200, the smartwatch 4-101 may send a call answering instruction to the electronic device 4-200. Then, the electronic device 4-200 may answer the call, and play call audio on the electronic device 4-200 through the earphones 4-102. After answering the call, the electronic device 4-200 may display a user interface 4-1060 shown in FIG. 10D. The electronic device 4-200 may transmit call control information with the smartwatch 4-101. The smartwatch 4-101 may display a user interface 4-1070 shown in FIG. 10D. For the user interface 4-1060 and the user interface 4-1070 shown in FIG. 10D, refer to the user interface 4-840 and the user interface 4-850 shown in FIG. 8D, respectively. Details are not described herein again.

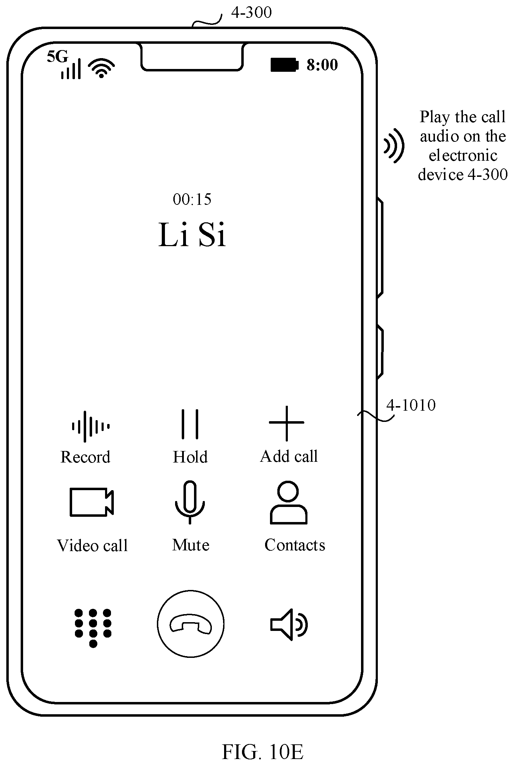

As shown in FIG. 10E, when the earphones 4-102 establish the communication connection to the electronic device 4-200, the earphones 4-102 may disconnect the communication connection to the electronic device 4-300. The call on the electronic device 4-300 is not hung up. The electronic device 4-300 may play the call audio through an audio playing apparatus (for example, a speaker or an earpiece) of the electronic device 4-300. In addition, the electronic device 4-300 may collect audio of the user on the electronic device 4-300 side through an audio collection apparatus (for example, a microphone) of the electronic device 4-300, and send the audio of the user on the electronic device 4-300 side to a device of a call peer end.

For a scenario in which the earphones 4-102 fail to be connected to the electronic device 4-200, refer to the scenario shown in FIG. 8E. Details are not described herein again. In some embodiments, if the earphones 4-102 fail to be connected to the electronic device 4-200, the earphones 4-102 may be connected to the electronic device 4-300 again. In this way, the electronic device 4-300 may continue to play the call audio on the electronic device 4-300 with a sound through the earphones 4-102.

In some embodiments, when the earphones 4-102 play music on the electronic device 4-300 with a sound, after receiving an operation that is shown in FIG. 10B and that is for answering the incoming call on the electronic device 4-200, the smartwatch 4-101 may indicate the earphones 4-102 to establish the communication connection to the electronic device 4-200. In this way, the user can quickly answer the call on the electronic device 4-200 through the earphones 4-102 without manually switching an electronic device connected to the earphones 4-102. When the earphones 4-102 are connected to the electronic device 4-200, the earphones 4-102 may disconnect the communication connection to the electronic device 4-300. When the communication connection between the earphones 4-102 and the electronic device 4-300 is disconnected, the electronic device 4-300 may pause playing of the music. Alternatively, when the communication connection between the earphones 4-102 and the electronic device 4-300 is disconnected, the electronic device 4-300 may play the music with a sound through an audio playing apparatus (for example, a speaker or an earpiece) of the electronic device 4-300.

In some embodiments, when the earphones 4-102 play local music on the smartwatch 4-101 with a sound, after receiving an operation that is shown in FIG. 10B and that is for answering the incoming call on the electronic device 4-200, the smartwatch 4-101 may determine whether the earphones 4-102 are connected to the electronic device 4-200. If the earphones 4-102 are connected to the electronic device 4-200, the smartwatch 4-101 may send the call answering instruction to the electronic device 4-200, and pause the local music on the smartwatch 4-101. After receiving the call answering instruction, the electronic device 4-200 may answer the call. The earphones 4-102 may play the call audio on the electronic device 4-200 with a sound. For details of a scenario in which the electronic device 4-200 answers the call through the earphones 4-102, refer to the scenario shown in FIG. 6C. If the earphones 4-102 are not currently connected to the electronic device 4-200, the smartwatch 4-101 may indicate the earphones 4-102 to establish the communication connection to the electronic device 4-200. After the earphones 4-102 establish the communication connection to the electronic device 4-200, the smartwatch 4-101 may send the call answering instruction to the electronic device 4-200, and pause the local music on the smartwatch 4-101. In this way, the electronic device 4-200 may answer the call through the earphones 4-102. It can be learned that, when the earphones 4-102 do not perform an audio-related service (for example, a music service or a call service) on the electronic device 4-200, if the electronic device 4-200 receives the incoming call, the electronic device 4-200 may preempt the earphones 4-102 through the smartwatch 4-101, so that the earphones 4-102 perform the call service on the electronic device 4-200. That the earphones 4-102 perform the call service on the electronic device 4-200 may include: The earphones 4-102 receive audio data of the call sent by the electronic device 4-200 and play the call audio on the electronic device 4-200 with a sound, and the earphones 4-102 collect the audio data and sends the collected audio data to the electronic device 4-200.

It can be learned from the scenario shown in FIG. 10A to FIG. 10E that the smartwatch 4-101 may be used as a control and management device of the earphones 4-102, to control the earphones 4-102 to perform call services on different electronic devices. The user may control, through the smartwatch 4-101, a plurality of electronic devices to answer or decline/hang up calls, and choose to answer call audio on a specified electronic device through the earphones 4-102. This can improve call experience of the user.

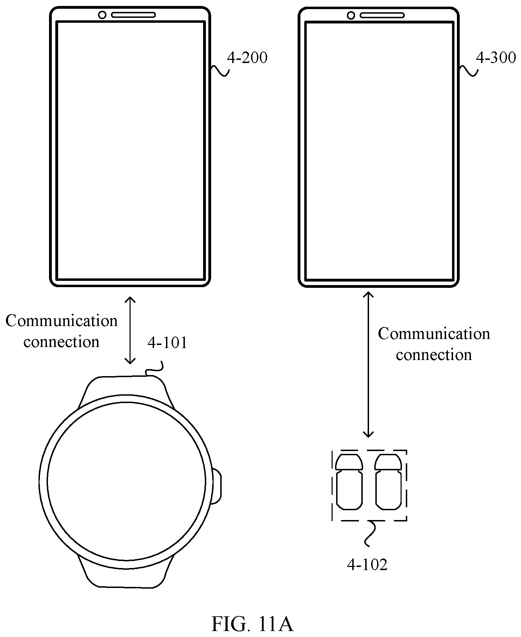

**FIG. 11A to FIG. 11C** **show an example of another call control scenario.**

As shown in FIG. 11A, the smartwatch 4-101 is paired with the electronic device 4-200, and a communication connection is established between the smartwatch 4-101 and the electronic device 4-200. A communication connection is established between the earphones 4-102 and the electronic device 4-300. The earphones 4-102 are not currently connected to the smartwatch 4-101. The communication connection between the smartwatch 4-101 and the electronic device 4-200 and the communication connection between the earphones 4-102 and the electronic device 4-300 may be, for example, Bluetooth communication connections. A communication connection manner is not limited in embodiments of this application. For a manner in which the smartwatch 4-101 establishes the communication connection to the electronic device 4-200, and a manner in which the earphones 4-102 establish the communication connection to the electronic device 4-300, refer to the descriptions in the foregoing embodiments. Details are not described herein again.

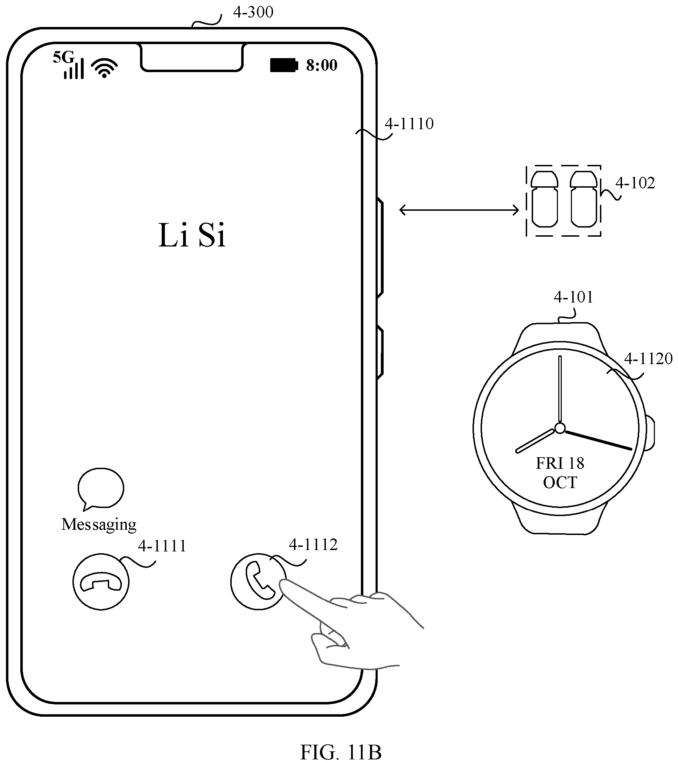

As shown in FIG. 11B, the electronic device 4-300 receives an incoming call. The electronic device 4-300 may display a user interface 4-1110. For the user interface 4-1110, refer to the user interface 4-910 shown in FIG. 9B. The user interface 4-1110 may include a decline control 4-1111 and an answer control 4-1112. The electronic device 4-300 may decline or answer the call in response to an operation performed on the decline control 4-1111 or the answer control 4-1112.

Because there is a communication connection established between the electronic device 4-300 and the earphones 4-102, the electronic device 4-300 may detect whether the earphones 4-102 are in a worn state. If the earphones 4-102 are in the worn state, the electronic device 4-300 may indicate the earphones 4-102 to play an incoming call prompt tone with a sound. In this way, the user learns, based on the incoming call prompt tone played with a sound by the earphones 4-102, that the electronic device 4-300 receives the incoming call. In addition, the earphones 4-102 may indicate the electronic device 4-300 to decline or answer the call in response to an operation performed on the earphones 4-102 to decline or answer the call. If the earphones 4-102 are in a not-worn state, the electronic device 4-300 may play an incoming call prompt tone through an audio playing apparatus (for example, a speaker or an earpiece) of the electronic device 4-300. In some embodiments, if the electronic device 4-300 is in a silent mode or a vibration mode, the electronic device 4-300 does not play the incoming call prompt tone.

Because the earphones 4-102 are not connected to the smartwatch 4-101, a user interface displayed by the smartwatch 4-101 when the electronic device 4-300 receives the incoming call may remain unchanged. For example, a user interface displayed by the smartwatch 4-101 before the electronic device 4-300 receives the incoming call is a user interface 4-1120 shown in FIG. 11B. After the electronic device 4-300 receives the incoming call, the smartwatch 4-101 may continue to display the user interface 4-1120. The user interface 4-1120 may be a home screen of the smartwatch 4-101. Alternatively, a screen of the smartwatch 4-101 is in an off state before the electronic device 4-300 receives the incoming call. After the electronic device 4-300 receives the incoming call, the smartwatch 4-101 may continue to keep the screen in the off state.

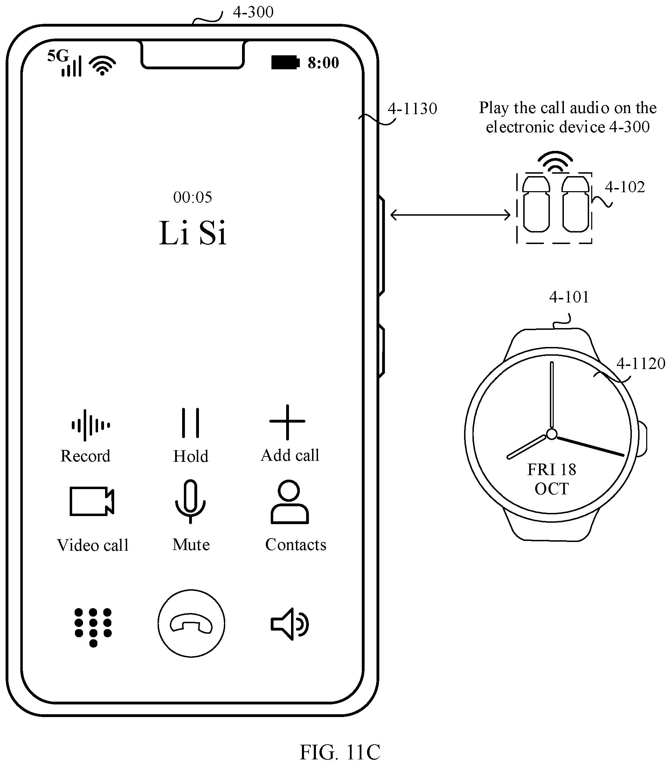

As shown in FIG. 11C, in response to the operation that is performed on the answer control 4-1112 and that is shown in FIG. 11B, the electronic device 4-300 may answer the call. Audio data of the call may be transmitted between the electronic device 4-300 and the earphones 4-102. The earphones 4-102 may play call audio on the electronic device 4-200. In other words, the user may answer the call on the electronic device 4-300 through the earphones 4-102. The smartwatch 4-101 may continue to display the user interface 4-1120.

It can be learned from the scenario shown in FIG. 11A to FIG. 11C that the smartwatch 4-101 may control, through the earphones 4-102, a call service on an electronic device that is not connected to the smartwatch 4-101. If the communication connection between the smartwatch 4-101 and the earphones 4-102 is disconnected, the user cannot learn, through the smartwatch 4-101, whether the electronic device that is not connected to the smartwatch 4-101 receives an incoming call, and control, on the smartwatch 4-101, the call service on the electronic device that is not connected to the smartwatch 4-101.

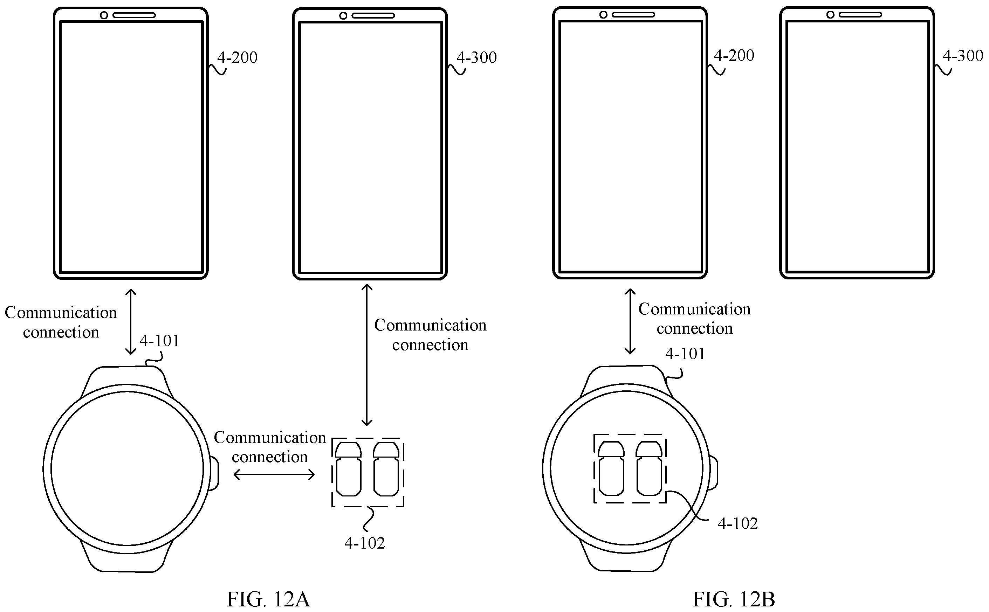

**FIG. 12A to FIG. 12K** **show an example of another call control scenario.**

As shown in FIG. 12A, the smartwatch 4-101 is paired with the electronic device 4-200, and a communication connection is established between the smartwatch 4-101 and the electronic device 4-200. A communication connection is established between the earphones 4-102 and the smartwatch 4-101. A communication connection is established between the earphones 4-102 and the electronic device 4-300. A communication connection has been established between the earphones 4-102 and the electronic device 4-200, but the earphones 4-102 and the electronic device 4-200 are not currently connected. The communication connection between the electronic device 4-200 and the smartwatch 4-101, the communication connection between the smartwatch 4-101 and the earphones 4-102, and the communication connection between the earphones 4-102 and the electronic device 4-300 may be, for example, Bluetooth communication connections. A communication connection manner is not limited in embodiments of this application. For a manner in which the smartwatch 4-101 establishes communication connections to the electronic device 4-200 and the earphones 4-102, and a manner in which the earphones 4-102 establish the communication connection to the electronic device 4-300, refer to the descriptions in the foregoing embodiments. Details are not described herein again.
1. The earphones 4-102 establish a communication connection to the electronic device 4-300 before being placed in a compartment, and the earphones 4-102 may be reconnected to the electronic device 4-300 after being removed from the compartment.

As shown in FIG. 12B, after the earphones 4-102 are placed in an earphone slot in a watch body of the smartwatch 4-101 (that is, the earphones 4-102 are placed in the compartment), the communication connection between the earphones 4-102 and the electronic device 4-300 is disconnected. When the communication connection between the earphones 4-102 and the electronic device 4-300 is disconnected, the smartwatch 4-101 cannot communicate with the electronic device 4-300. In this case, the user cannot control a call service on the electronic device 4-300 through the smartwatch 4-101.

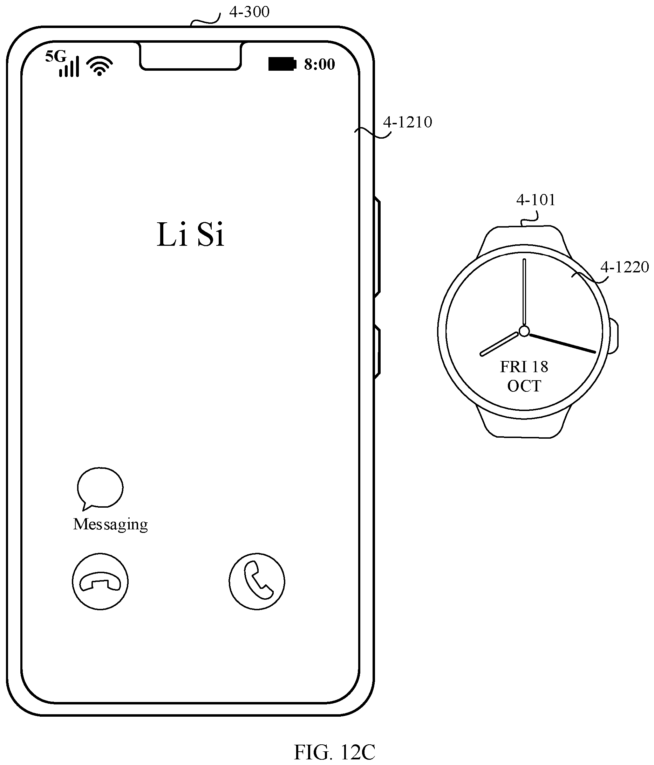

As shown in FIG. 12C, the electronic device 4-300 receives an incoming call. The electronic device 4-300 may display a user interface 4-1210. For the user interface 4-1210, refer to the user interface 4-910 shown in FIG. 9B.

When the earphones 4-102 are placed in the compartment, or when the earphones 4-102 are not connected to the electronic device 4-300, a user interface displayed by the smartwatch 4-101 may be the same as a user interface displayed before the electronic device 4-300 receives the incoming call. For example, before the electronic device 4-300 receives the incoming call, the smartwatch 4-101 displays a user interface 4-1220 shown in FIG. 12C. The user interface 4-1220 may be a home screen of the smartwatch 4-101. After the electronic device 4-300 receives the incoming call, the electronic device 4-300 may continue to display the user interface 4-1220.

In some embodiments, when the earphones 4-102 are taken out of the earphone slot in the watch body of the smartwatch 4-101 (that is, the earphones 4-102 are removed from the compartment), the earphones 4-102 may establish the communication connection to the electronic device 4-300 again.

For example, in a scenario shown in FIG. 12C in which the electronic device 4-300 receives the incoming call after the earphones 4-102 are placed in the compartment, the earphones 4-102 may establish the communication connection to the electronic device 4-300 after being removed from the compartment. Then, the electronic device 4-300 may send incoming call information to the smartwatch 4-101 through the earphones 4-102. The smartwatch 4-101 may display a user interface (for example, the user interface 4-920 shown in FIG. 9B) for controlling a call service on the electronic device 4-200. In a possible implementation, after the earphones 4-102 and the electronic device 4-300 are successfully reconnected, the smartwatch 4-101 may send a call answering instruction to the electronic device 4-300 through the earphones 4-102 when detecting that the earphones 4-102 are in a worn state. In this case, after the user takes the earphones 4-102 out of the watch body of the smartwatch 4-101 and wears the earphones 4-102, the user may directly trigger the electronic device 4-300 to answer the call, and listen to call audio through the earphones 4-102. The user may not need to perform another operation of triggering the electronic device 4-300 to answer the call.

In other words, in a scenario in which the electronic device 4-300 receives the incoming call after the earphones are placed in the compartment, the user may open a watch cover of the smartwatch 4-101 to take the earphones 4-102 out. Then, the earphones 4-102 may be automatically reconnected to the electronic device 4-300. The smartwatch 4-101 may receive the incoming call information of the electronic device 4-300 through the earphones 4-102, and provide a user interface for controlling the call on the electronic device 4-300. In this way, after taking the earphones 4-102 out, the user may listen to the call audio through the earphones 4-102. According to the foregoing embodiments, more operation manners of controlling a call service on the electronic device 4-300 can be provided for the user, to improve call experience of the user.

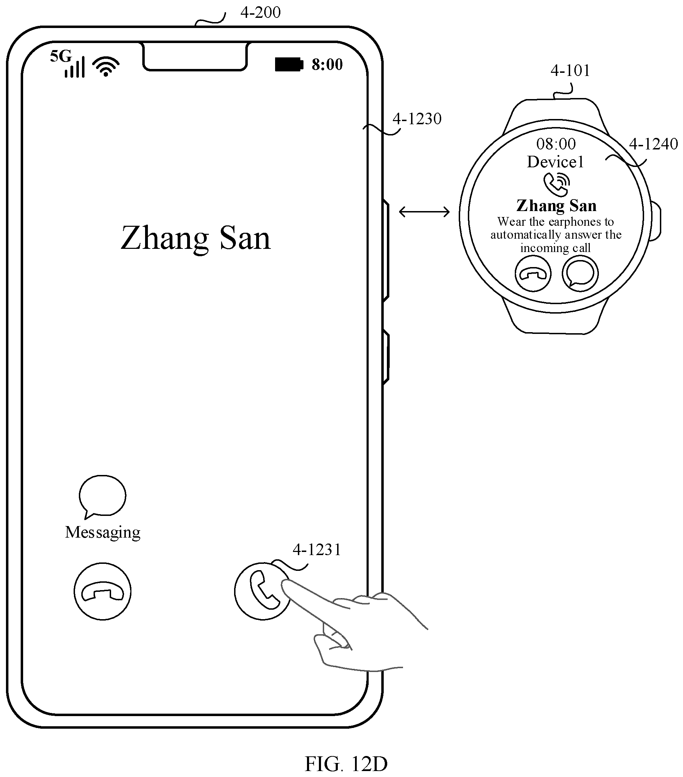

As shown in FIG. 12D, after the earphones 4-102 are placed in the compartment, the electronic device 4-200 receives an incoming call. The electronic device 4-200 may display a user interface 4-1230. For the user interface 1230, refer to the user interface 4-620 shown in FIG. 6B. The electronic device 4-200 may send incoming call information to the smartwatch 4-101.

The earphones 4-102 are currently placed in the earphone slot in the watch body of the smartwatch 4-101. In other words, the earphones 4-102 are currently in a not-worn state. The smartwatch 4-101 may display, based on the incoming call information of the electronic device 4-200, a user interface 4-1240 shown in FIG. 12D. For the user interface 4-1240, refer to the user interface 4-620 shown in FIG. 6B.

The user interface 4-1230 may include an answer control 4-1231. In response to an operation performed on the answer control 4-1231, the electronic device 4-200 may answer the call.

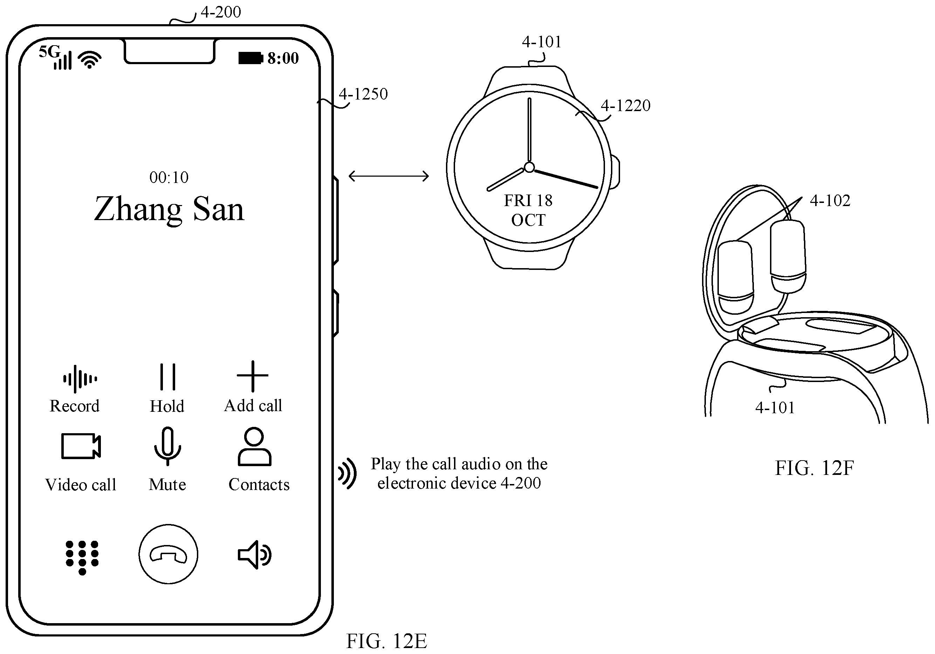

As shown in FIG. 12E, when answering the call, the electronic device 4-200 may display a user interface 4-1250. For the user interface 4-1250, refer to the user interface 4-630 shown in FIG. 6C. The earphones 4-102 are still placed in the watch body of the smartwatch 4-101. The electronic device 4-200 may play call audio of a call peer end through an audio playing apparatus (for example, a speaker or an earpiece) of the electronic device 4-200. The electronic device 4-200 may collect audio of the user on the electronic device 4-200 side through an audio collection apparatus (for example, a microphone) of the electronic device 4-200, and send the audio of the user on the electronic device 4-200 side to an electronic device of the call peer end.

In a possible implementation, after answering the call in response to an operation that is performed on the answer control 4-1231 and that is shown in FIG. 12D, the electronic device 4-200 may stop sending related data of the call to the smartwatch 4-101. After the electronic device 4-200 answers the call, the smartwatch 4-101 may display the user interface 4-1220 shown in FIG. 12E. In other words, when the electronic device 4-200 independently answers the call, the smartwatch 4-101 does not provide an operation control for controlling the call service on the electronic device 4-200.

It may be understood that the user performs a call answer operation shown in FIG. 12D on the electronic device 4-200, and answers the call through the electronic device 4-200. When the user needs to end the call, the user usually also performs an operation of hanging up the call on the electronic device 4-200. In a scenario shown in FIG. 12E, the smartwatch 4-101 does not provide an operation control for controlling the call service on the electronic device 4-200, and call experience of the user is not affected.

FIG. 12F shows a scenario in which the earphones 4-102 are removed from the compartment.

In some embodiments, after the electronic device 4-200 independently answers the call based on the scenario shown in FIG. 12D and FIG. 12E, or after the electronic device 4-200 decline/hang up the call, if the earphones 4-102 are removed from the compartment, the earphones 4-102 may be automatically reconnected to an electronic device that is last connected before the earphones 4-102 are placed in the compartment, namely, the electronic device 4-300.

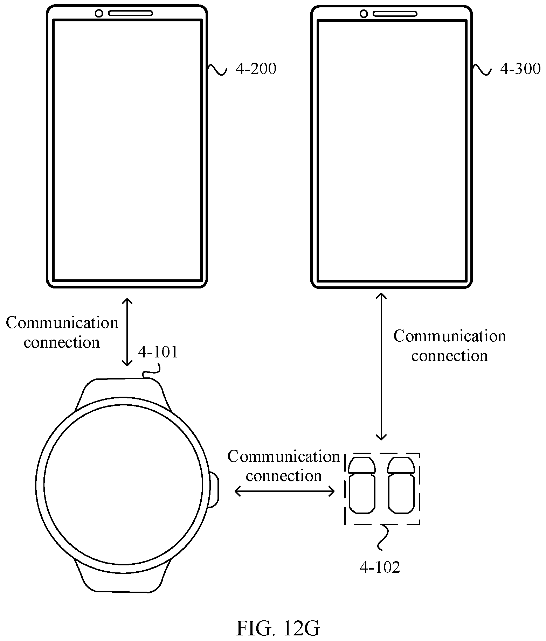

As shown in FIG. 12G, the earphones 4-102 establish the communication connection to the electronic device 4-300 again. A communication connection is also established between the smartwatch 4-101 and the earphones 4-102. If there is a call service on the electronic device 4-300, the smartwatch 4-101 may control the call service on the electronic device 4-300 through the earphones 4-102.

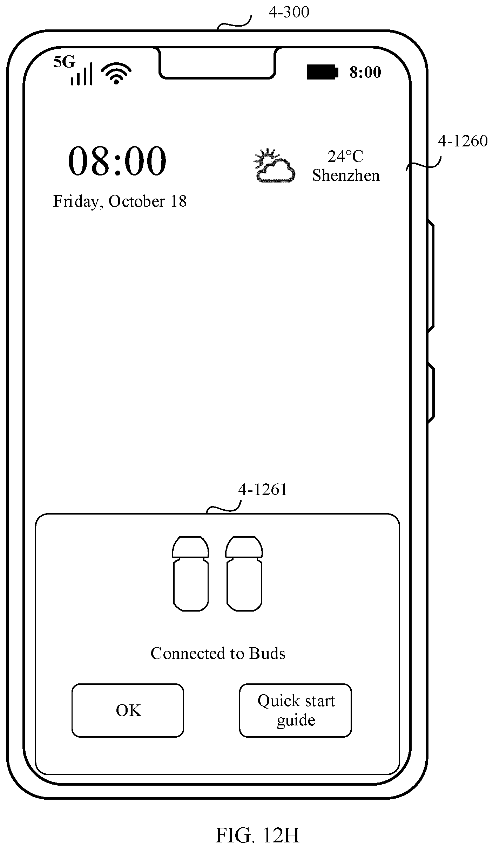

As shown in FIG. 12H, when the earphones 4-102 are connected to the electronic device 4-300 after the earphones 4-102 are removed from the compartment, the electronic device 4-300 may display a user interface 4-1260 shown in FIG. 12H. The user interface 4-1260 may include a connection widget 4-1261. The connection widget 4-1261 may be used to give the user a prompt that the earphones 4-102 have established the communication connection to the electronic device 4-300. Content displayed in the connection widget 4-1261 is not limited in embodiments of this application.

In some embodiments, if the earphones 4-102 are connected to the electronic device 4-200 before being placed in the compartment, the earphones 4-102 may be reconnected to the electronic device 4-200 after being removed from the compartment.

It can be learned from the scenario shown in FIG. 12B to FIG. 12H that, when the earphones 4-102 are connected to an electronic device other than the smartwatch 4-101 before being placed in the compartment, if the smartwatch 4-101 does not indicate the earphones 4-102 to be connected to another electronic device after the earphones 4-102 are removed from the compartment, the earphones 4-102 may be reconnected to the electronic device that is connected before the earphones 4-102 are placed in the compartment. According to the foregoing embodiments, consistency between a connection status of the earphones 4-102 before the earphones 4-102 are placed in the compartment and a connection status of the earphones 4-102 after the earphones 4-102 are removed from the compartment can be maintained, so that after taking the earphones 4-102 out of the watch body of the smartwatch 4-101, the user can quickly use the earphones 4-102 to perform an audio-related service, for example, a music service and a call service, on the electronic device that is connected to the earphones 4-102 before the earphones 4-102 are placed in the compartment.

2. The earphones 4-102 establish the communication connection to the electronic device 4-300 before the earphones 4-102 are placed in the compartment, and the electronic device 4-200 may preempt to be connected to the earphones 4-102 after the earphones 4-102 are removed from the compartment.

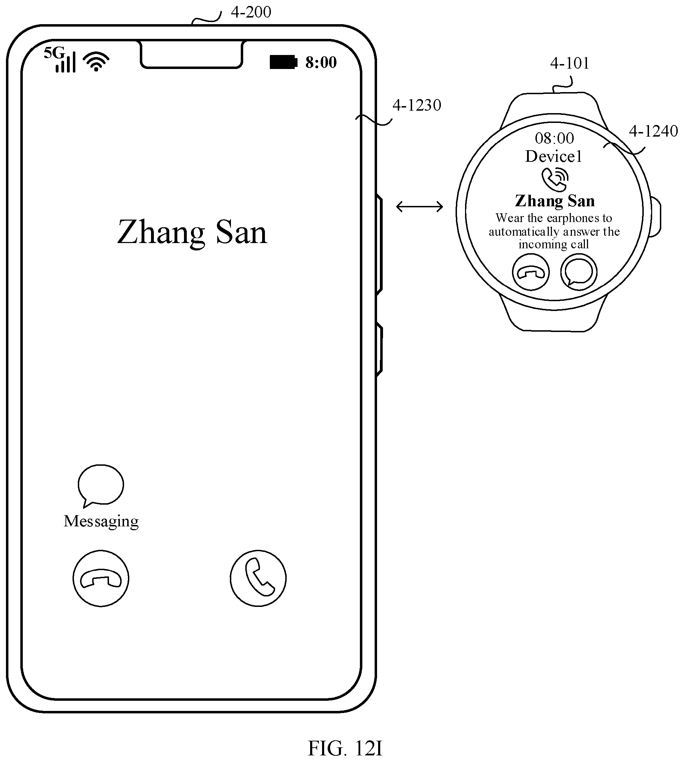

As shown in FIG. 12I, the electronic device 4-200 receives an incoming call, and displays a user interface 4-1230 based on the received incoming call. For the user interface 4-1230, refer to the descriptions in the foregoing embodiments. The electronic device 4-200 may send incoming call information to the smartwatch 4-101 based on the incoming call.

The smartwatch 4-101 may detect that the earphones 4-102 are placed in an earphone slot in a watch body of the smartwatch 4-101. In this case, the earphones 4-102 are in a not-worn state. The smartwatch 4-101 may display, based on the received incoming call information, a user interface 4-1240 shown in FIG. 12I. For the user interface 4-1240, refer to the descriptions in the foregoing embodiments.

The user may take the earphones 4-102 out of the watch body of the smartwatch 4-101 based on content on the user interface 4-1240, to answer the call on the electronic device 4-200.

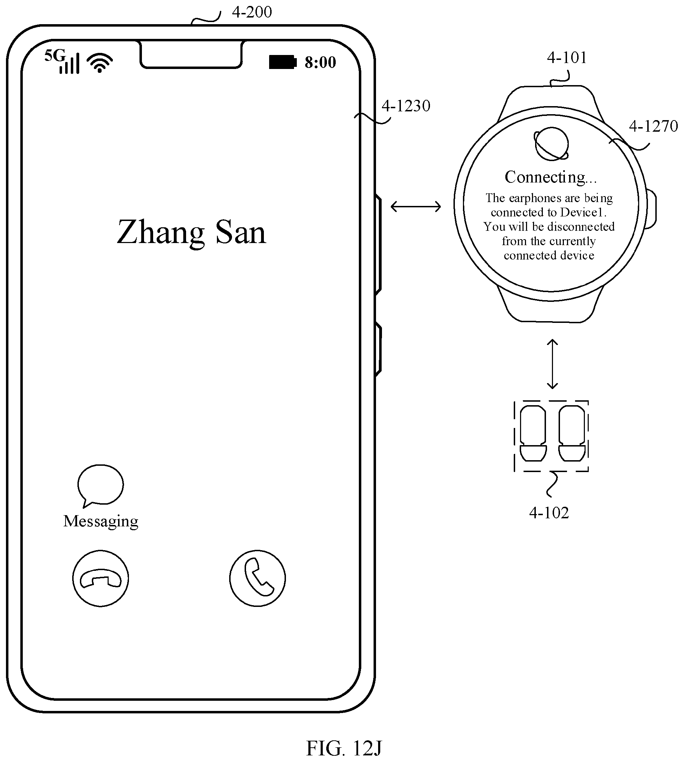

As shown in FIG. 12J, when the electronic device 4-200 receives the incoming call and the call is not answered, the smartwatch 4-101 detects that the earphones 4-102 are removed from the compartment. The smartwatch 4-101 may indicate the earphones 4-102 to establish the communication connection to the electronic device 4-200. The smartwatch 4-101 may send, to the earphones 4-102, an instruction for establishing a communication connection to the electronic device 4-200, and send, to the electronic device 4-200, an instruction for establishing a communication connection to the earphones 4-102. Then, the earphones 4-102 and the electronic device 4-200 may establish the communication connection to each other based on the communication connection establishment instruction.

In a process in which the smartwatch 4-101 indicates the earphones 4-102 to establish the communication connection to the electronic device 4-200, the smartwatch 4-101 may display a user interface 4-1270 shown in FIG. 12J. Content displayed on the user interface 4-1270 may be used to give the user a prompt that the earphones 4-102 are being connected to the electronic device 4-200.

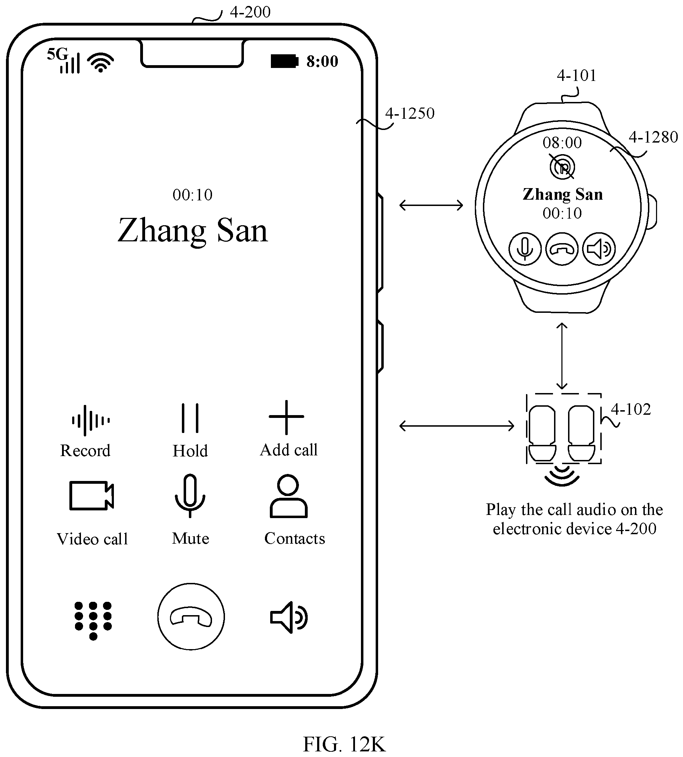

When the electronic device 4-200 is successfully connected to the earphones 4-102, the smartwatch 4-101 may send a call answering instruction to the electronic device 4-200. After answering the call, the electronic device 4-200 may display the user interface 4-1250 shown in FIG. 12K. For the user interface 4-1250, refer to the descriptions in the foregoing embodiments.

As shown in FIG. 12K, after answering the call, the electronic device 4-200 may transmit audio data of the call with the earphones 4-102. The earphones 4-102 may play call audio on the electronic device 4-200 with a sound. The electronic device 4-200 may transmit call control information with the smartwatch 4-101. The smartwatch 4-101 may display a user interface 4-1280. For the user interface 4-1280, refer to the user interface 4-640 shown in FIG. 6C. For a scenario shown in FIG. 12K in which the electronic device 4-200 play the call audio through the earphones 4-102, and the smartwatch 4-101 may control a call service on the electronic device 4-200, refer to the descriptions of the scenario shown in FIG. 6C. Details are not described herein again.

It can be learned from the scenarios shown in FIG. 12I and FIG. 12K that, regardless of which electronic device is connected to the earphones 4-102 before the earphones 4-102 are placed in the compartment, the earphones 4-102 may be connected to the electronic device 4-200 based on an indication of the smartwatch 4-101 after the earphones 4-102 are removed from the compartment. For example, the earphones 4-102 are connected to the electronic device 4-300 before being placed in the compartment. When the earphones 4-102 are in the compartment (namely, in the earphone slot of the watch body of the smartwatch 4-101), the electronic device 4-200 receives the incoming call. After the earphones 4-102 are removed from the compartment, the smartwatch 4-101 may indicate the earphones 4-102 to be connected to the electronic device 4-200. In this way, the earphones 4-102 are not reconnected to the electronic device 4-300 after being removed from the compartment. The electronic device 4-200 may preempt to be connected to the earphones 4-102 through the smartwatch 4-101.

In some embodiments, the earphones 4-102 are outside the compartment (namely, outside the watch body of the smartwatch 4-101) and is connected to the electronic device 4-300. The electronic device 4-200 may also preempt to be connected to the earphones 4-102 through the smartwatch 4-101.

For example, when the earphones 4-102 are connected to the electronic device 4-300, the smartwatch 4-101 may detect, after receiving the incoming call information of the electronic device 4-200, whether the earphones 4-102 are in a worn state. When it is detected that the earphones 4-102 are in the not-worn state, the smartwatch 4-101 may display the user interface 4-1240 shown in FIG. 12I, to give the user a prompt that the electronic device 4-200 receives the incoming call and with an operation manner of answering the incoming call by the electronic device 4-200. When it is detected that the earphones 4-102 are in the worn state, the smartwatch 4-101 may display the user interface 4-650 shown in FIG. 6D, to give the user a prompt that the electronic device 4-200 receives the incoming call and with the operation manner of answering the incoming call by the electronic device 4-200. When the smartwatch 4-101 detects an operation of answering the call on the electronic device 4-200 (for example, an operation of wearing the earphones by the user, or an operation performed on the answer control 4-655 on the user interface 4-650 shown in FIG. 6D), the smartwatch 4-101 may indicate the earphones 4-102 to be connected to the electronic device 4-200, to help the user answer the call on the electronic device 4-200 through the earphones 4-102. After the call on the electronic device 4-200 is hung up, the earphones 4-102 may maintain the communication connection to the electronic device 4-200. When the earphones 4-102 are connected to the electronic device 4-200, the earphones 4-102 may be disconnected from the electronic device 4-300. It can be learned that the electronic device 4-200 may preempt to be connected to the earphones 4-102 through the smartwatch 4-101, so that the earphones 4-102 are disconnected from the currently connected electronic device 4-300.

According to the foregoing embodiments, the user can conveniently quickly adjust an electronic device connected to the earphones 4-102. In this way, the user can answer calls on different electronic devices through the earphones 4-102, to improve call experience of the user.

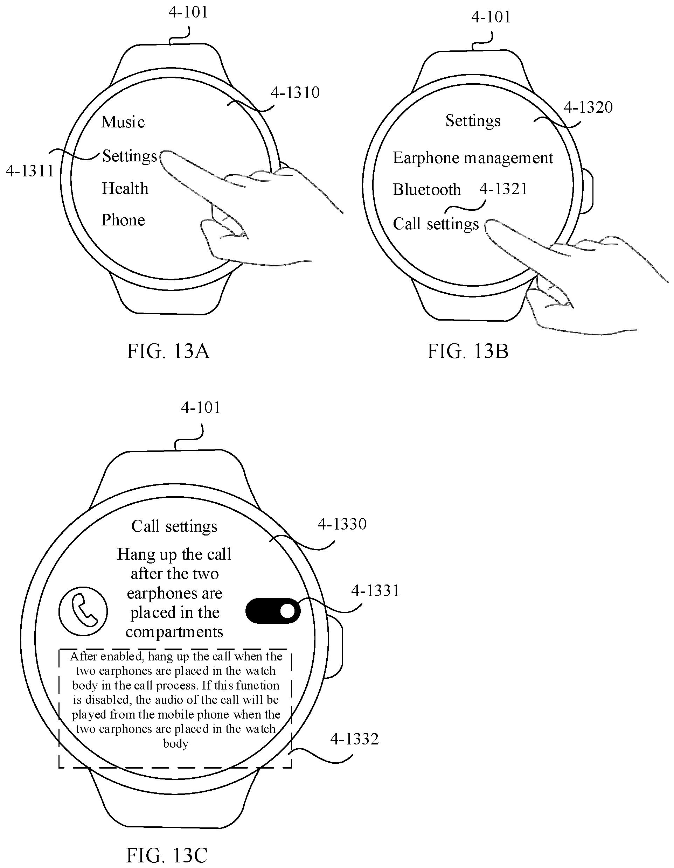

**FIG. 13A to FIG. 13J** **show an example of another call control scenario.**

As shown in FIG. 13A, the smartwatch 4-101 may display a user interface 4-1310. The user interface 4-1310 may be displayed by the smartwatch 4-101 in response to an operation performed on a button on a side edge of a watch body of the smartwatch 4-101. An operation of triggering the smartwatch 4-101 to display the user interface 4-1310 is not limited in embodiments of this application.

The user interface 4-1310 may include a setting control 4-1311. In response to an operation performed on the setting control 4-1311, the smartwatch 4-101 may display a user interface 4-1320 shown in FIG. 13B. The user interface 4-1320 may be a user interface of a Settings application in the smartwatch 4-101.

As shown in FIG. 13B, the user interface 4-1320 may include a call setting control 4-1321. In response to an operation performed on the call setting control 4-1321, the smartwatch 4-101 may display a user interface 4-1330 shown in FIG. 13C.
1. An in-compartment hang-up function is enabled.

As shown in FIG. 13C, the user interface 4-1330 may include an in-compartment hang-up switch 4-1331 and an in-compartment hang-up function prompt 4-1332.

The in-compartment hang-up switch 4-1331 may be used to enable or disable the in-compartment hang-up function. The in-compartment hang-up function may be a function of hanging up a call by an electronic device that plays call audio with a sound through the earphones 4-102 after two earphones in the earphones 4-102 are both placed in the watch body of the smartwatch 4-101. The in-compartment hang-up switch 4-1331 is in an enabled display style shown in FIG. 13C, and may indicate that the in-compartment hang-up function is currently in an enabled state.

The in-compartment hang-up function prompt 4-1332 may be used to prompt the user with a method of using the in-compartment hang-up function and an effect achieved by the in-compartment hang-up function. For example, content of the prompt 4-1332 of the function of hanging up the call in the charging case may include "After enabled, hang up the call when the two earphones are placed in the watch body in the call process. If this function is disabled, the audio of the call will be played with a sound from the mobile phone when the two earphones are placed in the watch body". The content of the in-compartment hang-up function prompt 4-1332 is not limited in embodiments of this application.

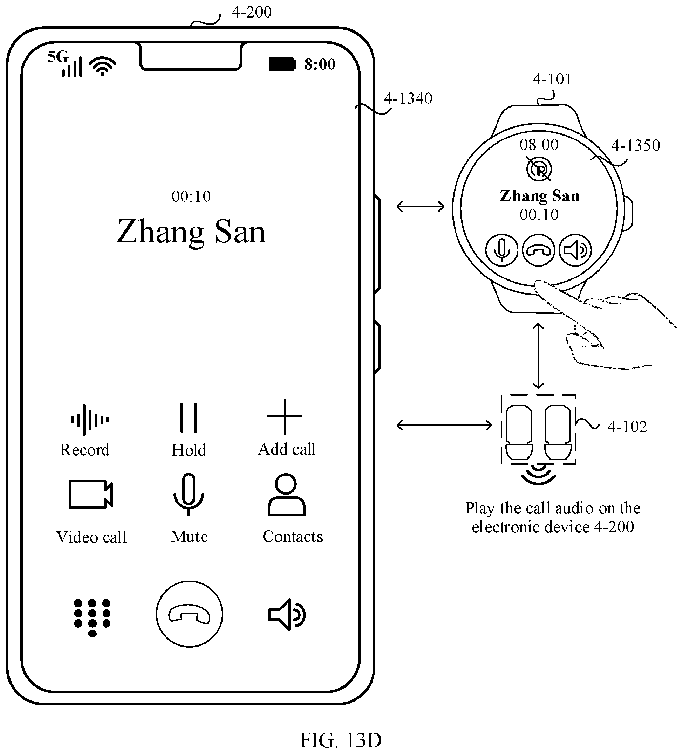

As shown in FIG. 13D, the electronic device 4-200 answers the call. The earphones 4-102 may play the call audio on the electronic device 4-200 with a sound. The electronic device 4-200 may display a user interface 4-1340. The smartwatch 4-101 may display a user interface 4-1350. For the user interface 4-1340 and the user interface 4-1350, refer to the user interface 4-630 and the user interface 4-640 shown in FIG. 6C, respectively. For a scenario as shown in FIG. 13D in which the electronic device 4-200 plays the call audio with a sound through the earphones 4-102, and the smartwatch 4-101 may control a call service on the electronic device 4-200, refer to the descriptions of the scenario shown in FIG. 6C. Details are not described herein again.

In response to an operation of opening the watch cover of the smartwatch 4-101, the watch cover of the smartwatch 4-101 may be opened.

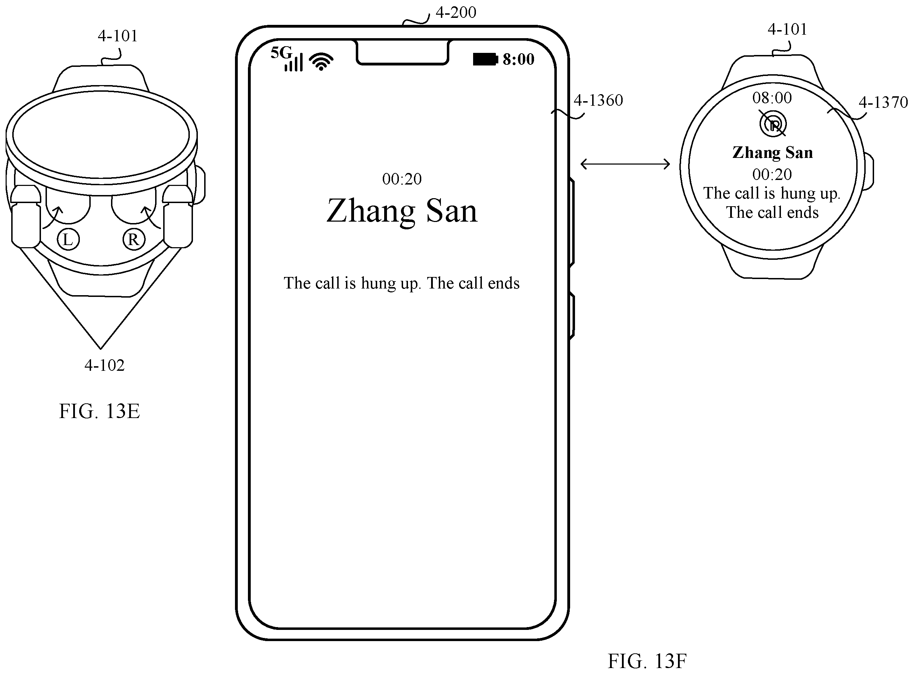

FIG. 13E shows a scenario in which the two earphones in the earphones 4-102 are placed in the earphone slots in the watch body of the smartwatch 4-101, namely, a scenario in which the earphones 4-102 are placed in the compartment.

Because the in-compartment hang-up function is currently in the enabled state, after the earphones 4-102 are placed in the compartment, the electronic device 4-200 may hang up the call 4-200. When the call is hung up, the electronic device 4-200 may display a user interface 4-1360 shown in FIG. 13F. The user interface 4-1360 may be used to give the user a prompt that the call is hung up. The electronic device 4-200 may further send, to the smartwatch 4-101, a message indicating that the call is hung up. Based on the message indicating that the call is hung up, the smartwatch 4-101 may display a user interface 4-1370 shown in FIG. 13F. The user interface 4-1370 may be used to give the user a prompt that the call is hung up. Display content on the user interface 4-1360 and the user interface 4-1370 shown in FIG. 13F is not limited in embodiments of this application.

In a possible implementation, when it is detected that the earphones 4-102 are placed in the compartment, the smartwatch 4-101 may send a call hang-up instruction to the electronic device 4-200. The electronic device 4-200 may hang up the call according to the call hang-up instruction. When an electronic device that is not connected to the smartwatch 4-101, for example, the electronic device 4-300, answers a call through the earphones 4-102, the smartwatch 4-101 may control a call service on the electronic device 4-300 through the earphones 4-102. When it is detected that the earphones 4-102 are placed in the compartment, the smartwatch 4-101 may send a call hang-up instruction to the electronic device 4-300 through the earphones 4-102. The electronic device 4-300 may hang up the call according to the call hang-up instruction.

In another possible implementation, after determining that the two earphones in the earphones 4-102 are both placed in compartments, the earphones 4-102 may send a hang-up instruction to the electronic device 4-200. The electronic device 4-200 may hang up the call according to the call hang-up instruction.

An implementation method for detecting an in/out state of the earphones provided in an embodiment of this application is described herein.

A state in which the earphones 4-102 are placed in the earphone slot in the watch body of the smartwatch 4-101 may be referred to as an in state of the earphones 4-102. A state in which the earphones 4-102 are taken out of the earphone slot in the watch body of the smartwatch 4-101 may be referred to as an out state of the earphones 4-102.

Magnets may be disposed on both the earphones 4-102 and the watch cover of the smartwatch 4-101. When the earphones 4-102 are in the in state and the watch cover of the smartwatch 4-101 is closed, after the watch cover of the smartwatch 4-101 is opened, a magnet on the watch cover may attract the earphones 4-102, so that the earphones 4-102 are attracted to the watch cover. A state in which the earphones 4-102 are attracted to the watch cover is an out state.

When the earphones 4-102 are separated from the smartwatch 4-101, the earphones 4-102 are in the out state. After the watch cover of the smartwatch 4-101 is opened, if the earphones 4-102 are close to the watch cover of the smartwatch 4-101, the earphones 4-102 may be attracted to the watch cover. In this case, the earphones 4-102 are still in the out state. Further, when the earphones 4-102 are attracted to the watch cover, after the watch cover of the smartwatch 4-101 is closed, the earphones 4-102 are placed in the earphone slot in the watch body of the smartwatch 4-101. In this case, a state of the earphones 4-102 changes to the in state.

In a possible implementation, a magnetic field sensor may be disposed in a preset area that is in the watch body of the smartwatch 4-101 and that is close to the earphone slot. The magnetic field sensor may be a Hall effect sensor, a magnetometer, or the like. A type of the magnetic field sensor is not limited in embodiments of this application. The smartwatch 4-101 may detect the in state and the out state of the earphones 4-102 through the magnetic field sensor.

Specifically, the magnetic field sensor disposed in the preset area close to the earphone slot may be configured to detect a change of a magnetic flux of an earphone magnet on the earphones 4-102. The magnetic flux that is of the earphone magnet and that is detected by the magnetic field sensor may be directly proportional to a spacing between the magnetic field sensor and the earphone magnet. In a process in which the earphones 4-102 approach the earphone slot, the magnetic flux detected by the magnetic field sensor gradually increases. In a process in which the earphones 4-102 move away from the earphone slot, the magnetic flux detected by the magnetic field sensor gradually decreases.

In other words, when the magnetic flux detected by the magnetic field sensor is greater than a preset threshold, the smartwatch 4-101 may detect that the earphones 4-102 are in the in state. When the magnetic flux detected by the magnetic field sensor is less than the preset threshold, the smartwatch 4-101 may detect that the earphones 4-102 are in the out state.

In another possible implementation, a charging electrode may be disposed on the earphones 4-102. A charging electrode that adapts to the charging electrode on the earphones 4-102 may be disposed in the earphone slot in the watch body of the smartwatch 4-101, to charge the earphones 4-102. The smartwatch 4-101 may detect whether the earphones 4-102 are in the in state or the out state by detecting whether the charging electrode in the earphone slot 4-102 is connected to the charging electrode on the earphones 4-102. That the charging electrode in the earphone slot 4-102 is connected to the charging electrode on the earphones 4-102 may indicate that the earphones 4-102 are in the in state. That the charging electrode in the earphone slot 4-102 is not connected to the charging electrode on the earphones 4-102 may indicate that the earphones 4-102 are in the out state.

In another possible implementation, the earphones 4-102 may also detect whether the earphones 4-102 are in the in state or the out state. A magnetic field sensor may be disposed on the earphones 4-102. A status detection magnet may be disposed in a preset area that is in the watch body of the smartwatch 4-101 and that is close to the earphone slot. The magnetic field sensor on the earphones 4-102 may be configured to detect a change of a magnetic flux of the status detection magnet disposed in the preset area close to the earphone slot. The magnetic flux that is of the status detection magnet and that is detected by the magnetic field sensor may be directly proportional to a spacing between the magnetic field sensor and the status detection magnet. In a process in which the earphones 4-102 approach the earphone slot, the magnetic flux detected by the magnetic field sensor gradually increases. In a process in which the earphones 4-102 move away from the earphone slot, the magnetic flux detected by the magnetic field sensor gradually decreases.

In other words, when the magnetic flux detected by the magnetic field sensor is greater than a preset threshold, the earphones 4-102 may detect that the earphones 4-102 are in the in state. When the magnetic flux detected by the magnetic field sensor is less than the preset threshold, the earphones 4-102 may detect that the earphones 4-102 are in the out state.

Optionally, the earphones 4-102 may further detect whether the earphones 4-102 are in the in state or the out state by detecting whether the charging electrode in the earphone slot 4-102 is connected to the charging electrode on the earphones 4-102.

The foregoing implementation is merely an example of the method for detecting whether the earphones 4-102 are in the in/out state provided in embodiments of this application, and should not constitute a limitation on this application. The smartwatch 4-101 and the earphones 4-102 may alternatively detect the in state and the out state of the earphones 4-102 by using another method.

2. The in-compartment hang-up function is disabled.

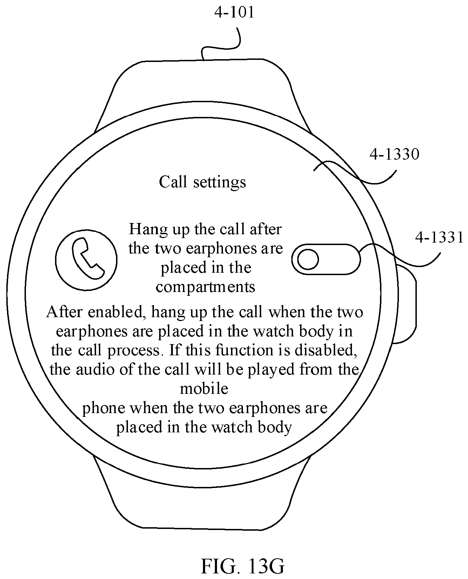

As shown in FIG. 13G, the smartwatch 4-101 may display a user interface 4-1330. For the user interface 4-1330, refer to the descriptions in the foregoing embodiments. The user interface 4-1330 includes the in-compartment hang-up switch 4-1331. The in-compartment hang-up switch 4-1331 is in a disabled display style shown in FIG. 13G, and may indicate that the in-compartment hang-up function is currently in a disabled state. In response to an operation performed on the in-compartment hang-up switch 4-1331 that is in the enabled display style shown in FIG. 13C, the smartwatch 4-101 may change the display style of the in-compartment hang-up switch 4-1331 to the disabled display style shown in FIG. 13G. In response to an operation performed on the in-compartment hang-up switch 4-1331 that is in the disabled display style shown in FIG. 13G, the smartwatch 4-101 may change the display style of the in-compartment hang-up switch 4-1331 to the enabled display style shown in FIG. 13C. Display styles of the in-compartment hang-up switch 4-1331 in the disabled state and the enabled state are not limited in embodiments of this application.

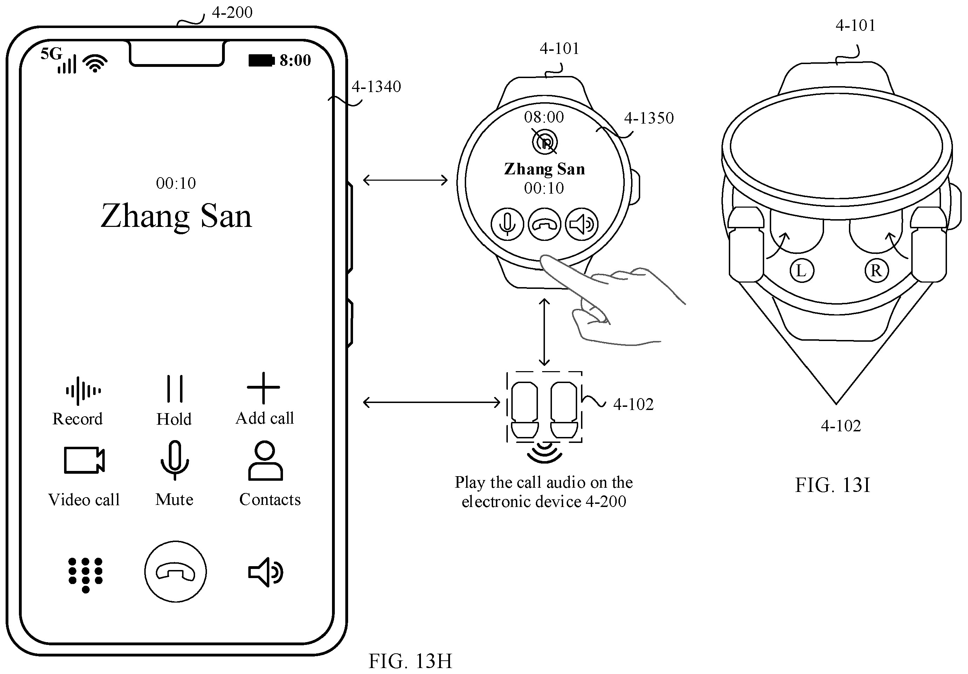

As shown in FIG. 13H, the electronic device 4-200 answers the call. The earphones 4-102 may play the call audio on the electronic device 4-200 with a sound. For a scenario as shown in FIG. 13D in which the electronic device 4-200 plays the call audio with a sound through the earphones 4-102, and the smartwatch 4-101 may control a call service on the electronic device 4-200, refer to the descriptions of the scenario shown in FIG. 6C. Details are not described herein again.

In response to an operation of opening the watch cover of the smartwatch 4-101, the watch cover of the smartwatch 4-101 may be opened.

FIG. 13I shows a scenario in which the two earphones in the earphones 4-102 are placed in the earphone slots in the watch body of the smartwatch 4-101, namely, a scenario in which the earphones 4-102 are placed in the compartment.

Because the in-compartment hang-up function is currently in the disabled state, after the earphones 4-102 are placed in the compartment, a communication connection between the earphones 4-102 and the electronic device 4-200 is disconnected, and a device that plays the call audio on the electronic device 4-200 with a sound may change from the earphones 4-102 to the electronic device 4-200.

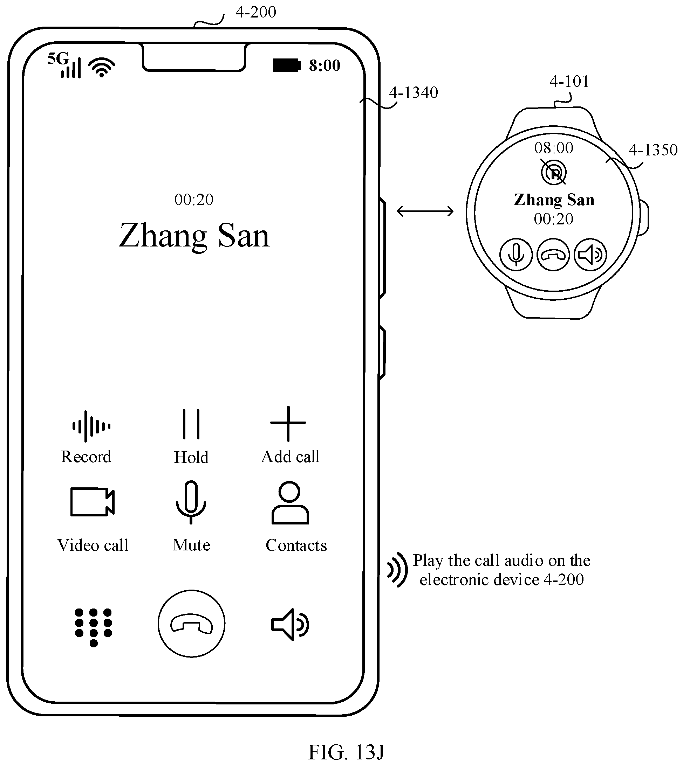

As shown in FIG. 13J, the electronic device 4-200 may play call audio that is of a call peer end and that is on the electronic device 4-200 through an audio play device (for example, a speaker or an earpiece) of the electronic device 4-200. The electronic device 4-200 and the smartwatch 4-101 are still connected. Call control information may continue to be transmitted between the electronic device 4-200 and the smartwatch 4-101. The smartwatch 4-101 may display a user interface 4-1350, so that the user controls the call service of the electronic device 4-200 on the smartwatch 4-101. For the user interface 4-1350, refer to the user interface 4-640 shown in FIG. 6C.

In some embodiments, when an electronic device that is not connected to the smartwatch 4-101, for example, the electronic device 4-300, answers a call through the earphones 4-102, the smartwatch 4-101 may control a call service on the electronic device 4-300 through the earphones 4-102. After the earphones 4-102 are placed in the compartment, a communication connection between the earphones 4-102 and the electronic device 4-300 is disconnected. The electronic device 4-300 may play call audio that is of a call peer end and that is on the electronic device 4-300 through an audio collection apparatus (for example, a speaker or an earpiece) of the electronic device 4-300. In addition, the electronic device 4-300 stops sending call control information to the smartwatch 4-101. The smartwatch 4-101 may close a user interface for controlling the call service on the electronic device 4-300. In other words, after the earphones 4-102 are placed in the compartment, the smartwatch 4-101 does not provide a user interface used to control a call service on an electronic device that is not connected to the smartwatch 4-101 but has been connected to the earphones 4-102.

It can be learned from the scenario shown in FIG. 13A to FIG. 13J that the user may enable or disable the in-compartment hang-up function on the smartwatch 4-101. When the in-compartment hang-up function is enabled, the user may quickly hang up, when answering a call on an electronic device through the earphones 4-102, the call by placing the earphones 4-102 in the earphone slot in the watch body of the smartwatch 4-101. According to the foregoing embodiments, call experience of the user can be improved.

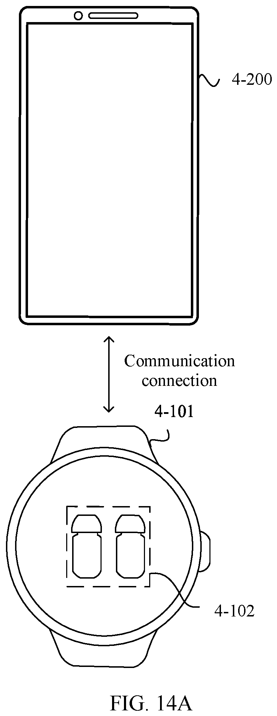

**FIG. 14A to FIG. 14E** **show an example of a scenario in which an electronic device is controlled to make an outgoing call through the smartwatch 4-101.**

As shown in FIG. 14A, the smartwatch 4-101 is paired with the electronic device 4-200, and a communication connection is established between the smartwatch 4-101 and the electronic device 4-200. The earphones 4-102 are currently in an in state.

In some embodiments, the electronic device 4-200 may send contact information and call record information in the electronic device 4-200 to the smartwatch 4-101. The contact information may include information such as a contact name and a contact phone number that are stored in a Contact application in the electronic device 4-200. The call record information may include information such as call time of a call record, call duration of the call record, and a user name and a phone number of a call peer end in the call record that is stored in a Phone application in the electronic device 4-200. Specific content of the contact information and the call record information is not limited in embodiments of this application.

When receiving the contact information and the call record information from the electronic device 4-200, the smartwatch 4-101 may display the contact information of the electronic device 4-200 in response to an operation of viewing the contact information of the electronic device 4-200. In response to an operation of selecting a contact from the contact information and making an outgoing call to the contact, the smartwatch 4-101 may indicate the electronic device 4-200 to make the outgoing call to the selected contact. The smartwatch 4-101 may also display the call record information of the electronic device 4-200 in response to an operation of viewing the call record information of the electronic device 4-200. In response to an operation of selecting a call record from the call records and making an outgoing call to a user of a call peer end in the call record, the smartwatch 4-101 may indicate the electronic device 4-200 to make the outgoing call to the user of the call peer end in the selected call record.

Here, a scenario in which a call record is used to make a call is used as an example for description.

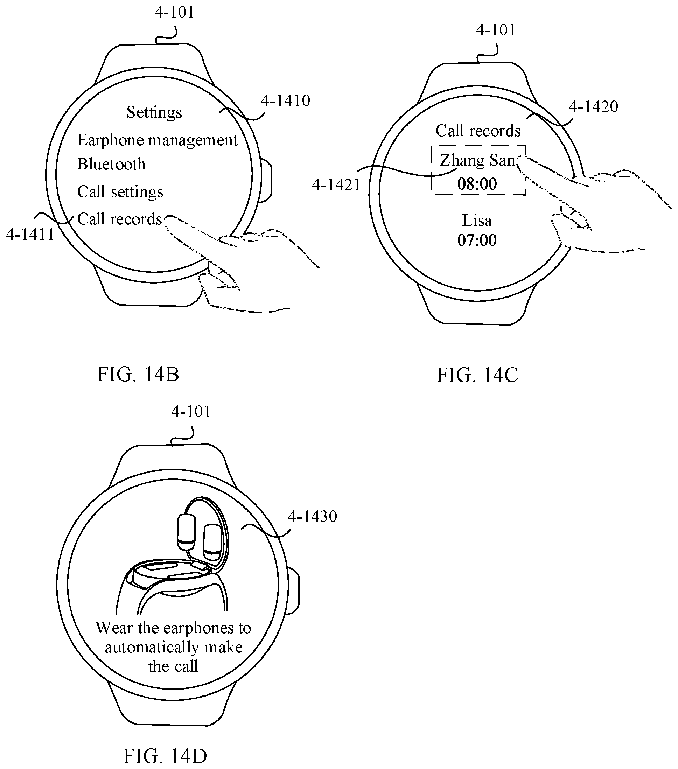

As shown in FIG. 14B, the smartwatch 4-101 may display a user interface 4-1410. For the user interface 4-1410, refer to the user interface 4-1320 shown in FIG. 13B. The user interface 1410 may include a call record control 4-1411. In response to an operation performed on the call record control 4-1411, the smartwatch 4-101 may display a user interface 4-1420 shown in FIG. 14C. The operation performed on the call record control 4-1411 is the operation of viewing the call record information of the electronic device 4-200 by the user.

As shown in FIG. 14C, one or more call records may be displayed on the user interface 4-1420. The one or more call records may be call records on the electronic device 4-200. For example, the user interface 4-1420 may include a call record 4-1421. The call record 4-1421 may indicate a call record between the electronic device 4-200 and a user named "Zhang San".

The user may perform an operation, for example, a tap operation, on any call record on the user interface 4-1420, to trigger the electronic device 4-200 to make an outgoing call to a user of a call peer end in the selected call record.

As shown in FIG. 14C, in response to the operations performed on the call record 4-1421, the smartwatch 4-101 may indicate whether the earphones 4-102 are in a worn state.

If it is detected that at least one earphone in the earphones 4-102 is in the worn state, the smartwatch 4-101 may further detect whether the earphones 4-102 in the worn state are connected to the electronic device 4-200. If it is detected that the earphones 4-102 in the worn state are connected to the electronic device 4-200, the smartwatch 4-101 may send an outgoing call-making instruction to the electronic device 4-200. The outgoing call-making instruction may instruct the electronic device 4-200 to make an outgoing call to the user (namely, the user named "Zhang San") of the call peer end in the call record 4-1421. If it is detected that the earphones 4-102 in the worn state are not connected to the electronic device 4-200, the smartwatch 4-101 may indicate the earphones 4-102 to send the outgoing call-making instruction to the electronic device 4-200 after establishing a communication connection to the electronic device 4-200. In this way, the user can conveniently answer the call on the electronic device 4-200 through the earphones.

If it is detected that two earphones in the earphones 4-102 are in a not-worn state, the smartwatch 4-101 may display a user interface 4-1430 shown in FIG. 14D. The user interface 4-1430 may include a wearing prompt. The wearing prompt may be used to prompt the user to wear the earphones 4-102. Specific content of the wearing prompt is not limited in embodiments of this application.

In a possible implementation, the smartwatch 4-101 may detect, within a preset time period (for example, 5 seconds or 8 seconds) after the user interface 4-1430 shown in FIG. 14D is displayed, whether the earphones 4-102 changes from the not-worn state to the worn state. If the two earphones in the earphones 4-102 are still in the not-worn state within the preset time period, the smartwatch 4-101 may close the user interface 4-1430 shown in FIG. 14D, and display the user interface 4-1420 shown in FIG. 14C again. The outgoing call-making operation shown in FIG. 14C fails. If it is detected within the preset time period that at least one earphone in the earphones 4-102 changes from the not-worn state to the worn state, the smartwatch 4-101 may send an outgoing call-making instruction to the electronic device 4-200. A value of the preset time period is not limited in embodiments of this application.

In other words, the smartwatch 4-101 may detect, within the preset time period after the smartwatch prompts the user to wear the earphones 4-102 to make an outgoing call, whether the user wears the earphones 4-102. If the user does not wear the earphones 4-102 for a long time, the smartwatch 4-101 may no longer indicate the electronic device 4-200 to make an outgoing call based on the outgoing call-making operation of the user. That is, the outgoing call-making operation performed by the user fails. If the user wears the earphones 4-102 within the preset time period based on the prompt of the smartwatch 4-101, the smartwatch 4-101 may indicate the electronic device 4-200 to make an outgoing call based on the outgoing call-making operation of the user.

It can be learned from FIG. 14A that the earphones 4-102 are currently in the in state. The user may take the earphones 4-102 out of the earphone slot in the watch body of the smartwatch 4-101 based on the wearing prompt shown in FIG. 14D, and wear the earphones 4-102. Because the earphones 4-102 in the in state are disconnected from the electronic device 4-200, the smartwatch 4-101 may indicate, after detecting that the earphones 4-102 are removed from the compartment, the earphones 4-102 to establish the communication connection to the electronic device 4-200. In this way, the user may not need to perform an operation of connecting the earphones 4-102 and the electronic device 4-200. After wearing the earphones 4-102, the user may directly listen to, through the earphones 4-102, call audio of the outgoing call of the electronic device 4-200.

After the smartwatch 4-101 sends the outgoing call-making instruction to the electronic device 4-200, the electronic device 4-200 may make an outgoing call to the user of the call peer end in the call record 4-1421 shown in FIG. 14C according to the outgoing call-making instruction.

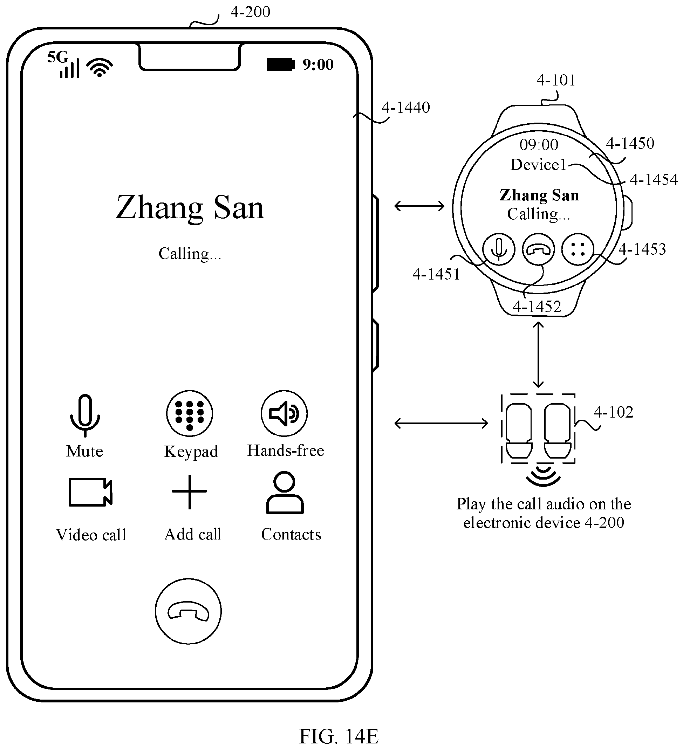

As shown in FIG. 14E, when making an outgoing call, the electronic device 4-200 may display a user interface 4-1440. The user interface 4-1440 may be an outgoing call screen of the Phone application in the electronic device 4-200.

In an outgoing call-making process, the electronic device 4-200 may transmit audio data of the call with the earphones 4-102. The earphones 4-102 may play the call audio on the electronic device 4-200 with a sound. The call audio played with a sound by the earphones 4-102 may include a call prompt tone generated when the call is waiting to be answered by the other party in the outgoing call-making process and audio of the call peer end generated after the call is answered. In addition, the earphones 4-102 may collect audio of the user on the electronic device 4-200 side through an audio collection apparatus (for example, a microphone), and send the audio to the electronic device 4-200. Then, the electronic device 4-200 may send the audio collected by the earphones 4-102 to an electronic device of the call peer end.

In the outgoing call-making process, the electronic device 4-200 may transmit call control information with the smartwatch 4-101. The smartwatch 4-101 may display a user interface 4-1450 shown in FIG. 14E. The user interface 4-1450 may include a mute control 4-1451, a hang-up control 4-1452, a setting control 4-1453, and an outgoing call-making device identifier 4-1454. The outgoing call-making device identifier 4-1454 may indicate an electronic device that makes a call corresponding to the user interface 4-1450. The outgoing call-making device identifier 4-1454 may include a device name. For example, the outgoing call-making device identifier 4-1454 may include "Device1" shown in FIG. 14E. "Device1" in the outgoing call-making device identifier 4-1454 may indicate that the call corresponding to the user interface 4-1450 is made by an electronic device named "Device1" (namely, the electronic device 4-200). The mute control 4-1451 may be used to mute a call. In response to an operation, for example, a tap operation, performed on the mute control 4-1451, the smartwatch 4-101 may send a mute instruction to the earphones 4-102. When receiving the mute instruction, the earphones 4-102 may stop collecting audio. The hang-up control 4-1452 may be used to hang up a call. In response to an operation performed on the hang-up control 4-1452, the smartwatch 4-101 may send a call hang-up instruction to the electronic device 4-200. When receiving the call hang-up instruction, the electronic device 4-200 may hang up the outgoing call shown in FIG. 14E. The setting control 4-1453 may be used to view more controls for controlling a call, for example, a control for enabling a video call or a control for adding a call. In this way, the user may control the call on the electronic device 4-200 through the smartwatch 4-101.

In some embodiments, the call control information may also be transmitted between the electronic device 4-200 and the earphones 4-102. For example, when detecting an operation of muting the call, the electronic device 4-200 may send a mute instruction to the earphones 4-102. When receiving the mute instruction, the earphones 4-102 may turn off the audio collection apparatus (for example, the microphone), and stop collecting the audio of the user on the electronic device 4-200 side. For another example, when detecting an operation performed on the earphones 4-102 to hang up the call, the earphones 4-102 may send a call hang-up instruction to the electronic device 4-200. The electronic device 4-200 may hang up the call according to the call hang-up instruction.

It can be learned from the scenario shown in FIG. 14A to FIG. 14E that the smartwatch 4-101 may control the electronic device 4-200 that establishes the communication connection to the smartwatch 4-101 to make an outgoing call. In this way, the user may not need to perform an operation on the electronic device 4-200, but perform an operation only on the smartwatch 4-101, to trigger the electronic device 4-200 to make a call to a specified contact and answer the call through the earphones 4-102. According to the foregoing embodiments, call experience of the user can be improved.

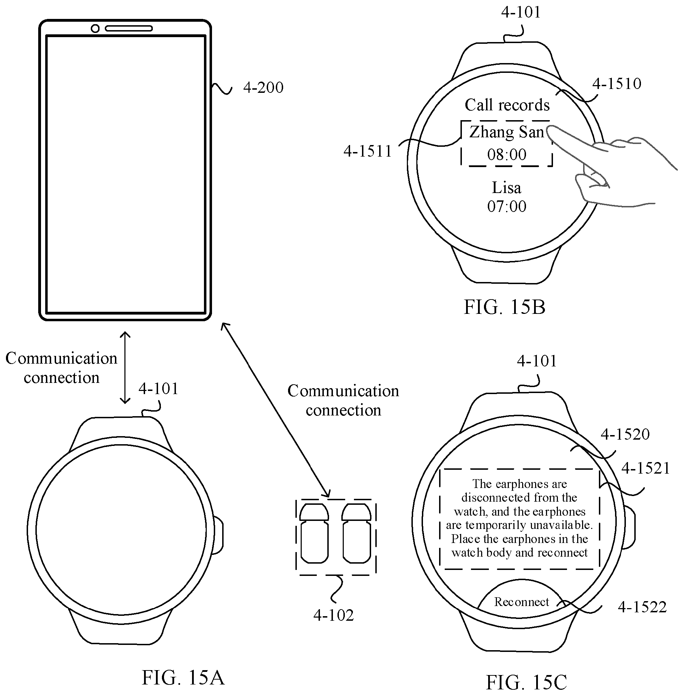

**FIG. 15A to FIG. 15F** **show an example of another scenario in which an electronic device makes an outgoing call.**

As shown in FIG. 15A, the smartwatch 4-101 is paired with the electronic device 4-200, and a communication connection is established between the smartwatch 4-101 and the electronic device 4-200. The earphones 4-102 are currently in an out state. A communication connection is established between the earphones 4-102 and the electronic device 4-200. The earphones 4-102 are not currently connected to the smartwatch 4-101.

As shown in FIG. 15B, the smartwatch 4-101 may display a user interface 4-1510. For the user interface 4-1510, refer to the user interface 4-1420 shown in FIG. 14C. The user interface 4-1510 may include a call record 4-1511.

When the smartwatch 4-101 is not connected to the earphones 4-102, in response to an operation, for example, a tap operation, performed on the call record 4-1511, the smartwatch 4-101 may display a user interface 4-1520 shown in FIG. 14C.

As shown in FIG. 15C, the user interface 4-1520 may include a connection prompt 4-1521 and a connection control 4-1522. The connection prompt 4-1521 may be used to give the user a prompt that the smartwatch 4-101 is not currently connected to the earphones 4-102, and the electronic device 4-200 cannot be controlled to make an outgoing call through the smartwatch 4-101. Content of the connection prompt 4-1521 may include "The earphones are disconnected from the watch, and the earphones are temporarily unavailable. Place the earphones in the watch body and reconnect". The content of the connection prompt 4-1521 is not limited in embodiments of this application. The connection control 4-1522 may be used to trigger the smartwatch 4-101 to search for the earphones 4-102 and establish a communication connection to the earphones 4-102. For an implementation method for establishing the communication connection between the smartwatch 4-101 and the earphones 4-102, refer to the descriptions in the foregoing embodiments. Details are not described herein again.

When the communication connection is established between the smartwatch 4-101 and the earphones 4-102, the smartwatch 4-101 may control the electronic device 4-200 to make an outgoing call based on the scenario shown in FIG. 14A to FIG. 14E.

When the electronic device 4-200 is connected to the earphones 4-102, the electronic device 4-200 receives an outgoing call-making operation, and may play call audio with a sound through the earphones 4-102.

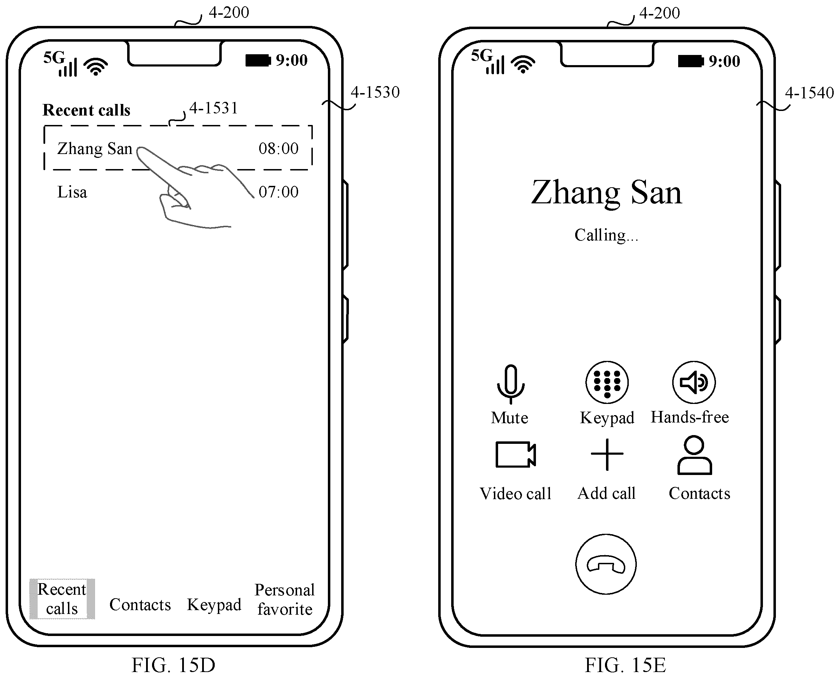

As shown in FIG. 15D, the electronic device 4-200 may display a user interface 4-1530. The user interface 4-1530 may be a call record interface of a Phone application in the electronic device 4-200. One or more call records may be displayed on the user interface 4-1530. The one or more call records may be call records on the electronic device 4-200. For example, the user interface 4-1530 may include a call record 4-1531. The call record 4-1531 may indicate a call record between the electronic device 4-200 and a user named "Zhang San".

The user may perform an operation, for example, a tap operation, on any record on the user interface 4-1530, to trigger the electronic device 4-200 to make an outgoing call to a user of a call peer end in the selected call record.

In response to an operation that is performed on the call record 4-1531 and that is shown in FIG. 15D, the electronic device 4-200 may display a user interface 4-1540 shown in FIG. 15E. The user interface 4-1540 may be an outgoing call screen of the Phone application in the electronic device 4-200.

In addition, in response to the operation that is performed on the call record 4-1531 and that is shown in FIG. 15D, the electronic device 4-200 may detect whether the earphones 4-102 are in a worn state.

If it is detected that two earphones in the earphones 4-102 are in a not-worn state, the electronic device 4-200 may independently answer a call. In other words, the electronic device 4-200 may play call audio through an audio playing apparatus (for example, an earpiece or a speaker) of the electronic device 4-200. In addition, the electronic device 4-200 may collect audio of the user on the electronic device 4-200 side through an audio collection apparatus (for example, a microphone) of the electronic device 4-200.

If it is detected that the earphones 4-102 are in the worn state, the electronic device 4-200 may answer a call through the earphones 4-102. In other words, the call audio may be transmitted between the electronic device 4-200 and the earphones 4-102. The earphones 4-102 may play the call audio on the electronic device 4-200 (for example, a call prompt tone generated when the call is waiting to be answered by the other party in the outgoing call-making process and audio of the call peer end generated after the call is answered) with a sound. The earphones 4-102 may collect the audio of the user on the electronic device 4-200 side through an audio collection apparatus (for example, a microphone), and send the audio to the electronic device 4-200.

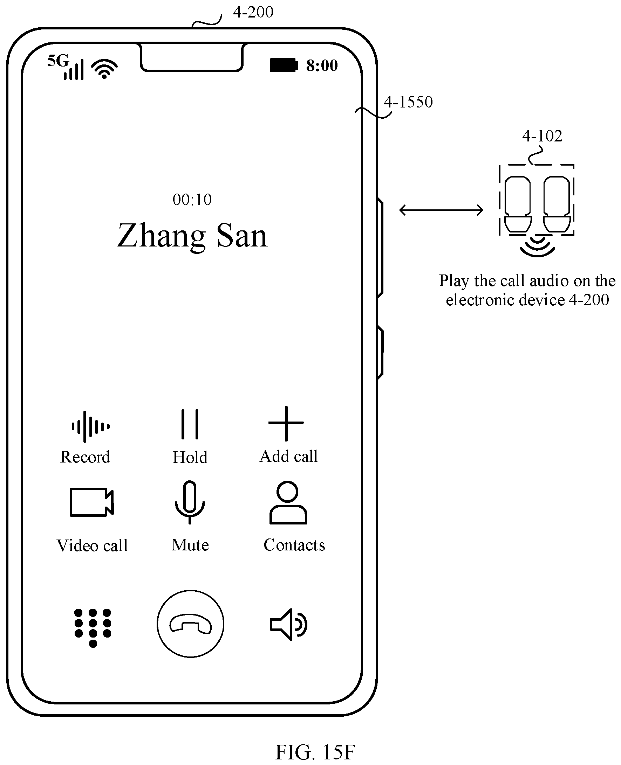

As shown in FIG. 15F, when the electronic device 4-200 answers the call through the earphones 4-102, after the outgoing call of the electronic device 4-200 is answered, a user interface 4-1550 may be displayed. The user interface 4-1550 may be a call screen of the Phone application in the electronic device 4-200. The earphones 4-102 may play the call audio on the electronic device 4-200 with a sound.

It can be learned from the scenario shown in FIG. 15A to FIG. 15F that, when the smartwatch 4-101 is not connected to the earphones 4-102, the user cannot control, through the smartwatch 4-101, the electronic device 4-200 to make a call. However, regardless of whether the smartwatch 4-101 is connected to the earphones 4-102, when the earphones 4-102 are connected to the electronic device 4-200, the user may answer a call on the electronic device 4-200 through the earphones 4-102.

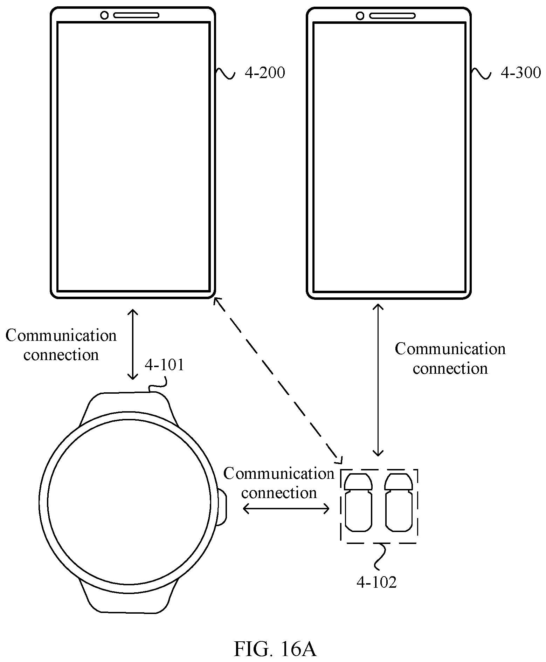

**FIG. 16A to FIG. 16F** **show an example of another scenario in which an electronic device is controlled to make an outgoing call through the smartwatch 4-101.**

As shown in FIG. 16A, the smartwatch 4-101 is paired with the electronic device 4-200, and a communication connection is established between the smartwatch 4-101 and the electronic device 4-200. A communication connection is established between the earphones 4-102 and the smartwatch 4-101. A communication connection is established between the earphones 4-102 and the electronic device 4-300. A communication connection has been established between the earphones 4-102 and the electronic device 4-200, but the earphones 4-102 and the electronic device 4-200 are not currently connected. The communication connection between the electronic device 4-200 and the smartwatch 4-101, the communication connection between the smartwatch 4-101 and the earphones 4-102, and the communication connection between the earphones 4-102 and the electronic device 4-300 may be, for example, Bluetooth communication connections. A communication connection manner is not limited in embodiments of this application. For a manner in which the smartwatch 4-101 establishes communication connections to the electronic device 4-200 and the earphones 4-102, and a manner in which the earphones 4-102 establish the communication connection to the electronic device 4-300, refer to the descriptions in the foregoing embodiments. Details are not described herein again.

In some embodiments, in addition to directly controlling a call service on the electronic device 4-200 connected to the smartwatch 4-101, the smartwatch 4-101 may further control, through the earphones 4-102, a call service on an electronic device (for example, the electronic device 300) that is not connected to the smartwatch 4-101. When the earphones 4-102 are connected to the electronic device 4-300, the smartwatch 4-101 may store a call record on the electronic device 4-300. In this way, the user can conveniently control, through the smartwatch 4-101, the electronic device 4-300 to make a call in the device connection scenario shown in FIG. 16A.

Optionally, the call record that is on the electronic device 4-300 and that is stored in the smartwatch 4-101 may be a part of call records on the electronic device 4-300. The part of call records may be call records corresponding to a call service that is on the electronic device 4-300 and that is controlled by the smartwatch 4-101. For example, the electronic device 4-300 receives an incoming call from a user A. If the smartwatch 4-101 receives an operation of answering the incoming call from the user A, and indicates the electronic device 4-300 to answer the incoming call, the smartwatch 4-101 may store a call record of the incoming call from the user A. For another example, the electronic device 4-300 receives an incoming call from a user B. If the electronic device 4-300 receives an operation of answering the incoming call from the user A (that is, the user performs an operation on the electronic device 4-300 to answer the call, but does not perform an operation of answering the call on the smartwatch 4-101), the smartwatch 4-101 may not store the call record of the incoming call from the user A.

Optionally, when the earphones 4-102 are disconnected from the electronic device 4-300, the smartwatch 4-101 may delete the call record of the electronic device 4-300. According to the foregoing method, security of user privacy can be improved, and a case in which privacy information such as the call record on the electronic device 4-300 can still be viewed on the smartwatch 4-101 when the smartwatch 4-101 cannot control the electronic device 4-300 can be avoided.
1. The smartwatch 4-101 may control the electronic device 4-200 to make an outgoing call, and the electronic device 4-200 may preempt to be connected to the earphones 4-102.

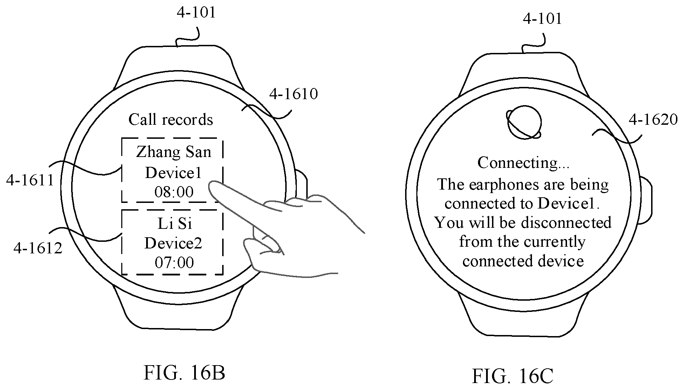

As shown in FIG. 16B, the smartwatch 4-101 may display a user interface 4-1610. For the user interface 4-1610, refer to the user interface 4-1420 shown in FIG. 14C. When the earphones 4-102 are connected to an electronic device that is not connected to the smartwatch 4-101, for example, the electronic device 4-300, each call record displayed on the user interface 4-1610 may include a device label. A device label included in one call record may indicate an electronic device to which the call record belongs (namely, an electronic device that the call record is on). The device label may be a device name of the electronic device. A type of the device label is not limited in embodiments of this application.

For example, the user interface 4-1610 may include a call record 4-1611 and a call record 4-1612. The call record 4-1611 may include a device label "Device1". The device label "Device1" may indicate that an electronic device to which the call record 4-1611 belongs is an electronic device named "Device1", namely, the electronic device 4-200. The call record 4-1612 may include a device label "Device2". The device label "Device2" may indicate that an electronic device to which the call record 4-1612 belongs is an electronic device named "Device2", namely, the electronic device 4-300.

A call record displayed on the user interface 4-1610 may be used by the smartwatch 4-101 to indicate an electronic device to which the call record belongs to make an outgoing call to a user of a call peer end in the call record.

When the earphones 4-102 are connected to the electronic device 4-300, in response to an operation that is performed on the call record 4-1611 and that is shown in FIG. 16B, the smartwatch 4-101 may indicate the earphones 4-102 to establish a communication connection to the electronic device 4-200 to which the call record 4-1611 belongs. The smartwatch 4-101 may send, to the earphones 4-102, an instruction for establishing the communication connection to the electronic device 4-200, and send, to the electronic device 4-200, an instruction for establishing a communication connection to the earphones 4-102. The earphones 4-102 and the electronic device 4-200 may establish the communication connection to each other based on the communication connection instruction.

In a process in which the smartwatch 4-101 indicates the earphones 4-102 to establish the communication connection to the electronic device 4-200, the smartwatch 4-101 may display a user interface 4-1620 shown in FIG. 16C. The user interface 4-1620 may include a connection prompt. The connection prompt may be used to give the user a prompt that the earphones 4-102 are being connected to the electronic device 4-200, and the connection between the earphones 4-102 and the electronic device 4-300 is to be disconnected. Content of the connection prompt may include "Connecting... The earphones are being connected to Device1. This operation will disconnect the currently connected device". The content of the connection prompt included on the user interface 4-1620 is not limited in embodiments of this application.

It should be noted that, in response to the operation performed on the call record 4-1611 shown in FIG. 16B, the smartwatch 4-101 may further detect whether at least one earphone in the earphones 4-102 is in a worn state. If it is detected that the two earphones in the earphones 4-102 are both in a not-worn state, the smartwatch 4-101 may prompt the user to wear the earphones. For a scenario in which the smartwatch 4-101 prompts the user to wear the earphones, refer to the scenario shown in FIG. 14D.

When the earphones 4-102 are in the worn state, and the earphones 4-102 are connected to the electronic device 4-200, the smartwatch 4-101 may send an outgoing call-making instruction to the electronic device 4-200. The outgoing call-making instruction may instruct the electronic device 4-200 to make an outgoing call to a user (namely, a user named "Zhang San") of a call peer end in the call record 4-1611.

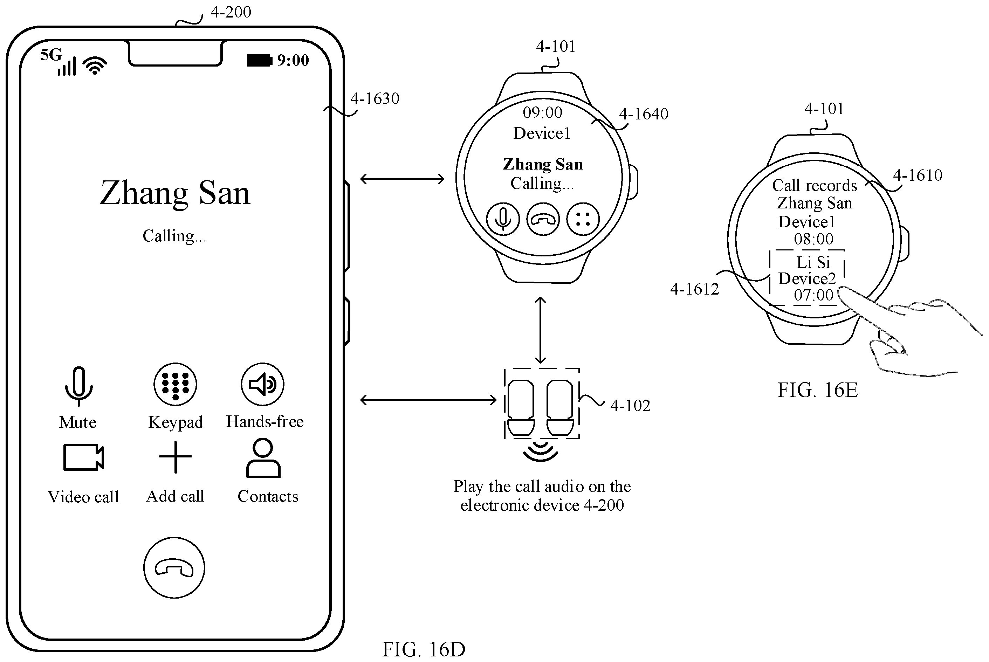

When receiving the outgoing call-making instruction, the electronic device 4-200 may make an outgoing call to the user named "Zhang San", and display a user interface 4-1630 shown in FIG. 16D. The user interface 4-1630 may be an outgoing call screen of the Phone application in the electronic device 4-200. In an outgoing call process of the electronic device 4-200, the smartwatch 4-101 may display a user interface 4-1640 shown in FIG. 16D. For the user interface 4-1640, refer to the user interface 4-1450 shown in FIG. 14E. In addition, the earphones 4-102 may play call audio on the electronic device 4-200 with a sound. For an outgoing call scenario shown in FIG. 16D, refer to the outgoing call scenario shown in FIG. 14E.

It can be learned from the scenario shown in FIG. 16B to FIG. 16D that, when the earphones 4-102 are connected to the electronic device 4-300, if the smartwatch 4-101 receives an operation of indicating the electronic device 4-200 to make an outgoing call, the smartwatch 4-101 may indicate the earphones 4-102 to be connected to the electronic device 4-200, and send an outgoing call-making instruction to the electronic device 4-200 to make an outgoing call. In this way, an electronic device connected to the earphones 4-102 is switched from the electronic device 4-300 to the electronic device 4-200. The electronic device 4-200 implements connection preemption for the earphones 4-102. Switching the electronic device connected to the earphones 4-102 can help the user answer a call on the electronic device 4-200 through the earphones 4-102 when the user wants to use the electronic device 4-200 to make an outgoing call. This improves call experience of the user.

2. The smartwatch 4-101 may control the electronic device 4-300 that is not connected to the smartwatch 4-101 to make an outgoing call.

As shown in FIG. 16E, when the earphones 4-102 are connected to the electronic device 4-300, the smartwatch 4-101 may display a user interface 4-1610. For the user interface 4-1610, refer to the descriptions in the foregoing embodiments.

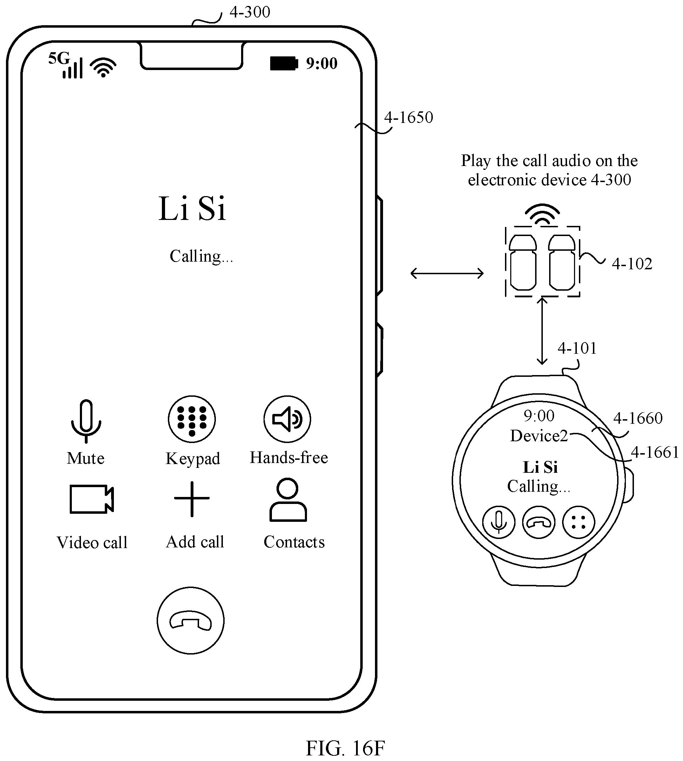

In response to an operation that is performed on the call record 4-1612 and that is shown in FIG. 16E, the smartwatch 4-101 may detect whether the earphones 4-102 are in the worn state. When it is detected that at least one earphone in the earphones 4-102 is in the worn state, the smartwatch 4-101 may send an outgoing call-making instruction to the electronic device 4-300 through the earphones 4-102. The outgoing call-making instruction may instruct the electronic device 4-300 to make an outgoing call to a user (namely, a user named "Li Si") of a call peer end in the call record 4-1612. When receiving the outgoing call-making instruction, the electronic device 4-300 may make an outgoing call to the user named "Li Si", and display a user interface 4-1650 shown in FIG. 16F. The user interface 4-1650 may be an outgoing call screen of the Phone application in the electronic device 4-300.

In an outgoing call-making process, the electronic device 4-300 may transmit audio data of the call with the earphones 4-102. The earphones 4-102 may play call audio on the electronic device 4-300 with a sound. The call audio played with a sound by the earphones 4-102 may include a call prompt tone generated when the call is waiting to be answered by the other party in the outgoing call-making process and audio of the call peer end generated after the call is answered. In addition, the earphones 4-102 may collect audio of the user on the electronic device 4-300 side through an audio collection apparatus (for example, a microphone), and send the audio to the electronic device 4-300. Then, the electronic device 4-300 may send the audio collected by the earphones 4-102 to an electronic device of the call peer end.

In the outgoing call-making process, call control information may be transmitted between the electronic device 4-200 and the smartwatch 4-101 through the earphones 4-102. The smartwatch 4-101 may display a user interface 4-1660. The user interface 4-1660 may include an outgoing call-making device identifier 4-1661. The outgoing call-making device identifier 4-1661 may indicate an electronic device that makes a call corresponding to the user interface 4-1660. The outgoing call-making device identifier 4-1661 may include a device name. For example, the outgoing call-making device identifier 4-1661 may include "Device2" shown in FIG. 16F. "Device2" in the outgoing call-making device identifier 4-1661 may indicate that the call corresponding to the user interface 4-1660 is made by an electronic device named "Device2" (namely, the electronic device 4-300). For other controls included on the user interface 4-1660, refer to the descriptions of the user interface 4-1450 shown in FIG. 14E. Details are not described herein again.

It can be learned from the scenario shown in FIG. 16E and FIG. 16F that, in addition to controlling the electronic device 4-200 connected to the smartwatch 4-101 to make an outgoing call, the smartwatch 4-101 may control, through the earphones 4-102, an electronic device that is not connected to the smartwatch 4-101, for example, the electronic device 4-300, to make an outgoing call. According to the foregoing embodiments, call experience of the user can be improved. The user may control call services on a plurality of different electronic devices through the smartwatch 4-101.

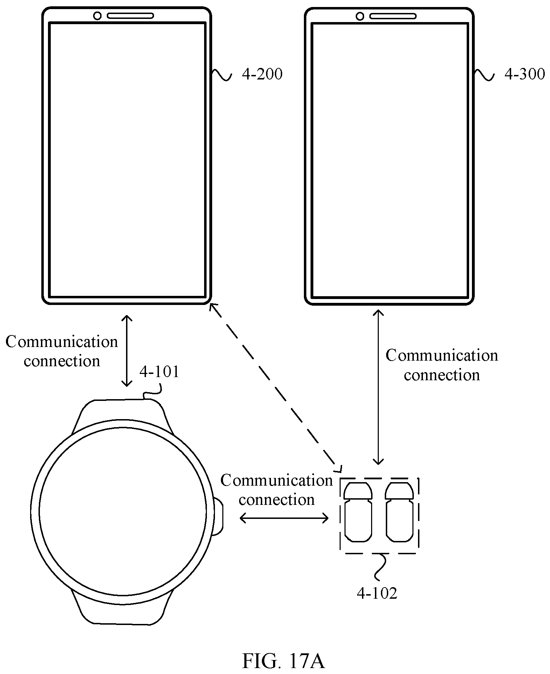

**FIG. 17A to FIG. 17F** **show an example of another call control scenario.**

As shown in FIG. 17A, the smartwatch 4-101 is paired with the electronic device 4-200, and a communication connection is established between the smartwatch 4-101 and the electronic device 4-200. A communication connection is established between the earphones 4-102 and the smartwatch 4-101. A communication connection is established between the earphones 4-102 and the electronic device 4-300. A communication connection has been established between the earphones 4-102 and the electronic device 4-200, but the earphones 4-102 and the electronic device 4-200 are not currently connected. The communication connection between the electronic device 4-200 and the smartwatch 4-101, the communication connection between the smartwatch 4-101 and the earphones 4-102, and the communication connection between the earphones 4-102 and the electronic device 4-300 may be, for example, Bluetooth communication connections. A communication connection manner is not limited in embodiments of this application. For a manner in which the smartwatch 4-101 establishes communication connections to the electronic device 4-200 and the earphones 4-102, and a manner in which the earphones 4-102 establish the communication connection to the electronic device 4-300, refer to the descriptions in the foregoing embodiments. Details are not described herein again.

In some embodiments, the two earphones (the left earphone and the right earphone) in the earphones 4-102 may be respectively worn on ears of two users. The smartwatch 4-101 is worn on one of the two users. When the earphones 4-102 perform an audio-related service on another electronic device (for example, the electronic device 4-300) than the electronic device 4-200, if the electronic device 4-200 receives an incoming call, the electronic device 4-200 may preempt, through the smartwatch 4-101, one earphone worn by the user wearing the smartwatch 4-101, and a call service on the electronic device 4-200 is performed through the preempted earphone. One earphone worn by the user who does not wear the smartwatch 4-101 may continue to perform the audio-related service on the original electronic device.

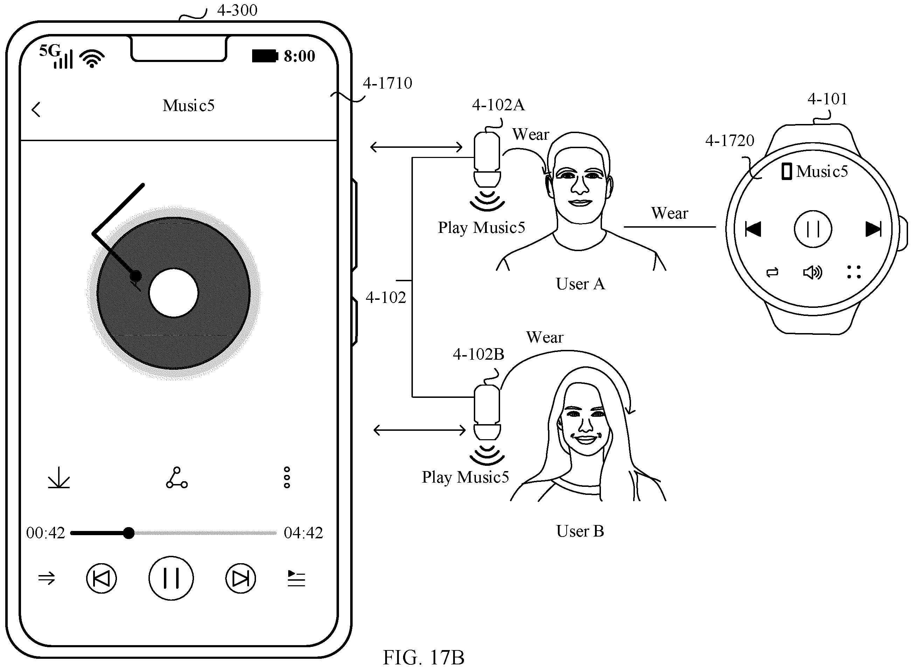

As shown in FIG. 17B, the electronic device 4-300 may display a user interface 4-1710. The user interface 4-1710 may be a user interface of a Music application ion the electronic device 4-300. The electronic device 4-300 is playing music (for example, music Music5), and the music on the electronic device 4-300 may be played by making a sound by the earphones 4-102. The electronic device 4-300 may send audio data of music playing to the earphones 4-102. The electronic device 4-300 and the smartwatch 4-101 may transmit control information of music playing through the earphones 4-102. The smartwatch 4-101 may display a user interface 4-1720. The user interface 4-1720 may include a control for controlling the electronic device 4-300 to play music. In this way, the user may control, based on the smartwatch 4-101, the electronic device 4-300 to play music.

It can be learned from FIG. 17B that the earphones 4-102 may include an earphone 4-102A and an earphone 4-102B. The earphone 4-102A may be the first earphone 31 shown in FIG. 4. The earphone 4-102B may be the second earphone 32 shown in FIG. 4. The user A wears the earphone 4-102A. The user B wears the earphone 4-102B. The user A further wears the smartwatch 4-101. The user A and the user B may each wear one earphone in the earphones 4-102 to simultaneously listen to music on the electronic device 4-300.

The user A may wear the earphone 4-102A on the right ear. The earphone 4-102A may play audio of a right audio channel with a sound. The user B may wear the earphone 4-102B on the left ear. The earphone 4-102B may play audio of a left audio channel with a sound. In view of this, the earphone 4-102A may also be referred to as a right earphone 4-102A. The earphone 4-102B may also be referred to as a left earphone 4-102B.

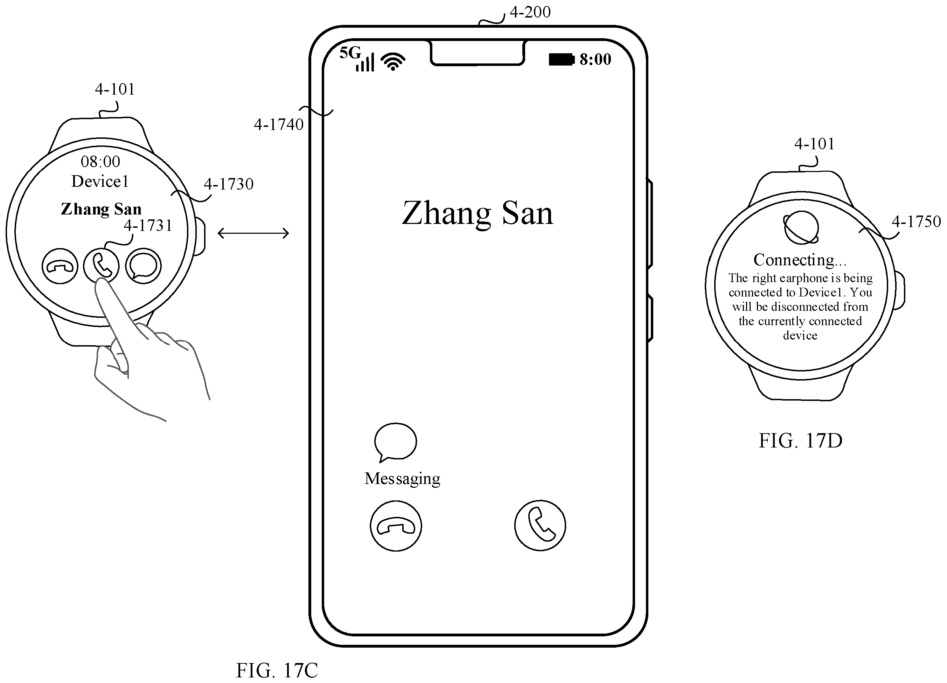

As shown in FIG. 17C, the electronic device 4-200 receives an incoming call. The electronic device 4-200 may display a user interface 4-1740. For the user interface 4-1740, refer to the user interface 4-610 shown in FIG. 6B. The electronic device 4-200 may send incoming call information to the smartwatch 4-101. When receiving the incoming call information, the smartwatch 4-101 may detect whether the earphones 4-102 are in a worn state. It can be learned from FIG. 17B that both the right earphone 4-102A and the left earphone 4-102B in the earphones 4-102 are in the worn state. In this case, the smartwatch 4-101 may detect that the earphones 4-102 are in the worn state. The smartwatch 4-101 may display the user interface 4-1730 shown in FIG. 17C. For the user interface 4-1730, refer to the user interface 4-650 shown in FIG. 6D. The user interface 4-1730 may include an answer control 4-1731. In response to an operation performed on the answer control 4-1731, the smartwatch 4-101 may detect whether the right earphone 4-102A and the left earphone 4-102B in the earphones 4-102 are worn on ears of two different users.

In a possible implementation, the smartwatch 4-101 may detect, by detecting a distance between the right earphone 4-102A and the left earphone 4-102B, whether the right earphone 4-102A and the left earphone 4-102B are worn on the ears of the two different users. The right earphone 4-102A and the left earphone 4-102B may determine a distance between each other according to a Bluetooth ranging method. If the distance between the right earphone 4-102A and the left earphone 4-102B is greater than a preset distance threshold, the smartwatch 4-101 may determine that the right earphone 4-102A and the left earphone 4-102B are worn on the ears of the two different users. If the distance between the right earphone 4-102A and the left earphone 4-102B is less than or equal to the preset distance threshold, the smartwatch 4-101 may determine that the right earphone 4-102A and the left earphone 4-102B are worn on two ears of one user. A method in which the smartwatch 4-101 detects whether the right earphone 4-102A and the left earphone 4-102B are worn on the ears of the two different users is not limited in embodiments of this application.

When it is detected that the right earphone 4-102A and the left earphone 4-102B are worn on two ears of one user, the smartwatch 4-101 may indicate both the two earphones in the earphones 4-102 to establish a communication connection to the electronic device 4-200. In this way, the user may answer the call on the electronic device 4-200 through the earphones 4-102.

When it is detected that the right earphone 4-102A and the left earphone 4-102B are worn on ears of two different users, the smartwatch 4-101 may detect which earphone of the right earphone 4-102A and the left earphone 4-102B is an earphone worn by a user wearing the smartwatch 4-101 (namely, the user A).

In a possible implementation, the smartwatch 4-101 may detect, by detecting distances between the smartwatch 4-101 and the two earphones, which earphone is the earphone worn by the user A. The smartwatch 4-101 may detect the distances between the smartwatch 4-101 and the two earphones according to the Bluetooth ranging method. A distance between the smartwatch 4-101 and the right earphone 4-102A is a distance 1. A distance between the smartwatch 4-101 and the left earphone 4-102B is a distance 2. The smartwatch 4-101 may compare the distance 1 and the distance 2, and determine an earphone closer to the smartwatch 4-101 as the earphone worn by the user A. For example, the smartwatch 4-101 may obtain, through comparison, that the distance 1 is less than the distance 2. The smartwatch 4-101 may determine the right earphone 4-102 as the earphone worn by the user A.

Further, the smartwatch 4-101 may indicate the right earphone 4-102A to establish a communication connection to the electronic device 4-200.

In a process in which the right earphone 4-102A establishes the communication connection to the electronic device 4-200, the smartwatch 4-101 may display a user interface 4-1750 shown in FIG. 17D. The user interface 4-1750 may include a connection prompt. The connection prompt may be used to give the user a prompt that the right earphone 4-102A is establishing the communication connection to the electronic device 4-200, and the right earphone 4-102A is to disconnect the communication connection to the electronic device 4-300. Content of the connection prompt may include "Connecting... The right earphone is being connected to Device1. This operation will disconnect the device currently connected to the right earphone". The content of the connection prompt included on the user interface 4-1750 is not limited in embodiments of this application.

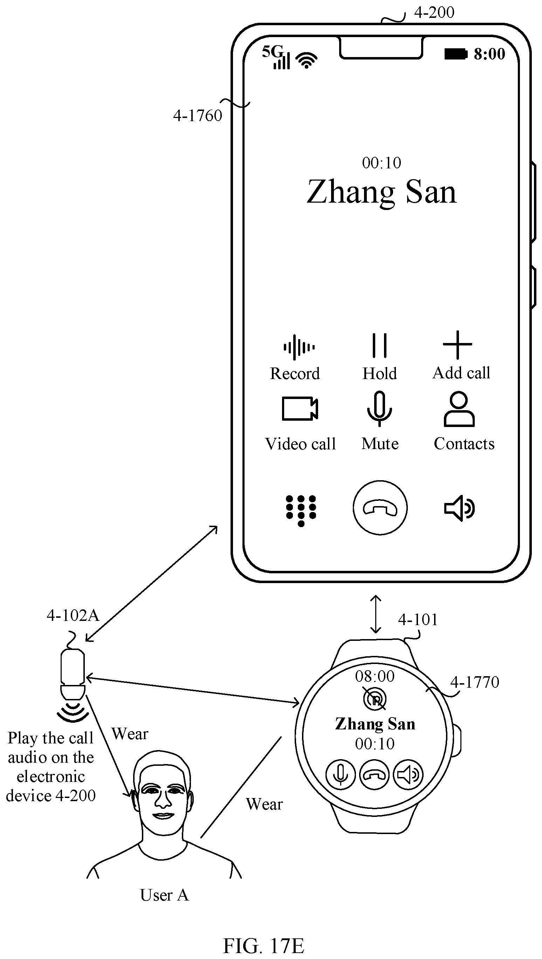

When the right earphone 4-102 is successfully connected to the electronic device 4-200, the smartwatch 4-101 may send a call answering instruction to the electronic device 4-200. According to the call answering instruction, the electronic device 4-200 may answer the call, and display a user interface 4-1760 shown in FIG. 17E. For the user interface 4-1740, refer to the user interface 4-630 shown in FIG. 6C. After the electronic device 4-200 answers the call, call control information may be transmitted between the electronic device 4-200 and the smartwatch 4-101. The smartwatch 4-101 may display a user interface 4-1770 shown in FIG. 17E. For the user interface 4-1770, refer to the user interface 4-640 shown in FIG. 6C. After the electronic device 4-200 answers the call, audio data of the call may be transmitted between the electronic device 4-200 and the right earphone 4-102A. The right earphone 4-102A may play call audio on the electronic device 4-200 with a sound.

It can be learned from FIG. 17E that, after receiving the incoming call, the electronic device 4-200 may preempt one earphone in the earphones 4-102, and answer the call through the preempted earphone. In this way, when the user A wears only the right earphone 4-102A, after the electronic device 4-200 receives the incoming call, the user A may control, through the worn smartwatch 4-101, the electronic device 4-200 to answer the call, and switch, through the right earphone 4-102A, from listening to music on the electronic device 4-300 to listening to call audio on the electronic device 4-200.

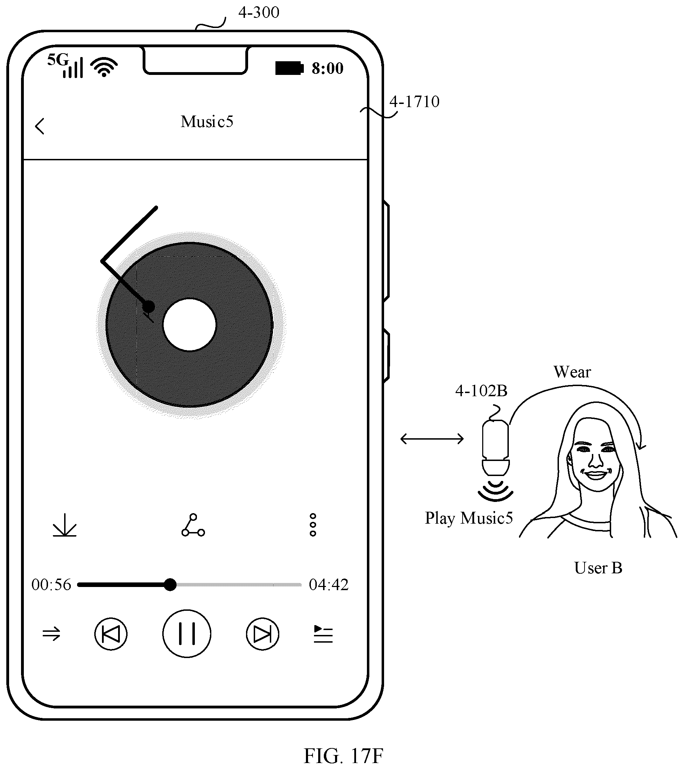

As shown in FIG. 17F, the left earphone 4-102B may continue to maintain a communication connection to the electronic device 4-300, and play the music (for example, music Music5) on the electronic device 4-300 with a sound. In this way, when the user A answers the call on the electronic device 4-200 through the right earphone 4-102A, the user B may continue to listen to the music on the electronic device 4-300 through the left earphone 4-102B.

According to the foregoing embodiments, a user can share the earphones 4-102 with another user to listen to music together without affecting answering of a call by the user through the earphones 4-102, and privacy of the user during answering of the call can be protected. The another user who accepts sharing of the earphones 4-102 may continue to listen to music but cannot hear call content of the user.

For example, the user A wears the right earphone 4-102A, and shares the left earphone 4-102B with the user B. The user A may control, through the smartwatch 4-101, the electronic device 4-300 to play the music. Both the right earphone 4-102A and the left earphone 4-102B may play music on the electronic device 4-300 with a sound. In this way, the user A and the user B may simultaneously listen to the music on the electronic device 4-300. When the electronic device 4-200 receives the incoming call, the user A may control, through the smartwatch 4-101, the electronic device 4-200 to answer the call. The right earphone 4-102A may play the call audio on the electronic device 4-200 with a sound. The left earphone 4-102B may continue to play the music on the electronic device 4-300 with a sound. In this way, the user A may answer the call on the electronic device 4-200 through the right earphone 4-102A, and does not need to worry that the user B hears specific call content, and the user B may continue to listen to the music on the electronic device 4-300 through the left earphone 4-102B.

In some embodiments, when the right earphone 4-102A shown in FIG. 17E plays the call audio on the electronic device 4-200 with a sound, if the call on the electronic device 4-200 is ended, the smartwatch 4-101 may indicate the right earphone 4-102A to establish the communication connection to the electronic device 4-300. When the right earphone 4-102A is connected to the electronic device 4-300 again, the electronic device 4-300 may send the audio data of music playing to the right earphone 4-102A. The right earphone 4-102A may play the music on the electronic device 4-300 with a sound. In this way, after answering the call on the electronic device 4-200 through the right earphone 4-102A, the user A may continue to listen to the music on the electronic device 4-300 through the right earphone 4-102A together with the user B.

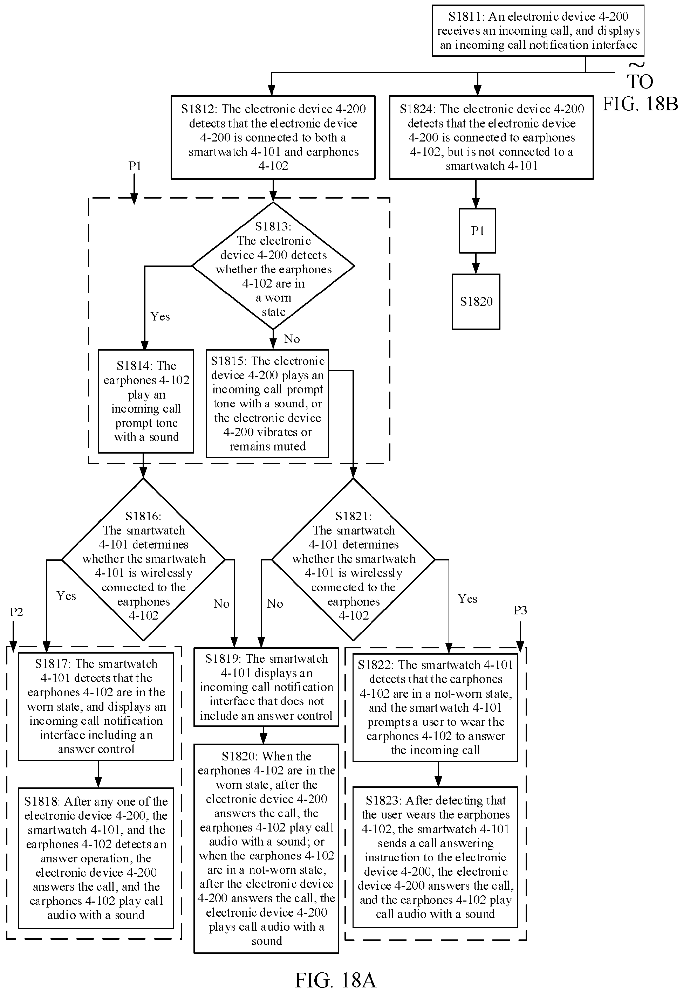

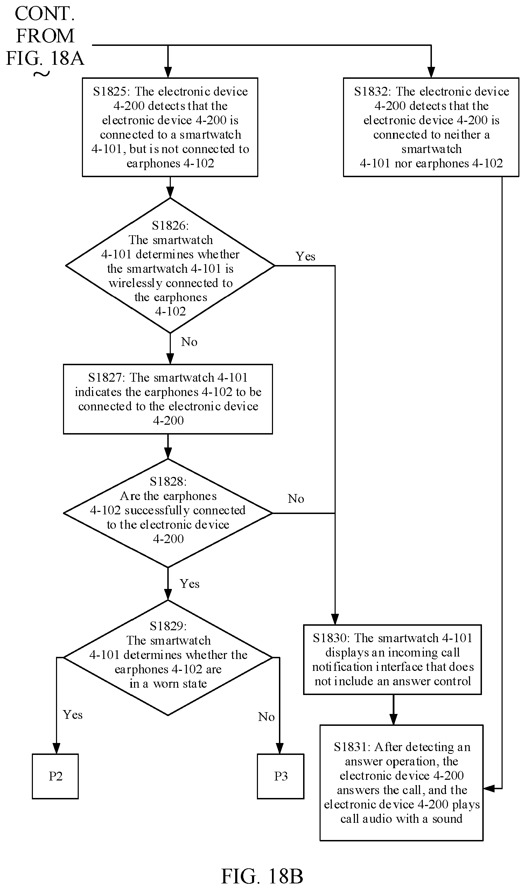

**FIG. 18A** **and** **FIG. 18B** **show an example of a flowchart of a call control method.**

As shown in FIG. 18A and FIG. 18B, the call control method may include step S1811 to step S1832. The method may be a call control method based on the communication system 40 shown in FIG. 4.

S1811: The electronic device 4-200 receives the incoming call, and displays an incoming call notification screen.

For the incoming call notification screen displayed by the electronic device 4-200, refer to the user interface 4-610 shown in FIG. 6B.

After receiving the incoming call, the electronic device 4-200 may detect whether the electronic device 4-200 is connected to the smartwatch 4-101, and may detect whether the electronic device 4-200 is connected to the earphones 4-102.

**Scenario 1 (S1812 to S1823): The electronic device 4-200 is connected to both the smartwatch 4-101 and the earphones 4-102.**

S1812: The electronic device 4-200 detects that the electronic device 4-200 is connected to both the smartwatch 4-101 and the earphones 4-102.

A case in which the electronic device 4-200 is connected to the earphones 4-102 may include: The electronic device 4-200 is connected to one earphone in the earphones 4-102, and the electronic device 4-200 is connected to two earphones in the earphones 4-102.

S1813: The electronic device 4-200 detects whether the earphones 4-102 are in a worn state.

If it is detected that the earphones 4-102 are in the worn state, the electronic device 4-200 may indicate the earphones 4-102 to perform the following step S1814.

If it is detected that the earphones 4-102 are not in the worn state, the electronic device 4-200 may perform the following step S1815.

S1814: The earphones 4-102 play an incoming call prompt tone with a sound.

When the earphones 4-102 are connected to the electronic device 4-200, and the earphones 4-102 are in the worn state, the electronic device 4-200 may send audio data of the incoming call prompt tone to the earphones 4-102. The earphones 4-102 may play the incoming call prompt tone with a sound. In this way, when wearing the earphones 4-102, a user may learn, based on the heard incoming call prompt tone, that the electronic device 4-200 receives the incoming call.

S1815: The electronic device 4-200 plays an incoming call prompt tone with a sound, or the electronic device 4-200 vibrates or remains muted.

When the electronic device 4-200 is in a ringing mode, the electronic device 4-200 may play the incoming call prompt tone with a sound through an audio playing apparatus on the electronic device 4-200. When the electronic device 4-200 is in a vibration mode, the electronic device 4-200 may vibrate through a vibration apparatus like a motor, to give the user a prompt that the electronic device 4-200 receives the incoming call. When the electronic device 4-200 is in a mute mode, the electronic device 4-200 may remain muted. In a state of the vibration mode or the mute mode, the electronic device 4-200 may not play the incoming call prompt tone with a sound.

Step S1813, step S1814, and step S1815 may constitute step P1.

S1816: The smartwatch 4-101 determines whether the smartwatch is wirelessly connected to the earphones 4-102.

When the earphones 4-102 play the incoming call prompt tone with a sound, the smartwatch 4-101 may determine whether the smartwatch 4-101 is wirelessly connected to the earphones 4-102. The wireless connection manner may be, for example, a wireless communication connection like a Bluetooth communication connection.

If it is determined that the smartwatch 4-101 is wirelessly connected to the earphones 4-102, the smartwatch 4-101 may perform the following step S1817.

If it is determined that there is no wireless connection between the smartwatch 4-101 and the earphones 4-102, the smartwatch 4-101 may perform the following step S1819.

S1817: The smartwatch 4-101 detects that the earphones 4-102 are in the worn state, and displays an incoming call notification screen including an answer control.

It can be learned from the foregoing step S1814 that the earphones 4-102 are currently in the worn state. Therefore, the smartwatch 4-101 may detect that the earphones 4-102 are in the worn state. Then, the smartwatch 4-101 may display the incoming call notification screen including the answer control. For the incoming call notification screen including the answer control, refer to the user interface 4-650 shown in FIG. 6D.

S1818: After any one of the electronic device 4-200, the smartwatch 4-101, and the earphones 4-102 detect an answer operation, the electronic device 4-200 answers the call, and the earphones 4-102 play call audio with a sound.

It can be learned from step S1814 to step S1817 that the user may hear the incoming call prompt tone on the earphones 4-102, and view, on the smartwatch 4-101, the incoming call notification screen indicating that the electronic device 4-200 receives the incoming call. In addition, the user can also view an incoming call notification screen on the electronic device 4-200. The user may perform an answer operation on any one of the electronic device 4-200, the smartwatch 4-101, and the earphones 4-102. For example, the answer operation performed on the electronic device 4-200 may be an operation performed on the answer control 4-613 shown in FIG. 6B. The answer operation performed on the smartwatch 4-101 may be the operation performed on the answer control 4-655 shown in FIG. 6D. The answer operation performed on the earphones 4-102 may be a double-tap operation performed on a preset area of the earphones 4-102. An implementation of the answer operation is not limited in embodiments of this application.

For a scenario in which the electronic device 4-200 answers the call, and the earphones 4-102 play call audio with a sound, refer to the descriptions of the scenario shown in FIG. 6C.

Step S1817 and step S1818 may constitute step P2.

S1819: The smartwatch 4-101 displays an incoming call notification screen that does not include an answer control.

If there is no wireless connection between the earphones 4-102 and the smartwatch 4-101, the smartwatch 4-101 cannot control the earphones 4-102 to play call audio on the electronic device 4-200 with a sound. The smartwatch 4-101 may display the incoming call notification screen that does not include the answer control. For the incoming call notification screen that does not include the answer control, refer to the user interface 4-720 shown in FIG. 7B.

S1820: When the earphones 4-102 are in the worn state, after the electronic device 4-200 answers the call, the earphones 4-102 play the call audio with a sound, or when the earphones 4-102 are in a not-worn state, after the electronic device 4-200 answers the call, the electronic device 4-200 plays the call audio with a sound.

When there is no wireless connection between the earphones 4-102 and the smartwatch 4-101, the electronic device 4-200 or the earphones 4-102 may detect an answer operation, to trigger the electronic device 4-200 to answer the incoming call.

When at least one earphone in the earphones 4-102 is in the worn state, after either of the electronic device 4-200 and the earphones 4-102 detects the answer operation, the electronic device 4-200 may answer the incoming call. To be specific, when wearing the earphones 4-102, the user may answer the incoming call by performing the answer operation on the electronic device 4-200 or the earphones 4-102. In this case, the earphones 4-102 may play the call audio on the electronic device 4-200 with a sound.

When both the two earphones in the earphones 4-102 are in the not-worn state, the electronic device 4-200 may answer the incoming call after detecting the answer operation. To be specific, when the user does not wear the earphones 4-102, the user may answer the incoming call by performing the answer operation on the electronic device 4-200. In this case, the electronic device 4-200 plays the call audio on the electronic device 4-200 with a sound through the audio playing apparatus on the electronic device 4-200.

S1821: The smartwatch 4-101 determines whether the smartwatch is wirelessly connected to the earphones 4-102.

When the electronic device 4-200 performs step S1813 to detect whether the earphones 4-102 are in the worn state, regardless of whether the earphones 4-102 are in the worn state, the electronic device 4-200 may send incoming call information to the smartwatch 4-101 when the electronic device 4-200 is connected to the smartwatch 4-101. When receiving the incoming call information, the smartwatch 4-101 may determine whether the smartwatch 4-101 is wirelessly connected to the earphones 4-102, to determine whether the smartwatch 4-101 can control the earphones 4-102 to play call audio on the electronic device 4-200 with a sound.

Therefore, in a scenario in which the earphones 4-102 are in the worn state and play the incoming call prompt tone with a sound (refer to step S1814), the smartwatch 4-101 may determine whether the smartwatch 4-101 is wirelessly connected to the earphones 4-102 (refer to step S1816). In a scenario in which the earphones 4-102 are in the not-worn state, and the electronic device 4-200 plays the incoming call prompt tone with a sound (refer to step S1815), the smartwatch 4-101 may still determine whether the smartwatch 4-101 is wirelessly connected to the earphones 4-102 (namely, step S1821).

If it is determined that there is no wireless connection between the smartwatch 4-101 and the earphones 4-102, the smartwatch 4-101 may perform step S1819.

If it is determined that the smartwatch 4-101 is wirelessly connected to the earphones 4-102, the smartwatch 4-101 may perform step S1822.

S1822: The smartwatch 4-101 detects that the earphones 4-102 are in the not-worn state, and the smartwatch 4-101 prompts the user to wear the earphones 4-102 to answer the incoming call.

It can be learned from the foregoing step S1815 that the earphones 4-102 are in the not-worn state. Therefore, the smartwatch 4-101 may detect that the earphones 4-102 are in the not-worn state.

When the earphones 4-102 are connected to both the smartwatch 4-101 and the electronic device 4-200, but the earphones 4-102 are in the not-worn state, at least one earphone in the earphones 4-102 worn by the user may trigger the electronic device 4-200 to answer the incoming call. The smartwatch 4-101 may prompt the user to wear the earphones 4-102 to answer the incoming call.

For the scenario in which the user is prompted to wear the earphones 4-102 to answer the incoming call, refer to the descriptions of the scenario shown in FIG. 6B.

S1823: After detecting that the user wears the earphones 4-102, the smartwatch 4-101 sends a call answering instruction to the electronic device 4-200, the electronic device 4-200 answers the call, and the earphones 4-102 play the call audio with a sound.

When it is detected that the user wears the earphones 4-102 (that is, the earphones 4-102 change from the not-worn state to the worn state), the smartwatch 4-101 may send the call answering instruction to the electronic device 4-200. For a scenario in which the earphones 4-102 play the call audio on the electronic device 4-200 with a sound, refer to the scenario shown in FIG. 6C.

Step S1822 and step S1823 may constitute step P3.

It should be noted that an execution sequence of step S1813 and step S1816 (or step S1821) is not limited in this application. In a possible implementation, step S1816 (or step S1821) may be performed before step S1813. Alternatively, step S1816 (or step S1821) and step S1813 may be simultaneously performed.

When the earphones 4-102 are in the worn state, and the earphones 4-102 are wirelessly connected to the smartwatch 4-101, the smartwatch 4-101, the electronic device 4-200, and the earphones 4-102 may control the incoming call on the electronic device 4-200 according to step P2.

When the earphones 4-102 are in the not-worn state, and the earphones 4-102 are wirelessly connected to the smartwatch 4-101, the smartwatch 4-101, the electronic device 4-200, and the earphones 4-102 may control the incoming call on the electronic device 4-200 according to step P3.

When there is no wireless connection between the earphones 4-102 and the smartwatch 4-101, the smartwatch 4-101, the electronic device 4-200, and the earphones 4-102 may control the incoming call on the electronic device 4-200 according to step S1819 and step S1820.

In a possible implementation, the electronic device 4-200 may alternatively not perform step S1813. In other words, step S1813 is optional. When the electronic device 4-200 is connected to both the smartwatch 4-101 and the earphones 4-102, after receiving the incoming call, the electronic device 4-200 may send the incoming call information to the smartwatch 4-101. When the incoming call information is received, the smartwatch 4-101 may perform step S1816 or step S1821. After receiving the incoming call, the electronic device 4-200 may further send the audio data of the incoming call prompt tone to the earphones 4-102. The earphones 4-102 may play the incoming call prompt tone with a sound. When the electronic device 4-200 answers the incoming call, the electronic device 4-200 may send audio data of the call to the earphones 4-102. The earphones 4-102 may play call audio on the electronic device 4-200 with a sound.

Optionally, after receiving the incoming call information of the electronic device 4-200, the smartwatch 4-101 may alternatively not perform step S1816 or step S1817. Specifically, when receiving the incoming call information, the smartwatch 4-101 may display the incoming call notification screen, to give the user a prompt that the electronic device 4-200 receives the incoming call. The incoming call notification screen displayed by the smartwatch 4-101 may include the answer control, or may not include the answer control. When the incoming call notification screen displayed by the smartwatch 4-101 includes the answer control, in response to an operation performed on the answer control, the smartwatch 4-101 may send a call answering instruction to the electronic device 4-200. The electronic device 4-200 may answer the incoming call according to the call answering instruction. After the electronic device 4-200 answers the incoming call, the electronic device 4-200, the earphones 4-102, or the smartwatch 4-101 may play the call audio on the electronic device 4-200 with a sound.

**Scenario 2 (S1824): The electronic device 4-200 is connected to the earphones 4-102, but is not connected to the smartwatch 4-101.**

S1824: The electronic device 4-200 detects that the electronic device 4-200 is connected to the earphones 4-102, but is not connected to the smartwatch 4-101.

The electronic device 4-200 and the earphones 4-102 may perform step P1. Then, the electronic device 4-200 and the earphones 4-102 may perform step S1820. For both step P1 and step S1820, refer to the descriptions of Scenario 1.

It can be learned from step S1824, step P1, and step S1820 that, when the electronic device 4-200 is connected to the earphones 4-102, but is not connected to the smartwatch 4-101, the electronic device 4-200 may detect whether the earphones 4-102 are in the worn state.

If the earphones 4-102 are in the worn state, the electronic device 4-200 may indicate the earphones 4-102 to play the incoming call prompt tone with a sound. In addition, either of the electronic device 4-200 and the earphones 4-102 may detect the answer operation, to trigger the electronic device 4-200 to answer the incoming call. After the electronic device 4-200 answers the incoming call, the earphones 4-102 may play the call audio on the electronic device 4-200 with a sound.

If the earphones 4-102 are in the not-worn state, the electronic device 4-200 may independently play the incoming call prompt tone with a sound. After detecting the answer operation, the electronic device 4-200 may answer the incoming call, and play the call audio on the electronic device 4-200 with a sound through the audio playing apparatus on the electronic device 4-200.

In a possible implementation, when the electronic device 4-200 is connected to the earphones 4-102 but is not connected to the smartwatch 4-101, after receiving the incoming call, the electronic device 4-200 may directly send the audio data of the incoming call prompt tone to the earphones 4-102. After receiving the audio data of the incoming call prompt tone, the earphones 4-102 may play the incoming call prompt tone with a sound. After the electronic device 4-200 answers the incoming call, the electronic device 4-200 may send audio data of the call to the earphones 4-102. The earphones 4-102 may play the call audio on the electronic device 4-200 with a sound. The electronic device 4-200 may answer the incoming call in response to an operation performed on the electronic device 4-200 to answer the call (for example, the operation performed on the answer control 4-613 shown in FIG. 6B). Alternatively, the electronic device 4-200 may answer the incoming call according to a call answering instruction of the earphones 4-102. The earphones 4-102 may send the call answering instruction to the electronic device 4-200 based on an operation performed on the earphones 4-102 to answer the call.

In other words, the electronic device 4-200 may not need to detect whether the earphones 4-102 are in the worn state. Step S1813 in step P1 is optional.

**Scenario 3 (S1825 to S1831): The electronic device 4-200 is connected to the smartwatch 4-101, but is not connected to the earphones 4-102.**

S1825: The electronic device 4-200 detects that the electronic device 4-200 is connected to the smartwatch 4-101, but is not connected to the earphones 4-102.

After receiving the incoming call, the electronic device 4-200 may send the incoming call information to the smartwatch 4-101.

S1826: The smartwatch 4-101 determines whether the smartwatch is wirelessly connected to the earphones 4-102.

When receiving the incoming call information, the smartwatch 4-101 may determine whether the smartwatch 4-101 is wirelessly connected to the earphones 4-102.

If it is determined that there is no wireless connection between the smartwatch 4-101 and the earphones 4-102, the smartwatch 4-101 may perform the following step S1827.

If it is determined that the smartwatch 4-101 is wirelessly connected to the earphones 4-102, the smartwatch 4-101 may perform the following step S1830.

S1827: The smartwatch 4-101 indicates the earphones 4-102 to be connected to the electronic device 4-200.

For a scenario in which the smartwatch 4-101 indicates the earphones 4-102 to be connected to the electronic device 4-200, refer to the descriptions of the scenario shown in FIG. 8C.

S1828: The smartwatch 4-101 may determine whether the earphones 4-102 are successfully connected to the electronic device 4-200.

The earphones 4-102 and the electronic device 4-200 may establish a communication connection based on the indication of the smartwatch 4-101. The smartwatch 4-101 may determine whether the earphones 4-102 are successfully connected to the electronic device 4-200.

If it is determined that the earphones 4-102 are successfully connected to the electronic device 4-200, the smartwatch 4-101 may perform the following step S1829.

If it is determined that the earphones 4-102 fail to be connected to the electronic device 4-200, the smartwatch 4-101 may perform the following step S1830.

Optionally, if it is determined that the earphones 4-102 fail to be connected to the electronic device 4-200, the smartwatch 4-101 may also give a user a prompt that the connection fails. For a scenario in which the smartwatch 4-101 prompts the user with a failure of the connection, refer to the scenario shown in FIG. 8E.

S1829: The smartwatch 4-101 determines whether the earphones 4-102 are in a worn state.

If at least one earphone in the earphones 4-102 is in the worn state, the smartwatch 4-101, the earphones 4-102, and the electronic device 4-200 may control the incoming call on the electronic device 4-200 according to step P2.

If two earphones in the earphones 4-102 are in a not-worn state, the smartwatch 4-101, the earphones 4-102, and the electronic device 4-200 may control the incoming call on the electronic device 4-200 according to step P3.

S1830: The smartwatch 4-101 displays an incoming call notification screen that does not include an answer control.

For the incoming call notification screen that does not include the answer control, refer to the user interface 4-720 shown in FIG. 7B.

Alternatively, the smartwatch 4-101 may display an incoming call notification screen including an answer control. For the incoming call notification screen including the answer control, refer to the user interface 4-650 shown in FIG. 6D. In this way, the user may perform an operation on the smartwatch 4-101, to conveniently control the electronic device 4-200 to answer the incoming call.

S1831: After detecting an answer operation, the electronic device 4-200 answers the call, and the electronic device 4-200 plays call audio with a sound.

When the earphones 4-102 are not connected to the electronic device 4-200, the user needs to perform the answer operation on the electronic device 4-200 to answer the call. After answering the call, the electronic device 4-200 may play the call audio on the electronic device 4-200 with a sound through an audio playing apparatus on the electronic device 4-200.

In a possible implementation, the smartwatch 4-101 may not perform step S1826. After receiving the incoming call, the electronic device 4-200 may send the incoming call information to the smartwatch 4-101. When receiving the incoming call information, the smartwatch 4-101 may directly display the incoming call notification screen, to give the user a prompt that the electronic device 4-200 receives the incoming call. The incoming call notification screen displayed by the smartwatch 4-101 may include an answer control, or may not include an answer control. When the incoming call notification screen displayed by the smartwatch 4-101 includes the answer control, in response to an operation performed on the answer control, the smartwatch 4-101 may send a call answering instruction to the electronic device 4-200. The electronic device 4-200 may answer the incoming call according to the call answering instruction. After the electronic device 4-200 answers the incoming call, the electronic device 4-200 or the smartwatch 4-101 may play the call audio on the electronic device 4-200 with a sound. Alternatively, after the electronic device 4-200 is connected to the earphones 4-102, the electronic device 4-200 may play the call audio on the electronic device 4-200 with a sound through the earphones 4-102.

**Scenario 4 (S1832): The electronic device 4-200 is connected to neither the smartwatch 4-101 nor the earphones 4-102.**

S1831: The electronic device 4-200 detects that the electronic device 4-200 is connected to neither the smartwatch 4-101 nor the earphones 4-102.

When the electronic device 4-200 is connected to neither the smartwatch 4-101 nor the earphones 4-102, a user needs to perform an answer operation on the electronic device 4-200 to answer the call. The electronic device 4-200 may control the incoming call on the electronic device 4-200 according to step S1831.

In a possible implementation, in a process in which the earphones 4-102 play the call audio on the electronic device 4-200 with a sound, the electronic device 4-200 may detect whether the earphones 4-102 are in a worn state. When it is detected that the user takes off the earphones 4-102 (that is, the earphones 4-102 change from the worn state to a not-worn state), the earphones 4-102 may stop playing the call audio with a sound, and the electronic device 4-200 may independently make a sound to continue to play the call audio.

In a possible implementation, in a process in which the earphones 4-102 play the call audio on the electronic device 4-200 with a sound, if the earphones 4-102 are placed in a compartment, the electronic device 4-200 may hang up the call. In this way, the user may hang up the call by placing the earphones 4-102 in the compartment.

It can be learned from the method shown in FIG. 18A and FIG. 18B that the user may control the call on the electronic device 4-200 through the smartwatch 4-101 and the earphones 4-102. The user may perform an answer operation on the smartwatch 4-101, the earphones 4-102, or the electronic device 4-200 based on a requirement of the user, and choose to use the earphones 4-102 or the electronic device 4-200 to answer the call. The foregoing method can help the user more conveniently control the call on the electronic device 4-200, to improve call experience of the user.

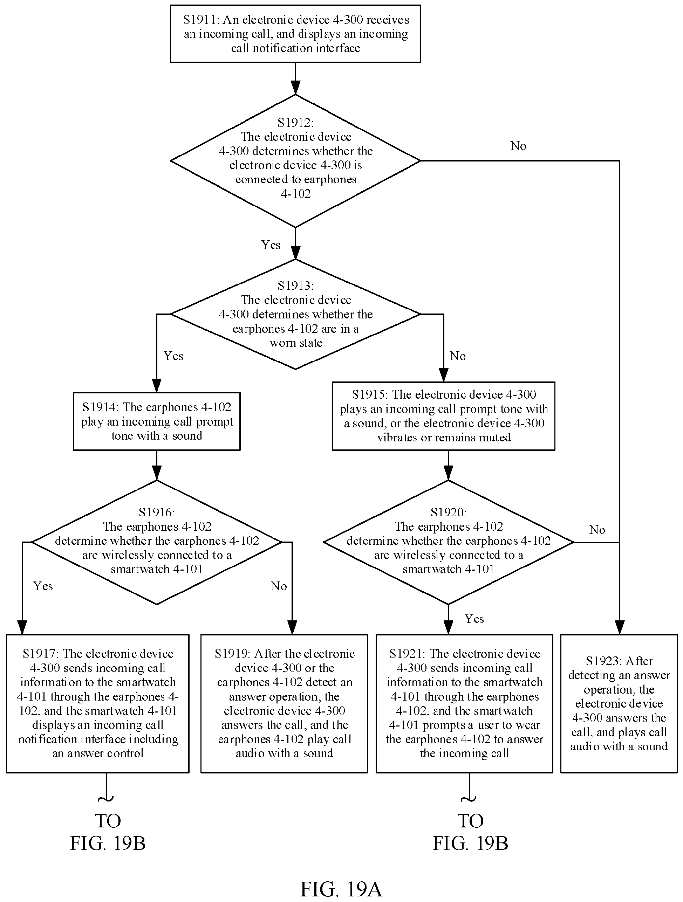

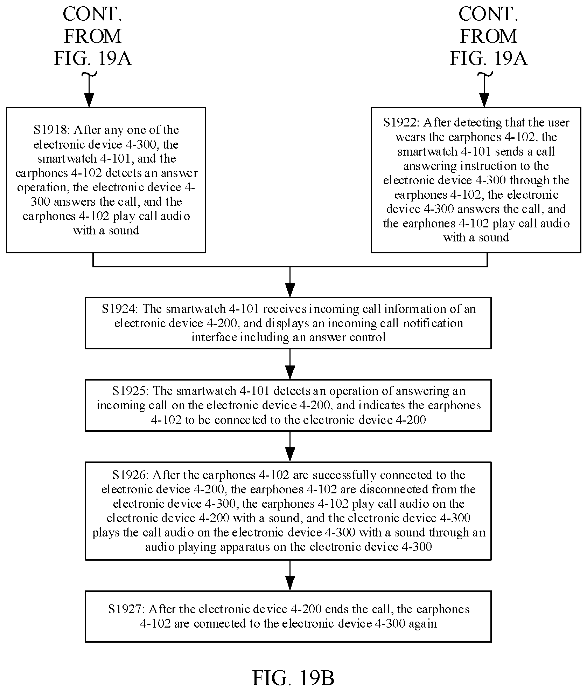

**FIG. 19A** **and** **FIG. 19B** **show an example of a flowchart of a call control method.**

As shown in FIG. 19A and FIG. 19B, the call control method may include step S1911 to step S1926. The method may be a call control method based on the communication system shown in FIG. 5B.

**1 (S1911 to S1923): The electronic device 4-300 receives an incoming call.**

S1911: The electronic device 4-300 receives the incoming call, and displays an incoming call notification screen.

For the incoming call notification screen displayed by the electronic device 4-300, refer to the user interface 4-910 shown in FIG. 9B.

S1912: The electronic device 4-300 determines whether the electronic device 4-300 is connected to the earphones 4-102.

If it is determined that the electronic device 4-300 is connected to the earphones 4-102, the electronic device 4-300 may perform the following step S1913.

If it is determined that the electronic device 4-300 is not connected to the earphones 4-102, the electronic device 4-300 may perform the following step S1923.

S1913: The electronic device 4-300 determines whether the earphones 4-102 are in a worn state.

If it is determined that at least one earphone in the earphones 4-102 is in the worn state, the electronic device 4-300 may indicate the earphones 4-102 to perform the following step S1914.

If it is determined that two earphones in the earphones 4-102 are both in a not-worn state, the electronic device 4-300 may perform the following step S1915.

S1914: The earphones 4-102 play an incoming call prompt tone with a sound.

S1915: The electronic device 4-300 plays an incoming call prompt tone with a sound, or the electronic device 4-300 vibrates or remains muted.

When the electronic device 4-300 is in a ringing mode, the electronic device 4-300 may play the incoming call prompt tone with a sound through an audio playing apparatus on the electronic device 4-300. When the electronic device 4-300 is in a vibration mode, the electronic device 4-300 may vibrate through a vibration apparatus like a motor, to give a user a prompt that the electronic device 4-300 receives the incoming call. When the electronic device 4-300 is in a mute mode, the electronic device 4-300 may remain muted. In a state of the vibration mode or the mute mode, the electronic device 4-300 may not play the incoming call prompt tone with a sound.

S1916: The earphones 4-102 determine whether the earphones 4-102 are wirelessly connected to the smartwatch 4-101.

When the earphones 4-102 are in the worn state, the earphones 4-102 may determine whether the earphones 4-102 are wirelessly connected to the smartwatch 4-101.

If the earphones 4-102 are wirelessly connected to the smartwatch 4-101, the electronic device 4-300 and the smartwatch 4-101 may perform the following step S1917.

If there is no wireless connection between the earphones 4-102 and the smartwatch 4-101, the electronic device 4-300 and the earphones 4-102 may perform the following step S1919.

S1917: The electronic device 4-300 sends incoming call information to the smartwatch 4-101 through the earphones 4-102, and the smartwatch 4-101 displays an incoming call notification screen including an answer control.

For the incoming call notification screen that includes the answer control and that is displayed by the smartwatch, refer to the user interface 4-920 shown in FIG. 9B.

S1918: After any one of the electronic device 4-300, the smartwatch 4-101, and the earphones 4-102 detect an answer operation, the electronic device 4-300 answers the call, and the earphones 4-102 play call audio with a sound.

When a user wears the earphones 4-102, and the earphones 4-102 are connected to both the electronic device 4-300 and the smartwatch 4-101, the user may perform the answer operation on any one of the electronic device 4-300, the smartwatch 4-101, and the earphones 4-102, to answer the incoming call on the electronic device 4-300.

S1919: After the electronic device 4-300 or the earphones 4-102 detect an answer operation, the electronic device 4-300 answers the call, and the earphones 4-102 play call audio with a sound.

When there is no wireless connection between the earphones 4-102 and the smartwatch 4-101, the electronic device 4-300 cannot send incoming call information to the smartwatch 4-101. In this case, the smartwatch 4-101 does not give a user a prompt that the electronic device 4-300 receives the incoming call.

When the user wears the earphones 4-102, and the earphones 4-102 are connected to the electronic device 4-300, but there is no wireless connection between the earphones 4-102 and the smartwatch 4-101, the user may perform the answer operation on the electronic device 4-300 or the earphones 4-102 to answer the incoming call on the electronic device 4-300.

In a possible implementation, before the earphones 4-102 determine whether the earphones 4-102 are wirelessly connected to the smartwatch 4-101, if the electronic device 4-300 or the earphones 4-102 detect the answer operation, the electronic device 4-300 may answer the call. The earphones 4-102 may play the call audio on the electronic device 4-300 with a sound. In this case, the earphones 4-102 may no longer perform step S1916. In other words, step S1916 is optional.

S1920: The earphones 4-102 determine whether the earphones 4-102 are wirelessly connected to the smartwatch 4-101.

With reference to step S1914, it can be learned that regardless of whether the earphones 4-102 are in the worn state, the earphones 4-102 may determine whether the earphones 4-102 are wirelessly connected to the smartwatch 4-101.

When the earphones 4-102 are in the not-worn state, and the earphones 4-102 are wirelessly connected to the smartwatch 4-101, the electronic device 4-300 and the smartwatch 4-101 may perform the following step S1921.

When the earphones 4-102 are in the not-worn state, and there is no wireless connection between the earphones 4-102 and the smartwatch 4-101, the electronic device 4-300 may perform the following step S1923.

S1921: The electronic device 4-300 sends incoming call information to the smartwatch 4-101 through the earphones 4-102, and the smartwatch 4-101 prompts the user to wear the earphones 4-102 to answer the incoming call.

S1922: After detecting that the user wears the earphones 4-102, the smartwatch 4-101 sends a call answering instruction to the electronic device 4-300 through the earphones 4-102, the electronic device 4-300 answers the call, and the earphones 4-102 play call audio with a sound.

The user wears the earphones 4-102 according to the prompt of the smartwatch 4-101 in step S1921. When it is detected that the user wears the earphones 4-102 (that is, the earphones 4-102 change from the not-worn state to the worn state), the smartwatch 4-101 may send the call answering instruction to the electronic device 4-300 through the earphones 4-102. For a scenario in which the earphones 4-102 play the call audio on the electronic device 4-300 with a sound, refer to the descriptions of the scenario shown in FIG. 9C.

Optionally, in addition to triggering, by wearing the earphones 4-102, the electronic device 4-300 to answer the call, the user may perform an answer operation on the electronic device 4-300 to trigger the electronic device 4-300 to answer the call. After answering the call based on the answer operation performed on the electronic device 4-300, the electronic device 4-300 may also indicate the earphones 4-102 to play the call audio with a sound.

S1923: After detecting an answer operation, the electronic device 4-300 answers the call, and plays call audio with a sound.

When the earphones 4-102 are not connected to the electronic device 4-300, or when the earphones 4-102 are connected to the electronic device 4-300, but the earphones 4-102 are in the not-worn state and the earphones 4-102 are not connected to the smartwatch 4-101, the user needs to perform the answer operation on the electronic device 4-300. After detecting the answer operation, the electronic device 4-300 may answer the call, and play the call audio on the electronic device 4-300 with a sound through the audio playing apparatus on the electronic device 4-300.

It should be noted that an execution sequence of step S1913 and step S1916 (or step S1920) is not limited in this application. In a possible implementation, step S1916 (or step S1920) may be performed before step S1913. Alternatively, step S 1916 (or step S1920) and step S1913 may be simultaneously performed.

When the earphones 4-102 are in the worn state, and the earphones 4-102 are wirelessly connected to the smartwatch 4-101, the smartwatch 4-101, the electronic device 4-300, and the earphones 4-102 may control the incoming call on the electronic device 4-300 according to step S1917 and step S1918.

When the earphones 4-102 are in the worn state, and there is no wireless connection between the earphones 4-102 and the smartwatch 4-101, the electronic device 4-300 and the earphones 4-102 may control the incoming call on the electronic device 4-300 according to step S1919.

When the earphones 4-102 are in the not-worn state, and the earphones 4-102 are wirelessly connected to the smartwatch 4-101, the smartwatch 4-101, the electronic device 4-200, and the earphones 4-102 may control the incoming call on the electronic device 4-300 according to step S1921 and step S1922.

When the earphones 4-102 are in the not-worn state, and there is no wireless connection between the earphones 4-102 and the smartwatch 4-101, the electronic device 4-300 may control the incoming call on the electronic device 4-300 according to step S1923.

In a possible implementation, the electronic device 4-300 may alternatively not perform step S1913. Specifically, when it is determined that the electronic device 4-300 is connected to the earphones 4-102, the electronic device 4-300 may send audio data of the incoming call prompt tone to the earphones 4-102. The earphones 4-102 may play the incoming call prompt tone (namely, step S1914). When it is determined that the electronic device 4-300 is not connected to the earphones 4-102, the electronic device 4-300 may play the incoming call prompt tone with a sound, vibrate, or remain muted. In addition, after answering the call, the electronic device 4-300 may play the call audio on the electronic device 4-300 with a sound through the audio playing apparatus on the electronic device 4-300.

**2. (S1924 to S1926) The electronic device 4-200 receives an incoming call, and the electronic device 4-200 preempts to be connected to the earphones 4-102.**

S1924: The smartwatch 4-101 receives incoming call information of the electronic device 4-200, and displays an incoming call notification screen including an answer control.

A communication connection is established between the smartwatch 4-101 and the electronic device 4-200.

When the earphones 4-102 play the call audio on the electronic device 4-300 with a sound (refer to step S1918 or step S1922), if the electronic device 4-200 receives the incoming call, the smartwatch 4-101 may display the incoming call notification screen indicating that the electronic device 4-200 receives the incoming call. For the incoming call notification screen, refer to the user interface 4-1040 shown in FIG. 10B.

S1925: The smartwatch 4-101 detects an operation of answering the incoming call on the electronic device 4-200, and indicates the earphones 4-102 to be connected to the electronic device 4-200.

For the operation of answering the incoming call on the electronic device 4-200, refer to the operation shown in FIG. 10B.

For a scenario in which the smartwatch 4-101 indicates the earphones 4-102 to be connected to the electronic device 4-200, refer to the descriptions of the scenario shown in FIG. 10C.

S1926: After the earphones 4-102 are successfully connected to the electronic device 4-200, the earphones 4-102 are disconnected from the electronic device 4-300, the earphones 4-102 play call audio on the electronic device 4-200 with a sound, and the electronic device 4-300 plays the call audio on the electronic device 4-300 with a sound through the audio playing apparatus on the electronic device 4-300.

The electronic device 4-200 preempts to be connected to the earphones 4-102 through the smartwatch 4-101, so that the earphones 4-102 play the call audio on the electronic device 4-200 with a sound. For a scenario in which the electronic device 4-300 independently plays the call audio on the electronic device 4-300 with a sound, refer to the descriptions of the scenario shown in FIG. 10D and FIG. 10E.

S1927: After the electronic device 4-200 ends the call, the earphones 4-102 are connected to the electronic device 4-300 again.

It can be learned from step S1924 to step S1926 that, when the earphones 4-102 perform an audio-related service on the electronic device 4-300, the electronic device 4-200 preempts to be connected to the earphones 4-102, so that the earphones 4-102 are disconnected from the electronic device 4-300. After being connected to the electronic device 4-200, the earphones 4-102 may play the call audio on the electronic device 4-200 with a sound. After the call on the electronic device 4-200 is ended, the earphones 4-102 may be actively connected to an electronic device connected before the connection is preempted, namely, the electronic device 4-300. Alternatively, after detecting that the call on the electronic device 4-200 is ended, the smartwatch 4-101 may indicate the earphones 4-102 to be connected to an electronic device connected before the connection is preempted, namely, the electronic device 4-300.

Optionally, after the electronic device 4-200 ends the call, the earphones 4-102 may maintain the connection to the electronic device 4-200.

In a possible implementation, when the earphones 4-102 are connected to the electronic device 4-300 and performs the audio-related service (for example, a music service or a call service) on the electronic device 4-300, if an audio-related service exists on the electronic device 4-200, the earphones 4-102 may switch, between the electronic device 4-200 and the electronic device 4-300 based on a user selection or based on a priority of an audio-related service, an electronic device connected to the earphones 4-102. In this way, the earphones 4-102 may intelligently switch an audio-related service performed on the earphones 4-102.

For example, when the electronic device 4-300 plays the call audio with a sound through the earphones 4-102, if the electronic device 4-200 receives the incoming call, the smartwatch 4-101 may indicate, after detecting the operation of answering the incoming call on the electronic device 4-200, the earphones 4-102 to be connected to the electronic device 4-200. Then, the earphones 4-102 may switch the connected electronic device from the electronic device 4-300 to the electronic device 4-200. In this way, the earphones 4-102 may switch from playing the call audio on the electronic device 4-300 with a sound to playing the call audio on the electronic device 4-200 with a sound. It can be learned that the user may select the earphones 4-102 through the smartwatch 4-101, to perform an audio-related service on a specified device.

For another example, an audio-related service has a priority. Here, an example in which a priority of the call service is higher than a priority of the music service is used for description. When the electronic device 4-300 plays music on the electronic device 4-300 with a sound through the earphones 4-102, if the electronic device 4-200 receives the incoming call, the smartwatch 4-101 may indicate, after the electronic device 4-200 answers the call, the earphones 4-102 to be connected to the electronic device 4-200. After being connected to the electronic device 4-200, the earphones 4-102 may play the call audio on the electronic device 4-200 with a sound. The earphones 4-102 may be disconnected from the electronic device 4-300. The electronic device 4-300 may pause playing of the music. It can be learned that when the user listens to the music on the electronic device 4-300 through the earphones 4-102, the electronic device 4-200 receives the incoming call. Because the priority of the call service is higher than the priority of the music service, the earphones 4-102 may be connected to the electronic device 4-200 and play the call audio on the electronic device 4-200 with a sound. In this way, the user can use the earphones 4-102 to switch from a state of listening to the music on the electronic device 4-300 to a state of listening to the call audio on the electronic device 4-200, without manually switching the electronic device connected to the earphones 4-102. Optionally, after the call on the electronic device 4-200 is ended, the earphones 4-102 may be reconnected to the electronic device 4-300, and continue to play the music on the electronic device 4-300 with a sound. Alternatively, after the call on the electronic device 4-200 is ended, the earphones 4-102 may maintain the connection to the electronic device 4-200.

The electronic device connected to the earphones 4-102 is not limited in embodiments of this application. For example, in addition to the electronic device 4-200 and the electronic device 4-300, the earphones 4-102 may establish communication connections to more electronic devices such as a mobile phone, a tablet computer, and a notebook computer. The earphones 4-102 may perform an audio-related service on the electronic device connected to the earphones 4-102.

It can be learned from the method shown in FIG. 19A and FIG. 19B that the user may control the call on the electronic device 4-300 through the smartwatch 4-101 and the earphones 4-102. The user may perform an answer operation on the smartwatch 4-101, the earphones 4-102, or the electronic device 4-300 based on a requirement of the user, and choose to use the earphones 4-102 or the electronic device 4-300 to answer the call. The foregoing method can help the user more conveniently control the call on the electronic device 4-300, to improve call experience of the user. In addition, the user may further control, through the smartwatch 4-101, the earphones 4-102 to play the call audio on the electronic device 4-200 or the electronic device 4-300 with a sound. In this way, the user may select, based on a requirement, the earphones 4-102 to play call audio on a specified device with a sound.

In some embodiments, the smartwatch 4-101 may support a plurality of connections. In addition to being connected to the electronic device 4-200, the smartwatch 4-101 may establish a communication connection to an electronic device like the electronic device 4-300.

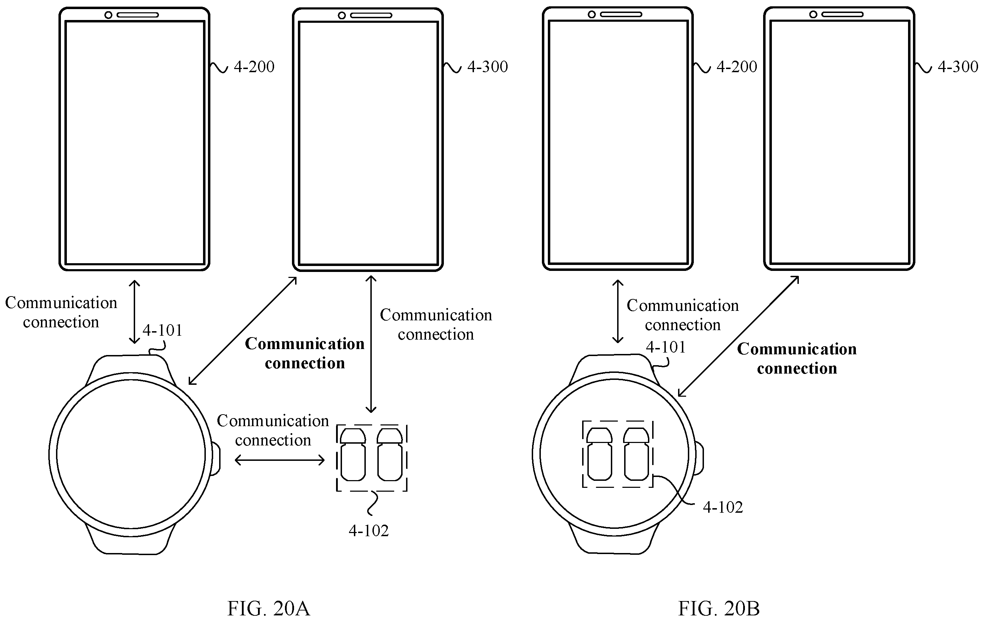

**FIG. 20A to FIG. 20F** **are diagrams of an example of a scenario in which the smartwatch 4-101 controls the electronic device 4-300 to answer a call when the smartwatch 4-101 is connected to a plurality of electronic devices.**

As shown in FIG. 20A, a communication connection is established between the smartwatch 4-101 and each of the electronic device 4-200, the electronic device 4-300, and the earphones 4-102. A communication connection is established between the earphones 4-102 and the electronic device 4-300.

As shown in FIG. 20B, after the earphones 4-102 are placed in a compartment, the communication connection between the earphones 4-102 and the electronic device 4-300 is disconnected. Because there is a communication connection between the smartwatch 4-101 and the electronic device 4-300, the smartwatch 4-101 may still control the electronic device 4-300. For example, a user may control a call service, a music service, and the like on the electronic device 4-300 through the smartwatch 4-101.

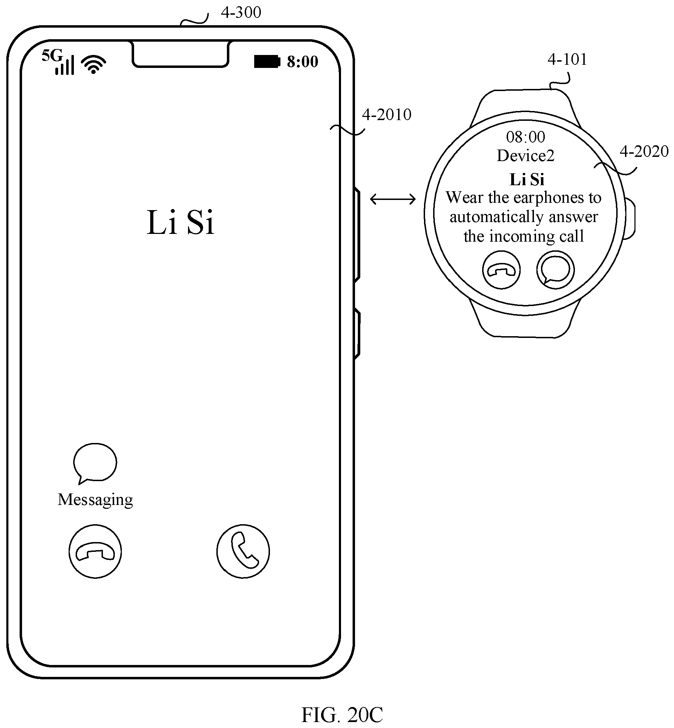

As shown in FIG. 20C, the electronic device 4-300 receives an incoming call. The electronic device 4-300 may display a user interface 4-2610. For the user interface 4-2610, refer to the user interface 4-910 shown in FIG. 9B. Because the electronic device 4-300 is connected to the smartwatch 4-101, the electronic device 4-300 may send an incoming call message to the smartwatch 4-101. The smartwatch 4-101 may display an incoming call notification screen based on the received incoming call message, to give the user a prompt that the electronic device 4-300 receives the incoming call. For example, the incoming call notification screen displayed by the smartwatch 4-101 may be a user interface 4-2620 shown in FIG. 20C. For the user interface 4-2620, refer to the user interface 4-620 shown in FIG. 6B.

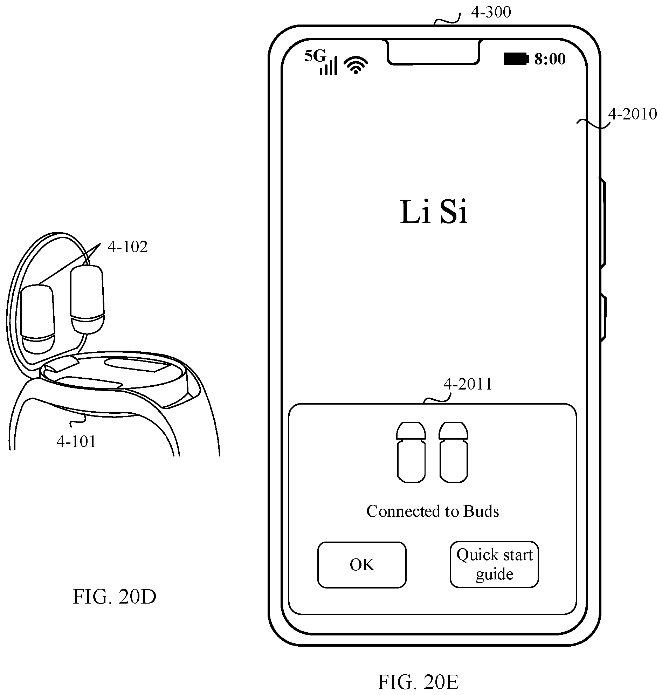

As shown in FIG. 20D, after the earphones 4-102 are removed from the compartment, the earphones 4-102 may be reconnected to the electronic device 4-300.

As shown in FIG. 20E, when the earphones 4-102 are reconnected to the electronic device 4-300, the electronic device 4-300 may display a connection widget 4-2011 on the user interface 4-2610. The connection widget 4-2011 may be used to give the user a prompt that the earphones 4-102 have established the communication connection to the electronic device 4-300. Content displayed in the connection widget 4-2011 is not limited in embodiments of this application.

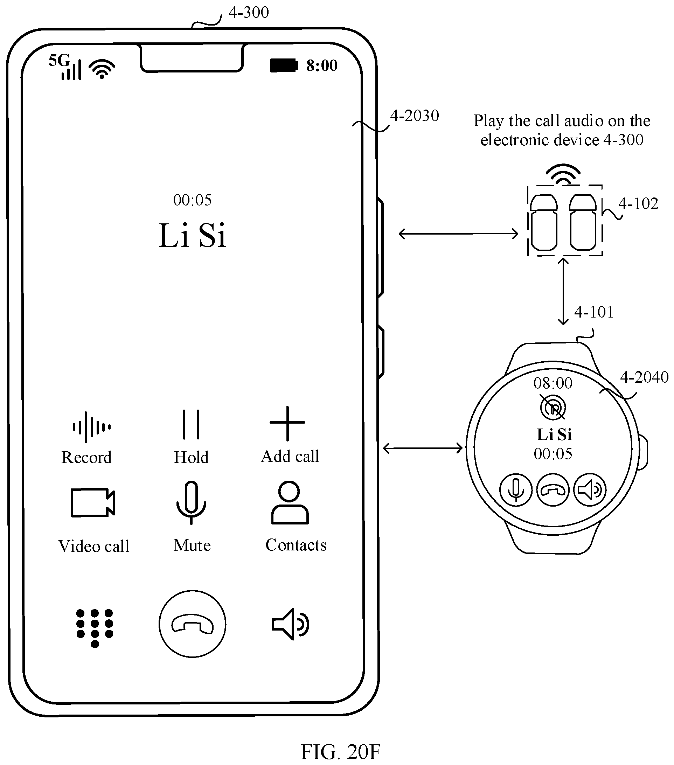

As shown in FIG. 20F, after the electronic device 4-300 answers the incoming call, the electronic device 4-300 may display a user interface 4-2630. The electronic device 4-300 may transmit audio data of the call with the earphones 4-102. The earphones 4-102 may play call audio on the electronic device 4-300 with a sound. The electronic device 4-300 may transmit call control information with the smartwatch 4-101. The smartwatch 4-101 may display a user interface 4-2640 shown in FIG. 20F, so that the user controls, on the smartwatch 4-101, the call service on the electronic device 4-300. For the user interface 4-2630 and the user interface 4-2640, refer to the user interface 4-930 and the user interface 4-940 shown in FIG. 9C, respectively.

It can be learned from the scenario shown in FIG. 20A to FIG. 20F that the smartwatch 4-101 may be connected to a plurality of electronic devices such as the electronic device 4-200 and the electronic device 4-300. The smartwatch 4-101 may control one or more services (for example, a call service and a music service) on the plurality of electronic devices. According to the foregoing embodiments, the user can conveniently control the plurality of electronic devices on the smartwatch 4-101 in a centralized manner, so that time and energy of the user for searching for a device control operation entry on different electronic devices are reduced, and user experience of using a wearable device is improved.

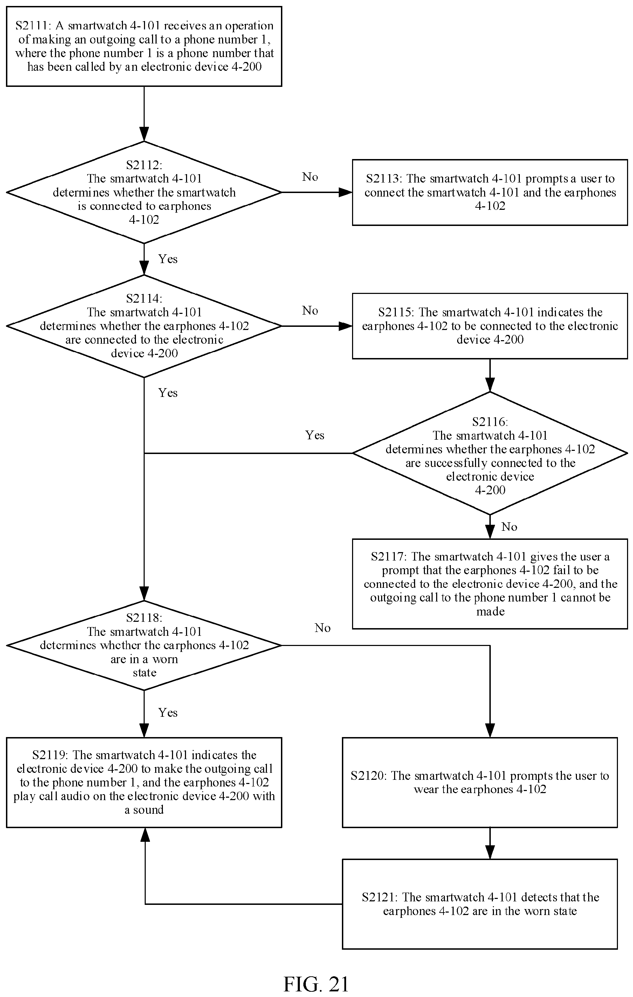

**FIG. 21** **shows an example of a flowchart of a call control method.**

As shown in FIG. 21, the call control method may include step S2111 to step S2121. The method may be a method for controlling the electronic device 4-200 to make an outgoing call based on the communication system 40 shown in FIG. 4.

S2111: The smartwatch 4-101 receives an operation of making an outgoing call to a phone number 1, where the phone number 1 is a phone number that has been called by the electronic device 4-200.

For the operation of making the outgoing call to the phone number 1, refer to the operation that is performed on the call record 4-1421 and that is shown in FIG. 14C. The phone number 1 may be a phone number corresponding to a call record in call records stored in the smartwatch 4-101. The call record may be a call record on the electronic device 4-200. In other words, the electronic device 4-200 is previously used to talk with a user to which the phone number 1 belongs.

Optionally, the phone number 1 may be a phone number of a contact in a contact list stored in the smartwatch 4-101. The contact list may be obtained by the smartwatch 4-101 from the electronic device 4-200. Alternatively, the phone number 1 may be a phone number entered by a user and received by the smartwatch 4-101. The operation of making the outgoing call to the phone number 1 is not limited in embodiments of this application.

S2112: The smartwatch 4-101 determines whether the smartwatch is connected to the earphones 4-102.

When an operation of making an outgoing call to a specified phone number (for example, the phone number 1) is received, the smartwatch 4-101 may determine whether the smartwatch 4-101 is connected to the earphones 4-102.

When it is determined that the smartwatch 4-101 is not connected to the earphones 4-102, the smartwatch 4-101 may perform the following step S2113.

When it is determined that the smartwatch 4-101 is connected to the earphones 4-102, the smartwatch 4-101 may perform the following step S2114.

It should be noted that, that the smartwatch 4-101 is not connected to the earphones 4-102 may indicate that the smartwatch 4-101 is not connected to two earphones in the earphones 4-102. That the smartwatch 4-101 is connected to the earphones 4-102 may indicate that the smartwatch 4-101 is connected to one earphone or two earphones in the earphones 4-102.

S2113: The smartwatch 4-101 prompts the user to connect the smartwatch 4-101 and the earphones 4-102.

For a method in which the smartwatch 4-101 prompts the user to connect the smartwatch 4-101 and the earphones 4-102, refer to the foregoing descriptions of FIG. 15C.

S2114: The smartwatch 4-101 determines whether the earphones 4-102 are connected to the electronic device 4-200.

The smartwatch 4-101 may recognize an association relationship between the phone number 1 and the electronic device 4-200. The association relationship between the phone number 1 and the electronic device 4-200 may be represented as follows: The phone number 1 is a phone number corresponding to a call record on the electronic device 4-200, or the phone number 1 is a phone number of a contact in the electronic device 4-200.

When the phone number 1 is associated with the electronic device 4-200, the smartwatch 4-101 may determine whether the earphones 4-102 are connected to the electronic device 4-200.

When it is determined that the earphones 4-102 are not connected to the electronic device 4-200, the smartwatch 4-101 may perform the following step S2115.

When it is determined that the earphones 4-102 are connected to the electronic device 4-200, the smartwatch 4-101 may perform the following step S2118.

S2115: The smartwatch 4-101 indicates the earphones 4-102 to be connected to the electronic device 4-200.

When the earphones 4-102 are not connected to the electronic device 4-200, the smartwatch 4-101 may indicate the earphones 4-102 to be connected to the electronic device 4-200. For a method in which the smartwatch 4-101 indicates the earphones 4-102 to be connected to the electronic device 4-200, refer to the foregoing descriptions of FIG. 8C.

S2116: The smartwatch 4-101 determines whether the earphones 4-102 are successfully connected to the electronic device 4-200.

When it is determined that the earphones 4-102 fail to be connected to the electronic device 4-200, the smartwatch 4-101 may perform the following step S2117.

When it is determined that the earphones 4-102 are successfully connected to the electronic device 4-200, the smartwatch 4-101 may perform the following step S2118.

S2117: The smartwatch 4-101 gives the user a prompt that the earphones 4-102 fail to be connected to the electronic device 4-200, and the outgoing call to the phone number 1 cannot be made.

S2118: The smartwatch 4-101 determines whether the earphones 4-102 are in a worn state.

When it is determined that the earphones 4-102 are in the worn state, the smartwatch 4-101 may perform the following step S2119.

When it is determined that the earphones 4-102 are in a not-worn state, the smartwatch 4-101 may perform the following step S2120.

That the earphones 4-102 are in the worn state may indicate that one earphone or the two earphones in the earphones 4-102 are in the worn state. That the earphones 4-102 are in the not-worn state may indicate that the two earphones in the earphones 4-102 are both in the not-worn state.

S2119: The smartwatch 4-101 indicates the electronic device 4-200 to make the outgoing call to the phone number 1, and the earphones 4-102 play call audio on the electronic device 4-200 with a sound.

The smartwatch 4-101 may send an outgoing call-making instruction to the electronic device 4-200. The outgoing call-making instruction may include the phone number 1. The electronic device 4-200 may make the outgoing call to the phone number 1 according to the outgoing call-making instruction. Because the earphones 4-102 are connected to the electronic device 4-200, the earphones 4-102 may play the call audio on the electronic device 4-200 with a sound.

S2120: The smartwatch 4-101 prompts the user to wear the earphones 4-102.

For a method in which the smartwatch 4-101 prompts the user to wear the earphones 4-102, refer to the foregoing descriptions of FIG. 14D.

S2121: The smartwatch 4-101 detects that the earphones 4-102 are in the worn state.

The user may wear the earphones 4-102 according to the prompt of the smartwatch 4-101 in step S2120. When it is detected that the earphones 4-102 change from the not-worn state to the worn state, the smartwatch 4-101 may perform step S2119.

It can be learned from the method shown in FIG. 21 that the smartwatch 4-101 may control the electronic device 4-200 to make an outgoing call. In this way, the user may not need to perform an operation on the electronic device 4-200, but perform an operation only on the smartwatch 4-101, to trigger the electronic device 4-200 to make a call to a specified contact and answer the call through the earphones 4-102. According to the foregoing method, call experience of the user can be improved.

In addition to controlling the electronic device 4-200 to make an outgoing call, the smartwatch 4-101 may control more electronic devices to make an outgoing call.

For example, in the communication system shown in FIG. 5B, the earphones 4-102 are connected to the smartwatch 4-101 and the electronic device 4-300. The smartwatch 4-101 may control, through the earphones 4-102, the electronic device 4-300 to make an outgoing call. For a method for controlling the electronic device 4-300 to make an outgoing call, refer to the descriptions shown in FIG. 16E and FIG. 16F.

For another example, the smartwatch 4-101 may support a plurality of connections. In addition to being connected to the electronic device 4-200, the smartwatch 4-101 may be connected to an electronic device like the electronic device 4-300. For a method in which the smartwatch 4-101 controls the electronic device 4-300 to make the outgoing call, refer to the method shown in FIG. 21 in which the smartwatch 4-101 controls the electronic device 4-200 to make the outgoing call.

An execution sequence of step S2114 and step S2118 in FIG. 21 is not limited in embodiments of this application. In a possible implementation, the smartwatch 4-101 may first perform step S2118 and then perform step S2114. When the smartwatch 4-101 is connected to the earphones 4-102, the smartwatch 4-101 may determine whether the earphones 4-102 are in the worn state. When it is determined that the earphones 4-102 are in the worn state, the smartwatch 4-101 may determine whether the earphones 4-102 are connected to the electronic device 4-200. When it is determined that the earphones 4-102 are connected to the electronic device 4-200, the smartwatch 4-101 may perform step S2119. When it is determined that the earphones 4-102 are in the not-worn state, the smartwatch 4-101 may prompt the user to wear the earphones 4-102 (namely, step S2120). When the earphones 4-102 are in the worn state and the earphones 4-102 are connected to the electronic device 4-200, the smartwatch 4-101 may indicate the electronic device 4-200 to make the outgoing call (namely, step S2119). Optionally, the smartwatch 4-101 may simultaneously perform step S2114 and step S2118.

In a possible implementation, the smartwatch 4-101 may not perform one or more of step S2112, step S2114, and step S2118 in FIG. 21. That is, step S2112, step S2114, and step S2118 are all optional.

For example, the smartwatch 4-101 may not perform step S2112, step S2114, and step S2118 in FIG. 21. Specifically, when receiving the operation of making the outgoing call to the phone number 1, the smartwatch 4-101 may recognize the association relationship between the phone number 1 and the electronic device 4-200. The smartwatch 4-101 may directly indicate the electronic device 4-200 to make the outgoing call to the phone number 1. If the electronic device 4-200 is connected to the earphones 4-102, the earphones 4-102 may play the call audio on the electronic device 4-200 with a sound. If the electronic device 4-200 is not connected to the earphones 4-102, the electronic device 4-200 may play the call audio on the electronic device 4-200 with a sound through an audio playing apparatus on the electronic device 4-200.

For another example, the smartwatch 4-101 may not perform step S2118 in FIG. 21. When it is determined that the earphones 4-102 are connected to the electronic device 4-200, the smartwatch 4-101 may indicate the electronic device 4-200 to make the outgoing call to the phone number 1. The earphones 4-102 may play the call audio on the electronic device 4-200 with a sound. Optionally, when receiving the outgoing call-making instruction of the smartwatch 4-101, the electronic device 4-200 may determine whether the earphones 4-102 are in the worn state. When the electronic device 4-200 determines that the earphones 4-102 are in the worn state, the electronic device 4-200 may play the call audio with a sound through the earphones 4-102. When the electronic device 4-200 determines that the earphones 4-102 are in the not-worn state, the electronic device 4-200 may independently play the call audio with a sound.

For another example, the smartwatch 4-101 may not perform step S2114 in FIG. 21. When the earphones 4-102 are connected to the smartwatch 4-101, the smartwatch 4-101 may directly perform step S2118. After the smartwatch 4-101 indicates the electronic device 4-200 to make the outgoing call to the phone number 1, the electronic device 4-200 may play, when being connected to the earphones 4-102, the call audio with a sound through the earphones 4-102.

In some embodiments, the smartwatch 4-101 may determine distances between surrounding electronic devices and the smartwatch 4-101, or determine distances between surrounding electronic devices and the earphones 4-102. After receiving the outgoing call-making operation, the smartwatch 4-101 may indicate an electronic device that is closest to the smartwatch 4-101 and that has an outgoing call-making function to make an outgoing call, or indicate an electronic device that is closest to the earphones 4-102 and that has an outgoing call-making function to make an outgoing call.

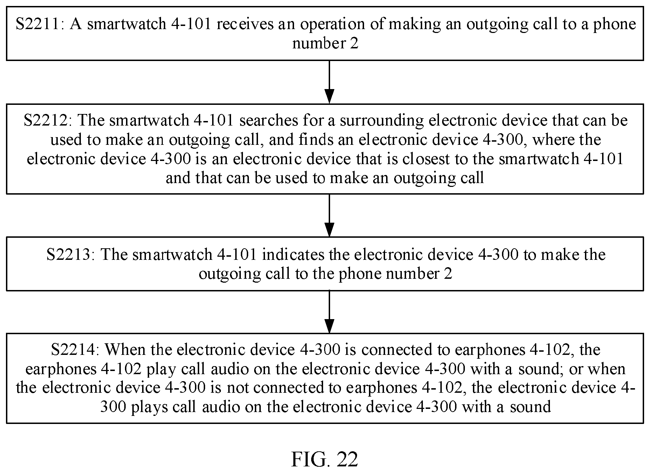

**FIG. 22** **shows an example of a flowchart of another call control method.**

As shown in FIG. 22, the call control method may include step S2211 to step S2214.

S2211: The smartwatch 4-101 receives an operation of making an outgoing call to a phone number 2.

The phone number 2 may be a phone number corresponding to a call record in call records stored in the smartwatch 4-101. Alternatively, the phone number 2 may be a phone number of a contact in a contact list stored in the smartwatch 4-101. Alternatively, the phone number 2 may be a phone number entered by a user and received by the smartwatch 4-101.

S2212: The smartwatch 4-101 searches for a surrounding electronic device that can be used to make an outgoing call, and finds the electronic device 4-300, where the electronic device 4-300 is an electronic device that is closest to the smartwatch 4-101 and that can be used to make an outgoing call.

In a possible implementation, the smartwatch 4-101 may search, through Bluetooth communication, for surrounding electronic devices that can make an outgoing call and determine distances between these electronic devices that can make an outgoing call and the smartwatch 4-101. For example, the smartwatch 4-101 may calculate the distances between the electronic devices and the smartwatch 4-101 based on strength of received Bluetooth signals of the surrounding electronic devices. An implementation method in which the smartwatch 4-101 searches for the surrounding electronic devices that can make an outgoing call and determines the distances between these electronic devices that can make an outgoing call and the smartwatch 4-101 is not limited in embodiments of this application.

Here, an example in which the electronic device 4-300 is an electronic device that is closest to the smartwatch 4-101 and that can make an outgoing call when the smartwatch 4-101 receives the operation of making the outgoing call to the phone number 2 is used for description.

S2213: The smartwatch 4-101 indicates the electronic device 4-300 to make the outgoing call to the phone number 2.

A communication connection may be established between the smartwatch 4-101 and the electronic device 4-300. The smartwatch 4-101 may send an outgoing call-making instruction to the electronic device 4-300. The outgoing call-making instruction may include the phone number 2. The electronic device 4-300 may make the outgoing call to the phone number 2 according to the outgoing call-making instruction. Alternatively, a communication connection is established between the earphones 4-102 and the electronic device 4-300. In addition, a communication connection is established between the earphones 4-102 and the smartwatch 4-101. The smartwatch 4-101 may send an outgoing call-making instruction to the electronic device 4-300 through the earphones 4-102.

In a possible implementation, the smartwatch 4-101 may further choose to indicate an electronic device that is closest to the earphones 4-102 and that can make an outgoing call to make the outgoing call. Specifically, after receiving the operation of making the outgoing call to the phone number 2, the smartwatch 4-101 may send a device search instruction to the earphones 4-102. According to the device search instruction, the earphones 4-102 may search for the electronic device that is closest to the earphones 4-102 and that can make an outgoing call. For example, the earphones 4-102 find that the electronic device 4-300 is the electronic device that is closest to the earphones 4-102 and that can make an outgoing call. The earphones 4-102 may send device information of the electronic device 4-300 to the smartwatch 4-101. The smartwatch 4-101 may directly indicate the electronic device 4-300 to make the outgoing call to the phone number 2. Alternatively, the smartwatch 4-101 may indicate, through the earphones 4-102, the electronic device 4-300 to make the outgoing call to the phone number 2. For a method in which the earphones 4-102 search for the electronic device that is closest to the earphones 4-102 and that can make an outgoing call, refer to the method in which the smartwatch 4-101 searches for the electronic device that is closest to the smartwatch 4-101 and that can make an outgoing call in step S2212.

S2214: When the electronic device 4-300 is connected to the earphones 4-102, the earphones 4-102 play call audio on the electronic device 4-300 with a sound, or when the electronic device 4-300 is not connected to the earphones 4-102, the electronic device 4-300 plays call audio on the electronic device 4-300 with a sound.

It can be learned from the method shown in FIG. 22 that, after receiving the outgoing call-making operation, the smartwatch 4-101 may search for an electronic device that is closest to the smartwatch 4-101 or the earphones 4-102 and that can make an outgoing call, and indicate the electronic device to make the outgoing call. It may be understood that the user wears the smartwatch 4-101 and/or the earphones 4-102. An electronic device closest to the smartwatch 4-101 or the earphones 4-102 is usually also an electronic device closest to the user. According to the foregoing method, the user can conveniently use the electronic device closest to the user to make an outgoing call. In this way, the user can better control the outgoing call. This can reduce a case in which the user cannot take an electronic device in a timely manner to answer a call and control the call because the electronic device is too far away from the user.

In some embodiments, the earphones 4-102 may search for surrounding electronic devices, and calculate distances between the surrounding electronic devices and the earphones 4-102. The earphones 4-102 may play call audio on an electronic device closest to the earphones 4-102 with a sound. The electronic devices that can be found by the earphones 4-102 may include an electronic device currently connected to the earphones 4-102 and an electronic device to which the earphones 4-102 are not currently connected but has been connected.

For example, when one or two earphones in the earphones 4-102 are in an out state, surrounding electronic devices may be searched for through Bluetooth communication and distances between these electronic devices and the earphones 4-102 may be determined. The earphones 4-102 may calculate the distances between the electronic devices and the earphones 4-102 based on strength of received Bluetooth signals of the surrounding electronic devices. A method in which the earphones 4-102 calculate the distances between the surrounding electronic devices and the earphones 4-102 is not limited in embodiments of this application.

When the earphones 4-102 find that the electronic device 4-200 is an electronic device that is closest to the earphones 4-102 and that is performing a call service, the earphones 4-102 may be connected to the electronic device 4-200, and play call audio on the electronic device 4-200 with a sound.

The user may move in a process of wearing the earphones 4-102. Herein, a scenario in which the user wears the earphones 4-102 and moves from a location close to the electronic device 4-200 to a location close to the electronic device 4-300 is used as an example for description. The electronic device 4-300 is also performing a call service.

As a location of the earphones 4-102 changes, the earphones 4-102 may detect that an electronic device that is closest to the earphones 4-102 and that is performing a call service changes from the electronic device 4-200 to the electronic device 4-300. Then, the earphones 4-102 may be connected to the electronic device 4-300, and play the call audio on the electronic device 4-300 with a sound. When the earphones 4-102 play the call audio on the electronic device 4-300 with a sound, if the call on the electronic device 4-200 is not hung up, the electronic device 4-200 may play the call audio on the electronic device 4-200 with a sound through an audio playing apparatus on the electronic device 4-200.

In a possible implementation, when the earphones 4-102 are in a worn state, the earphones 4-102 may calculate the distances between the surrounding electronic devices and the earphones 4-102 and play call audio on an electronic device closest to the earphones 4-102 with a sound.

In some embodiments, a voice interaction application may be installed in the smartwatch 4-101. For example, the voice interaction application may be a voice assistant. The smartwatch 4-101 may wake up the voice assistant in response to a detected wake-up word. After being woken up, the voice assistant may be configured to execute a voice instruction of the user. Content of the wake-up word is not limited in embodiments of this application.

For example, when detecting a voice instruction for making an outgoing call to a phone number 3, the smartwatch 4-101 may recognize an electronic device associated with the phone number 3, and indicate the electronic device associated with the phone number 3 to make the outgoing call to the phone number 3. Alternatively, the smartwatch 4-101 may search for surrounding electronic devices that can make an outgoing call and determine distances between these electronic devices and the smartwatch 4-101. The smartwatch 4-101 may indicate an electronic device that is closest to the smartwatch 4-101 and that can make an outgoing call to make the outgoing call to the phone number 3.

For another example, the electronic device 4-200 receives an incoming call. The smartwatch 4-101 receives incoming call information of the electronic device 4-200. In response to a voice instruction for answering the incoming call, the smartwatch 4-101 may control the electronic device 4-200 to answer the incoming call.

Optionally, a voice assistant may be installed in the earphones 4-102. The earphones 4-102 may recognize a voice instruction of the user through the voice assistant, and execute the voice instruction of the user (for example, a voice instruction for making an outgoing call or a voice instruction for answering an incoming call). For a method in which the earphones 4-102 execute the voice instruction through the voice assistant, refer to the foregoing method in which the smartwatch 4-101 executes the voice instruction. Details are not described herein again.

In other words, the user may directly deliver a voice instruction to the smartwatch 4-101 or the earphones 4-102, to control, through the smartwatch 4-101 or the earphones 4-1012, an electronic device like the electronic device 4-200 or the electronic device 4-300 to make an outgoing call or answer a call. According to the foregoing method, a call control operation performed by the user can be simplified, and user experience of performing call control through a wearable device can be improved.

It should be noted that the voice instruction is not limited to a call control voice instruction (for example, a voice instruction for making an outgoing call or a voice instruction for answering an incoming call). The wearable device may further control an electronic device like the electronic device 4-200 or the electronic device 4-300 in response to a voice instruction like a voice instruction of the user for controlling a music service (for example, a voice instruction for playing music, a voice instruction for pausing playing of music, or a voice instruction for increasing/decreasing volume).

In some embodiments, a communication connection may be established between the smartwatch 4-101 and the electronic device 4-200. The smartwatch 4-101 may further communicate with the electronic device 4-300 through the earphones 4-102. The smartwatch 4-101 may obtain device information of an electronic device whose device account is the same as that of the electronic device 4-200 and/or the electronic device 4-300. In addition, the smartwatch 4-101 may control the electronic device whose device account is the same as that of the electronic device 4-200 and/or the electronic device 4-300. For example, the smartwatch 4-101 may control the electronic device to make an outgoing call, answer a call, play music, and the like. Here, an example in which the smartwatch 4-101 controls the electronic device whose device account is the same as that of the electronic device 4-200 and/or the electronic device 4-300 to make an outgoing call is used for description.

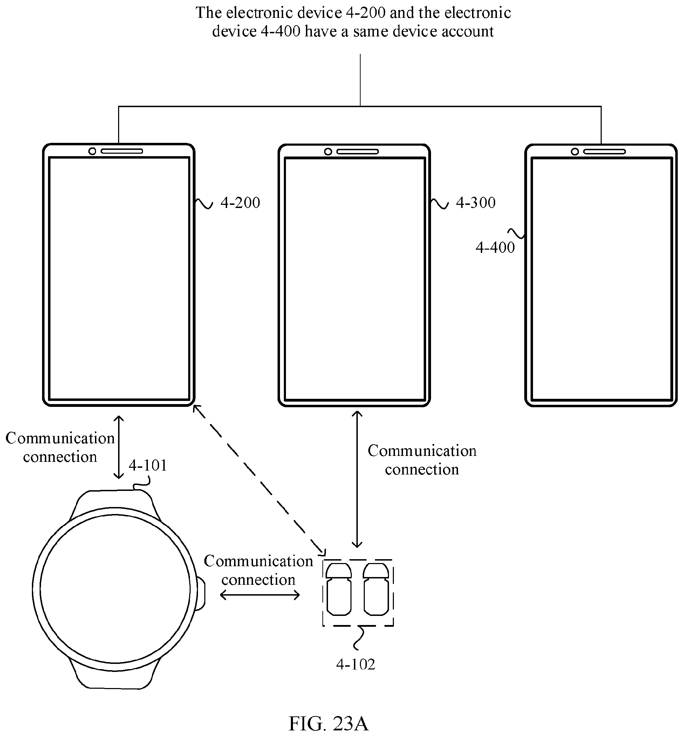

**FIG. 23A to FIG. 23F** **show an example of a scenario in which the smartwatch 4-101 controls a same-account device to make an outgoing call.**

The same-account device may include an electronic device whose device account is the same as a device account of an electronic device having been connected to the smartwatch 4-101 and/or the earphones 4-102. For example, the smartwatch 4-101 is connected to the electronic device 4-200. The earphones 4-102 are connected to the electronic device 4-300. In this case, the same-account device may include an electronic device whose device account is the same as that of the electronic device 4-200, and an electronic device whose device account is the same as that of the electronic device 4-300.

The device account may be a login account on an electronic device, for example, a Huawei account. A type of the device account is not limited in embodiments of this application.

As shown in FIG. 23A, the smartwatch 4-101 is paired with the electronic device 4-200, and a communication connection is established between the smartwatch 4-101 and the electronic device 4-200. A communication connection is established between the smartwatch 4-101 and the earphones 4-102. A communication connection has been established between the earphones 4-102 and the electronic device 4-200, but the earphones 4-102 and the electronic device 4-200 currently are not connected. A communication connection is currently established between the earphones 4-102 and the electronic device 4-300. An electronic device 4-400 has not been connected to the smartwatch 4-101, and has not been connected to the earphones 4-102. The electronic device 4-400 may be an electronic device having an outgoing call-making function, for example, a mobile phone, a tablet computer, or a notebook computer. A type of the electronic device 4-400 is not limited in embodiments of this application.

Herein, an example in which the electronic device 4-400 is the same-account device is used for description. The electronic device 4-400 and the electronic device 4-200 have a same account.

In a possible implementation, the electronic device 4-400 and the electronic device 4-200 may share pairing connection information based on the same device account. A device that is previously paired with and connected to the electronic device 4-200 includes the smartwatch 4-101 and the earphones 4-102. The electronic device 4-200 may share watch information of the smartwatch 4-101 and earphone information of the earphones 4-102 with the electronic device 4-400. For example, the watch information may include a media access control address (media access control address, MAC address) of the smartwatch 4-101. The earphone information may include a MAC address of the earphones 4-102. The electronic device 4-400 may establish a communication connection to the smartwatch 4-101 based on the watch information, and establish a communication connection to the earphones 4-102 based on the earphone information. Content of the watch information and the earphone information is not limited in embodiments of this application.

In addition, the electronic device 4-200 may further share device information of the electronic device 4-400 with the smartwatch 4-101 and the earphones 4-102. For example, the device information of the electronic device 4-400 may include a MAC address of the electronic device 4-400. The smartwatch 4-101 and the earphones 4-102 may establish communication connections to the electronic device 4-400 based on the device information of the electronic device 4-400. Content of the device information of the electronic device 4-400 is not limited in embodiments of this application.

It should be noted that, a method in which the electronic device 4-200 shares the watch information and the earphone information with the electronic device 4-400 may include: The electronic device 4-200 directly sends the watch information and the earphone information to the electronic device 4-400. The electronic device 4-200 stores the watch information and the earphone information in a cloud server, and the electronic device 4-400 may obtain the watch information and the earphone information from the cloud server. It may be understood that the cloud server may include cloud storage space corresponding to different device accounts. Because the electronic device 4-200 and the electronic device 4-400 have the same device account, the electronic device 4-200 and the electronic device 4-400 may access same cloud storage space in the cloud server. The method in which the electronic device 4-200 shares the watch information and the earphone information with the electronic device 4-400 is not limited in embodiments of this application.

A method in which the electronic device 4-200 shares the information about the electronic device 4-400 with the smartwatch 4-101 and the earphones 4-102 may include: The electronic device 4-200 directly sends the device information of the electronic device 4-400 to the smartwatch 4-101 and the earphones 4-102 through a wireless connection (for example, a Bluetooth communication connection). The electronic device 4-200 directly sends the device information of the electronic device 4-400 to the smartwatch 4-101 through a wireless connection (for example, a Bluetooth communication connection), and then the smartwatch 4-101 sends the device information of the electronic device 4-400 to the earphones 4-102. The electronic device 4-200 directly sends the device information of the electronic device 4-400 to the earphones 4-102 through a wireless connection (for example, a Bluetooth communication connection), and then the earphones 4-102 send the device information of the electronic device 4-400 to the smartwatch 4-101. The electronic device 4-200 shares the device information of the electronic device 4-400 with the smartwatch 4-101 and the earphones 4-102 through the cloud server (for example, the electronic device 4-200 stores the device information of the electronic device 4-400 in the cloud server, the smartwatch 4-101 may obtain the device information of the electronic device 4-400 from the cloud server, and the smartwatch 4-101 may send the device information of the electronic device 4-400 to the earphones 4-102). The method in which the electronic device 4-200 shares the device information of the electronic device 4-400 with the smartwatch 4-101 and the earphones 4-102 is not limited in embodiments of this application.

In a possible implementation, after the electronic device 4-400 is paired with the earphones 4-102 and a communication connection is established, the electronic device 4-400 and the smartwatch 4-101 may communicate with each other through the earphones 4-102. The electronic device 4-400 may send the device information of the electronic device 4-400 to the smartwatch 4-101 through the earphones 4-102. The smartwatch 4-101 may control a call service on the electronic device 4-400 through the earphones 4-102. For example, the electronic device 4-400 receives an incoming call. The earphones 4-102 may play the call audio on the electronic device 4-400 with a sound. The electronic device 4-400 may send incoming call information to the smartwatch 4-101 through the earphones 4-102. The smartwatch 4-101 may display an incoming call notification screen and a call screen, so that the user controls, through the smartwatch 4-101, the electronic device 4-400 to answer the incoming call and decline the call. In addition, the smartwatch 4-101 may further store call records on the electronic device 4-400. For a method in which the smartwatch 4-101 controls the call service on the electronic device 4-400 through the earphones 4-102, refer to the foregoing descriptions shown in FIG. 9A to FIG. 9C of controlling, by the smartwatch 4-101, the call service on the electronic device 4-300 through the earphones 4-102. Details are not described herein again.

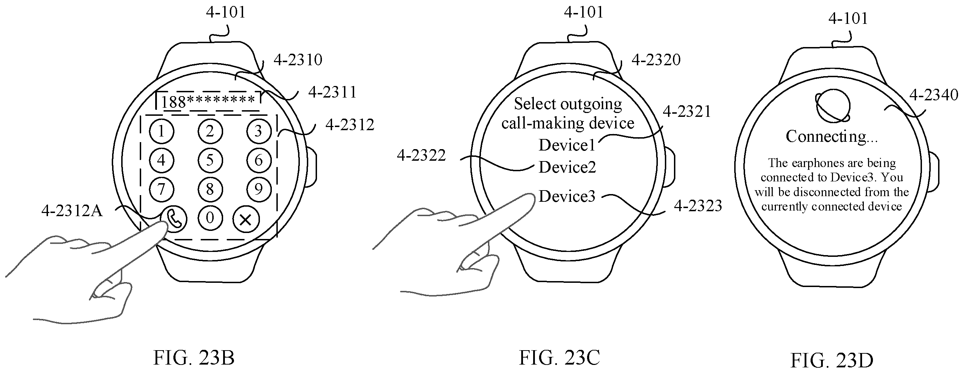

As shown in FIG. 23B, the smartwatch 4-101 may display a user interface 4-2310. The user interface 4-2310 may be a dialing interface, and may be used by the user to enter a phone number and make a call. The user interface 4-2310 may include a phone number display area 4-2311 and a dial button area 4-2312. The phone number display area 4-2311 may be used to display the phone number entered by the user. The dial button area 4-2312 may include a control for entering a phone number and a control for making a call. For example, the control for entering a phone number may include a number button. The control for making a call may be a dial control 4-2312A. After entering a to-be-dialed phone number, the user may make an outgoing call to the entered phone number through the dial control 4-2312A.

In response to an operation, for example, a touch operation, performed on the dial control 4-2312A shown in FIG. 23B, the smartwatch 4-101 may search for an electronic device having been connected to the smartwatch 4-101 and/or the earphones 4-102 and a same-account device, and display a user interface 4-2320 shown in FIG. 23C. The user interface 4-2320 may include device options of one or more electronic devices. The one or more electronic devices may include the electronic device having been connected to the smartwatch 4-101 and/or the earphones 4-102 and the same-account device. For example, the electronic device having been connected to the smartwatch 4-101 and/or the earphones 4-102 includes the electronic device 4-200 and the electronic device 4-300. The same-account device includes the electronic device 4-400. The user interface 4-2320 may include a device option 4-2321 corresponding to the electronic device 4-200, a device option 4-2322 corresponding to the electronic device 4-300, and a device option 4-2323 corresponding to the electronic device 4-400. Display content of a device option may include a device name of an electronic device corresponding to the device option. For example, a name of the electronic device 4-400 is "Device3". Display content of the device option 4-2323 may be "Device3". The name of the electronic device 4-400 is not limited in embodiments of this application.

The device option on the user interface 4-2320 may indicate an electronic device corresponding to the device option to make an outgoing call.

In response to an operation, for example, a touch operation, performed on the device option 4-2323, the smartwatch 4-101 may determine whether the earphones 4-102 are connected to the electronic device 4-400 corresponding to the device option 4-2323. It can be learned from FIG. 23A that the earphones 4-102 are currently connected to the electronic device 4-300, but are not connected to the electronic device 4-400. The smartwatch 4-101 may indicate the earphones 4-102 to establish a communication connection to the electronic device 4-400, and may display a user interface 4-2340 shown in FIG. 23D. The user interface 2340 may be used to give the user a prompt that the earphones 4-102 are establishing the communication connection to the electronic device 4-400. The smartwatch 4-101 may send, to the earphones 4-102, an instruction for establishing the communication connection to the electronic device 4-400. The earphones 4-102 may request, according to the communication connection establishment instruction, to establish the communication connection to the electronic device 4-400.

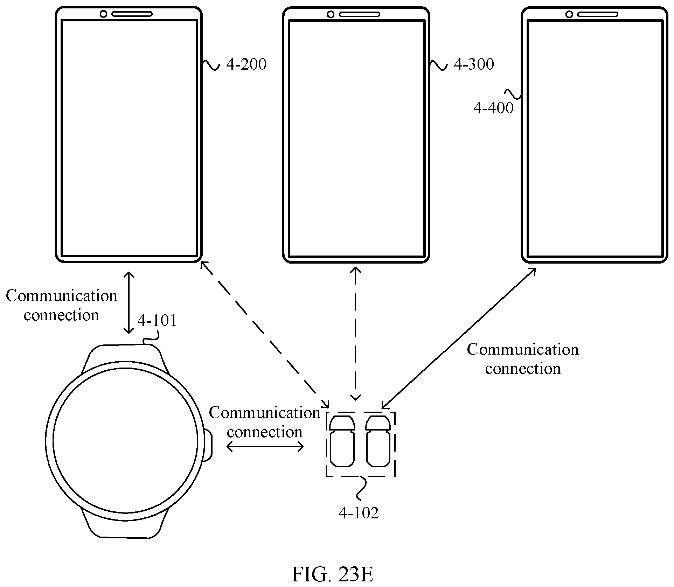

As shown in FIG. 23E, the communication connection is established between the earphones 4-102 and the electronic device 4-400. In addition, the earphones 4-102 may disconnect the communication connection to the electronic device 4-300. The smartwatch 4-101 and the electronic device 4-400 may communicate with each other through the earphones 4-102.

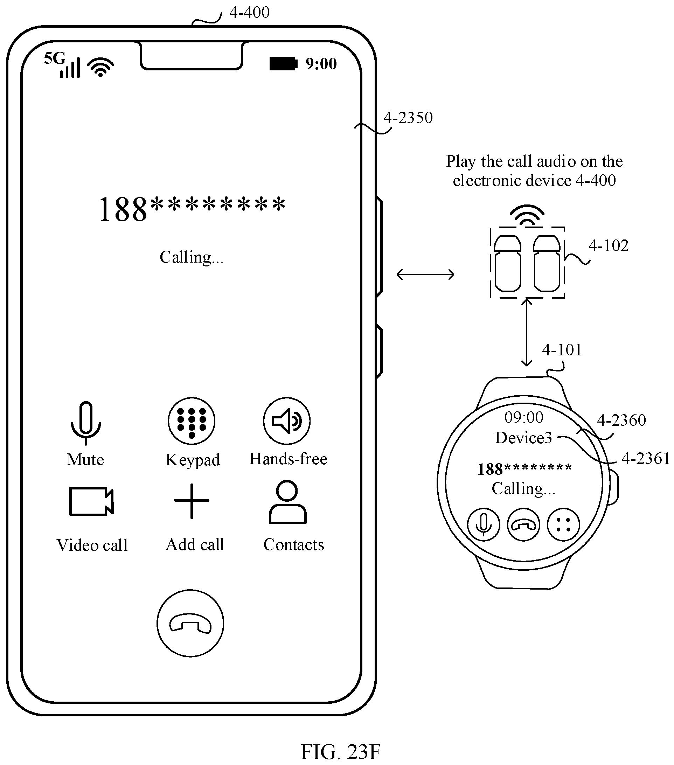

As shown in FIG. 23F, after the earphones 4-102 successfully establishes the communication connection to the electronic device 4-400, the smartwatch 4-101 may send an outgoing call-making instruction to the electronic device 4-400 through the earphones 4-102. The outgoing call-making instruction may include the phone number entered in the phone number display area 4-2311 shown in FIG. 23B. According to the outgoing call-making instruction, the electronic device 4-400 may make the outgoing call to the phone number entered in the phone number display area 4-2311. When making the outgoing call, the electronic device 4-400 may display a user interface 4-2350. The earphones 4-102 may play call audio on the electronic device 4-400 with a sound. The electronic device 4-400 may send, to the smartwatch 4-101 through the earphones 4-102, a message indicating that the outgoing call is being made. Then, the smartwatch 4-101 may display a user interface 4-2360. The user interface 4-2360 may include an outgoing call-making device identifier 4-2361. The outgoing call-making device identifier 4-2361 may indicate an electronic device that makes a call corresponding to the user interface 4-2360. The outgoing call-making device identifier 4-2361 may include a device name. For example, the outgoing call-making device identifier 4-2361 may include "Device3" shown in FIG. 23F. "Device3" in the outgoing call-making device identifier 4-2361 may indicate that the call corresponding to the user interface 4-2361 is made by an electronic device named "Device3" (namely, the electronic device 4-400).

In a possible implementation, after the call on the electronic device 4-400 ends, the earphones 4-102 may maintain the connection to the electronic device 4-400. Alternatively, after the call on the electronic device 4-400 ends, the earphones 4-102 may be disconnected from the electronic device 4-400, and may be reconnected to an electronic device (for example, the electronic device 4-300) that is disconnected before the electronic device 4-400 is connected.

It can be learned from the scenario shown in FIG. 23A to FIG. 23F that, based on sharing of the pairing connection information between the electronic device having been connected to the smartwatch 4-101 and/or the earphones 4-102 and the same-account device, the smartwatch 4-101 may control the same-account device to make an outgoing call in addition to controlling the electronic device having been connected to the smartwatch 4-101 and/or the earphones 4-102 to make an outgoing call. According to the foregoing embodiments, the user can conveniently control call services of a plurality of electronic devices through the smartwatch 4-101, to improve user experience of making a call.

In a possible implementation, in the communication system shown in FIG. 23A, the earphones 4-102 may be connected to both the electronic device 4-200 and the electronic device 4-300. When the user chooses to use the electronic device 4-400 to make an outgoing call on the smartwatch 4-101, the smartwatch 4-101 may indicate the earphones 4-102 to be connected to the electronic device 4-400. When the earphones 4-102 are connected to the electronic device 4-400, the earphones 4-102 may be disconnected from one of the electronic device 4-200 and the electronic device 4-300. For example, services performed by the electronic device 4-200 and the electronic device 4-300 through the earphones 4-102 are different, and the services have priorities. The earphones 4-102 may be disconnected from an electronic device corresponding to a service with a lower priority. For another example, the electronic device 4-200 and the electronic device 4-300 perform services through the earphones 4-102 at different time. The earphones 4-102 may be disconnected from an electronic device that uses the earphones 4-102 to perform a service earlier. A rule used when the earphones 4-102 are disconnected from one of the electronic device 4-200 and the electronic device 4-300 is not limited in embodiments of this application.

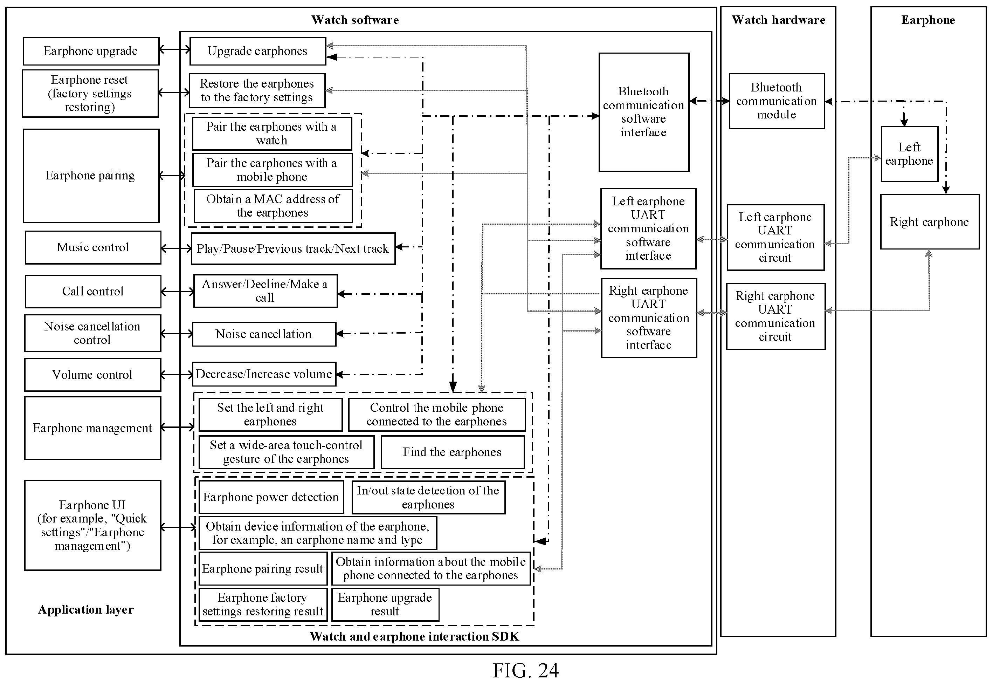

**FIG. 24** **shows an example of the software architecture of the watch and the earphones.**

In the software architecture, various control functions of the watch for the earphones may be implemented based on a watch and earphone interaction SDK. The watch and earphone interaction SDK may include a group of application interfaces (application interfaces, APIs) provided by an earphone developer, and a Bluetooth communication manner and an intra-compartment universal asynchronous receiver/transmitter (universal asynchronous receiver/transmitter, UART) communication manner on which these APIs are based. The watch may perform a plurality of types of control on the earphones by invoking the group of APIs, for example, upgrading the earphones, canceling noise, and increasing/decreasing volume, without requiring a watch developer to implement specific functions encapsulated or represented by these APIs. In this way, development burden on the watch side can be reduced, and development work of the watch and the earphones is decoupled. In addition, an update of the watch and earphone interaction SDK does not require that an earphone control function be adaptively changed on the watch side, so that the earphones are more flexibly updated.

The Bluetooth communication manner may be implemented based on a Bluetooth communication module in the watch and Bluetooth communication modules in left and right earphones. The intra-compartment UART communication manner may be implemented based on left-earphone and right-earphone UART communication circuits in the watch and UART communication circuits of the left and right earphones. In actual application, the Bluetooth communication manner may be replaced with another wireless communication manner, and the UART communication manner may be replaced with another bus communication manner.

As shown in FIG. 24, a software architecture of the watch may mainly include an application layer and the watch and earphone interaction SDK.

The application layer may include various earphone control functions (or applications or services). With reference to the foregoing methods, the various earphone control functions may include, for example, earphone upgrade, earphone reset (factory settings restoring), earphone pairing, music control, call control, noise cancellation control, volume control, earphone management, and an earphone UI (for example, "Quick settings" and "Earphone management"). This is not limited thereto. In actual application, the watch software application layer may include more or fewer earphone control functions than the foregoing functions.

The watch and earphone interaction SDK may include various earphone control APIs that are directly invoked by the application layer, and a Bluetooth communication software interface, a left-earphone UART communication software interface, and a right-earphone UART communication software interface that are based on the APIs. The Bluetooth communication software interface may be used by the watch to communicate with the earphones in the Bluetooth communication manner, for example, transmit an earphone upgrade package to the earphones and receive earphone power information from the earphones. The left-earphone and right-earphone UART communication software interfaces may be used by the watch to communicate with the earphones in the UART communication manner, for example, send a reset command to the earphones and obtain a MAC address of the earphones sent by the earphones.

The following describes an implementation of each earphone control function at the application layer based on the watch and earphone interaction SDK.

Earphone upgrade: This function may invoke an API for upgrading the earphone in the watch and earphone interaction SDK. The API for upgrading the earphone may specifically include an API for obtaining an earphone upgrade package and an API for updating an earphone capability. An example of the former API is "getPackage()", and the API may further invoke the Bluetooth communication software interface to send the earphone upgrade package to the earphones in the Bluetooth communication manner. An example of the latter API may be "update (package)", and the API may further invoke the Bluetooth communication software interface to control, in the Bluetooth communication manner, the earphones to perform upgrade based on the upgrade package (package). Not limited to the Bluetooth communication manner, the upgrade package and an upgrade instruction may alternatively be sent to an in-position earphone in the UART communication manner.

Earphone reset (factory settings restoring): This function may invoke an API for restoring the earphones to factory settings in the watch and earphone interaction SDK. The API for restoring the earphones to factory settings may specifically include an API for deleting pairing information, for example, "deletePairInfo()". Herein, deletePairInfo() may further invoke the left-earphone and right-earphone UART communication software interfaces to send, in the UART communication manner, a control instruction for deleting the pairing information to the in-position earphone. Herein, deleting the pairing information may be deleting pairing information of the watch, the mobile phone, or the like from the earphone. The API for restoring the earphones to factory settings may further include another specific API, to implement another procedure further related to restoring the earphones to the factory settings.

Earphone pairing: This function may invoke an API for pairing the earphones with the watch (for example, "budsPairWatch()"), an API for pairing the earphones with the mobile phone (for example, "budsPairPhone()"), and an API for obtaining the MAC address of the earphones (for example, "getMac()") that are in the watch and earphone interaction SDK. Herein, getMac() may further invoke the left-earphone and right-earphone UART communication software interfaces to obtain the MAC address of the earphones from the earphones in the UART communication manner. Herein, budsPairWatch() may further invoke the left-earphone and right-earphone UART communication software interfaces to control, in the UART communication manner, the earphones to perform page scan (page scan), to scan paging of the watch and implement pairing between the watch and the earphones. Herein, budsPairPhone() may further invoke the Bluetooth communication software interface to control, in the Bluetooth communication manner, the earphones to perform page scan, to scan paging of the mobile phone and implement pairing between the earphones and the mobile phone.

Music control: This function may invoke a play API (for example, "play()"), a pause API (for example, "pause()"), a previous track API (for example, "previous()"), and a next track API (for example, "next()") that are in the watch and earphone interaction SDK. Herein, play() may further invoke the Bluetooth communication software interface to send a music play instruction to the earphones in the Bluetooth communication manner, to control the earphones to start/continue to render currently buffered music. Herein, pause() may further invoke the Bluetooth communication software interface to send a pause instruction to the earphones in the Bluetooth communication manner, to control the earphones to pause rendering of currently buffered music. Herein, previous() may further invoke the Bluetooth communication software interface to send, to the earphones in the Bluetooth communication manner, an instruction for playing a previous track of music, to control the earphones to start to render the previous track of music. The earphones may simultaneously receive or have received the previous track of music from an audio source device (such as the mobile phone or the watch). Herein, next() may further invoke the Bluetooth communication software interface to send, to the earphones in the Bluetooth communication manner, an instruction for playing a next track of music, to control the earphones to start to render the next track of music. The earphones may simultaneously receive or have received the previous track of music from the audio source device.

In addition, in a "U-shaped connection", the earphones may further forward, to the mobile phone connected to the earphones, a play/pause/previous track/next track instruction generated on the earphones, to trigger the mobile phone to start/pause transmitting an audio stream to the earphones, or change an audio stream transmitted to the earphones. In this way, in the "U-shaped connection", play()/pause()/previous()/next() may be further used to notify, in the Bluetooth manner, the earphones to forward a corresponding control instruction.

Call control: In a "U-shaped connection", this function may invoke an answer API (for example, accept()), a decline API (for example, decline()), and a call API (for example, call (number)) that are in the watch and earphone interaction SDK. Herein, accept() may further invoke the Bluetooth communication software interface to notify, in the Bluetooth communication manner, the earphones to forward an answering instruction. Herein, decline() may further invoke the Bluetooth communication software interface to notify, in the Bluetooth communication manner, the earphones to forward a declining instruction. Herein, call (number) may further invoke the Bluetooth communication software interface to notify, in the Bluetooth communication manner, the earphones to forward a call instruction and a phone number (number).

Noise cancellation control: This function may invoke a noise cancellation API (for example, "noiseCancel() ") in the watch and earphone interaction SDK, and noiseCancel() may further invoke the Bluetooth communication software interface to send a noise cancellation instruction to the earphones in the Bluetooth communication manner.

Volume control: This function may invoke a volume increase API (for example, "volumeIncrease()") and a volume decrease API (for example, "volumeDecrease()") in the watch and earphone interaction SDK, and volumeIncrease() and volumeDecrease() may further separately invoke the Bluetooth communication software interface to send a volume increase instruction and a volume decrease instruction to the earphones in the Bluetooth communication manner.

Earphone management: This function may invoke an API for setting left and right earphones (for example, "setLR()"), an API for controlling the mobile phone connected to the earphones (for example, "connectPhone (targetPhone) "), an API for setting a wide-area touch-control gesture of the earphones (for example, "setGesture (targetGesture) "), and an API for finding the earphones (for example, "findBuds()") that are in the watch and earphone interaction SDK. Herein, setLR() may further invoke the left and right earphone UART communication software interfaces to send, to in-position earphones in the UART communication manner, a control instruction for setting the left earphone and the right earphone, to control the left earphone and the right earphone to be set as the left earphone/right earphone, when stereo music is subsequently played, audio data of a corresponding audio channel is correspondingly selected and rendered based on whether an earphone is a left earphone or a right earphone. Herein, connectPhone (targetPhone) may further invoke the Bluetooth communication software interface to send, to the earphones in the Bluetooth communication manner, an instruction for connecting to a target mobile phone targetPhone. The target mobile phone may be selected by the user. For example, in a "U-shaped connection", the user may choose, on the watch, to connect the earphones to the mobile phone connected to the watch. The target mobile phone may be selected by the watch based on an application scenario. For example, the watch may connect the earphones to a mobile phone closer to the watch, especially when the watch is in a worn state. Herein, setGesture (targetGesture) may further invoke the Bluetooth communication software interface to send, to the earphones in the Bluetooth communication manner, an instruction for setting the wide-area touch-control gesture as a target gesture targetGesture, and control the earphones to update the wide-area touch-control gesture. Herein, findBuds() may further invoke the Bluetooth communication software interface to send an instruction like a sound making/vibration instruction to the earphones in the Bluetooth communication manner, to control sound making/vibration of the earphones, so that the user can find the earphones.

Earphone UI (for example, "Quick settings" and "Earphone management"): This function may invoke a series of APIs related to earphone display in the watch and earphone interaction SDK, for example, including an earphone power detection API (for example, "getRemainCap()"), an API for detecting an in or out state of an earphone (for example, "getInOutStatus()"), an API for obtaining earphone device information (for example, "getDevInfo()"), an API for obtaining an earphone pairing result (for example, "getPairRslt()"), an API for obtaining information about a connected mobile phone (for example, "getConnectPhoneInfo()"), an API for obtaining an earphone factory settings restoring result (for example, "getRecoverRslt()"), and an API for obtaining an earphone upgrade result (for example, "getUpdateRslt()"). Herein, getRemainCap() may further invoke the Bluetooth communication software interface to send, to the earphones in the Bluetooth communication manner, an instruction for obtaining remaining power, to control the earphones to feed back remaining power information of the earphones to the watch, so that the watch refreshes and displays the remaining power of the earphones. Herein, getInOutStatus() may further invoke the left and right earphone UART communication software interfaces to send an in-position detection instruction to in-position earphones in the UART communication manner, to obtain in/out states of the earphones (that is, whether the earphones are in position), so that the watch refreshes and displays in-position statuses of the earphones. Herein, getDevInfo() may further invoke the Bluetooth communication software interface to send, to the earphones in the Bluetooth communication manner, an instruction for obtaining device information such as an earphone name and an earphone type, to control the earphones to feed back the device information of the earphones to the watch, so that the watch displays the device information of the earphones. Herein, getPairRslt() may further invoke a UART communication software interface to send a pairing result query instruction to an in-position earphone in the UART communication manner, to obtain a result of pairing between the in-position earphone in the watch and the watch or the mobile phone, so that the watch displays the pairing result. Herein, getConnectPhoneInfo() may further invoke the Bluetooth communication software interface to send, to the earphones in the Bluetooth communication manner, an instruction for querying a connected mobile phone, to control the earphones to feed back, to the watch, information about the mobile phone connected to the earphones, so that the watch refreshes and displays the information about the mobile phone connected to the earphones. Herein, getRecoverRslt() and getUpdateRslt() may further invoke a UART communication software interface to send factory settings restoring and upgrade query instructions to an in-position earphone in the UART communication manner, to obtain factory settings restoring and upgrade results of the in-position earphone in the watch, so that the watch displays the results.

The earphone UI may appear on a plurality of functions or user interfaces of the watch. For example, the in-position status and the power information of the earphones may be displayed on a home (home) screen of the watch, the information about the mobile phone connected to the earphones may be displayed on a "Quick settings" user interface, the factory settings restoring and upgrade results may be respectively displayed on user interfaces of factory settings restoring and upgrade functions, and the pairing result may be displayed on a function related to earphone pairing (for example, "Watch and earphone management"). In other words, a plurality of functions at the application layer of the watch invoke API interfaces related to the earphone UI to implement display of the earphones, so that the user can learn of a status or a working status of the earphones when using these functions.

Whether an API in the watch and earphone interaction SDK invokes a Bluetooth software communication interface or a UART software communication interface may be determined based on a service scenario. For example, in a scenario in which the earphones are paired with the watch, an invoked API may invoke the Bluetooth software communication interface to control the earphones in the Bluetooth communication manner. For another example, in a scenario in which the earphones are in position, an invoked API may invoke the UART software communication interface to control the earphones in the UART communication manner.

**The following uses the electronic device 4-200 as an example to describe a structure of an electronic device in this application.**

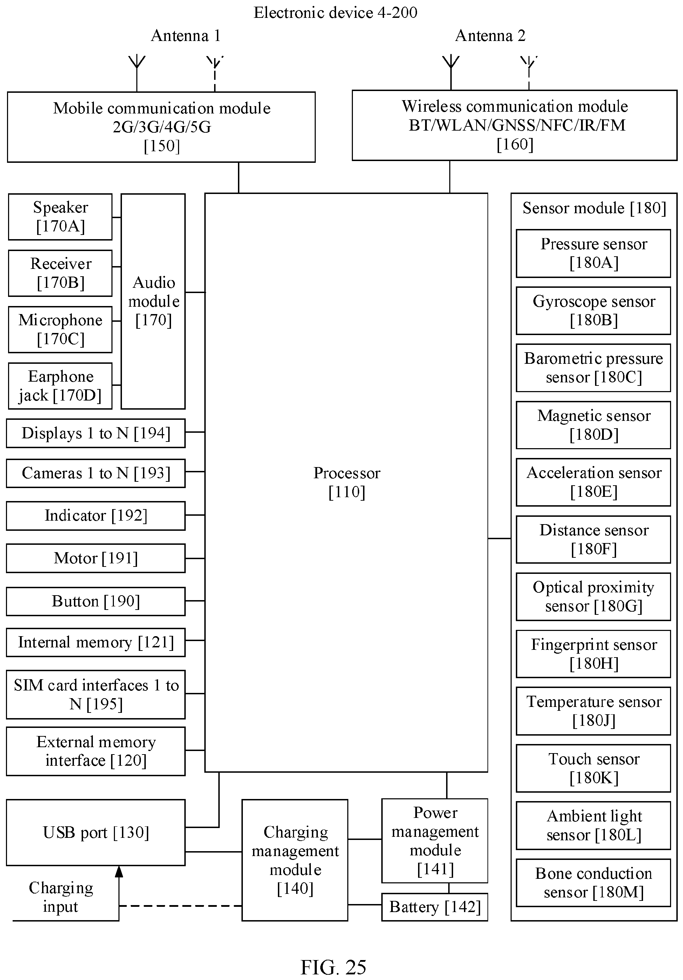

FIG. 25 is an example of a diagram of a structure of the electronic device 4-200 according to an embodiment of this application. In addition to the mobile phone, the electronic device 4-200 may alternatively be a tablet computer, a notebook computer, a smart large-screen device, or the like. The smart large-screen device may be, for example, a smart television.

As shown in FIG. 25. The electronic device 4-200 may include a processor 110, an external memory interface 120, an internal memory 121, a universal serial bus (universal serial bus, USB) port 130, a charging management module 140, a power management module 141, a battery 142, an antenna 1, an antenna 2, a mobile communication module 150, a wireless communication module 160, an audio module 170, a speaker 170A, a receiver 170B, a microphone 170C, an earphone jack 170D, a sensor module 180, a button 190, a motor 191, an indicator 192, a camera 193, a display 194, a subscriber identification module (subscriber identification module, SIM) card interface 195, and the like.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, a neural-network processing unit (neural-network processing unit, NPU), and/or the like. Different processing units may be independent devices, or may be integrated into one or more processors.

The controller may be a nerve center and a command center of the electronic device 4-200. The controller may generate an operation control signal based on an instruction operation code and a time sequence signal, to complete control of instruction reading and instruction execution.

A memory may be further disposed in the processor 110, and is configured to store instructions and data. In some embodiments, the memory in the processor 110 is a cache memory. The memory may store instructions or data just used or cyclically used by the processor 110. If the processor 110 needs to use the instructions or the data again, the processor may directly invoke the instructions or the data from the memory. This avoids repeated access, reduces waiting time of the processor 110, and improves system efficiency.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) port, and/or the like.

The I2C interface is a two-way synchronous serial bus, including a serial data line (serial data line, SDA) and a serial clock line (serial clock line, SCL). In some embodiments, the processor 110 may include a plurality of groups of I2C buses. The processor 110 may be separately coupled to the touch sensor 180K, a charger, a flash, the camera 193, and the like through different I2C bus interfaces. For example, the processor 110 may be coupled to the touch sensor 180K through the I2C interface, so that the processor 110 communicates with the touch sensor 180K through the I2C bus interface, to implement a touch function of the electronic device 4-200.

The I2S interface may be configured to perform audio communication. In some embodiments, the processor 110 may include a plurality of groups of I2S buses. The processor 110 may be coupled to the audio module 170 through the I2S bus, to implement communication between the processor 110 and the audio module 170. In some embodiments, the audio module 170 may transmit an audio signal to the wireless communication module 160 through the I2S interface, to implement a function of answering a call through Bluetooth earphones.

The PCM interface may also be used to perform audio communication, and sample, quantize, and code an analog signal. In some embodiments, the audio module 170 may be coupled to the wireless communication module 160 through a PCM bus interface. In some embodiments, the audio module 170 may also transmit an audio signal to the wireless communication module 160 through the PCM interface, to implement a function of answering a call through Bluetooth earphones. Both the I2S interface and the PCM interface may be used for audio communication.

The UART interface is a universal serial data bus, and is used to perform asynchronous communication. The bus may be a two-way communication bus. The bus converts to-be-transmitted data between serial communication and parallel communication. In some embodiments, the UART interface is usually used to connect the processor 110 to the wireless communication module 160. For example, the processor 110 communicates with a Bluetooth module in the wireless communication module 160 through the UART interface, to implement a Bluetooth function. In some embodiments, the audio module 170 may transmit an audio signal to the wireless communication module 160 through the UART interface, to implement a function of playing music through Bluetooth earphones.

The MIPI interface may be used to connect the processor 110 to a peripheral component such as the display 194 or the camera 193. The MIPI interface includes a camera serial interface (camera serial interface, CSI), a display serial interface (display serial interface, DSI), and the like. In some embodiments, the processor 110 communicates with the camera 193 through the CSI interface, to implement an image shooting function of the electronic device 4-200. The processor 110 communicates with the display 194 through the DSI interface, to implement a display function of the electronic device 4-200.

The GPIO interface may be configured by software. The GPIO interface may be configured as a control signal or a data signal. In some embodiments, the GPIO interface may be used to connect the processor 110 to the camera 193, the display 194, the wireless communication module 160, the audio module 170, the sensor module 180, or the like. The GPIO interface may alternatively be configured as an I2C interface, an I2S interface, a UART interface, an MIPI interface, or the like.

The USB port 130 is an interface that conforms to a USB standard specification, and may be specifically a mini USB port, a micro USB port, a USB type-C port, or the like. The USB port 130 may be used to connect to the charger to charge the electronic device 4-200, or may be used to transmit data between the electronic device 4-200 and a peripheral device, or may be configured to connect to earphones for playing audio through the earphones. The interface may be further configured to connect to another electronic device such as an AR device.

In embodiments of this application, only an interface connection relationship between the modules is used as an example, and does not constitute a limitation on an internal structure of the electronic device 4-200. In some other embodiments of this application, the electronic device 4-200 may alternatively use an interface connection manner different from that in the foregoing embodiment, or use a combination of a plurality of interface connection manners.

The charging management module 140 is configured to receive a charging input from a charger. The charger may be a wireless charger or a wired charger. In some embodiments of wired charging, the charging management module 140 may receive a charging input of a wired charger through the USB port 130. In some embodiments of wireless charging, the charging management module 140 may receive a wireless charging input through a wireless charging coil of the electronic device 4-200. The charging management module 140 supplies power to the electronic device through the power management module 141 while charging the battery 142.

The power management module 141 is configured to connect to the battery 142, the charging management module 140, and the processor 110. The power management module 141 receives an input from the battery 142 and/or the charging management module 140, and supplies power to the processor 110, the internal memory 121, an external memory, the display 194, the camera 193, the wireless communication module 160, and the like.

A wireless communication function of the electronic device 4-200 may be implemented through the antenna 1, the antenna 2, the mobile communication module 150, the wireless communication module 160, the modem processor, the baseband processor, and the like.

The antenna 1 and the antenna 2 are configured to transmit and receive an electromagnetic wave signal. Each antenna in the electronic device 4-200 may be configured to cover one or more communication frequency bands. Different antennas may be further multiplexed, to improve antenna utilization. For example, the antenna 1 may be multiplexed as a diversity antenna of a wireless local area network. In some other embodiments, the antenna may be used in combination with a tuning switch.

The mobile communication module 150 may provide a wireless communication solution that includes 2G/3G/4G/5G or the like and that is applied to the electronic device 4-200. In some embodiments, at least some functional modules in the mobile communication module 150 may be disposed in the processor 110. In some embodiments, at least some function modules of the mobile communication module 150 may be disposed in a same device as at least some modules of the processor 110.

The wireless communication module 160 may provide a wireless communication solution that is applied to the electronic device 4-200 and that includes a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, or the like. The wireless communication module 160 may be one or more components integrating at least one communication processor module. The wireless communication module 160 receives an electromagnetic wave by the antenna 2, performs frequency modulation and filtering processing on an electromagnetic wave signal, and sends a processed signal to the processor 110. The wireless communication module 160 may further receive a to-be-sent signal from the processor 110, perform frequency modulation and amplification on the signal, and convert the signal into an electromagnetic wave for radiation through the antenna 2.

In some embodiments, the antenna 1 and the mobile communication module 150 in the electronic device 4-200 are coupled, and the antenna 2 and the wireless communication module 160 in the electronic device 4-200 are coupled, so that the electronic device 4-200 can communicate with a network and another device by using a wireless communication technology. The wireless communication technology may include a global system for mobile communication (global system for mobile communication, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or a satellite based augmentation system (satellite based augmentation system, SBAS).

The electronic device 4-200 may implement a display function through the GPU, the display 194, the application processor, and the like. The GPU is a microprocessor for image processing, and is connected to the display 194 and the application processor. The GPU is configured to: perform mathematical and geometric computation, and render an image. The processor 110 may include one or more GPUs, which execute program instructions to generate or change display information.

The external memory interface 120 may be used to connect to an external storage card, for example, a micro SD card, to extend a storage capability of the electronic device 4-200. The external memory card communicates with the processor 110 through the external memory interface 120, to implement a data storage function. For example, files such as music and videos are stored in the external storage card.

The internal memory 121 may be configured to store computer-executable program code. The executable program code includes instructions. The processor 110 runs the instructions stored in the internal memory 121, to perform various function applications of the electronic device 4-200 and data processing.

The electronic device 4-200 may implement an audio function, for example, music playing and recording, through the audio module 170, the speaker 170A, the receiver 170B, the microphone 170C, the earphone jack 170D, the application processor, and the like.

The audio module 170 is configured to convert digital audio information into an analog audio signal for output, and is also configured to convert an analog audio input into a digital audio signal. The audio module 170 may be further configured to encode and decode an audio signal. In some embodiments, the audio module 170 may be disposed in the processor 110, or some function modules in the audio module 170 are disposed in the processor 110.

The speaker 170A, also referred to as a "loudspeaker", is configured to convert an electrical audio signal into a sound signal. The electronic device 4-200 may be used to listen to music or answer a call in a hands-free mode over the speaker 170A.

The receiver 170B, also referred to as an "earpiece", is configured to convert an electrical audio signal into a sound signal. When a call is answered or a voice message is received through the electronic device 4-200, the receiver 170B may be put close to a human ear to listen to a voice.

The microphone 170C, also referred to as a "mike" or a "mic", is configured to convert a sound signal into an electrical signal. When making a call or sending a voice message, a user may make a sound near the microphone 170C through the mouth of the user, to input a sound signal to the microphone 170C. At least one microphone 170C may be disposed in the electronic device 4-200. In some other embodiments, two microphones 170C may be disposed in the electronic device 4-200, to collect a sound signal and implement a noise cancellation function. In some other embodiments, three, four, or more microphones 170C may alternatively be disposed in the electronic device 4-200, to collect a sound signal, implement noise cancellation, and identify a sound source, so as to implement a directional recording function and the like.

The earphone jack 170D is configured to connect to wired earphones. The earphone jack 170D may be the USB port 130, or may be a 3.5 mm open mobile terminal platform (open mobile terminal platform, OMTP) standard interface, or a cellular telecommunications industry association of the USA (cellular telecommunications industry association of the USA, CTIA) standard interface.

The sensor module 180 may include a pressure sensor 180A, a gyroscope sensor 180B, a barometric pressure sensor 180C, a magnetic sensor 180D, an acceleration sensor 180E, an optical proximity sensor 180G, a fingerprint sensor 180H, a temperature sensor 180J, a touch sensor 180K, an ambient light sensor 180L, a bone conduction sensor 180M, and the like.

The button 190 includes a power button, a volume button, and the like. The button 190 may be a mechanical button, or may be a touch button. The electronic device 4-200 may receive a button input, and generate a button signal input related to a user setting and function control of the electronic device 4-200.

The motor 191 may generate a vibration prompt. The motor 191 may be configured to provide an incoming call vibration prompt and a touch vibration feedback. For example, touch operations performed on different applications (for example, image shooting and audio playing) may correspond to different vibration feedback effects. The motor 191 may also correspond to different vibration feedback effects for touch operations performed on different areas of the display 194. Different application scenarios (for example, a time reminder, information receiving, an alarm clock, and a game) may also correspond to different vibration feedback effects. The touch vibration feedback effect may be further user-defined.

The indicator 192 may be an indicator light, and may be configured to indicate a charging status and a power change, or may be configured to indicate a message, a missed call, a notification, and the like.

The SIM card interface 195 is used to connect to a SIM card. The SIM card may be inserted into the SIM card interface 195 or removed from the SIM card interface 195, to implement contact with or separation from the electronic device 4-200. The electronic device 4-200 may support one or N SIM card interfaces, where N is a positive integer greater than 1.

The structure shown in FIG. 25 does not constitute a specific limitation on the electronic device 4-200. In some other embodiments of this application, the electronic device 4-200 may include more or fewer components than those shown in the figure, or some components may be combined, or some components may be split, or different component arrangements may be used. The components shown in the figure may be implemented by hardware, software, or a combination of software and hardware.

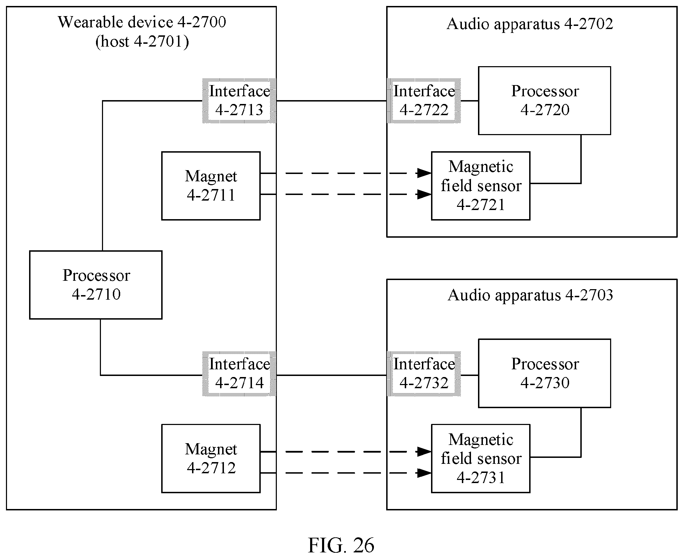

**FIG. 26** **is an example of a diagram of a structure of a wearable device accommodating an audio apparatus according to an embodiment of this application.**

A host 4-2701 and an audio apparatus 4-2702 are shown in FIG. 26. Electronic composition of a wearable device 4-2700 mainly focuses on the host 4-2701. The wearable device 4-2700 may be the wearable device 1 shown in FIG. 1 to FIG. 4. The host 4-2701 may be the host 2 shown in FIG. 1 to FIG. 4.

As shown in FIG. 26, the host 4-2701 may include a processor 4-2710, a magnet 4-2711, a magnet 4-2712, an interface 4-2713, and an interface 4-2714. To better describe the host 4-2701, FIG. 26 further shows an audio apparatus that matches the host 4-2701.

As shown in FIG. 26, an audio apparatus 4-2702 and an audio apparatus 4-2703 may be accommodated in the wearable device 4-2700. The audio apparatus 4-2702 may be the first earphone 31 shown in FIG. 4. The audio apparatus 4-2703 may be the second earphone 32 shown in FIG. 4. The audio apparatus 4-2702 may include a processor 4-2720, a magnetic field sensor 4-2721, and an interface 4-2722. The audio apparatus 4-2703 may include a processor 4-2730, a magnetic field sensor 4-2731, and an interface 4-2732.

When the audio apparatus 4-2702 is placed in an audio apparatus slot (for example, an earphone slot) of the host 4-2701, the interface 4-2713 in the host 4-2701 may be connected to the interface 4-2722 in the audio apparatus 4-2702. The interface 4-2713 may be an electrical connector in the host 4-2701, for example, a communication electrode or a charging electrode in an audio apparatus compartment. A structure of the interface 4-2713 may cooperate with or be in contact with the interface 4-2722 in the audio apparatus, to implement an electrical connection (or a physical connection) between the host 4-2701 and the audio apparatus 4-102. The interface 4-2722 may be an audio apparatus electrical connector, for example, a communication electrode or a charging electrode at an end of an ear handle of the audio apparatus. The interface 4-2722 may be a pogo pin, a spring pin, a spring plate, a conductive block, a conductive patch, a conductive sheet, a pin, a plug, a contact pad, a jack, a socket, or the like in the audio apparatus electrical connector. A method for setting the interface 4-2713 and the interface 4-2722 is not limited in embodiments of this application.

The processor 4-2710 and the processor 4-2720 of the audio apparatus may transmit information through the interface 4-2713 and the interface 4-2722, or charge a battery in the audio apparatus 4-2702.

The magnet 4-2711 in the host 4-2701 may be distributed on a watch cover of the host 4-2701 and/or at a location close to the audio apparatus slot. A location of the magnet 4-2711 may correspond to a location at which the audio apparatus 4-2702 is placed in the audio apparatus slot, so that when the audio apparatus 4-2702 is in an in state or an out state, a magnitude of a magnetic induction intensity (for example, a magnetic flux) detected by the magnetic field sensor 4-2721 of the audio apparatus shown in FIG. 26 is mainly generated by the magnet 4-2711. Similarly, the magnet 4-2712 in the host 4-2701 may alternatively be distributed on the watch cover of the host 4-2701 and/or at a location close to the audio apparatus slot. A location of the magnet 4-2712 may correspond to a location at which the audio apparatus 4-2703 is placed in the audio apparatus slot, so that when the audio apparatus 4-2703 is in an in state or an out state, a magnitude of a magnetic induction intensity (for example, a magnetic flux) detected by the magnetic field sensor 4-2722 of the audio apparatus is mainly generated by the magnet 4-2712.

The audio apparatus 4-2702 may implement in/out state detection of the audio apparatus 4-2702 through the magnetic field sensor 4-2721. The audio apparatus 4-2703 may implement in/out state detection of the audio apparatus 4-2703 through the magnetic field sensor 4-2731.

In some embodiments, a magnetic field sensor may be disposed in the host 4-2701, and magnets may be disposed in the audio apparatus 4-2702 and the audio apparatus 4-2703. The host 4-2701 may detect, through the magnetic field sensor, whether the audio apparatus 4-2702 and the audio apparatus 4-2703 are in the in state or the out state.

For a method for placing the audio apparatus 4-2703 in the host 4-2701 to form an electrical connection to the host 4-2701, refer to the foregoing method for electrically connecting the audio apparatus 4-2702 to the host 4-2701. Details are not described herein again.

It is not shown that the host 4-2701 may further have a wireless communication module. The wireless communication module may be configured to support data exchange of wireless communication including Bluetooth, a GNSS, a WLAN, FM, NFC, IR, and the like between the host 4-2701 and another electronic device (for example, an audio apparatus). In addition, the wireless communication module may be further connected to an antenna, and may receive an electromagnetic wave through the antenna, perform frequency modulation and filtering on the electromagnetic wave signal, and sends a processed signal to the processor 4-2710. The wireless communication module may further receive a to-be-sent signal from the processor 4-2710, perform frequency modulation and amplification on the signal, and convert, through the antenna, the signal into an electromagnetic wave for radiation. The wireless communication module may further cooperate with a wireless charging coil to wirelessly charge the wearable device 4-2700.

It is not shown that the host 4-2701 may further have a power module. The power module may be configured to supply power to the host 4-2701, supply power to modules in the host 4-2701, support the host 4-2701 in receiving a charging input, and the like.

It is not shown that the host 4-2701 may further have a wireless charging coil, to obtain power supply from an external power supply (for example, a wireless charging cradle) in a wireless charging manner.

It is not shown that a first part (which may be referred to as a cover body) of the host 4-2701 may further have a magnetic field sensor, and a second part (which may be referred to as a main body) of the host 4-2701 may be mounted with a status detection magnet. The magnetic field sensor may be configured to detect a magnetic flux of the status detection magnet in the second part. A value of the magnetic flux may be used by the processor 4-2710 to determine whether the cover of the host 4-2701 is opened. A location of the magnetic field sensor and a location of the status detection magnet may be interchanged, that is, the magnetic field sensor may be in the main body, and the status detection magnet may be in the cover body.

FIG. 26 shows only an example of the host 4-2701 of the wearable device 4-2700 according to embodiments of this application. In actual application, the host 4-2701 may include more or fewer components. For implementation details of the host 4-2701, refer to the content of the foregoing sections. Details are not described herein again.

**Structures of the audio apparatus 4-2702 and the audio apparatus 4-2703 shown in** **FIG. 26** **may be completely consistent. Here, the audio apparatus 4-2702 is used as an example to describe a structure of the audio apparatus.**

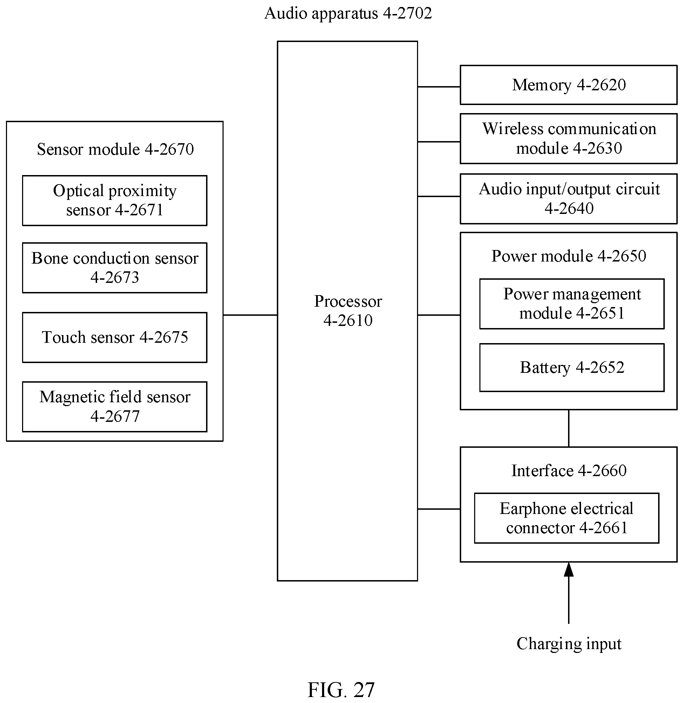

As shown in FIG. 27, the audio apparatus 4-2702 may include a processor 4-2610, a memory 4-2620, a wireless communication module 4-2630, an audio input/output circuit 4-2640, a power module 4-2650, an interface 4-2660, a sensor module 4-2670, and the like. The power module 4-2650 may include a power management module 4-2651 and a battery 4-2652. The interface 4-2660 may include an audio apparatus electrical connector 4-2661.

The memory 4-2620 may be configured to store program code, for example, program code used to charge the audio apparatus 4-2702, perform wireless pairing and connection between the audio apparatus 4-2702 and another electronic device, or perform wireless communication between the audio apparatus 4-2702 and an electronic device. The memory 4-2620 may further store a Bluetooth address used to uniquely identify a wireless audio apparatus. In addition, the memory 4-2620 may further store connection data of an electronic device that is previously successfully paired with the audio apparatus 4-2702. For example, the connection data may be a Bluetooth address of the electronic device that is previously successfully paired with the audio apparatus 4-2702. Based on the connection data, the audio apparatus 4-2702 can be automatically paired with the electronic device, and does not need to configure a connection to the electronic device, for example, perform validity verification. The Bluetooth address may be a media access control (media access control, MAC) address.

The processor 4-2610 may be configured to execute the program code stored in the memory 4-2620, and invoke a related module to implement a function of the audio apparatus 4-2702 in embodiments of this application, for example, to implement a charging function, a wireless communication function, an audio data playing function, a wearing detection function, and an in/out state detection function of the audio apparatus 4-2702. The processor 4-2610 may be specifically an integrated control chip, or may include a circuit including various active components and/or passive components, and the circuit is configured to perform a function of the processor 4-2610 that is described in this embodiment of this application. The processor of the audio apparatus 4-2702 may be a micro controller unit (micro controller unit, MCU).

In some embodiments, the processor 4-2610 may include one or more interfaces. The processor 4-2610 may be connected to another component of the audio apparatus 4-2702 through the one or more interfaces.

The wireless communication module 4-2630 may be configured to support data exchange of wireless communication including Bluetooth, a GNSS, a WLAN, FM, NFC, IR, and the like between the audio apparatus 4-2702 and another electronic device. In some embodiments, the wireless communication module 4-2630 may be a Bluetooth chip. The audio apparatus 4-2702 may be paired with and wirelessly connected to a Bluetooth chip in another electronic device through the Bluetooth chip, to implement wireless communication between the audio apparatus 4-2702 and the another electronic device and through the wireless connection. For example, in embodiments of this application, the wireless communication module 4-2630 may be configured to: after the processor 4-2610 determines that the audio apparatus 4-2702 is removed from a compartment, send remaining power of the audio apparatus 4-2702 to an electronic device that establishes a wireless connection (for example, a Bluetooth connection) to the audio apparatus 4-2702.

In addition, the wireless communication module 4-2630 may be further connected to an antenna. The wireless communication module 4-2630 receives an electromagnetic wave through the antenna, performs frequency modulation and filtering processing on the electromagnetic wave signal, and sends a processed signal to the processor 4-2610. The wireless communication module 4-2630 may further receive a to-be-sent signal from the processor 4-2610, perform frequency modulation and amplification on the signal, and convert, through the antenna, the signal into an electromagnetic wave for radiation.

The audio input/output circuit 4-2640 may be connected to a sound collection apparatus like a microphone, to process a sound, convert the sound into an audio signal, and transmit the audio signal to the processor for further processing. The audio input/output circuit 4-2640 may be further connected to a sound playing apparatus like a speaker, to convert an audio signal from the processor into a sound for output. In this way, functions such as answering/making a call, playing music, and using a voice assistant can be implemented.

The power module 4-2650 may be configured to supply power to the audio apparatus 4-2702, supply power to modules of the audio apparatus 4-2702, support the audio apparatus 4-2702 in receiving a charging input, and the like.

The interface 4-2660 may be used to provide a wired connection for charging or communication between the audio apparatus 4-2702 and the smartwatch 4-101. In some embodiments, the audio apparatus 4-2702 may have a plurality of interfaces 4-2660. In some embodiments, the interface 4-2660 may include an audio apparatus electrical connector 4-2661. When the audio apparatus 4-2702 is placed in an audio apparatus slot of the smartwatch 4-101, the audio apparatus 4-2702 may establish an electrical connection to an electrical connector in the smartwatch 4-101 through the audio apparatus electrical connector 4-2661 (for example, the audio apparatus electrical connector is in direct contact with the electrical connector in the smartwatch 4-101). After the electrical connection is established, the smartwatch 4-101 may charge the battery 4-2652 in the audio apparatus 4-2702 based on current transmission functions of the audio apparatus electrical connector 4-2661 and the electrical connector in the smartwatch 4-101. For example, the audio apparatus electrical connector 4-2661 may be a pogo pin, a spring pin, a spring plate, a conductive block, a conductive patch, a conductive sheet, a pin, a plug, a contact pad, a jack, a socket, or the like. A specific type of the electrical connector 4-2661 is not limited in embodiments of this application. In some other embodiments, after the electrical connection is established, the audio apparatus 4-2702 may further perform data communication with the smartwatch 4-101, for example, may receive a pairing instruction from the smartwatch 4-101.

The sensor module 4-2670 may include, for example, an optical proximity sensor 4-2671, a bone conduction sensor 4-2672, a touch sensor 4-2673, and a magnetic field sensor 4-2674. In some embodiments, the processor 4-2610 may perform wearing detection through the optical proximity sensor 4-2671, to determine whether the audio apparatus 4-2702 is worn by a user. In some embodiments, the processor 4-2610 may obtain a vibration signal of a vibration bone of a vocal-cord part through the bone conduction sensor 4-2672, and obtain a voice signal through parsing, to implement a voice function. In some embodiments, the processor 4-2610 may detect, based on a change of a magnetic induction intensity detected by the magnetic field sensor 4-2674, whether the audio apparatus 4-2702 is in an in state or an out state. The magnetic field sensor 4-2674 may be a Hall effect sensor or a magnetometer. In addition, the processor 4-2610 may perform the method in embodiments of this application, and exchange information with devices such as the smartwatch 4-101, the electronic device 4-200, and the electronic device 4-300.

In some embodiments, a housing of the audio apparatus 4-2702 may be further provided with a magnet (for example, a magnetic iron) configured to attract the smartwatch 4-101, so that the audio apparatus 4-2702 is placed in the audio apparatus slot of the smartwatch 4-101. For example, an outer surface of the audio apparatus 4-2702 may further include components such as a button, an indicator light (which may indicate power, an incoming/outgoing call, a pairing mode, and the like), a display (which may prompt user-related information), and a dust filter (which may be used in cooperation with an earpiece). The button may be a physical button, a touch button (used in cooperation with the touch sensor), or the like, and is configured to trigger operations such as powering on, powering off, pausing, playing, recording, starting charging, and stopping charging.

The structure shown in FIG. 27 does not constitute a specific limitation on the audio apparatus 4-2702. In actual application, the audio apparatus 4-2702 may include more or fewer components than those shown in the figure, or some components may be combined, or some components may be split, or different component arrangements may be used. The components shown in the figure may be implemented by hardware, software, or a combination of software and hardware.

An embodiment of this application provides an audio communication system, including a wearable device and an audio apparatus. The foregoing "fixed connection" may be formed between the wearable device and the audio apparatus. The wearable device may be the wearable device described in embodiments in FIG. 26, and the audio apparatus may be the audio apparatus described in embodiments in FIG. 26 and FIG. 27. For specific details of the wearable device and the audio apparatus, refer to the descriptions of the wearable device and the audio apparatus in the foregoing sections. Details are not described herein again.

An embodiment of this application further provides an audio communication system, including a wearable device, an audio apparatus, and a first electronic device. The foregoing "triangular connection" may be formed between the wearable device, the audio apparatus, and the first electronic device. The wearable device may be the wearable device described in embodiments in FIG. 26, the audio apparatus may be the audio apparatus described in embodiments in FIG. 26 and FIG. 27, and the first electronic device may be the electronic device described in embodiments in FIG. 25. For specific details of the wearable device and the audio apparatus, refer to the descriptions of the wearable device and the audio apparatus in the foregoing sections. Details are not described herein again. For specific details of the first electronic device, refer to the descriptions of the mobile phone in the "triangular connection" and the electronic device 4-200 in the foregoing sections. Details are not described herein again.

An embodiment of this application further provides an audio communication system, including a wearable device, an audio apparatus, a first electronic device, and a second electronic device. The foregoing "U-shaped connection" may be formed between the wearable device, the audio apparatus, the first electronic device, and the second electronic device. The wearable device may be the wearable device described in embodiments in FIG. 26, the audio apparatus may be the audio apparatus described in embodiments in FIG. 26 and FIG. 27, and both the first electronic device and the second electronic device may be the electronic device described in embodiments in FIG. 25. For specific details of the wearable device and the audio apparatus, refer to the descriptions of the wearable device and the audio apparatus in the foregoing sections. Details are not described herein again. For specific details of the first electronic device and the second electronic device, refer to the descriptions of the two mobile phones in the "U-shaped connection" and the descriptions of the electronic device 4-200 and the electronic device 4-300 in the foregoing sections. Details are not described herein again. In a possibility, the earphones may support a plurality of connections. In this way, the system may further form the foregoing "2+1 connection", that is, the earphones may be connected to both the first electronic device and the second electronic device. However, there is a physical connection between the earphones and one of the electronic devices, and there is a virtual connection between the earphones and the other electronic device.

An embodiment of this application further provides an audio communication system, including a wearable device, an audio apparatus, and more than two electronic devices. When earphones support a plurality of connections, the foregoing "2+1 connection", "2+2 connection", "2+3 connection", and even a more complex communication architecture may be formed among the wearable device, the audio apparatus, and the more than two electronic devices. The wearable device may be the wearable device described in embodiments in FIG. 26, the audio apparatus may be the audio apparatus described in embodiments in FIG. 26 and FIG. 27, and both the first electronic device and the second electronic device may be the electronic device described in embodiments in FIG. 25.

It may be understood that each user interface described in embodiments of this application is merely an example interface, and constitutes no limitation on the solutions of this application. In another embodiment, the user interface may use different interface layouts, may include more or fewer controls, and may add or reduce other function options, and provided that the user interface is based on a same inventive idea provided in this application, all fall within the protection scope of this application. It should be noted that, if no contradiction or conflict occurs, any feature or any part of any feature in any embodiment of this application may be combined, and a combined technical solution also falls within the scope of embodiments of this application.

In conclusion, the foregoing embodiments are merely intended for describing the technical solutions of this application, but not for limiting this application. Although this application is described in detail with reference to the foregoing embodiments, a person of ordinary skill in the art should understand that they may still make modifications to the technical solutions described in the foregoing embodiments or make equivalent replacements to some technical features thereof, without departing from the scope of the technical solutions of embodiments of this application.

## Claims

1. A call control method, wherein the method is applied to a communication system, the communication system comprises a wearable device and an audio apparatus, an audio apparatus slot accommodating the audio apparatus is disposed in the wearable device, a communication connection is established between the wearable device and the audio apparatus, a communication connection is established between the wearable device and a first device, and the method comprises:
receiving, by the wearable device, first incoming call information from the first device, and displaying a first incoming call notification screen;
detecting, by the wearable device, a first operation, wherein the first operation is used to answer a first incoming call corresponding to the first incoming call information;
sending, by the wearable device, a first instruction to the first device in response to the first operation, wherein the first instruction is used to trigger the first device to answer the first incoming call; and
receiving and playing, by the audio apparatus, first call audio of the first incoming call from the first device when the audio apparatus is connected to the first device.

2. The method according to claim 1, wherein after the receiving, by the wearable device, first incoming call information from the first device, the method further comprises:
obtaining, by the wearable device, a wearing status of the audio apparatus, wherein
in a case in which the audio apparatus is in a not-worn state, a first answer prompt is comprised on the first incoming call notification screen, the first answer prompt is used to prompt a user to wear the audio apparatus to answer a call, and the first operation comprises an operation of wearing the audio apparatus; or
in a case in which the audio apparatus is in a worn state, a first answer control is comprised on the first incoming call notification screen, and the first operation comprises an operation on the first answer control.

3. The method according to claim 2, wherein the case in which the audio apparatus is in the not-worn state comprises: the audio apparatus is accommodated in the audio apparatus slot, or the audio apparatus is not accommodated in the audio apparatus slot but is not worn.

4. The method according to any one of claims 1 to 3, wherein after the receiving, by the wearable device, first incoming call information from the first device, the method further comprises:
obtaining, by the wearable device, a status of a connection between the audio apparatus and the first device; and
when no communication connection is established between the audio apparatus and the first device, indicating, by the wearable device, the audio apparatus to establish a communication connection to the first device.

5. The method according to any one of claims 1 to 3, wherein the first instruction is further used to trigger the first device to establish a communication connection to the audio apparatus.

6. The method according to any one of claims 1 to 5, wherein after the receiving and playing, by the audio apparatus, first call audio of the first incoming call from the first device, the method further comprises:
receiving, by the wearable device, second incoming call information from the first device, and displaying a second incoming call notification screen, wherein the second incoming call notification screen indicates that the first device receives a second incoming call corresponding to the second incoming call information.

7. The method according to claim 6, wherein after the displaying a second incoming call notification screen, the method further comprises:
detecting, by the wearable device, a second operation, wherein the second operation is used to decline the second incoming call;
sending, by the wearable device, a second instruction to the first device in response to the second operation, wherein the second instruction is used to trigger the first device to decline the second incoming call; and
continuing, by the audio apparatus, playing the first call audio.

8. The method according to claim 6, wherein after the displaying a second incoming call notification screen, the method further comprises:
detecting, by the wearable device, a third operation, wherein the third operation is used to answer the second incoming call;
sending, by the wearable device, a third instruction to the first device in response to the third operation, wherein the third instruction is used to trigger the first device to hang up the first incoming call and answer the second incoming call; and
receiving and playing, by the audio apparatus, second call audio of the second incoming call from the first device.

9. The method according to any one of claims 1 to 7, wherein after the receiving and playing, by the audio apparatus, first call audio of the first incoming call from the first device, the method further comprises:
after the audio apparatus is placed in the audio apparatus slot, sending, by the wearable device or the audio apparatus, a fourth instruction to the first device, wherein the fourth instruction is used to trigger the first device to hang up the first incoming call.

10. The method according to claim 9, wherein the communication connection between the audio apparatus and the first device is disconnected when the audio apparatus is accommodated in the audio apparatus slot, and the method further comprises:
after the audio apparatus is taken out of the audio apparatus slot, establishing, by the audio apparatus, a communication connection to the first device.

11. The method according to any one of claims 1 to 10, wherein the method further comprises:
when a communication connection is established between the audio apparatus and a second device, receiving, by the wearable device, third incoming call information from the second device through the audio apparatus, and displaying a third incoming call notification screen;
detecting, by the wearable device, a fourth operation, wherein the fourth operation is used to answer a third incoming call corresponding to the third incoming call information;
sending, by the wearable device, a fifth instruction to the second device through the audio apparatus in response to the fourth operation, wherein the fifth instruction is used to trigger the second device to answer the third incoming call; and
receiving and playing, by the audio apparatus, third call audio of the third incoming call from the second device.

12. The method according to claim 11, wherein after the receiving and playing, by the audio apparatus, third call audio of the third incoming call from the second device, the method further comprises:
after the second device detects an operation of hanging up the third incoming call, receiving, by the audio apparatus, information from the second device indicating that the third incoming call is hung up, and sending the information indicating that the third incoming call is hung up to the wearable device; and
displaying, by the wearable device, a first call end screen, wherein the first call end screen indicates that the third incoming call of the second device ends.

13. The method according to claim **11** or 12, wherein the method further comprises:
disconnecting the communication connection between the audio apparatus and the second device after the audio apparatus is placed in the audio apparatus slot.

14. The method according to claim 13, wherein the method further comprises:
establishing, by the audio apparatus, a communication connection to the second device after the audio apparatus is taken out of the audio apparatus slot.

15. The method according to any one of claims 1 to 14, wherein the audio apparatus comprises a first audio apparatus and a second audio apparatus, and the method further comprises:
receiving, by both the first audio apparatus and the second audio apparatus, first audio data from the second device, and playing first audio based on the first audio data;
receiving, by the wearable device, fourth incoming call information from the first device, and displaying a fourth incoming call notification screen;
detecting, by the wearable device, a fifth operation, wherein the fifth operation is used to answer a fourth incoming call corresponding to the fourth incoming call information;
sending, by the wearable device, a sixth instruction to the first device in response to the fifth operation, wherein the sixth instruction is used to trigger the first device to answer the fourth incoming call;
when the first audio apparatus and the second audio apparatus are worn by different users, and the first audio apparatus is closer to the wearable device than the second audio apparatus, establishing, by the first audio apparatus, a communication connection to the first device;
receiving and playing, by the first audio apparatus, fourth call audio of the fourth incoming call from the first device; and
continuing, by the second audio apparatus, playing the first audio.

16. The method according to any one of claims 1 to 15, wherein the wearable device stores a first call record, the first call record is a call record of the first device, and the method further comprises:
detecting, by the wearable device, a sixth operation on the first call record, wherein the sixth operation is used to make an outgoing call to a first number corresponding to the first call record; and
sending, by the wearable device, a seventh instruction to the first device in response to the sixth operation, wherein the seventh instruction is used to trigger the first device to make the outgoing call to the first number.

17. The method according to claim 16, wherein the method further comprises:
receiving and playing, by the audio apparatus, first outgoing call audio of the outgoing call to the first number from the first device.

18. The method according to any one of claims 1 to 17, wherein the wearable device stores a second call record, the second call record is a call record of the second device, and the method further comprises:
detecting, by the wearable device, a seventh operation on the second call record, wherein the seventh operation is used to make an outgoing call to a second number corresponding to the second call record;
sending, by the wearable device, an eighth instruction to the second device through the audio apparatus in response to the seventh operation, wherein the eighth instruction is used to trigger the second device to make the outgoing call to the second number; and
receiving and playing, by the audio apparatus, second outgoing call audio of the outgoing call to the second number from the second device.

19. The method according to any one of claims 1 to 18, wherein the method further comprises:
detecting, by the wearable device, an eighth operation, wherein the eighth operation is used to make an outgoing call to a third number;
finding, by the wearable device, the first device and the second device in response to the eighth operation, wherein the first device is closer to the wearable device than the second device; and
sending, by the wearable device, a ninth instruction to the first device, wherein the ninth instruction is used to trigger the first device to make the outgoing call to the third number.

20. The method according to any one of claims 1 to 19, wherein a device account logged in to a third device is the same as a device account logged in to the first device, and the method further comprises:
obtaining, by the wearable device and/or the audio apparatus, device information of the third device through the first device, wherein the device information of the third device is used to establish a communication connection to the third device.

21. The method according to claim 20, wherein the method further comprises:
detecting, by the wearable device, a ninth operation, wherein the ninth operation is used to select the third device to make an outgoing call to a fourth number;
sending, by the wearable device, a tenth instruction to the third device through the audio apparatus in response to the ninth operation, wherein the tenth instruction is used to trigger the third device to make the outgoing call to the fourth number; and
receiving and playing, by the audio apparatus, third outgoing call audio of the outgoing call to the fourth number from the third device.

22. The method according to any one of claims 1 to 21, wherein the wearable device is any one of the following devices: a smartwatch, a smart band, smart glasses, a smart helmet, smart clothing, and a smart backpack; and the audio apparatus is any one of the following devices: earphones, a mini sound box, and a portable music player.

23. A call control method, wherein the method is applied to a wearable device, an audio apparatus slot accommodating an audio apparatus is disposed in the wearable device, a communication connection is established between the wearable device and the audio apparatus, a communication connection is established between the wearable device and a first device, and the method comprises:
receiving, by the wearable device, first incoming call information from the first device, and displaying a first incoming call notification screen;
detecting, by the wearable device, a first operation, wherein the first operation is used to answer a first incoming call corresponding to the first incoming call information; and
sending, by the wearable device, a first instruction to the first device in response to the first operation, wherein the first instruction is used to trigger the first device to answer the first incoming call.

24. The method according to claim 23, wherein after the receiving, by the wearable device, first incoming call information from the first device, the method further comprises:
obtaining, by the wearable device, a wearing status of the audio apparatus, wherein
in a case in which the audio apparatus is in a not-worn state, a first answer prompt is comprised on the first incoming call notification screen, the first answer prompt is used to prompt a user to wear the audio apparatus to answer a call, and the first operation comprises an operation of wearing the audio apparatus; or
in a case in which the audio apparatus is in a worn state, a first answer control is comprised on the first incoming call notification screen, and the first operation comprises an operation on the first answer control.

25. The method according to claim 24, wherein the case in which the audio apparatus is in the not-worn state comprises: the audio apparatus is accommodated in the audio apparatus slot, or the audio apparatus is not accommodated in the audio apparatus slot but is not worn.

26. The method according to any one of claims 23 to 25, wherein after the receiving, by the wearable device, first incoming call information from the first device, the method further comprises:
obtaining, by the wearable device, a status of a connection between the audio apparatus and the first device; and
when no communication connection is established between the audio apparatus and the first device, indicating, by the wearable device, the audio apparatus to establish a communication connection to the first device.

27. The method according to any one of claims 23 to 25, wherein the first instruction is further used to trigger the first device to establish a communication connection to the audio apparatus.

28. The method according to any one of claims 23 to 27, wherein after the sending, by the wearable device, a first instruction to the first device, the method further comprises:
receiving, by the wearable device, second incoming call information from the first device, and displaying a second incoming call notification screen, wherein the second incoming call notification screen indicates that the first device receives a second incoming call corresponding to the second incoming call information.

29. The method according to claim 28, wherein after the displaying a second incoming call notification screen, the method further comprises:
detecting, by the wearable device, a second operation, wherein the second operation is used to decline the second incoming call; and
sending, by the wearable device, a second instruction to the first device in response to the second operation, wherein the second instruction is used to trigger the first device to decline the second incoming call.

30. The method according to claim 28, wherein after the displaying a second incoming call notification screen, the method further comprises:
detecting, by the wearable device, a third operation, wherein the third operation is used to answer the second incoming call; and
sending, by the wearable device, a third instruction to the first device in response to the third operation, wherein the third instruction is used to trigger the first device to hang up the first incoming call and answer the second incoming call.

31. The method according to any one of claims 23 to 30, wherein after the sending, by the wearable device, a first instruction to the first device, the method further comprises:
after the audio apparatus is placed in the audio apparatus slot, sending, by the wearable device, a fourth instruction to the first device, wherein the fourth instruction is used to trigger the first device to hang up the first incoming call.

32. The method according to any one of claims 23 to 31, wherein the method further comprises:
when a communication connection is established between the audio apparatus and a second device, receiving, by the wearable device, third incoming call information from the second device through the audio apparatus, and displaying a third incoming call notification screen;
detecting, by the wearable device, a fourth operation, wherein the fourth operation is used to answer a third incoming call corresponding to the third incoming call information; and
sending, by the wearable device, a fifth instruction to the second device through the audio apparatus in response to the fourth operation, wherein the fifth instruction is used to trigger the second device to answer the third incoming call.

33. The method according to claim 11, wherein after the sending, by the wearable device, a fifth instruction to the second device through the audio apparatus, the method further comprises:
receiving, by the wearable device through the audio apparatus, information from the second device indicating that the third incoming call is hung up; and
displaying, by the wearable device, a first call end screen, wherein the first call end screen indicates that the third incoming call of the second device ends.

34. The method according to any one of claims 23 to 33, wherein the audio apparatus comprises a first audio apparatus and a second audio apparatus, and the method further comprises:
when the first audio apparatus and the second audio apparatus do not establish a communication connection to the first device, receiving, by the wearable device, fourth incoming call information from the first device, and displaying a fourth incoming call notification screen;
detecting, by the wearable device, a fifth operation, wherein the fifth operation is used to answer a fourth incoming call corresponding to the fourth incoming call information;
sending, by the wearable device, a sixth instruction to the first device in response to the fifth operation, wherein the sixth instruction is used to trigger the first device to answer the fourth incoming call; and
when the first audio apparatus and the second audio apparatus are worn by different users, and the first audio apparatus is closer to the wearable device than the second audio apparatus, indicating, by the wearable device, the first audio apparatus to establish a communication connection to the first device.

35. The method according to any one of claims 23 to 34, wherein the wearable device stores a first call record, the first call record is a call record of the first device, and the method further comprises:
detecting, by the wearable device, a sixth operation on the first call record, wherein the sixth operation is used to make an outgoing call to a first number corresponding to the first call record; and
sending, by the wearable device, a seventh instruction to the first device in response to the sixth operation, wherein the seventh instruction is used to trigger the first device to make the outgoing call to the first number.

36. The method according to any one of claims 23 to 25, wherein the wearable device stores a second call record, the second call record is a call record of the second device, and the method further comprises:
detecting, by the wearable device, a seventh operation on the second call record, wherein the seventh operation is used to make an outgoing call to a second number corresponding to the second call record; and
sending, by the wearable device, an eighth instruction to the second device through the audio apparatus in response to the seventh operation, wherein the eighth instruction is used to trigger the second device to make the outgoing call to the second number.

37. The method according to any one of claims 23 to 36, wherein the method further comprises:
detecting, by the wearable device, an eighth operation, wherein the eighth operation is used to make an outgoing call to a third number;
finding, by the wearable device, the first device and the second device in response to the eighth operation, wherein the first device is closer to the wearable device than the second device; and
sending, by the wearable device, a ninth instruction to the first device, wherein the ninth instruction is used to trigger the first device to make the outgoing call to the third number.

38. The method according to any one of claims 23 to 37, wherein a device account logged in to a third device is the same as a device account logged in to the first device, and the method further comprises:
obtaining, by the wearable device, device information of the third device through the first device, wherein the device information of the third device is used to establish a communication connection to the third device.

39. The method according to claim 38, wherein the method further comprises:
detecting, by the wearable device, a ninth operation, wherein the ninth operation is used to select the third device to make an outgoing call to a fourth number; and
sending, by the wearable device, a tenth instruction to the third device through the audio apparatus in response to the ninth operation, wherein the tenth instruction is used to trigger the third device to make the outgoing call to the fourth number.

40. The method according to any one of claims 23 to 39, wherein the wearable device is any one of the following devices: a smartwatch, a smart band, smart glasses, a smart helmet, smart clothing, and a smart backpack.

41. A call control method, wherein the method is applied to an audio apparatus, the audio apparatus is capable of being placed in an audio apparatus slot of a wearable device, a communication connection is established between the audio apparatus and the wearable device, and the method comprises:
receiving and playing, by the audio apparatus, first call audio of a first incoming call from a first device when the audio apparatus is connected to the first device.

42. The method according to claim 41, wherein the method further comprises:
receiving, by the audio apparatus, a connection instruction from the wearable device; and
establishing, by the audio apparatus, a communication connection to the first device according to the connection instruction.

43. The method according to claim 41 or 42, wherein the method further comprises:
a status of the audio apparatus changes, wherein the status changes from a not-worn state to a worn state, and the status change is used to trigger the first device to answer the first incoming call.

44. The method according to claim 43, wherein the not-worn state comprises: the audio apparatus is accommodated in the audio apparatus slot, or the audio apparatus is not accommodated in the audio apparatus slot but is not worn.

45. The method according to any one of claims 41 to 44, wherein the method further comprises:
sending, by the audio apparatus, a fourth instruction to the first device after the audio apparatus is placed in the audio apparatus slot, wherein the fourth instruction is used to trigger the first device to hang up the first incoming call.

46. The method according to claim 45, wherein the communication connection between the audio apparatus and the first device is disconnected when the audio apparatus is accommodated in the audio apparatus slot, and the method further comprises:
after the audio apparatus is taken out of the audio apparatus slot, establishing, by the audio apparatus, a communication connection to the first device.

47. The method according to any one of claims 41 to 46, wherein the method further comprises:
when a communication connection is established between the audio apparatus and a second device, receiving, by the audio apparatus, third incoming call information from the second device, and sending the third incoming call information to the wearable device; and
receiving and playing, by the audio apparatus, third call audio of a third incoming call from the second device, wherein the third incoming call is an incoming call corresponding to the third incoming call information.

48. The method according to claim 47, wherein the method further comprises:
after the second device detects an operation of hanging up the third incoming call, receiving, by the audio apparatus, information from the second device indicating that the third incoming call is hung up, and sending the information indicating that the third incoming call is hung up to the wearable device; or
after the wearable device detects an operation of hanging up the third incoming call, receiving, by the audio apparatus, an instruction from the wearable device for hanging up the third incoming call, and sending the instruction for hanging up the third incoming call to the second device.

49. The method according to claim 47 or 48, wherein the method further comprises:
disconnecting the communication connection between the audio apparatus and the second device after the audio apparatus is placed in the audio apparatus slot.

50. The method according to claim 49, wherein the method further comprises:
establishing, by the audio apparatus, a communication connection to the second device after the audio apparatus is taken out of the audio apparatus slot.

51. The method according to any one of claims 41 to 50, wherein the audio apparatus comprises a first audio apparatus and a second audio apparatus, and the method further comprises:
receiving, by both the first audio apparatus and the second audio apparatus, first audio data from the second device, and playing first audio based on the first audio data;
when the first audio apparatus and the second audio apparatus are worn by different users, and the first audio apparatus is closer to the wearable device than the second audio apparatus, establishing, by the first audio apparatus, a communication connection to the first device;
receiving and playing, by the first audio apparatus, fourth call audio of a fourth incoming call from the first device; and
continuing, by the second audio apparatus, playing the first audio.

52. The method according to any one of claims 41 to 51, wherein the audio apparatus is any one of the following devices: earphones, a mini sound box, and a portable music player.

53. An electronic device, wherein the electronic device is a wearable device, an audio apparatus slot accommodating an audio apparatus is disposed in the electronic device, the electronic device comprises a communication apparatus, a memory, and a processor, the communication apparatus is configured to establish a communication connection between the electronic device and the audio apparatus, the memory is configured to store a computer program, and the processor is configured to invoke the computer program, for the electronic device to perform the method according to any one of claims 23 to 40.

54. An audio apparatus, wherein the audio apparatus is capable of being accommodated in an audio apparatus slot of a wearable device, the audio apparatus comprises a communication apparatus, a memory, and a processor, the communication apparatus is configured to establish a communication connection between the audio apparatus and the wearable device, the memory is configured to store a computer program, and the processor is configured to invoke the computer program, for the audio apparatus to perform the method according to any one of claims 41 to 52.

55. A computer-readable storage medium, comprising instructions, wherein when the instructions are run on an electronic device, the electronic device is enabled to perform the method according to any one of claims 23 to 40 or 41 to 52.

56. A communication system, wherein the communication system comprises the electronic device according to claim 53 and the audio apparatus according to claim 54.
